# EUROPEAN PATENT APPLICATION

(11) **EP 4 769 694 A1**
(43) Date of publication of application: **01.07.2026**
(21) Application number: 24856549.1
(22) Date of filing: 23.08.2024
(51) Int. Cl.: H01M 50/169, H01G 11/84, H01G 13/00, H01M 10/04, H01M 10/052, H01M 10/058, H01M 10/0566, H01M 10/0585, H01M 12/06, H01M 12/08, H01M 50/15, H01M 50/103, H01M 50/105, H01M 50/148, H01M 50/166, H01M 50/171, H01M 50/178, H01M 50/531, H01M 50/548, H01M 50/609

(54) **DEVICE FOR MANUFACTURING POWER STORAGE ELEMENT INTERMEDIATE BODY, DEVICE FOR MANUFACTURING POWER STORAGE ELEMENT, METHOD FOR MANUFACTURING POWER STORAGE ELEMENT INTERMEDIATE BODY, METHOD FOR MANUFACTURING POWER STORAGE ELEMENT, AND LID BODY FOR EXTERIOR BODY OF POWER STORAGE ELEMENT**

(30) Priority: 23.08.2023 JP 2023135828; 20.11.2023 JP 2023196936; 12.01.2024 JP 2024003594; 27.03.2024 JP 2024051985; 04.04.2024 JP 2024061094
(71) Applicant: Dai Nippon Printing Co., Ltd., Tokyo 162-8001 (JP)
(72) Inventor: OKUMURA, Shohei, Tokyo 162-8001 (JP); HENMI, Takashi, Tokyo 162-8001 (JP); SHIRAISHI, Takeshi, Tokyo 162-8001 (JP); AIZAWA, Eiji, Tokyo 162-8001 (JP); ARAI, Yuta, Tokyo 162-8001 (JP); SUGIYAMA, Terumitsu, Tokyo 162-8001 (JP); MIKAMI, Shinichi, Tokyo 162-8001 (JP); KOMATSU, Koji, Saitama-city, Saitama 330-0841 (JP)
(74) Representative: Müller-Boré & Partner Patentanwälte PartG mbB
(86) International application number: PCT/JP2024/030107
(87) International publication number: WO 2025/041861

(57) **Abstract**

A manufacturing apparatus for an electrical storage device intermediate manufactures an electrical storage device intermediate using an electrode assembly unit and an outer film. The electrical storage device intermediate includes a first lid, a second lid, an electrode assembly, a first terminal, and a second terminal. The electrode assembly is located between the first lid and the second lid. The first terminal is electrically connected to the electrode assembly. The first terminal is connected to the first lid. The second terminal is electrically connected to the electrode assembly. The second terminal is connected to the second lid. The electrical storage device includes an outer package and the electrode assembly housed in the outer package. The outer package includes the first lid, the second lid, and the outer film. The manufacturing apparatus includes a fixing device that fixes the first lid and the second lid of the electrode assembly unit, a wrapping device that wraps the electrode assembly unit with the outer film such that the outer film contacts a side end surface of the first lid and a side end surface of the second lid, and a first joining device that joins the side end surfaces and the outer film.

## Description

### Technical Field

The present disclosure relates to a manufacturing apparatus for an electrical storage device intermediate, a manufacturing apparatus for an electrical storage device, a manufacturing method for an electrical storage device intermediate, a manufacturing method for an electrical storage device, and a lid for the outer package of an electrical storage device.

### Background Art

PTL 1 (Japanese Unexamined Patent Application Publication No. 2022-123686) describes an example of an electrical storage device. A power storage device described in PTL 1 includes an electrode assembly, an electrolytic solution, and an outer package that houses the electrode assembly and the electrolytic solution. The outer package includes an outer film that wraps the electrode assembly to form openings, and lids that respectively close the openings. In the electrical storage device described in PTL 1, the outer package that houses the electrode assembly and the electrolytic solution needs to be sealed.

In the electrical storage device described in PTL 1, the electrode assembly and the lids are connected by terminals. However, the relative position between the electrode assembly and each lid is not fixed. For this reason, it is not easy to join the outer film, wrapping the electrode assembly, and the side end surfaces of each lid through a circumferential sealing portion.

### Disclosure of Invention

The present disclosure aims to stably join the side end surfaces of a lid and an outer film through a circumferential sealing portion.

A manufacturing apparatus for an electrical storage device intermediate according to a first aspect of one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a fixing device that fixes the first lid and the second lid of the electrode assembly unit; and
   a joining device that joins the outer film, wrapped around the electrode assembly unit so as to contact a side end surface of the first lid and a side end surface of the second lid, and the side end surfaces.

A manufacturing apparatus for an electrical storage device intermediate according to a second aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a fixing device that fixes the first lid and the second lid of the electrode assembly unit;
   a wrapping device that wraps the electrode assembly unit with the outer film such that the outer film contacts a side end surface of the first lid and a side end surface of the second lid; and
   a joining device that joins the side end surfaces and the outer film.

A manufacturing apparatus for an electrical storage device according to the one embodiment of the present disclosure includes:
the manufacturing apparatus for an electrical storage device intermediate according to the one embodiment of the present disclosure; and
an injection device that injects an electrolytic solution into the electrical storage device intermediate.

A manufacturing method for an electrical storage device intermediate according to a first aspect of the one embodiment of the present disclosure is a manufacturing method for manufacturing an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing method including:
   a step of fixing the first lid and the second lid of the electrode assembly unit; and
   a step of joining the outer film, wrapped around the electrode assembly unit so as to contact a side end surface of the first lid and a side end surface of the second lid, and the side end surfaces.

A manufacturing method for an electrical storage device intermediate according to a second aspect of the one embodiment of the present disclosure is a manufacturing method for manufacturing an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing method including:
   a step of fixing the first lid and the second lid of the electrode assembly unit; and
   a step of wrapping the electrode assembly unit with the outer film such that the outer film contacts a side end surface of the first lid and a side end surface of the second lid, and joining the side end surfaces and the outer film.

A manufacturing method for an electrical storage device according to the one embodiment of the present disclosure includes:
a step of manufacturing an electrical storage device intermediate by using the manufacturing method for an electrical storage device intermediate according to the one embodiment of the present disclosure; and
a step of injecting an electrolytic solution into the electrical storage device intermediate.

A manufacturing apparatus according to a third aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including
a joining device that joins the outer film, wrapped around the electrode assembly unit so as to contact a side end surface of the first lid and a side end surface of the second lid, and the side end surfaces, wherein
the joining device includes a roller heater,
the roller heater includes a roller having a heated outer peripheral surface, a distal end part holding the roller such that the roller is rotatable, a proximal end part holding the distal end part, and a pressure-applying part located between the proximal end part and the distal end part,
the distal end part is relatively movable relative to the proximal end part in a direction that is not parallel to a rotation axis of the roller, and
the pressure-applying part is supported by the proximal end part and presses the distal end part in a direction in which the roller moves away from the proximal end part.

A manufacturing apparatus according to a fourth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a wrapping device that wraps the electrode assembly unit with the outer film such that the outer film contacts a side end surface of the first lid and a side end surface of the second lid; and
   a joining device that joins the side end surfaces and the outer film, wherein
   the joining device includes a roller heater,
   the roller heater includes a roller having a heated outer peripheral surface, a distal end part holding the roller such that the roller is rotatable, a proximal end part holding the distal end part, and a pressure-applying part located between the proximal end part and the distal end part,
   the distal end part is relatively movable relative to the proximal end part in a direction orthogonal to a rotation axis of the roller, and
   the pressure-applying part is supported by the proximal end part and presses the distal end part in a direction in which the roller moves away from the proximal end part.

A manufacturing apparatus according to a fifth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a joining device that joins the outer film, wrapped around the electrode assembly unit so as to contact a side end surface of the first lid and a side end surface of the second lid, and the side end surfaces; and
   a second joining device that joins a pair of extended parts of the outer film wrapped around the electrode assembly unit, the pair of extended parts extending from the electrode assembly unit and facing each other, wherein
   at least one of the joining device and the second joining device includes a roller heater,
   the roller heater includes a roller having a heated outer peripheral surface, a distal end part holding the roller such that the roller is rotatable, a proximal end part holding the distal end part, and a pressure-applying part located between the proximal end part and the distal end part,
   the distal end part is relatively movable relative to the proximal end part in a direction that is not parallel to a rotation axis of the roller, and
   the pressure-applying part is supported by the proximal end part and presses the distal end part in a direction in which the roller moves away from the proximal end part.

A manufacturing apparatus according to a sixth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a wrapping device that wraps the electrode assembly unit with the outer film such that the outer film contacts a side end surface of the first lid and a side end surface of the second lid;
   a joining device that joins the side end surfaces and the outer film; and
   a second joining device that joins a pair of extended parts of the outer film wrapped around the electrode assembly unit, the pair of extended parts extending from the electrode assembly unit and facing each other, wherein
   at least one of the joining device and the second joining device includes a roller heater,
   the roller heater includes a roller having a heated outer peripheral surface, a distal end part holding the roller such that the roller is rotatable, a proximal end part holding the distal end part, and a pressure-applying part located between the proximal end part and the distal end part,
   the distal end part is relatively movable relative to the proximal end part in a direction orthogonal to a rotation axis of the roller, and
   the pressure-applying part is supported by the proximal end part and presses the distal end part in a direction in which the roller moves away from the proximal end part.

A manufacturing apparatus according to a seventh aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a wrapping device that wraps the electrode assembly unit with the outer film such that the outer film contacts a side end surface of the first lid and a side end surface of the second lid; and
   a joining device that joins the side end surfaces and the outer film, wherein
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction,
   the wrapping device includes
   a first film holding unit that holds a part of the outer film that is in contact with the second side end surface, the first side end surface, and the third side end surface, the part extending from the second side end surface,
   a second film holding unit that holds a part of the outer film that is in contact with the second side end surface, the first side end surface, and the third side end surface, the part extending from the third side end surface,
   a first pressing portion that contacts the outer film located between the first film holding unit and the second side end surface, and
   a second pressing portion that contacts the outer film located between the second film holding unit and the third side end surface, and
   the first pressing portion and the second pressing portion press the outer film such that a distance along the second direction between the first pressing portion and the second pressing portion is shorter than a length of the fourth side end surface along the second direction.

A manufacturing apparatus according to an eighth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a fixing device that fixes the first lid and the second lid of the electrode assembly unit; and
   a joining device that joins the outer film, wrapped around the electrode assembly unit so as to contact a side end surface of the first lid and a side end surface of the second lid, and the side end surfaces, wherein
   the first lid, the electrode assembly, and the second lid are located in this order in a first direction,
   each of the first lid and the second lid has a recess on a surface on an outer side in the first direction,
   the fixing device includes a chuck member that is inserted into the recess from the outer side in the first direction, and
   the chuck member holds each lid by widening a width of the chuck member in a direction orthogonal to the first direction within the recess.

A manufacturing apparatus according to a ninth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a fixing device that fixes the first lid and the second lid of the electrode assembly unit;
   a wrapping device that wraps the electrode assembly unit with the outer film such that the outer film contacts a side end surface of the first lid and a side end surface of the second lid; and
   a joining device that joins the side end surfaces and the outer film, wherein
   the first lid, the electrode assembly, and the second lid are located in this order in a first direction,
   each of the first lid and the second lid has a recess on a surface on an outer side in the first direction,
   the fixing device includes a chuck member that is inserted into the recess from the outer side in the first direction, and
   the chuck member holds each lid by widening a width of the chuck member in a direction orthogonal to the first direction within the recess.

A manufacturing apparatus according to a tenth aspect of the one embodiment of the present disclosure is a manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus including:
   a film supply device that supplies the outer film;
   a wrapping device that wraps the electrode assembly unit with the outer film such that the outer film contacts a side end surface of the first lid and a side end surface of the second lid; and
   a joining device that joins the side end surfaces and the outer film, wherein
   at least one of the film supply device and the wrapping device includes a film holding unit that holds the outer film,
   the film holding unit includes a first roll and a second roll that holds the outer film with the first roll, and
   the first roll and the second roll are rotatable around an adjustment axis that is not parallel to a rotation axis of the first roll in a state of holding the outer film.

A manufacturing method according to a third aspect of the one embodiment of the present disclosure is
a manufacturing method for manufacturing the electrical storage device intermediate using the above-described manufacturing apparatus of the third aspect, and includes:
a step of supplying the outer film; and
a step of joining the outer film, wrapped around the electrode assembly unit so as to contact a side end surface of the first lid and a side end surface of the second lid, and the side end surfaces using the roller heater.

A manufacturing method according to a fourth aspect of the one embodiment of the present disclosure is
a manufacturing method for manufacturing the electrical storage device intermediate using the above-described manufacturing apparatus of the fourth aspect, and includes:
a step of supplying the outer film; and
a step of wrapping the electrode assembly unit with the outer film such that the outer film contacts a side end surface of the first lid and a side end surface of the second lid, and joining the side end surfaces and the outer film by using the roller heater.

A manufacturing method according to a fifth aspect of the one embodiment of the present disclosure is
a manufacturing method for manufacturing the electrical storage device intermediate using the above-described manufacturing apparatus of the fifth aspect or the sixth aspect, and includes:
a step of joining the side end surfaces and the outer film wrapped around the electrode assembly unit; and
a step of joining a pair of extended parts of the outer film wrapped around the electrode assembly unit, the pair of extended parts extending from the electrode assembly unit and facing each other, wherein
the roller heater is used to join the side end surfaces and the outer film and/or to join the pair of extended parts.

A manufacturing method according to a sixth aspect of the one embodiment of the present disclosure is
a manufacturing method for manufacturing the electrical storage device intermediate using the above-described manufacturing apparatus of the seventh aspect, and includes:
a step of supplying the outer film; and
a step of wrapping the electrode assembly unit with the outer film using the wrapping device such that the outer film contacts a side end surface of the first lid and a side end surface of the second lid, and joining the side end surfaces and the outer film using the joining device.

A manufacturing method according to a seventh aspect of the one embodiment of the present disclosure is
a manufacturing method for manufacturing the electrical storage device intermediate using the above-described manufacturing apparatus of the eighth aspect, and includes:
a step of fixing the first lid and the second lid of the electrode assembly unit; and
a step of joining the outer film, wrapped around the electrode assembly unit so as to contact a side end surface of the first lid and a side end surface of the second lid, and the side end surfaces.

A manufacturing method according to an eighth aspect of the one embodiment of the present disclosure is
a manufacturing method for manufacturing the electrical storage device intermediate using the above-described manufacturing apparatus of the ninth aspect, and includes:
a step of fixing the first lid and the second lid of the electrode assembly unit; and
a step of wrapping the electrode assembly unit with the outer film such that the outer film contacts a side end surface of the first lid and a side end surface of the second lid, and joining the side end surfaces and the outer film.

A manufacturing method according to a ninth aspect of the one embodiment of the present disclosure is
a manufacturing method for manufacturing the electrical storage device intermediate using the above-described manufacturing apparatus of the tenth aspect, and includes:
a step of supplying the outer film using the film supply device; and
a step of wrapping the electrode assembly unit with the outer film using the wrapping device such that the outer film contacts a side end surface of the first lid and a side end surface of the second lid, and joining the side end surfaces and the outer film using the joining device.

A manufacturing method for an electrical storage device according to the one embodiment of the present disclosure includes:
a step of manufacturing an electrical storage device intermediate using the above-described manufacturing method according to any one of the third to ninth aspects; and
a step of injecting an electrolytic solution into the electrical storage device intermediate.

According to the present disclosure, the side end surfaces of the lids can be more stably joined with the outer film.

### Brief Description of Drawings

[Fig. 1] Fig. 1 is a view for illustrating a manufacturing apparatus and a manufacturing method according to one embodiment and is a perspective view that shows an example of an electrical storage device that is an object to be manufactured by the manufacturing apparatus and the manufacturing method.
[Fig. 2] Fig. 2 is a perspective view that shows an example of an electrical storage device intermediate that can be used to manufacture the electrical storage device shown in Fig. 1.
[Fig. 3A] Fig. 3A is a perspective view that shows an example of an electrode assembly unit that can be used to manufacture the electrical storage device intermediate shown in Fig. 2.
[Fig. 3B] Fig. 3B is a plan view of the electrode assembly unit shown in Fig. 3A.
[Fig. 4A] Fig. 4A is a cross-sectional view that shows an example of the layer structure of an outer film that can be used to manufacture the electrical storage device shown in Fig. 1 and the electrical storage device intermediate shown in Fig. 2.
[Fig. 4B] Fig. 4B is a developed plan view that shows an example of an outer film that can be used to manufacture the electrical storage device shown in Fig. 1 and the electrical storage device intermediate shown in Fig. 2.
[Fig. 5A] Fig. 5A is a perspective view that shows an example of a lid that can be used to manufacture the electrical storage device and the electrical storage device intermediate shown in Fig. 2.
[Fig. 5B] Fig. 5B is a perspective view that shows another example of a lid that can be used to manufacture the electrical storage device shown in Fig. 1 and the electrical storage device intermediate shown in Fig. 2.
[Fig. 5C] Fig. 5C is a cross-sectional view that shows further another example of a lid that can be used to manufacture the electrical storage device shown in Fig. 1 and the electrical storage device intermediate shown in Fig. 2.
[Fig. 5D] Fig. 5D is a plan view that shows the lid shown in Fig. 5C.
[Fig. 5E] Fig. 5E is a top view that shows further another example of a lid that can be used to manufacture the electrical storage device shown in Fig. 1 and the electrical storage device intermediate shown in Fig. 2.
[Fig. 5F] Fig. 5F is a plan view that shows the lid shown in Fig. 5E.
[Fig. 5G] Fig. 5G is a top view that shows further another example of a lid that can be used to manufacture the electrical storage device shown in Fig. 1 and the electrical storage device intermediate shown in Fig. 2.
[Fig. 5H] Fig. 5H is a plan view that shows the lid shown in Fig. 5G.
[Fig. 5I] Fig. 5I is a cross-sectional view that shows further another example of a lid that can be used to manufacture the electrical storage device shown in Fig. 1 and the electrical storage device intermediate shown in Fig. 2.
[Fig. 5J] Fig. 5J is a cross-sectional view that shows further another example of a lid that can be used to manufacture the electrical storage device shown in Fig. 1 and the electrical storage device intermediate shown in Fig. 2.
[Fig. 5K] Fig. 5K is a plan view that shows the lid shown in Fig. 5J.
[Fig. 5L] Fig. 5L is a cross-sectional view that shows further another example of a lid that can be used to manufacture the electrical storage device shown in Fig. 1 and the electrical storage device intermediate shown in Fig. 2.
[Fig. 5M] Fig. 5M is a plan view that shows the lid shown in Fig. 5L.
[Fig. 5N] Fig. 5N is a cross-sectional view that shows further another example of a lid that can be used to manufacture the electrical storage device shown in Fig. 1 and the electrical storage device intermediate shown in Fig. 2.
[Fig. 5O] Fig. 5O is a cross-sectional view that shows further another example of a lid that can be used to manufacture the electrical storage device shown in Fig. 1 and the electrical storage device intermediate shown in Fig. 2.
[Fig. 5P] Fig. 5P is a cross-sectional view that shows further another example of a lid that can be used to manufacture the electrical storage device Fig. 1 and the electrical storage device intermediate shown in Fig. 2.
[Fig. 6] Fig. 6 is a configuration diagram that shows an example of a manufacturing apparatus that can manufacture the electrical storage device intermediate shown in Fig. 2.
[Fig. 7A] Fig. 7A is a flowchart that shows an example of a manufacturing method that can manufacture the electrical storage device intermediate shown in Fig. 2.
[Fig. 7B] Fig. 7B is a flowchart that shows an example of step S4 shown in Fig. 7A.
[Fig. 7C] Fig. 7C is a flowchart that shows another example of step S4 shown in Fig. 7A.
[Fig. 8A] Fig. 8A is a diagram for illustrating step S2 shown in Fig. 7A and an example of a manufacturing apparatus that can be used in step S2.
[Fig. 8B] Fig. 8B is a diagram for illustrating step S2 shown in Fig. 7A and an example of a manufacturing apparatus that can be used in step S2.
[Fig. 8C] Fig. 8C is a diagram for illustrating step S2 shown in Fig. 7A and an example of a manufacturing apparatus that can be used in step S2.
[Fig. 9] Fig. 9 is a view for illustrating step S3 shown in Fig. 7A and an example of a fixing device of a manufacturing apparatus that can be used in step S3.
[Fig. 10A] Fig. 10A is a view that shows another example of a fixing device.
[Fig. 10B] Fig. 10B is a view that shows further another example of a fixing device.
[Fig. 10C] Fig. 10C is a view that shows further another example of a fixing device.
[Fig. 10D] Fig. 10D is a view that shows further another example of a fixing device.
[Fig. 10E] Fig. 10E is a view that shows further another example of a fixing device.
[Fig. 10F] Fig. 10F is a view that shows further another example of a fixing device.
[Fig. 10G] Fig. 10G is a view that shows the fixing device shown in Fig. 10F.
[Fig. 10H] Fig. 10H is a view that shows the fixing device shown in Fig. 10F.
[Fig. 10I] Fig. 10I is a view that shows one modification of the fixing device shown in Fig. 10F.
[Fig. 11A] Fig. 11A is a diagram for illustrating step S41 shown in Fig. 7B and an example of a manufacturing apparatus that can be used in step S41.
[Fig. 11B] Fig. 11B is a diagram for illustrating step S42 shown in Fig. 7B and an example of a manufacturing apparatus that can be used in step S42.
[Fig. 11C] Fig. 11C is a diagram for illustrating step S42 shown in Fig. 7B and an example of the manufacturing apparatus that can be used in step S42.
[Fig. 11D] Fig. 11D is a diagram for illustrating step S43 shown in Fig. 7B and an example of a manufacturing apparatus that can be used in step S43.
[Fig. 11E] Fig. 11E is a diagram for illustrating step S44 shown in Fig. 7B and an example of a manufacturing apparatus that can be used in step S44.
[Fig. 11F] Fig. 11F is a diagram for illustrating step S45 shown in Fig. 7B and an example of a manufacturing apparatus that can be used in step S45.
[Fig. 11G] Fig. 11G is a diagram for illustrating step S5 shown in Fig. 7A and an example of a manufacturing apparatus that can be used in step S5.
[Fig. 12A] Fig. 12A is a diagram for illustrating an example of a control method for a seal bar that can be used in step S4 and step S5.
[Fig. 12B] Fig. 12B is a view for illustrating a control method for the seal bar shown in Fig. 12A.
[Fig. 13] Fig. 13 is a diagram for illustrating an example of a tensioning device that can be used in step S2 and step S4.
[Fig. 14A] Fig. 14A is a diagram for illustrating another example of a tensioning device that can be used in step S2 and step S4.
[Fig. 14B] Fig. 14B is a plan view that shows a reverse-crown roll that can be used in the tensioning device shown in Fig. 14A.
[Fig. 15A] Fig. 15A is a diagram that shows another example of a second joining device of a manufacturing apparatus that can be used in step S5.
[Fig. 15B] Fig. 15B is a diagram for illustrating the operation of the second joining device shown in Fig. 15A.
[Fig. 16] Fig. 16 is a diagram that shows an example of spot heaters that can be used in step S4.
[Fig. 17] Fig. 17 is a diagram that shows another example of spot heaters that can be used in step S4.
[Fig. 18A] Fig. 18A is a diagram that shows further another example of a spot heater that can be used in step S4.
[Fig. 18B] Fig. 18B is a diagram that shows further another example of a spot heater that can be used in step S4.
[Fig. 19] Fig. 19 is a diagram that shows an example of a robot arm that holds the spot heater.
[Fig. 20] Fig. 20 is a diagram that shows a modification of a joining device.
[Fig. 21] Fig. 21 is a diagram that shows an example of an injection device that can be included in a manufacturing apparatus for an electrical storage device.
[Fig. 22] Fig. 22 is a diagram that shows another example of a corner heater that can be used in step S4.
[Fig. 23] Fig. 23 is a diagram that shows the corner heater shown in Fig. 22.
[Fig. 24] Fig. 24 is a diagram that shows an example of a corner sensor that can be used in step S4.
[Fig. 25] Fig. 25 is a diagram that shows a specific example of the corner heater shown in Figs. 22 and 23.
[Fig. 26] Fig. 26 is a diagram that shows another specific example of the corner heater shown in Figs. 22 and 23.
[Fig. 27] Fig. 27 is a diagram that shows further another example of a corner heater that can be used in step S4.
[Fig. 28] Fig. 28 is a diagram that shows further another example of a corner heater that can be used in step S4.
[fig. 29] Fig. 29 shows photographs of the pressure sensitive paper used in an experiment to investigate the pressure applied from the corner heater to an outer film 130.
[Fig. 30] Fig. 30 is a diagram that shows another example of a seal bar that can be used in step S4.
[Fig. 31] Fig. 31 is a diagram that shows further another example of a seal bar that can be used in step S4.
[Fig. 32] Fig. 32 is a diagram that shows one modification of a manufacturing method and a joining method.
[Fig. 33] Fig. 33 is a diagram that shows one modification of a manufacturing method and a joining method.
[Fig. 34] Fig. 34 is a diagram that shows one modification of a manufacturing method and a joining method.
[Fig. 35] Fig. 35 is a diagram that shows one modification of a manufacturing method and a joining method.
[Fig. 36A] Fig. 36A is a side view that shows step S3 shown in Fig. 7A and one modification of a film holding unit that can be included in a manufacturing apparatus used in step S3.
[Fig. 36B] Fig. 36B is a top view that shows the film holding unit shown in Fig. 36A.
[Fig. 36C] Fig. 36C is a front view that shows the film holding unit shown in Fig. 36A.
[Fig. 36D] Fig. 36D is a top view for illustrating the operation of the film holding unit shown in Figs. 36A to 36C.
[Fig. 36E] Fig. 36E is a top view for illustrating the operation of the film holding unit shown in Figs. 36A to 36C.
[Fig. 37A] Fig. 37A is a diagram for illustrating step S42 shown in Fig. 7B and one modification of a manufacturing apparatus that can be used in step 542.
[Fig. 37B] Fig. 37B is a diagram for illustrating step S42 shown in Fig. 7B and one modification of a manufacturing apparatus that can be used in step 542.
[Fig. 37C] Fig. 37C is a diagram for illustrating step S43 shown in Fig. 7B and one modification of a manufacturing apparatus that can be used in step 543.
[Fig. 37D] Fig. 37D is a diagram for illustrating step S44 shown in Fig. 7B and one modification of a manufacturing apparatus that can be used in step 544.
[Fig. 37E] Fig. 37E is a diagram for illustrating step S45 shown in Fig. 7B and one modification of a manufacturing apparatus that can be used in step 545.
[Fig. 37F] Fig. 37F is a diagram for illustrating step S5 shown in Fig. 7B and one modification of a manufacturing apparatus that can be used in step S5.
[Fig. 37G] Fig. 37G is a diagram for illustrating one modification of a film supply step and a wrapping step in a manufacturing method shown in Figs. 37A and 37B.
[Fig. 38A] Fig. 38A is a diagram that shows one specific example of the roller heater shown in Figs. 18A and 18B.
[Fig. 38B] Fig. 38B is a diagram for illustrating the operation of the roller heater shown in Fig. 38A.
[Fig. 38C] Fig. 38C is a diagram for illustrating the operation of the roller heater shown in Fig. 38A.
[Fig. 39A] Fig. 39A is a side view that shows one specific example of a manufacturing apparatus and a first processing apparatus.
[Fig. 39B] Fig. 39B is a side view that shows one specific example of a manufacturing apparatus and a first processing apparatus.
[Fig. 39C] Fig. 39C is a side view that shows one specific example of a manufacturing apparatus and a first processing apparatus.
[Fig. 39D] Fig. 39D is a side view that shows one specific example of a manufacturing apparatus and a first processing apparatus.
[Fig. 39E] Fig. 39E is a side view that shows one specific example of a manufacturing apparatus and a first processing apparatus.
[Fig. 39F] Fig. 39F is a side view that shows one specific example of a manufacturing apparatus and a first processing apparatus.
[Fig. 39G] Fig. 39G is a side view that shows one specific example of a manufacturing apparatus and a first processing apparatus.
[Fig. 39H] Fig. 39H is a side view that shows one specific example of a manufacturing apparatus and a first processing apparatus.
[Fig. 39I] Fig. 39I is a side view that shows one specific example of a manufacturing apparatus and a first processing apparatus.
[Fig. 39J] Fig. 39J is a side view that shows one specific example of a manufacturing apparatus and a first processing apparatus.
[Fig. 39K] Fig. 39K is a side view that shows one specific example of a manufacturing apparatus and a first processing apparatus.
[Fig. 40A] Fig. 40A is a side view that shows one specific example of a manufacturing apparatus and a second processing apparatus.
[Fig. 40B] Fig. 40B is a side view that shows one specific example of a manufacturing apparatus and a second processing apparatus.
[Fig. 40C] Fig. 40C is a side view that shows one specific example of a manufacturing apparatus and a second processing apparatus.
[Fig. 40D] Fig. 40D is a side view that shows one specific example of a manufacturing apparatus and a second processing apparatus.
[Fig. 40E] Fig. 40E is a side view that shows one specific example of a manufacturing apparatus and a second processing apparatus.
[Fig. 40F] Fig. 40F is a side view that shows one specific example of a manufacturing apparatus and a second processing apparatus.
[Fig. 40G] Fig. 40G is a side view that shows one specific example of a manufacturing apparatus and a second processing apparatus.
[Fig. 40H] Fig. 40H is a side view that shows one specific example of a manufacturing apparatus and a second processing apparatus.

### Description of Embodiments

One embodiment of the present disclosure relates to the following <1> to <96>.
<1> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a fixing device that fixes the first lid and the second lid of the electrode assembly unit; and
      a joining device that joins the outer film, wrapped around the electrode assembly unit so as to contact a side end surface of the first lid and a side end surface of the second lid, and the side end surfaces.
<2> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a fixing device that fixes the first lid and the second lid of the electrode assembly unit;
      a wrapping device that wraps the electrode assembly unit with the outer film such that the outer film contacts a side end surface of the first lid and a side end surface of the second lid; and
      a joining device that joins the side end surfaces and the outer film.
<3> The manufacturing apparatus according to <1> or <2> further includes: a film supply device that supplies the outer film; and an electrode assembly unit supply device that places the electrode assembly unit on the outer film.
<4> The manufacturing apparatus according to any one of <1> to <3> further includes a positioning device that positions the electrode assembly unit on the outer film.
<5> In the manufacturing apparatus according to any one of <1> to <4>,
   the first lid, the electrode assembly, and the second lid are located in this order in a first direction, and
   the fixing device includes a fixation restricting portion that contacts each of the first lid and the second lid from an outer side in the first direction to restrict movement toward the outer side, and a fixation drive unit that presses each of the first lid and the second lid against the fixation restricting portion.
<6> In the manufacturing apparatus according to <5>,
   one of a tapered projection and a tapered recess is provided on the fixation restricting portion or the fixation drive unit,
   the other one of the tapered projection and the tapered recess is provided on each of the first lid and the second lid, and
   when the tapered projection is inserted into the tapered recess, the first lid and the second lid are positioned in a direction that is not parallel to the first direction.
<7> In the manufacturing apparatus according to <5> or <6>, the fixation drive unit includes a vacuum suction unit that holds the first lid and the second lid by vacuum suction.
<8> In the manufacturing apparatus according to <5> or <6>;
   each of the first lid and the second lid includes a shaft-like protruding portion that protrudes toward an outer side in the first direction,
   the shaft-like protruding portion has a notch that is open in a direction that is not parallel to the first direction, and
   the fixation drive unit includes a hook that can be inserted in the notch.
<9> In the manufacturing apparatus according to <8>, the shaft-like protruding portion has a groove at a proximal end, and is removable when broken at the groove.
<10> In the manufacturing apparatus according to any one of <5> to <9>,
   the fixing device includes a clamper that includes a plurality of clamp pieces, and
   the plurality of clamp pieces is capable of approaching each other and separating from each other.
<11> The manufacturing apparatus according to any one of <1> to <10> further includes a wrapping device that wraps the electrode assembly unit with the outer film such that the outer film contacts the side end surface of the first lid and the side end surface of the second lid,
   the wrapping device includes a tensioning device that applies tension to the outer film, and
   the tensioning device includes a reverse-crown roll and a nip roll that sandwiches the outer film with the reverse-crown roll.
<12> The manufacturing apparatus according to any one of <1> to <11> further includes a wrapping device that wraps the electrode assembly unit with the outer film such that the outer film contacts the side end surface of the first lid and the side end surface of the second lid,
   the wrapping device includes a grip portion that grips the outer film, a surface monitoring unit that monitors a surface condition of the outer film gripped by the grip portion, and a wrapping controller that controls an operation of the grip portion, and
   the wrapping controller controls the operation of the grip portion based on a monitoring result of the surface monitoring unit.
<13> The manufacturing apparatus according to any one of <1> to <12> further includes a wrapping device that wraps the electrode assembly unit with the outer film such that the outer film contacts the side end surface of the first lid and the side end surface of the second lid, and
   the wrapping device includes a pressing member that moves on the outer film while pressing the outer film toward the side end surfaces.
<14> In the manufacturing apparatus according to any one of <1> to <13>,
   the side end surface of each of the first lid and the second lid includes a plurality of side end surfaces,
   a corner is formed between adjacent two end surfaces of the plurality of side end surfaces, and
   the joining device includes a spot heater that heats a part of the outer film on the corner.
<15> In the manufacturing apparatus according to <14>, the spot heater includes one or more of a blower that discharges heated gas, an infrared heater that emits infrared light, a rotatable roller that has a heated outer peripheral surface, and a corner heater that has a heating surface bent in conformity with the corner.
<16> In the manufacturing apparatus according to <14> or <15>, the joining device includes a robot arm holding the spot heater.
<17> In the manufacturing apparatus according to any one of <1> to <16>,
   the side end surface of each of the first lid and the second lid includes a plurality of side end surfaces,
   a corner is provided between adjacent two side end surfaces of the plurality of side end surfaces,
   the joining device includes a corner heater that heats a part of the outer film on the corner,
   the corner heater includes a first heating surface, a second heating surface, and a heating protruding portion,
   the first heating surface heats at least part of the outer film on one of the two side end surfaces,
   the second heating surface heats at least part of the outer film on the other one of the two side end surfaces, and
   the heating protruding portion is located between the first side end surface and the second side end surface.
<18> In the manufacturing apparatus according to <17>, the heating protruding portion has a linear protrusion extending in a direction parallel to both the first heating surface and the second heating surface.
<19> In the manufacturing apparatus according to <17>, the heating protruding portion includes a plurality of heating protruding portions arranged in a direction parallel to both the first heating surface and the second heating surface.
<20> In the manufacturing apparatus according to any one of <17> to <19>, the joining device further includes a corner sensor that detects depression of the heating film, formed by being pressed by the heating protruding portion.
<21> In the manufacturing apparatus according to any one of <1> to <20>,
   the side end surface of each of the first lid and the second lid includes a plurality of side end surfaces,
   a chamfered corner is provided between two of the plurality of side end surfaces,
   the joining device includes a corner heater that heats the outer film,
   the corner heater includes a corner heating surface that heats a part, located on the corner, of the outer film, and
   a radius of curvature ry of the corner heating surface and a radius of curvature rx of the corner satisfy -0.5 mm ≤ rx - ry ≤ 0.5 mm.
<22> In the manufacturing apparatus according to <21>, a ratio of the radius of curvature of the corner heating surface to the radius of curvature of the corner is higher than or equal to 0.50 and lower than or equal to 1.50.
<23> In the manufacturing apparatus according to <21> or <22>, the corner heating surface is formed of an elastic member.
<24> In the manufacturing apparatus according to any one of <1> to <23>,
   the side end surface of each of the first lid and the second lid includes a plurality of side end surfaces,
   a chamfered corner is provided between two of the plurality of side end surfaces,
   the joining device includes a seal bar that heats the outer film, and
   the seal bar has a flat heating surface and a curved corner heating surface.
<25> In the manufacturing apparatus according to <24>,
   the corner heating surface includes a first corner heating surface and a second corner heating surface, and
   the heating surface is located between the first corner heating surface and the second corner heating surface.
<26> In the manufacturing apparatus according to <24> or <25>,
   the seal bar includes a seal bar body and a contact portion fixed to the seal bar body, and
   the contact portion includes the flat heating surface and the corner heating surface.
<27> In the manufacturing apparatus according to any one of <24> to <26>, the flat heating surface and the corner heating surface are formed of an elastic member.
<28> In the manufacturing apparatus according to any one of <24> to <27>, a radius of curvature ry of the corner heating surface and a radius of curvature rx of the corner satisfy -0.5 mm ≤ rx - ry ≤ 0.5 mm.
<29> In the manufacturing apparatus according to <28>, a ratio of the radius of curvature of the corner heating surface to the radius of curvature of the corner is higher than or equal to 0.50 and lower than or equal to 1.50.
<30> The manufacturing apparatus according to any one of <1> to <29> further includes a second joining device that joins a pair of extended parts of the outer film wrapped around the electrode assembly unit, the pair of extended parts extending from the electrode assembly unit and facing each other, and
   one or both of the joining device and the second joining device include a heater that includes a rotatable roller with a heated outer peripheral surface and a robot arm holding the heater.
<31> The manufacturing apparatus according to any one of <1> to <30> further includes a second joining device that joins a pair of extended parts of the outer film wrapped around the electrode assembly unit, the pair of extended parts extending from the electrode assembly unit and facing each other,
   one or both of the joining device and the second joining device include a seal bar that heats the outer film and a bar drive unit that moves the seal bar toward the outer film, and
   the bar drive unit moves the seal bar so as to achieve a preset depression amount.
<32> In the manufacturing apparatus according to any one of <1> to <31>, the joining device includes a lid heater that heats the first lid and the second lid.
<33> The manufacturing apparatus according to any one of claims <1> to <32> further includes a second joining device that joins a pair of extended parts of the outer film wrapped around the electrode assembly unit, the pair of extended parts extending from the electrode assembly unit and facing each other.
<34> In the manufacturing apparatus according to <33>,
   the second joining device includes a receiving member that supports the pair of extended parts and a seal bar that presses the pair of extended parts toward the receiving member while heating the pair of extended parts, and
   the receiving member includes an elastic member that is deformable in conformity with deformation of the seal bar.
<35> In the manufacturing apparatus according to any one of <1> to <34>,
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
   the joining device includes a first seal bar that contacts a part, located on the first side end surface, of the outer film and heats the outer film while pressing the outer film with the first side end surface.
<36> The manufacturing apparatus according to any one of <1> to <35> further includes a wrapping device that wraps the electrode assembly unit with the outer film such that the outer film contacts the side end surface of the first lid and the side end surface of the second lid, and
   the wrapping device includes a wrapping assisting member that holds the side end surfaces by vacuum suction to restrict movement of the electrode assembly unit when wrapping the outer film around the electrode assembly unit.
<37> The manufacturing apparatus according to any one of <1> to <36> further includes a wrapping device that wraps the electrode assembly unit with the outer film such that the outer film contacts the side end surface of the first lid and the side end surface of the second lid,
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
   the wrapping device includes a wrapping assisting member that includes a base surface that contacts the fourth side end surface, a first assisting surface that is connected to the base surface and located along an extension of the second side end surface, and a second assisting surface that is connected to the base surface and located along an extension of the third side end surface.
<38> In the manufacturing apparatus according to <37>, the wrapping assisting member holds the fourth side end surface on the base surface by vacuum suction.
<39> In the manufacturing apparatus according to <37> or <38>, the wrapping assisting member holds the outer film on each of the first assisting surface and the second assisting surface by vacuum suction.
<40> In the manufacturing apparatus according to any one of <1> to <39>,
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
   the joining device includes a second seal bar that contacts a part of the outer film on the second side end surface and heats the outer film while pressing the outer film with the second side end surface, and a third seal bar that contacts a part of the outer film on the third side end surface and heats the outer film while pressing the outer film with the third side end surface.
<41> The manufacturing apparatus according to any one of <1> to <40> further includes a wrapping device that wraps the electrode assembly unit with the outer film such that the outer film contacts the side end surface of the first lid and the side end surface of the second lid, and
   the wrapping device includes a wrapping support member that contacts the outer film on the side end surfaces by vacuum suction to restrict movement of the electrode assembly unit when wrapping the outer film around the electrode assembly unit.
<42> The manufacturing apparatus according to any one of <1> to <41> further includes a wrapping device that wraps the electrode assembly unit with the outer film such that the outer film contacts the side end surface of the first lid and the side end surface of the second lid,
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
   the wrapping device includes a wrapping support member that includes a contact surface that contacts the outer film on the second side end surface and a support surface that is connected to the contact surface and located along an extension of the fourth side end surface.
<43> In the manufacturing apparatus according to <42>,
   the wrapping device places a pair of extended parts of the outer film, wrapped around the electrode assembly unit, on the support surface, the pair of extended parts extending from the electrode assembly unit and facing each other, and
   the joining device includes a fourth seal bar that, in a state where the pair of extended parts is placed on the support surface, contacts a part of the outer film on the fourth side end surface and heats the outer film while pressing the outer film with the fourth side end surface.
<44> The manufacturing apparatus according to <42> or <43> further includes a second joining device that joins a pair of extended parts of the outer film wrapped around the electrode assembly unit, the pair of extended parts extending from the electrode assembly unit and facing each other, and
   the second joining device includes a seal bar that heats the pair of extended parts placed on the support surface while pressing the pair of extended parts with the support surface.
<45> In the manufacturing apparatus according to any one of <42> to <44>, the wrapping support member holds the outer film on the support surface by vacuum suction.
<46> In the manufacturing apparatus according to any one of <42> to <45>, the wrapping device includes an auxiliary wrapping support member that contacts the outer film located on the third side end surface.
<47> A manufacturing apparatus for an electrical storage device includes:
   the manufacturing apparatus for an electrical storage device intermediate according to any one of <1> to <46>; and
   an injection device that injects an electrolytic solution into the electrical storage device intermediate.
<48> A manufacturing method for manufacturing an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a step of fixing the first lid and the second lid of the electrode assembly unit; and
      a step of joining the outer film, wrapped around the electrode assembly unit so as to contact a side end surface of the first lid and a side end surface of the second lid, and the side end surfaces.
<49> A manufacturing method for manufacturing an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a step of fixing the first lid and the second lid of the electrode assembly unit; and
      a step of wrapping the electrode assembly unit with the outer film such that the outer film contacts a side end surface of the first lid and a side end surface of the second lid, and joining the side end surfaces and the outer film.
<50> The manufacturing method according to <48> or <49> further includes a step of joining a pair of extended parts of the outer film wrapped around the electrode assembly unit, the pair of extended parts extending from the electrode assembly unit and facing each other.
<51> A manufacturing method for an electrical storage device includes:
   a step of manufacturing an electrical storage device intermediate by using the manufacturing method according to any one of <48> to <50>; and
   a step of injecting an electrolytic solution into the electrical storage device intermediate.
<52> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes
   a joining device that joins the outer film, wrapped around the electrode assembly unit so as to contact a side end surface of the first lid and a side end surface of the second lid, and the side end surfaces, wherein
   the joining device includes a roller heater,
   the roller heater includes a roller having a heated outer peripheral surface, a distal end part holding the roller such that the roller is rotatable, a proximal end part holding the distal end part, and a pressure-applying part located between the proximal end part and the distal end part,
   the distal end part is relatively movable relative to the proximal end part in a direction that is not parallel to a rotation axis of the roller, and
   the pressure-applying part is supported by the proximal end part and presses the distal end part in a direction in which the roller moves away from the proximal end part.
<53> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a wrapping device that wraps the electrode assembly unit with the outer film such that the outer film contacts a side end surface of the first lid and a side end surface of the second lid; and
      a joining device that joins the side end surfaces and the outer film, wherein
      the joining device includes a roller heater,
      the roller heater includes a roller having a heated outer peripheral surface, a distal end part holding the roller such that the roller is rotatable, a proximal end part holding the distal end part, and a pressure-applying part located between the proximal end part and the distal end part,
      the distal end part is relatively movable relative to the proximal end part in a direction that is not parallel to a rotation axis of the roller, and
      the pressure-applying part is supported by the proximal end part and presses the distal end part in a direction in which the roller moves away from the proximal end part.
<54> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a joining device that joins the outer film, wrapped around the electrode assembly unit so as to contact a side end surface of the first lid and a side end surface of the second lid, and the side end surfaces; and
      a second joining device that joins a pair of extended parts of the outer film wrapped around the electrode assembly unit, the pair of extended parts extending from the electrode assembly unit and facing each other, wherein
      at least one of the joining device and the second joining device includes a roller heater,
      the roller heater includes a roller having a heated outer peripheral surface, a distal end part holding the roller such that the roller is rotatable, a proximal end part holding the distal end part, and a pressure-applying part located between the proximal end part and the distal end part,
      the distal end part is relatively movable relative to the proximal end part in a direction that is not parallel to a rotation axis of the roller, and
      the pressure-applying part is supported by the proximal end part and presses the distal end part in a direction in which the roller moves away from the proximal end part.
<55> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a wrapping device that wraps the electrode assembly unit with the outer film such that the outer film contacts a side end surface of the first lid and a side end surface of the second lid;
      a joining device that joins the side end surfaces and the outer film; and
      a second joining device that joins a pair of extended parts of the outer film wrapped around the electrode assembly unit, the pair of extended parts extending from the electrode assembly unit and facing each other, wherein
      at least one of the joining device and the second joining device includes a roller heater,
      the roller heater includes a roller having a heated outer peripheral surface, a distal end part holding the roller such that the roller is rotatable, a proximal end part holding the distal end part, and a pressure-applying part located between the proximal end part and the distal end part,
      the distal end part is relatively movable relative to the proximal end part in a direction that is not parallel to a rotation axis of the roller, and
      the pressure-applying part is supported by the proximal end part and presses the distal end part in a direction in which the roller moves away from the proximal end part.
<56> In the manufacturing apparatus according to any one of <52> to <55>, a deformation resistance of the pressure-applying part is greater than or equal to 0.10 N/mm and less than or equal to 1.0 N/mm.
<57> In the manufacturing apparatus according to any one of <52> to <56>, the pressure-applying part includes a spring.
<58> The manufacturing apparatus according to any one of <52> to <57> includes a wrapping device that wraps the electrode assembly unit with the outer film such that the outer film contacts the side end surface of the first lid and the side end surface of the second lid,
   the first lid, the electrode assembly, and the second lid are located in this order in a first direction,
   the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction,
   the wrapping device includes
   a first film holding unit that holds a part of the outer film that is in contact with the second side end surface, the first side end surface, and the third side end surface, the part extending from the second side end surface,
   a second film holding unit that holds a part of the outer film that is in contact with the second side end surface, the first side end surface, and the third side end surface, the part extending from the third side end surface,
   a first pressing portion that contacts the outer film located between the first film holding unit and the second side end surface, and
   a second pressing portion that contacts the outer film located between the second film holding unit and the third side end surface, and
   the first pressing portion and the second pressing portion press the outer film such that a distance between the first pressing portion and the second pressing portion along the second direction is shorter than a length of the fourth side end surface along the second direction.
<59> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a wrapping device that wraps the electrode assembly unit with the outer film such that the outer film contacts a side end surface of the first lid and a side end surface of the second lid; and
      a joining device that joins the side end surfaces and the outer film, wherein
      the first lid, the electrode assembly, and the second lid are located in this order in a first direction,
      the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction,
      the wrapping device includes
      a first film holding unit that holds a part of the outer film that is in contact with the second side end surface, the first side end surface, and the third side end surface, the part extending from the second side end surface,
      a second film holding unit that holds a part of the outer film that is in contact with the second side end surface, the first side end surface, and the third side end surface, the part extending from the third side end surface,
      a first pressing portion that contacts the outer film located between the first film holding unit and the second side end surface, and
      a second pressing portion that contacts the outer film located between the second film holding unit and the third side end surface, and
      the first pressing portion and the second pressing portion press the outer film such that a distance along the second direction between the first pressing portion and the second pressing portion is shorter than a length of the fourth side end surface along the second direction.
<60> In the manufacturing apparatus according to <58> or <59>, when the first pressing portion and the second pressing portion press the outer film, a distance along the second direction between the first film holding unit and the second film holding unit is longer than a length of the fourth side end surface along the second direction.
<61> In the manufacturing apparatus according to any one of <58> to <60>, in a state where the first pressing portion and the second pressing portion are pressing the outer film, the outer film expands parallel to the first direction and the second direction in a region from the first film holding unit to the first pressing portion, and in a region from the second film holding unit to the second pressing portion.
<62> The manufacturing apparatus according to any of <52> to <61> includes a fixing device that fixes the first lid and the second lid of the electrode assembly unit,
   the first lid, the electrode assembly, and the second lid are located in this order in a first direction,
   each of the first lid and the second lid has a recess on a surface on an outer side in the first direction,
   the fixing device includes a chuck member that is inserted into the recess from the outer side in the first direction, and
   the chuck member holds each lid by widening a width of the chuck member in a direction orthogonal to the first direction within the recess.
<63> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a fixing device that fixes the first lid and the second lid of the electrode assembly unit; and
      a joining device that joins the outer film, wrapped around the electrode assembly unit so as to contact a side end surface of the first lid and a side end surface of the second lid, and the side end surfaces, wherein
      the first lid, the electrode assembly, and the second lid are located in this order in a first direction,
      each of the first lid and the second lid has a recess on a surface on an outer side in the first direction,
      the fixing device includes a chuck member that is inserted into the recess from the outer side in the first direction, and
      the chuck member holds each lid by widening a width of the chuck member in a direction orthogonal to the first direction within the recess.
<64> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a fixing device that fixes the first lid and the second lid of the electrode assembly unit;
      a wrapping device that wraps the electrode assembly unit with the outer film such that the outer film contacts a side end surface of the first lid and a side end surface of the second lid; and
      a joining device that joins the side end surfaces and the outer film, wherein
      the first lid, the electrode assembly, and the second lid are located in this order in a first direction,
      each of the first lid and the second lid has a recess on a surface on an outer side in the first direction,
      the fixing device includes a chuck member that is inserted into the recess from the outer side in the first direction, and
      the chuck member holds each lid by widening a width of the chuck member in a direction orthogonal to the first direction within the recess.
<65> In the manufacturing apparatus according to any one of <62> to <64>,
   the recess includes a plurality of recesses on the surface of each of the first lid and the second lid,
   the fixing device includes a plurality of chuck members that are respectively inserted into the plurality of recesses of each lid, and
   each of the plurality of chuck members holds a corresponding one of the lids by widening a width of the chuck member in a direction orthogonal to the first direction.
<66> In the manufacturing apparatus according to any one of <62> to <65>,
   the chuck member includes a plurality of widening pieces that are respectively inserted into the recesses and a widening piece holding portion that holds the plurality of widening pieces such that the plurality of widening pieces is operable, and
   a width of the chuck member changes in a direction orthogonal to the first direction when the plurality of widening pieces operates relative to the widening piece holding portion.
<67> The manufacturing apparatus according to any one of <52> to <66> includes:
   a film supply device that supplies the outer film; and
   a wrapping device that wraps the electrode assembly unit with the outer film such that the outer film contacts the side end surface of the first lid and the side end surface of the second lid, wherein
   at least one of the film supply device and the wrapping device includes a film holding unit that holds the outer film,
   the film holding unit includes a first roll and a second roll that holds the outer film with the first roll, and
   the first roll and the second roll are rotatable around an adjustment axis that is not parallel to a rotation axis of the first roll in a state of holding the outer film.
<68> A manufacturing apparatus that manufactures an electrical storage device intermediate using
   an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
   an outer film to be wrapped around the electrode assembly unit,
   the electrical storage device intermediate including an outer package that includes the first lid, the second lid, and the outer film, and the electrode assembly housed in the outer package, includes:
      a film supply device that supplies the outer film;
      a wrapping device that wraps the electrode assembly unit with the outer film such that the outer film contacts a side end surface of the first lid and a side end surface of the second lid; and
      a joining device that joins the side end surfaces and the outer film, wherein
      at least one of the film supply device and the wrapping device includes a film holding unit that holds the outer film,
      the film holding unit includes a first roll and a second roll that holds the outer film with the first roll, and
      the first roll and the second roll are rotatable around an adjustment axis that is not parallel to a rotation axis of the first roll in a state of holding the outer film.
<69> In the manufacturing apparatus according to <67> or <68>, the film holding unit includes a roll holding portion that holds the first roll and the second roll such that the first roll and the second roll are rotatable, and a holding base portion that holds the roll holding portion such that the roll holding portion is rotatable around the adjustment axis.
<70> In the manufacturing apparatus according to any one of <67> to <69>, the film holding unit is movable in a moving direction that is not parallel to both the rotation axis and the adjustment axis.
<71> In the manufacturing apparatus according to any one of <67> to <70>,
   at least one of the film supply device and the wrapping device includes a guide rail extending in a moving direction that is not parallel to both the rotation axis and the adjustment axis, and
   the film holding unit is movable along the guide rail.
<72> In the manufacturing apparatus according to any one of <67> to <71>, at least one of the film supply device and the wrapping device includes a holding drive unit that moves the film holding unit in a moving direction that is not parallel to both the rotation axis and the adjustment axis.
<73> In the manufacturing apparatus according to any one of <67> to <72>, the adjustment axis is parallel to a normal direction of the outer film supplied to the film holding unit.
<74> In the manufacturing apparatus according to any one of <67> to <73>, the adjustment axis is parallel to a normal direction of a part of the outer film, the part being located upstream of the first roll and the second roll.
<75> A manufacturing apparatus for an electrical storage device includes:
   the manufacturing apparatus for an electrical storage device intermediate according to any one of <52> to <74>; and
   an injection device that injects an electrolytic solution into the electrical storage device intermediate.
<76> A manufacturing method for manufacturing the electrical storage device intermediate using the manufacturing apparatus according to any one of <52> to <58> includes:
   a step of supplying the outer film; and
   a step of joining the outer film, wrapped around the electrode assembly unit so as to contact a side end surface of the first lid and a side end surface of the second lid, and the side end surfaces using the roller heater.
<77> A manufacturing method for manufacturing the electrical storage device intermediate using the manufacturing apparatus according to any one of <52> to <58> includes:
   a step of supplying the outer film; and
   a step of wrapping the electrode assembly unit with the outer film such that the outer film contacts a side end surface of the first lid and a side end surface of the second lid, and joining the side end surfaces and the outer film by using the roller heater.
<78> A manufacturing method for manufacturing the electrical storage device intermediate using the manufacturing apparatus according to any one of <52> to <58> includes:
   a step of joining the side end surfaces and the outer film wrapped around the electrode assembly unit; and
   a step of joining a pair of extended parts of the outer film wrapped around the electrode assembly unit, the pair of extended parts extending from the electrode assembly unit and facing each other, wherein
   the roller heater is used to join the side end surfaces and the outer film and/or to join the pair of extended parts.
<79> A manufacturing method for manufacturing the electrical storage device intermediate using the manufacturing apparatus according to any one of claims <58> to <62> includes:
   a step of supplying the outer film; and
   a step of wrapping the electrode assembly unit with the outer film using the wrapping device such that the outer film contacts a side end surface of the first lid and a side end surface of the second lid, and joining the side end surfaces and the outer film using the joining device.
<80> A manufacturing method for manufacturing the electrical storage device intermediate using the manufacturing apparatus according to any one of <62> to <67> includes:
   a step of fixing the first lid and the second lid of the electrode assembly unit; and
   a step of joining the outer film, wrapped around the electrode assembly unit so as to contact a side end surface of the first lid and a side end surface of the second lid, and the side end surfaces.
<81> A manufacturing method for manufacturing the electrical storage device intermediate using the manufacturing apparatus according to any one of <62> to <67> includes:
   a step of fixing the first lid and the second lid of the electrode assembly unit; and
   a step of wrapping the outer film around the electrode assembly unit such that the outer film contacts a side end surface of the first lid and a side end surface of the second lid, and joining the side end surfaces with the outer film.
<82> A manufacturing method for manufacturing the electrical storage device intermediate using the manufacturing apparatus according to any one of <67> to <74> includes:
   a step of supplying the outer film using the film supply device; and
   a step of wrapping the electrode assembly unit with the outer film using the wrapping device such that the outer film contacts a side end surface of the first lid and a side end surface of the second lid, and joining the side end surfaces and the outer film using the joining device.
<83> A manufacturing method for an electrical storage device includes:
   a step of manufacturing an electrical storage device intermediate by using the manufacturing method according to any one of <52> to <82>; and
   a step of injecting an electrolytic solution into the electrical storage device intermediate.
<84> A lid that closes an opening of a tubular outer film and constitutes an outer package of an electrical storage device together with the outer film includes:
   a core; and a surrounding member located around the core, wherein
   the surrounding member constitutes a side end surface of the lid that is joined with the outer film.
<85> In the lid according to <84>, the surrounding member contains a resin having a polyolefin skeleton, as a main component.
<86> In the lid according to <84>, the surrounding member contains polyolefin as a main component.
<87> In the lid according to <84>, the surrounding member contains polypropylene as a main component.
<88> In the lid according to any one of <84> to <87>, the core contains a metal.
<89> In the lid according to any one of <84> to <88>, the core has conductive properties.
<90> In the lid according to any one of <84> to <89>, the core contains a resin as a main component.
<91> In the lid according to any one of <84> to <90>, the surrounding member includes one or more of a molded product formed around the core, a frame fitted around the core, and a film wrapped around the core.
<92> In the lid according to <84> or <91>, the surrounding member contains a metal, and the core contains a resin as a main component.
<93> A lid that closes an opening of a tubular outer film and constitutes an outer package of an electrical storage device together with the outer film includes:
   an inner main surface facing an internal space of the tubular outer film, an outer main surface on an opposite side from the inner main surface, and a side end surface connecting the inner main surface and the outer main surface, wherein
   the outer main surface has a tapered projection and/or a tapered recess.
<94> An outer package kit includes:
   the lid according to any one of <84> to <93>; and
   the outer film to be wrapped around the lid.
<95> An electrical storage device intermediate includes:
   an outer package including the lid according to any one of <84> to <93> and an outer film wrapped around the lid; and
   an electrode assembly housed in the outer package.
<96> An electrical storage device includes:
   an outer package including the lid according to any one of <84> to <93> and an outer film wrapped around the lid; and
   an electrode assembly housed in the outer package.

Hereinafter, the details of one embodiment of the present disclosure will be described. In the drawings attached to the present specification, for the sake of easiness of illustration and understanding, the scale, dimensional aspect ratio, and the like are changed or exaggerated as needed from those of real ones.

In the specification, the terms such as "sheet", "film", and "plate" are not distinguished from one another by the difference in name only. For example, a "outer film" is not distinguished from a member or the like called a outer sheet by the difference in name only.

In this specification, a plurality of upper limit candidates and a plurality of lower limit candidates regarding a numeric range may be described in separate sentences. In this description, the numeric range may be a combination of a selected one upper limit candidate and a selected one lower limit candidate. In an example, the sentence "Parameter B may be larger than or equal to A1, may be larger than or equal to A2, or may be larger than or equal to A3. Parameter B may be smaller than or equal to A4, may be smaller than or equal to A5, or may be smaller than or equal to A6." will be discussed. In this example, the numeric range of parameter B may be larger than or equal to A1 and smaller than or equal to A4, may be larger than or equal to A1 and smaller than or equal to A5, may be larger than or equal to A1 and smaller than or equal to A6, may be larger than or equal to A2 and smaller than or equal to A4, may be larger than or equal to A2 and smaller than or equal to A5, may be larger than or equal to A2 and smaller than or equal to A6, may be larger than or equal to A3 and smaller than or equal to A4, may be larger than or equal to A3 and smaller than or equal to A5, or may be larger than or equal to A3 and smaller than or equal to A6.

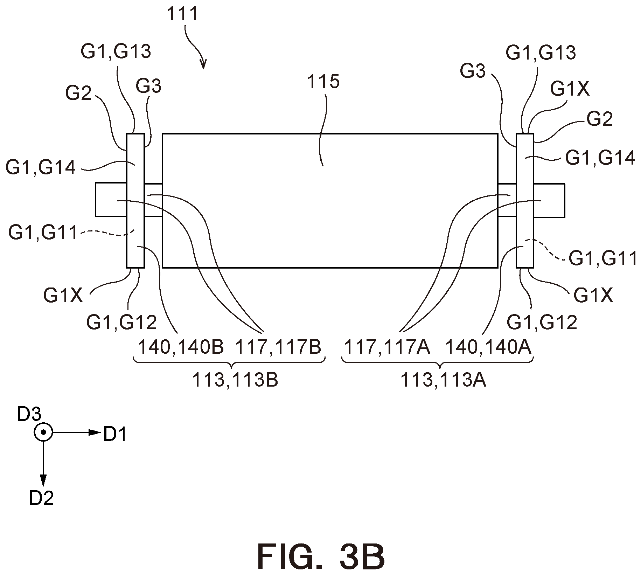

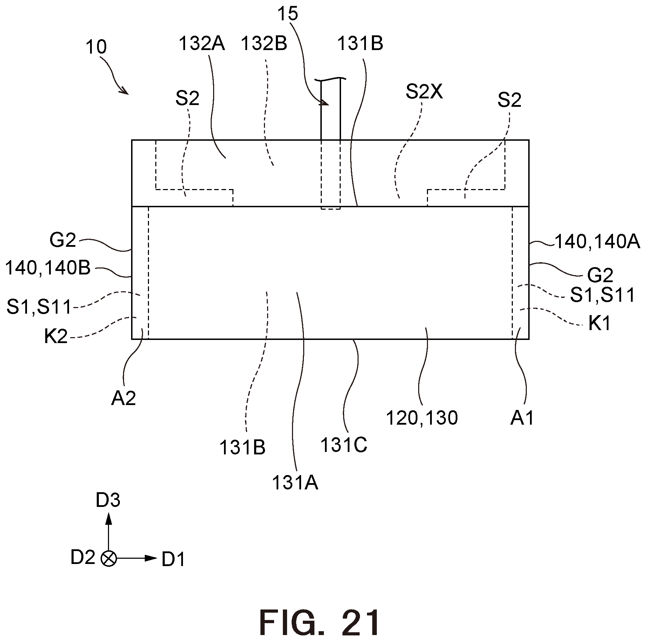

To clarify the dimensional relationship among the drawings, some of the drawings show a common first direction D1, a common second direction D2, and a common third direction D3 with arrows indicated by common reference signs. The arrowhead sides are first sides of the directions. Opposite sides to the arrowhead sides are second sides of the directions. An arrow pointing forward from the sheet of a drawing along a direction perpendicular to the sheet is represented by, for example, a symbol in which a dot is drawn in a circle as shown in Fig. 3B. An arrow pointing backward from the sheet of a drawing along a direction perpendicular to the sheet is represented by, for example, a symbol in which a cross is drawn in a circle as shown in Fig. 21.

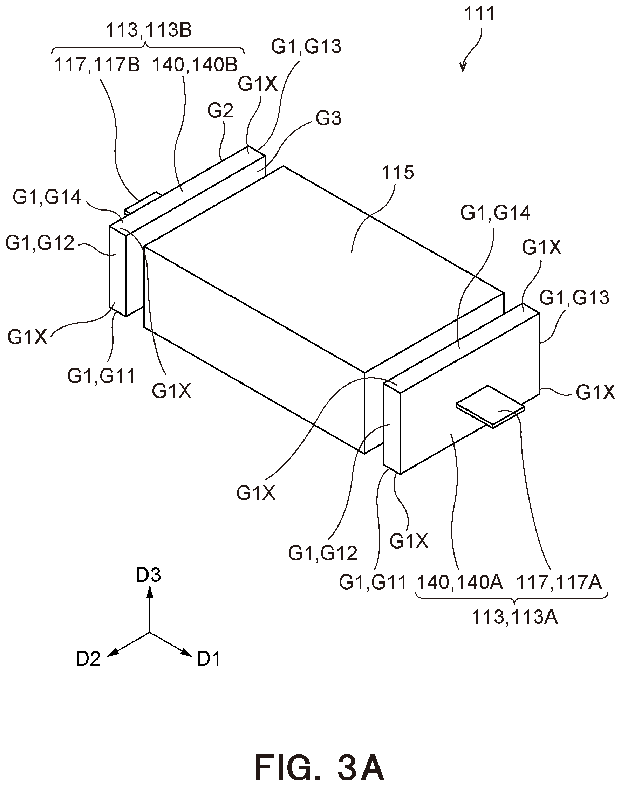

A manufacturing apparatus and manufacturing method according to the present embodiment are a manufacturing apparatus and manufacturing method for manufacturing an electrical storage device intermediate (power storage element intermediate, power storage element device) 110. An electrode assembly unit 111 and an outer film (exterior film) 130 are used to manufacture the electrical storage device intermediate 110. As shown in Figs. 3A and 3B, the electrode assembly unit 111 includes an electrode assembly 115, terminals 117A and 117B, and lids 140A and 140B. The manufacturing apparatus and manufacturing method according to the present embodiment are devised to stably join the side end surface G1 of each of the lids 140A and 140B with the outer film 130 through a circumferential sealing portion S1 as described below. The electrical storage device intermediate 110 is used to manufacture an electrical storage device (power storage element, power storage device) 100. The manufacturing apparatus and manufacturing method according to the present embodiment are also a manufacturing apparatus and manufacturing method for manufacturing the electrical storage device 100.

Hereinafter, the electrical storage device 100 and the electrical storage device intermediate 110 will be described with reference to specific examples shown in the drawings. After that, a manufacturing apparatus and manufacturing method for the electrical storage device intermediate 110 will be described with reference to specific examples shown in the drawings.

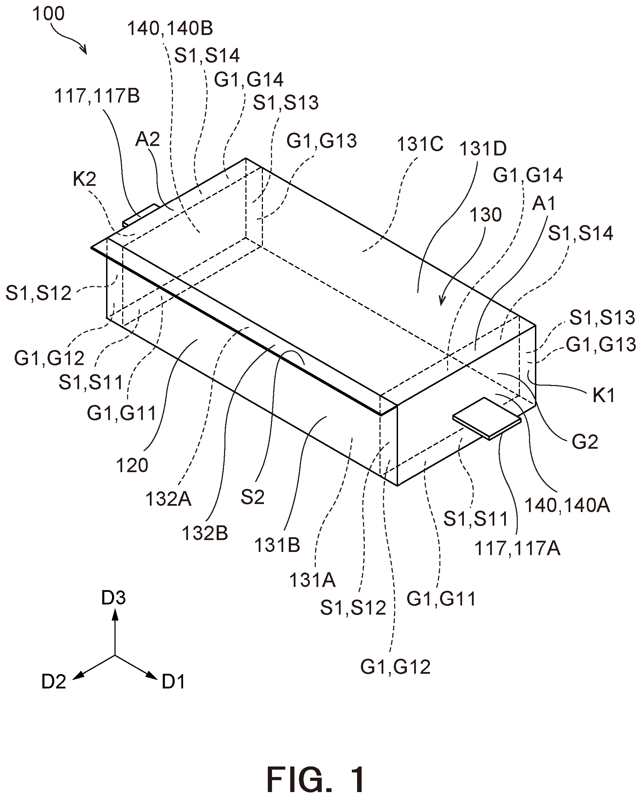

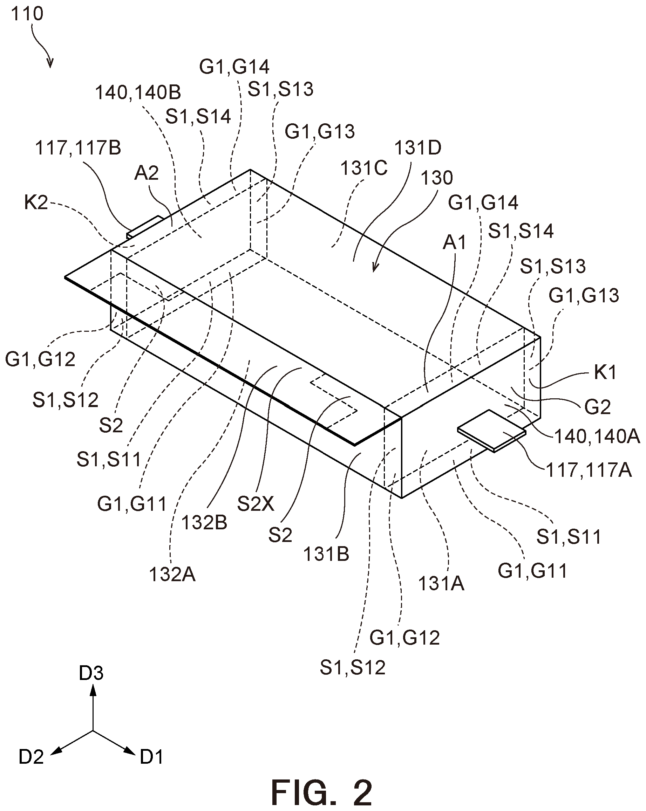

Figs. 1 and 2 are views that show one specific example of the electrical storage device and electrical storage device intermediate. The illustrated electrical storage device 100 and electrical storage device intermediate 110 are objects to be manufactured using the manufacturing apparatus and manufacturing method according to the present embodiment. Fig. 1 shows one specific example of the electrical storage device 100. Fig. 2 shows one specific example of the electrical storage device intermediate 110 that can be used to manufacture the electrical storage device 100 shown in Fig. 1. Figs. 3A to 5P are views that show examples of component elements that can be included in the electrical storage device 100 shown in Fig. 1 and the electrical storage device intermediate 110 shown in Fig. 2.

The electrical storage device 100 and the electrical storage device intermediate 110 include the electrode assembly 115, the terminals 117, and an outer package (exterior package) 120. The terminals 117 are electrically connected to the electrode assembly 115. The outer package 120 is a sealed container. The outer package 120 houses the electrode assembly 115. As shown in the illustrated example, the terminals 117 may penetrate through the outer package 120. The terminals 117 may extend from the housing space of the outer package 120 to the outside. Any gap between the outer package 120 and the terminals 117 that penetrate through the outer package 120 is sealed to prevent any leakage.

The electrode assembly 115 may also be a rechargeable power storage component. The electrode assembly 115 may include positive electrode plates and negative electrode plates. The positive electrode plates and the negative electrode plates may be alternately stacked. In the illustrated example, the positive electrode plates and the negative electrode plates may be stacked in the third direction D3. An insulating separator may be disposed between adjacent two of the positive electrode plates and the negative electrode plates.

The outermost layers of the electrode assembly 115 do not need to be electrode plates of the positive electrode plates and the negative electrode plates. The outermost layers of the electrode assembly 115 may be protective tape or separators. With the protective tape or the separators, unintended short circuit between the electrode assembly 115 and the outer package 120 can be suppressed. In the illustrated example, the outermost layers of the electrode assembly 115 include a layer located closest to the first side in the third direction D3 and a layer located closest to the second side in the third direction D3.

Examples of the power storage components that constitute the electrode assembly 115 include lithium-ion batteries, capacitors, all-solid-state batteries, semi-solid-state batteries, quasi-solid-state batteries, polymer batteries, all-resin batteries, lead-acid batteries, nickel-metal hydride batteries, nickel-cadmium batteries, nickel-iron batteries, nickel-zinc batteries, silver oxide-zinc batteries, metal-air batteries, and multivalent-cation batteries.

As shown in the illustrated example, the electrode assembly 115 may have a rectangular parallelepiped shape. In other words, the electrode assembly 115 may have a complete rectangular parallelepiped shape, or may have a shape that can be regarded as a rectangular parallelepiped shape by modifying part of the outer surface. The electrode assembly 115 may have a shape in which the corners of the rectangular parallelepiped shape are chamfered.

The electrode assembly 115 may have a polygonal prismatic shape. In other words, the electrode assembly 115 may have a complete polygonal prismatic shape, or may have a shape that can be regarded as a polygonal prismatic shape by modifying the shape of part of the outer surface. The electrode assembly 115 may have a shape in which the corners of the polygonal prism are chamfered.

The electrode assembly 115 may have a cylindrical shape. In other words, the electrode assembly 115 may have a complete cylindrical shape or a shape that can be regarded as a cylindrical shape by modifying part of the outer surface. The electrode assembly 115 may have a shape in which the corners of the cylinder are chamfered.

The terminals 117 are electrically connected to the electrode assembly 115. Each of the terminals 117 may be electrically connected to the positive electrode plates or the negative electrode plates, included in the electrode assembly. The terminal 117 may be in direct contact with the positive electrode plates or the negative electrode plates included in the electrode assembly in an electrode manner. The terminal 117 may be in contact with the positive electrode plates or the negative electrode plates included in the electrode assembly through a conductive member in an electrode manner. The terminal 117 may be a metal terminal used for the input and output (for example, charging and discharging) of electric power to and from the electrode assembly 115. The terminal 117 does not need to be fixed to the electrode assembly 115. The terminal 117 may be moved relative to the electrode assembly 115 while an electrical connection with the electrode assembly 115 is maintained.

As shown in the illustrated example, the terminal 117 may penetrate through the outer package 120. The terminal 117 may protrude from the lid 140. The terminal 117 may extend from the housing space of the outer package 120 to the outside. Any gap between the outer package 120 and the terminals 117 that penetrate through the outer package 120 is sealed to prevent any leakage.

The terminal 117 does not need to protrude from the outer package 120. The terminal 117 does not need to protrude from the outer film 130 or the lid 140. The terminal 117 does not need to penetrate through the outer package 120 or the lid 140. In these examples, the lid 140 having conductive properties may be used. The lid 140 having conductive properties may function as a terminal when electric power is input to or output from (for example, charged to or discharged from) the electrode assembly 115.

The material constituting the terminal 117 may be a metal. Examples of the metal materials for the terminal 117 include aluminum, nickel, copper, and alloys of these metals. When the electrode assembly 115 is a lithium-ion battery, the terminal 117 that is electrically connected to a positive electrode may be made of aluminum or an aluminum alloy. When the electrode assembly 115 is a lithium-ion battery, the terminal 117 that is electrically connected to a negative electrode may be made of copper, nickel, an alloy of any one of these metals, or the like.

In the illustrated example, the terminals 117 of the electrical storage device 100 and electrical storage device intermediate 110 include a first terminal 117A and a second terminal 117B. The first terminal 117A and the second terminal 117B are electrically connected to the electrode assembly 115. The first terminal 117A and the second terminal 117B may function as terminals during the charging and discharging of the electrode assembly 115. The first terminal 117A may be electrically connected to one of the positive electrode plates and negative electrode plates included in the electrode assembly 115. The second terminal 117B may be electrically connected to the other one of the positive electrode plates and negative electrode plates included in the electrode assembly 115. The first terminal 117A may be used as a positive electrode terminal, and the second terminal 117B may be used as a negative electrode terminal. The first terminal 117A may be used as a negative electrode terminal, and the second terminal 117B may be used as a positive electrode terminal.

In the illustrated example, the first terminal 117A extends from the electrode assembly 115 toward the first side in the first direction D1. The second terminal 117B extends from the electrode assembly 115 toward the second side in the first direction D1. In the illustrated example, the first terminal 117A and the second terminal 117B may have the same configuration and be disposed symmetrically.

In this specification, the term "terminal 117" can apply to both the first terminal 117A and the second terminal 117B.

The outer package 120 is a sealed container in a state of the electrical storage device 100. The outer package 120 seals the electrode assembly 115. As shown in the illustrated example, the outer package 120 includes the outer film 130 and the lids 140. The outer film 130 may have a tubular shape with openings K1 and K2. The outer film 130 may be wrapped around the electrode assembly 115 so as to have the openings K1 and K2. In the manufacturing method (described later), the outer film 130 is wrapped around the electrode assembly 115 to form the openings K1 and K2. The lids 140 respectively close the openings K1 and K2 of the tubular outer film 130. Any gap between the lids 140 and the outer film 130 is sealed. In the manufacturing method (described later), the outer film 130 is wrapped around the electrode assembly unit 111 (see Figs. 3A and 3B) including the electrode assembly 115 and the lids 140, and is joined with the lids 140.

It is also conceivable to form a housing portion (depression) for housing an electrode assembly in an outer film by cold forming. However, forming a deep housing portion by molding is not necessarily easy. If a housing portion (depression) is intended to be made deeper to, for example, a molding depth of about 15 mm, pinholes or cracks can occur in the outer film 130. The performance and reliability of the electrical storage device deteriorate.

In the present embodiment, the electrode assembly 115 is wrapped with the tubular outer film 130. The electrode assembly 115 may be wrapped by wrapping the outer film 130 around the electrode assembly 115. With this manufacturing method, the outer film 130 can be easily housed in the outer package 120 regardless of the thickness of the electrode assembly 115.

To improve the volumetric energy density of the electrical storage device 100, it is preferable to reduce the dead space between the electrode assembly 115 and the outer package 120. It is preferable that the outer package 120 is in contact with the outer surface of the electrode assembly 115. In terms of exercising the battery performance of an all-solid-state battery, it is effective to apply high pressure from the battery outer surface uniformly. From this viewpoint as well, it is preferable to eliminate the space between the electrode assembly 115 and the outer package 120. By wrapping the electrode assembly 115 with the outer film 130, the space between the outer package 120 and the electrode assembly 115 can be reduced.

The outer film 130 may have flexibility and be easy to bend. The outer film 130 may include a resin film. The outer film 130 may also be heat-sealable. With heat sealing, it is easy to seal any gap between the outer film 130 and the lids 140.

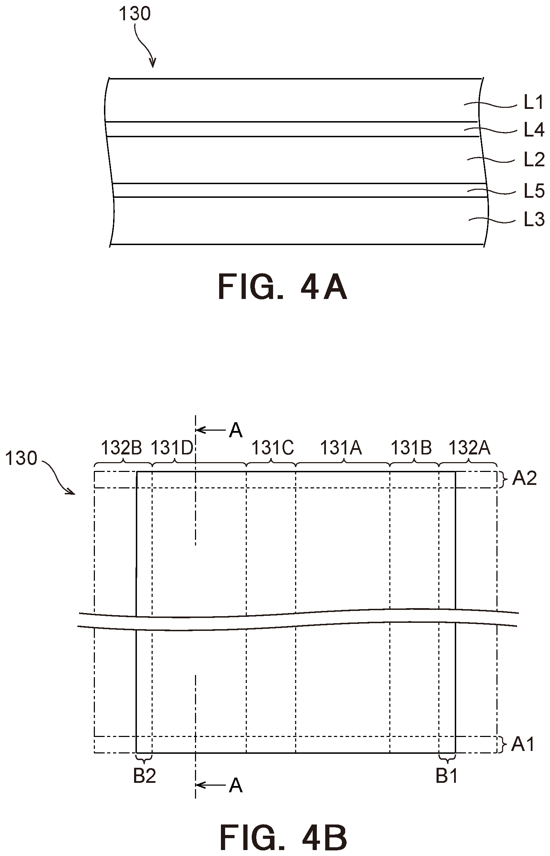

Fig. 4A is a cross-sectional view that shows an example of the outer film 130. Fig. 4A is a cross-sectional view taken along the line A-A in Fig. 4B. As shown in Fig. 4A, the outer film 130 may be a laminated body. The outer film 130 may include a base layer L1, a barrier layer L2, and a heat-sealable resin layer L3 in this order. In this example, the base layer L1 may be the outermost layer, and the heat-sealable resin layer L3 may be the innermost layer. The outer film 130 may include the heat-sealable resin layer L3 in the outermost layer. The outer film 130 may include the heat-sealable resin layer L3 in both the innermost layer and the outermost layer. The outer film 130 may include layers other than the base layer L1, the barrier layer L2, and the heat-sealable resin layer L3. The outer film 130 does not need to include one or more of the base layer L1, the barrier layer L2, and the heat-sealable resin layer L3.

The base layer L1 may impart heat resistance to the outer film 130. The base layer L1 may suppress occurrence of defects, such as pinholes, that can occur during manufacturing or distribution. The thus configured base layer L1 may include at least one of a polyester resin layer and a polyamide resin layer. The base layer L1 may include both a polyester resin layer and a polyamide resin layer. In the base layer L1 that includes both a polyester resin layer and a polyamide resin layer, the polyester resin layer may constitute the first layer as the outermost layer, and the polyamide resin layer may constitute the second layer on the barrier layer L2 side.

The base layer L1 that includes one or more of a polyester resin layer and a polyamide resin layer can protect the barrier layer L2 during working of the outer film 130. The base layer L1 that includes one or more of a polyester resin layer and a polyamide resin layer can suppress breakage of the outer film 130. The polyester resin layer may be an oriented polyester resin layer or an unoriented polyester resin layer. The polyamide resin layer may be an oriented polyamide resin layer or an unoriented polyamide resin layer. If the oriented polyester resin layer and the oriented polyamide resin layer are biaxially oriented, the tensile elongation of the outer film 130 can be increased significantly.

The oriented polyester resin layer may also be a biaxially oriented polyethylene terephthalate (PET) film. The oriented polyamide resin layer may also be a biaxially oriented nylon (ONy) film. A biaxially oriented polyethylene terephthalate film and a biaxially oriented nylon film can improve the puncture strength and impact strength of the outer film 130.

The thickness of the base layer L1 may be greater than or equal to 5 µm and less than or equal to 300 µm or may be greater than or equal to 5 µm and less than or equal to 150 µm in terms of film strength.

As shown in Fig. 4A, the barrier layer L2 may be joined with the base layer L1 using a bonding layer L4. The barrier layer L2 included in the outer film 130 may be aluminum foil. Aluminum foil is excellent in moisture resistance, workability such as ductility, and cost. Aluminum foil may contain iron from the viewpoint of packaging suitability when the electrode assembly 115 is wrapped, and pinhole resistance. The content of iron in the aluminum foil may be higher than or equal to 0.5 mass% and lower than or equal to 5.0 mass%, or may be higher than or equal to 0.7 mass% and lower than or equal to 2.0 mass%. By setting the content of iron to 0.5 mass% or higher, the outer film 130 excels in packaging suitability, pinhole resistance, and ductility. By setting the content of iron to 5.0 mass% or lower, excellent flexibility is imparted to the outer film 130. The barrier layer L2 may include a metal foil, a vapor deposition film, and a resin layer that have barrier properties. Examples of the metal foil include aluminum alloys, stainless steel, titanium steel, steel sheets, and recycled materials of these metals.

The thickness of the barrier layer L2 may be greater than or equal to 9 µm and less than or equal to 200 µm or may be greater than or equal to 30 µm and less than or equal to 85 µm in terms of barrier properties, pinhole resistance, and packaging suitability. By setting the thickness of the barrier layer L2 to 9 µm or greater, breakage of the outer film 130 can be suppressed even when tension is applied to the outer film 130 when the outer film 130 is being wrapped around the electrode assembly unit 111. By setting the thickness of the barrier layer L2 to 200 µm or less, an increase in the mass of the outer film 130 can be reduced, so a decrease in the weight energy density of the electrical storage device 100 can be suppressed.

The barrier layer L2 may include an aluminum foil and a corrosion-resistant coating. In this example, the aluminum foil may be located between the corrosion-resistant coating and the base layer L1. The barrier layer L2 may include a corrosion-resistant coating, an aluminum foil, and a corrosion-resistant coating, in this order. The corrosion-resistant coating may constitute the surface of the barrier layer L2. With the corrosion-resistant coating, the dissolution and corrosion of the barrier layer L2 can be suppressed.

The corrosion-resistant coating is a layer that imparts corrosion resistance to the barrier layer L2. Corrosion resistance may be acid resistance or may be alkali resistance. The corrosion-resistant coating may also be a thin film formed by applying corrosion protection treatment to the surface of the barrier layer L2. Examples of the corrosion protection treatment include hydrothermal conversion treatments such as Boehmite treatment, chemical conversion treatments, anodic oxidation treatments, and plating treatments using nickel, chromium, or the like. The corrosion-resistant coating may be formed by applying a coating agent.

The corrosion-resistant coating may also be a coating (acid-resistant coating) that improves the acid resistance of the barrier layer L2. The corrosion-resistant coating may also be a coating (alkali-resistant coating) that improves the alkali resistance of the barrier layer L2. The corrosion protection treatment for forming a corrosion-resistant coating may be a single type or may be a combination of two or more types. A multilayer corrosion-resistant coating may be formed by combining two or more types of corrosion protection treatments.

In the hydrothermal conversion treatment and the anodic oxidation treatment, the surface of a metal foil is dissolved with a treatment agent, and a metallic compound that has excellent corrosion resistance is formed. These treatments can be defined as a type of chemical conversion treatment.

The corrosion-resistant coating can suppress delamination between the barrier layer L2 (for example, an aluminum alloy foil) and the base layer L1 during molding of the outer film 130. Dissolution and corrosion of the surface of the barrier layer L2 caused by hydrogen fluoride generated through a reaction between an electrolyte and moisture can be suppressed by the corrosion-resistant coating. When the barrier layer L2 is an aluminum alloy foil, dissolution and corrosion of aluminum oxide present on the surface of the barrier layer L2 can be suppressed by the corrosion-resistant coating. The corrosion-resistant coating can improve the adhesion (wettability) of the surface of the barrier layer L2. The corrosion-resistant coating can suppress delamination between the base layer L1 and the barrier layer L2 during heat sealing. The corrosion-resistant coating can suppress delamination between the base layer L1 and the barrier layer L2 during molding.

The heat-sealable resin layer L3 may be joined with the barrier layer L2 using a bonding layer L5. The heat-sealable resin layer L3 imparts sealability to the outer film 130 through heat sealing. Examples of the heat-sealable resin layer L3 include a resin film composed of a polyester resin such as a polyethylene terephthalate resin and a polybutylene terephthalate resin, a polyolefin resin such as a polyethylene resin and a polypropylene resin, and an acid-modified polyolefin resin obtained by graft-modifying these polyolefin resins with an acid such as maleic anhydride. The thickness of the heat-sealable resin layer L3 may be greater than or equal to 20 µm and less than or equal to 300 µm or may be greater than or equal to 40 µm and less than or equal to 150 µm in terms of sealability and strength.

The outer film 130 may include one or more of buffer layers on the outer side of the heat-sealable resin layer L3 or, more preferably, on the outer side of the barrier layer L2. The buffer layer has a buffering function. The buffer layer may be laminated on the outer side of the base layer L1. The base layer L1 may function as a buffer layer. When the outer film 130 includes a plurality of buffer layers, the plurality of buffer layers may be laminated adjacent to each other or may be laminated with the base layer L1, the barrier layer L2, or the like, interposed between the buffer layers.

The outer side of the outer film 130 is a side away from the electrode assembly 115 in a state where the outer film 130 is wrapped around the electrode assembly 115. The inner side of the outer film 130 is a side close to the electrode assembly 115 in a state where the outer film 130 is wrapped around the electrode assembly 115.

The material constituting the buffer layer may be freely selected from among materials having cushioning properties. Examples of the materials having cushioning properties include rubber, nonwoven fabric, and foam sheets. The rubber may be, for example, natural rubber, fluorine rubber, or silicone rubber. The rubber hardness may be higher than or equal to 20 and lower than or equal to 90. The material constituting the nonwoven fabric may be a material having excellent heat resistance. The thickness of the buffer layer made of nonwoven fabric may be greater than or equal to 100 µm, may be greater than or equal to 200 µm, or may be greater than or equal to 1000 µm. The thickness of the buffer layer made of nonwoven fabric may be less than or equal to 5000 µm or may be less than or equal to 3000 µm. The thickness of the buffer layer may be greater than or equal to 100 µm and less than or equal to 5000 µm, may be greater than or equal to 100 µm and less than or equal to 3000 µm, may be greater than or equal to 200 µm and less than or equal to 5000 µm, may be greater than or equal to 200 µm and less than or equal to 3000 µm, may be greater than or equal to 1000 µm and less than or equal to 5000 µm, or may be greater than or equal to 1000 µm and less than or equal to 3000 µm. The thickness of the buffer layer may be particularly greater than or equal to 1000 µm and less than or equal to 3000 µm.

The thickness of the buffer layer made of rubber may be greater than or equal to 0.5 mm. The thickness of the buffer layer made of rubber may be less than or equal to 10 mm, may be less than or equal to 5 mm, or may be less than or equal to 2 mm. The buffer layer made of rubber may be greater than or equal to 0.5 mm and less than or equal to 10 mm, may be greater than or equal to 0.5 mm and less than or equal to 5 mm, or may be greater than or equal to 0.5 mm and less than or equal to 2 mm.

The buffer layer included in the outer film 130 can function as a cushion. With the buffer layer included in the outer film 130, damage to the outer film 130, caused by impacts when the electrical storage device 100 is dropped, and contact, collision, or the like, during handling, such as during manufacturing of the electrical storage device 100, can be suppressed.

The lids 140, together with the outer film 130, constitute the outer package 120. In the electrical storage device 100, the lids 140 respectively close the openings K1 and K2 of the tubular outer film 130. Any gap between the lids 140 and the outer film 130 is sealed.

Each of the lids 140 is connected to the terminal 117. The lid 140 may hold the terminal 117. As described above, the terminal 117 is electrically connected to the electrode assembly 115. The lid 140 is coupled to the electrode assembly 115 by the terminal 117. The terminal 117 can move to some extent relative to the electrode assembly 115. Therefore, the lid 140 can move to some extent relative to the electrode assembly 115.

The lids 140 are wrapped with the outer film 130 with which the electrode assembly 115 is wrapped. The lids 140 are joined with the outer film 130. The lids 140 and the outer film 130 may be joined by heat sealing. The lids 140 may be joined with the heat-sealable resin layer L3 of the outer film 130 by heat sealing. Each of the lids 140 may be joined in a circumferential region. Each of the lids 140 and the outer film 130 may be joined at a circumferential sealing portion. Any gap between the lids 140 and the outer film 130 is sealed.

The lid 140 and the terminal 117 constitute a lid unit 113. The lid units 113 and the electrode assembly 115 constitute the electrode assembly unit 111. In the manufacturing apparatus and manufacturing method according to the present embodiment, the electrical storage device 100 and the electrical storage device intermediate 110 are manufactured by using the electrode assembly unit 111 and the outer film 130.

In the illustrated example, the lids 140 of the electrical storage device 100 and electrical storage device intermediate 110 include a first lid 140A and a second lid 140B. In the illustrated example, the first lid 140A holds the first terminal 117A, and the second lid 140B holds the second terminal 117B.

In the illustrated example, the first lid 140A and the second lid 140B are on opposite sides from each other in the first direction D1. The first lid 140A, the electrode assembly 115, and the second lid 140B are located in this order in the first direction D1. The first lid 140A is located on the first side of the electrode assembly 115 in the first direction D1. The second lid 140B is located on the second side of the electrode assembly 115 in the first direction D1. As shown in the illustrated example, the first lid 140A and the second lid 140B may have the same configuration and be disposed symmetrically. The first lid 140A and the second lid 140B may have different configurations. The first lid 140A and the second lid 140B may have different shapes.

The first lid 140A and the first terminal 117A constitute a first lid unit 113A. The second lid 140B and the second terminal 117B constitute a second lid unit 113B. The first lid unit 113A extends from the electrode assembly 115 toward the first side in the first direction D1. The second lid unit 113B extends from the electrode assembly 115 toward the second side in the first direction D1. As shown in the illustrated example, the first lid unit 113A and the second lid unit 113B may have the same configuration and be disposed symmetrically. The first lid unit 113A and the second lid unit 113B may have different configurations. The first lid unit 113A and the second lid unit 113B may have different shapes.

In this specification, the term "lid 140" can apply to both the first lid 140A and the second lid 140B. The term "lid unit 113" can apply to both the first lid unit 113A and the second lid unit 113B.

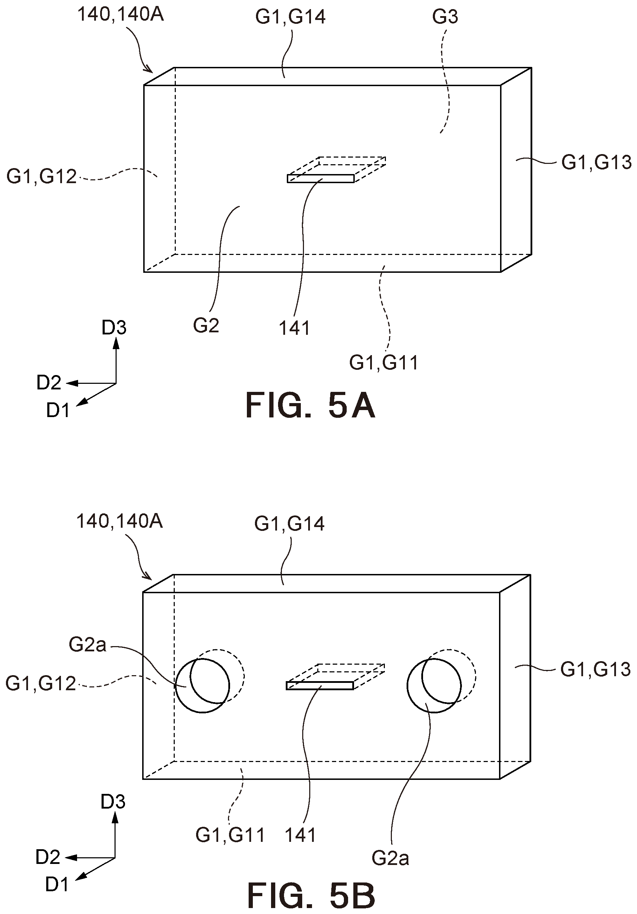

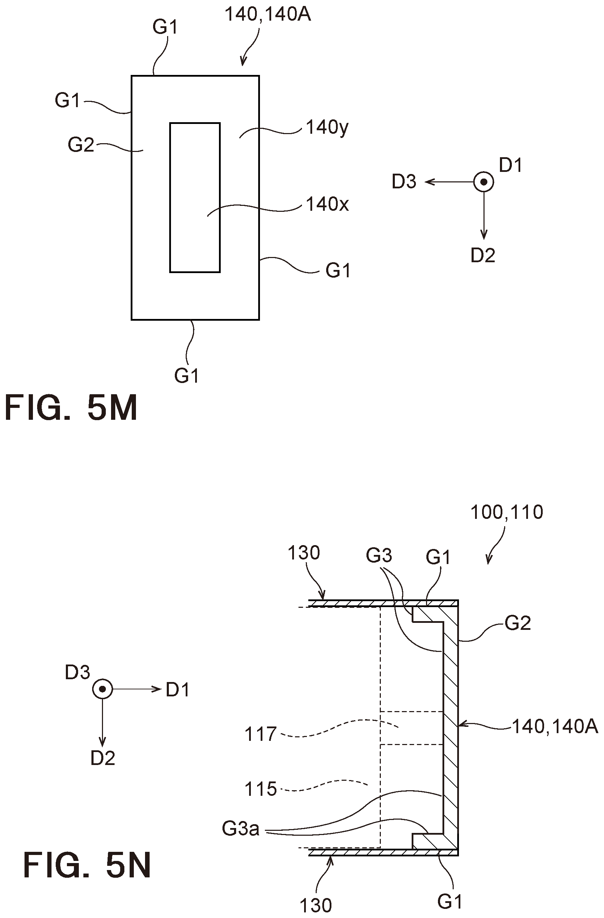

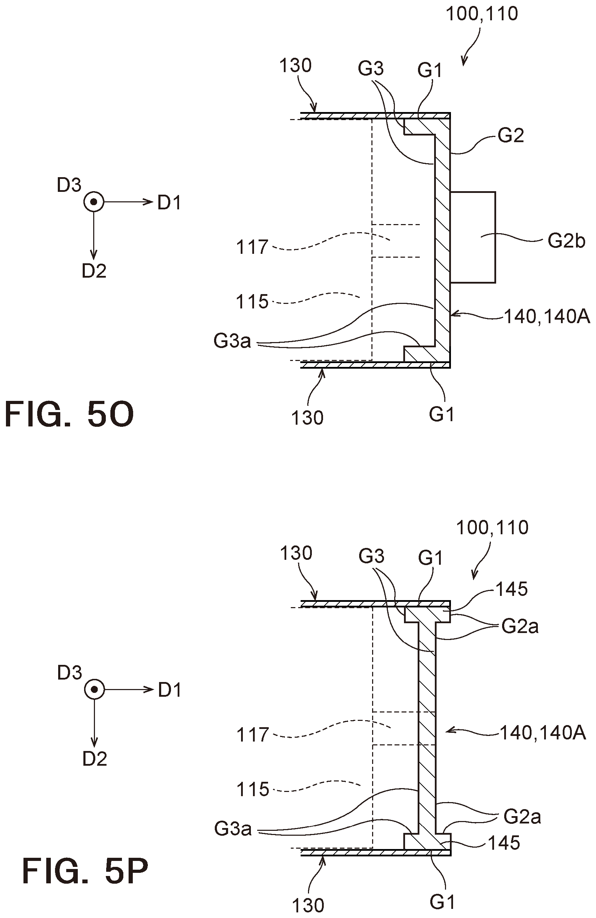

As shown in Fig. 5A, the lid 140 may have a rectangular parallelepiped shape. In other words, the lid 140 may have a complete rectangular parallelepiped shape, or may have a shape that can be regarded as a rectangular parallelepiped shape by modifying part of the outer surface. The lid 140 may have a shape in which the corners of the rectangular parallelepiped shape are chamfered.

The lid 140 may have a polygonal prismatic shape. In other words, the lid 140 may have a complete polygonal prismatic shape, or may have a shape that can be regarded as a polygonal prismatic shape by modifying the shape of part of the outer surface. The lid 140 may have a shape in which the corners of the polygonal prism are chamfered.

The lid 140 may have a cylindrical shape. In other words, the lid 140 may have a complete cylindrical shape or a shape that can be regarded as a cylindrical shape by modifying part of the outer surface. The lid 140 may have a shape in which the corners of the cylinder are chamfered.

As shown in Fig. 5A, the lid 140 may have the circumferential side end surface G1. The lid 140 may be joined with the outer film 130 at the circumferential side end surface G1. The lid 140 may be fusion-bonded to the outer film 130 at the circumferential side end surface G1. The lid 140 may be heat-sealed to the outer film 130 at the circumferential side end surface G1. The lid 140 may be heat-sealed to the heat-sealable resin layer L3 of the outer film 130 at the circumferential side end surface G1.

The side end surface G1 of the lid 140 may include a plurality of side end surfaces G11 to G14. A corner G1X may be formed between adjacent two of the side end surfaces. The circumferential side end surface G1 may also incude an angled surface (folded surface, bent surface).

As shown in Fig. 5A, the lid 140 may have an outer main surface G2 and an inner main surface G3 as a pair of main surfaces. The outer main surface G2 faces toward the outer side in the first direction D1. The inner main surface G3 faces toward the inner side in the first direction D1. The inner main surface G3 faces the internal space of the tubular outer film 130. The inner main surface G3 faces the electrode assembly 115 in the first direction D1. The outer side in the first direction D1 is a side away from the center of gravity of the electrode assembly 115 in the first direction D1. The inner side in the first direction D1 is a side close to the center of gravity of the electrode assembly 115 in the first direction D1. The inner main surface G3 faces the electrode assembly 115 in the first direction D1.

In the example shown in Fig. 5A, the lid 140 has the side end surface G1 located between the outer main surface G2 and the inner main surface G3. The side end surface G1 connects the outer main surface G2 and the inner main surface G3. The side end surface G1 faces the tubular outer film 130. The side end surface G1 is joined with the outer film 130. The side end surface G1 may be fusion-bonded to the heat-sealable resin layer L3 of the outer film 130. The side end surface G1 may be heat-sealed to the heat-sealable resin layer L3 of the outer film 130. The side end surface G1 of the lid 140 shown in Fig. 5A includes a first side end surface G11, a second side end surface G12, a third side end surface G13, and a fourth side end surface G14.

The first side end surface G11 and the fourth side end surface G14 extend in the second direction D2. The first side end surface G11 and the fourth side end surface G14 are parallel to each other. The second side end surface G12 and the third side end surface G13 extend in the third direction D3. The second side end surface G12 and the third side end surface G13 are parallel to each other.

In the illustrated example, the first side end surface G11 and the fourth side end surface G14 are parallel to the first direction D1. In the illustrated example, the first side end surface G11 and the fourth side end surface G14 are orthogonal to the third direction D3. In the illustrated example, the second side end surface G12 and the third side end surface G13 are parallel to the first direction D1. In the illustrated example, the second side end surface G12 and the third side end surface G13 are orthogonal to the second direction D2.

The second side end surface G12 is located between the first side end surface G11 and the fourth side end surface G14. The second side end surface G12 connects the first side end surface G11 and the fourth side end surface G14. The third side end surface G13 is located between the first side end surface G11 and the fourth side end surface G14. The third side end surface G13 connects the first side end surface G11 and the fourth side end surface G14.

As described above, the first direction D1 is a direction in which the first lid 140A, the electrode assembly 115, and the second lid 140B are arranged. The second direction D2 is not parallel to the first direction D1. The third direction D3 is not parallel to both the first direction D1 and the second direction D2. In the illustrated example, the second direction D2 is orthogonal to the first direction D1. In the illustrated example, the third direction D3 is orthogonal to both the first direction D1 and the second direction D2.

The side end surface G1 of the illustrated lid 140 includes the corners G1X. The side end surface G1 includes the first to fourth side end surfaces, and each corner G1X is formed between adjacent two side end surfaces of the first to fourth side end surfaces. In other words, the side end surface G1 of the lid 140 includes four corners G1X. The corner G1X is formed between the first side end surface G11 and the second side end surface G12. The corner G1X is formed between the second side end surface G12 and the fourth side end surface G14. The corner G1X is formed between the third side end surface G13 and the fourth side end surface G14. The corner G1X is formed between the third side end surface G13 and the first side end surface G11. Each of the corners G1X may be chamfered and have a rounded shape.

A lower limit may be set on the thickness of the lid 140, that is, the length of the lid 140 along the first direction D1. By setting a lower limit on the thickness of the lid 140, deformation of the outer package 120 can be suppressed when the electrical storage devices 100 are stacked. Therefore, the electrical storage devices 100 can be stably stacked. By setting a lower limit on the thickness of the lid 140, any gap between the outer film 130 and the side end surface G1 of each lid 140 can be stably sealed. In other words, the outer package 120 can be stably sealed to prevent any leakage. The thickness of the lid 140 may be greater than or equal to 1.0 mm, may be greater than or equal to 3.0 mm, or may be greater than or equal to 4.0 mm.

An upper limit may be set on the thickness of the lid 140. The thickness of the lid 140 may be less than or equal to 10 mm, may be less than or equal to 8.0 mm, or may be less than or equal to 7.0 mm.

The thickness of the lid 140 may be greater than or equal to 1.0 mm and less than or equal to 10 mm, may be greater than or equal to 1.0 mm and less than or equal to 8.0 mm, may be greater than or equal to 1.0 mm and less than or equal to 7.0 mm, may be greater than or equal to 3.0 mm and less than or equal to 10 mm, may be greater than or equal to 3.0 mm and less than or equal to 8.0 mm, may be greater than or equal to 3.0 mm and less than or equal to 7.0 mm, may be greater than or equal to 4.0 mm and less than or equal to 10 mm, may be greater than or equal to 4.0 mm and less than or equal to 8.0 mm, or may be greater than or equal to 4.0 mm and less than or equal to 7.0 mm.

The film specified in the "Packaging Terminology" standard of Japanese Industrial Standards (JIS) does not apply to the lid 140 that has a rectangular parallelepiped shape. The thickness of the lid 140 may vary depending on a part of the lid 140. When the thickness of the lid 140 varies depending on a part, the thickness of the lid 140 is defined as the thickness of the thickest part.

The lid 140 may also be a resin molded product. The lid 140 can also be a metal molded product. The lid 140 may have conductive properties. The material constituting the lid 140 may include one or two or more of a resin, a metal, a metal oxide, a carbon material, and a rubber material. The material constituting the lid 140 may include a metal oxide, a carbon material, and a rubber material.

The resin molded product means an article produced through a molding process such as injection molding and extrusion molding.

Examples of the resin material included in the lid 140 include a polyester resin such as a polyethylene terephthalate resin and a polybutylene terephthalate resin. Examples of the resin material included in the lid 140 include a polyolefin resin or cyclic polyolefin resin such as a polyethylene resin, a fluororesin, and a polypropylene resin, and an acid-modified polyolefin resin obtained by graft-modifying these polyolefin resins with an acid such as maleic anhydride.

When the lid 140 and the outer film 130 are heat-sealed, the main component contained in the lid 140 and the main component contained in the heat-sealable resin layer L3 of the outer film 130 may be the same. Examples of the main component of the lid 140 and the main component of the heat-sealable resin layer L3 include a polyolefin resin such as a polyethylene resin and a polypropylene resin, and an acid-modified polyolefin resin obtained by graft-modifying these polyethylene resins with an acid such as maleic anhydride. The main component of a certain element refers to a material that accounts for 50 mass% or more of the material included in that element.

As shown in Fig. 5A, the lid 140 may include a through hole 141. The through hole 141 extends between the outer main surface G2 and the inner main surface G3. The terminal 117 passes through the through hole 141. Any gap between the terminal 117 and the lid 140 is sealed. A sealing material may be filled in the through hole 141 between the terminal 117 and the lid 140.

The terminal 117 may include a core having conductive properties and an adhesive member wrapped around the core. The adhesive member is a member having adhesion force. The adhesive member may be a film, may have a rectangular parallelepiped shape, or may be a frame having a frame shape. With the adhesive member, the sealability (sealing performance) of the outer package 120 can be improved. In particular, any gap between the metal core and the resin lid 140 can be stably sealed. Examples of the material for the adhesive member include a polyethylene resin such as a polyethylene terephthalate resin and a polybutylene terephthalate resin, a polyolefin resin or cyclic polyolefin resin such as a polypropylene resin, and an acid-modified polyolefin resin obtained by graft-modifying these polyolefin resins with an acid such as maleic anhydride. The adhesive film may include one or two or more of the above-described films.

The location where the terminal 117 protrudes from the outer package 120 is not limited. The location of the through hole 141 can be changed from the illustrated example.

The terminal 117 may pass between the outer film 130 and the lid 140. In this example, any gap between the terminal 117 and the outer film 130 is sealed, and any gap between the terminal 117 and the side end surface G1 of the lid 140 is sealed. In this example, the through hole 141 does not need to be formed in the lid 140.

The terminal 117 and the lid 140 may be integrally formed. The terminal 117 and the lid 140 may be seamlessly formed.

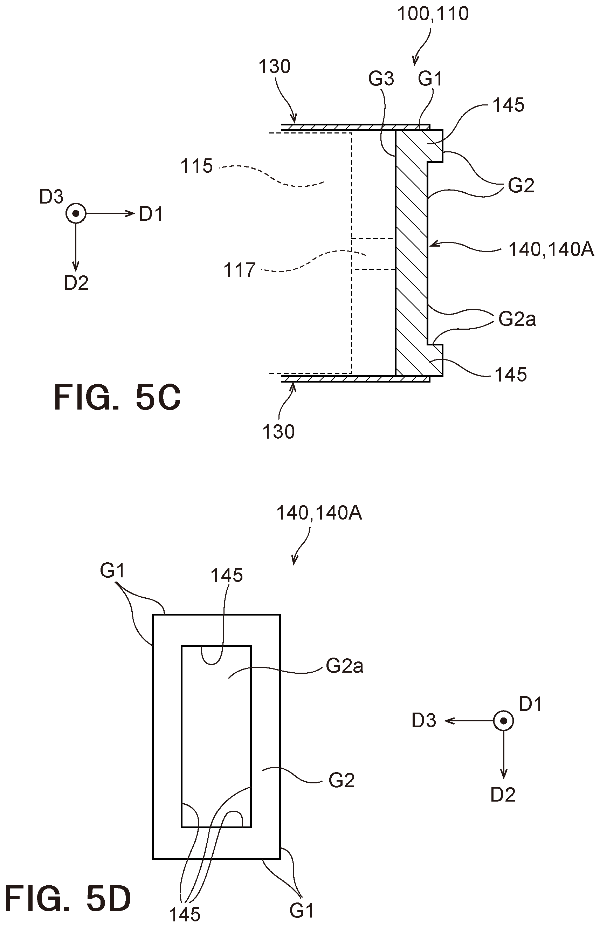

The lid 140 shown in Fig. 5A has a rectangular parallelepiped shape. As shown in Figs. 5B and 5C, the lid 140 may have a recess G2a on the outer main surface G2.

In the example shown in Fig. 5B, two recesses G2a are formed in the lid 140. The two recesses G2a are bottomed cylindrical recesses formed from the outer main surface G2 and do not reach the inner main surface G3. The two recesses G2a are arranged in the second direction D2. The terminal 117 and the through hole 141 are located between the two recesses G2a in the second direction D2. Each of the recesses G2a has a circular opening. Each of the recesses G2a may have a circular shape in a cross section orthogonal to the first direction D1. Each of the recesses G2a may have a constant cross-sectional shape at any location in the first direction D1.

In the examples shown in Figs. 5C and 5D, a single recess G2a is formed in the lid 140. The recess G2a may have a rectangular opening. The recess G2a may have a rectangular shape in a cross section orthogonal to the first direction D1. The recess G2a may have a constant cross-sectional shape at any location in the first direction D1. The rectangular shape of the cross section may include a pair of edges parallel to the second direction D2 and a pair of edges parallel to the third direction D3.

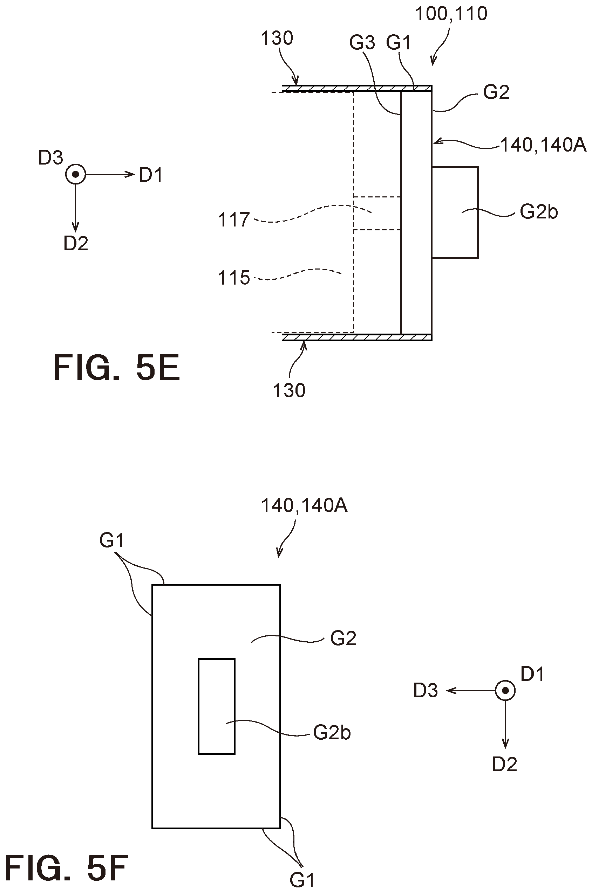

As shown in Figs. 5E and 5F, the lid 140 may have a projection G2b on the outer main surface G2. In the example shown in Figs. 5E and 5F, a single projection G2b is formed on the lid 140. The projection G2b protrudes toward the outer side in the first direction D1. The projection G2b may have a rectangular shape in a cross section orthogonal to the first direction D1. The projection G2b may have a constant cross-sectional shape at any location in the first direction D1. The rectangular shape of the cross section may include a pair of edges parallel to the second direction D2 and a pair of edges parallel to the third direction D3.

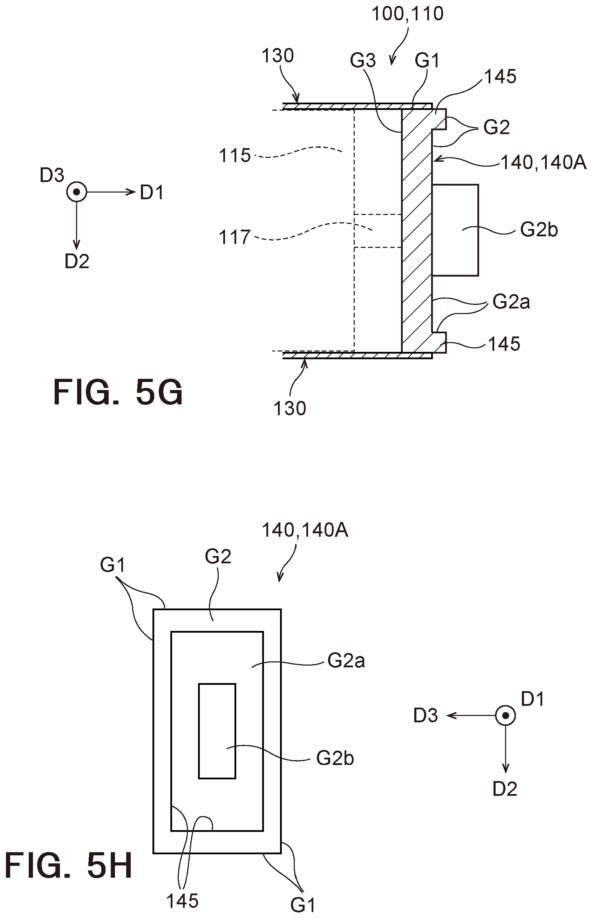

As shown in Figs. 5G and 5H, a recess G2a and a projection G2b may be formed on the lid 140 on the outer main surface G2. In the example shown in Figs. 5G and 5H, a single recess G2a and a single projection G2b are formed on the lid 140. The recess G2a may have a rectangular opening. The recess G2a may have a rectangular shape in a cross section orthogonal to the first direction D1. The recess G2a may have a constant cross-sectional shape at any location in the first direction D1. The rectangular shape of the cross section may include a pair of edges parallel to the second direction D2 and a pair of edges parallel to the third direction D3. The projection G2b may have a rectangular shape in a cross section orthogonal to the first direction D1. The projection G2b may have a constant cross-sectional shape at any location in the first direction D1. The rectangular shape of the cross section may include a pair of edges parallel to the second direction D2 and a pair of edges parallel to the third direction D3.

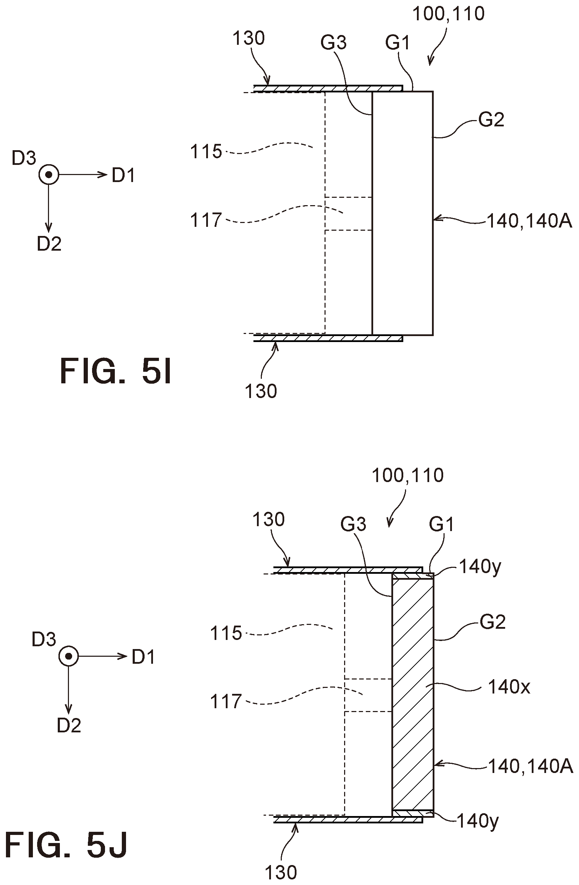

As shown in Fig. 5I, in the outer package 120, the lid 140 may protrudes from the outer film 130 toward the outer side in the first direction D1.

The recess G2a, the projection G2b, and the lid 140 protruding from the outer film 130 toward the outer side in the first direction D1 can be used to fix the lid 140 in manufacturing the electrical storage device 100 and the electrical storage device intermediate 110.

In the manufacturing apparatus and manufacturing method (described later), the electrical storage device 100 and the electrical storage device intermediate 110 are manufactured by using the electrode assembly unit 111 and the outer film 130. The outer film 130 is to be wrapped around the electrode assembly unit 111. The electrode assembly unit 111 is wrapped with the outer film 130 such that the outer film 130 contacts the side end surface G1 of the first lid 140A and the side end surface G1 of the second lid 140B. When the outer film 130 is wrapped around the electrode assembly unit 111, the first opening K1 and the second opening K2 are formed. The first lid 140A is located in the first opening K1. The side end surface G1 of the first lid 140A can contact the inner surface of the outer film 130. The second lid 140B is located in the second opening K2. The side end surface G1 of the second lid 140B can contact the inner surface of the outer film 130.

As indicated by the continuous line in Fig. 4B, the outer film 130 included in the electrical storage device 100 may have a rectangular shape in an unfolded state. The outer film 130 shown in Fig. 4B includes a pair of side edges A1 and A2 and a pair of end edges B1 and B2. The pair of side edges A1 and A2 includes a first side edge A1 and a second side edge A2. The first opening K1 is formed by the first side edge A1. The side end surface G1 of the first lid 140A faces the first side edge A1. The second opening K2 is formed by the second side edge A2. The side end surface G1 of the second lid 140B faces the second side edge A2.

Any gap between the outer film 130 and the lid 140 is sealed. The side end surface G1 of the lid 140 and the outer film 130 are joined with each other. The side end surface G1 of the lid 140 and the outer film 130 may be fusion-bonded with each other. In the example (described later), the side end surface G1 of the lid 140 and the outer film 130 are heat-sealed. A joint portion, for example, an opening sealing portion S1, is formed between the side end surface G1 and the outer film 130. The opening sealing portion S1 may be a part where the heat-sealable resin layer L3 of the outer film 130 is fused to the side end surface G1.

In the example shown in Fig. 1, the side end surface G1 of the first lid 140A and the first side edge A1 of the outer film 130 are joined with each other. The side end surface G1 of the second lid 140B and the second side edge A2 of the outer film 130 are joined with each other.

The opening sealing portion S1 includes a first sealing portion S11, a second sealing portion S12, a third sealing portion S13, and a fourth sealing portion S14. The first sealing portion S11 is formed between the first side end surface G11 of the side end surface G1 and the outer film 130. The second sealing portion S12 is formed between the second side end surface G12 of the side end surface G1 and the outer film 130. The third sealing portion S13 is formed between the third side end surface G13 of the side end surface G1 and the outer film 130. The fourth sealing portion S14 is formed between the fourth side end surface G14 of the side end surface G1 and the outer film 130.

A lower limit may be set on the sealing strength of the opening sealing portion S1. By setting a lower limit on the sealing strength of the opening sealing portion S1, stable sealability (sealing performance) of the outer package 120 can be ensured. The sealing strength of the opening sealing portion S1 may be greater than or equal to 40 N/15mm, may be greater than or equal to 50 N/15mm, may be greater than or equal to 60 N/15mm, may be greater than or equal to 70 N/15mm, or may be greater than or equal to 85 N/15mm.

By setting the sealing strength of the opening sealing portion S1 to 40 N/15mm or greater, the sealing of the electrode assembly 115 by the outer package 120 can be stably maintained during the use of the electrical storage device 100 over several years (shorter than 10 years). By setting the sealing strength of the opening sealing portion S1 to 85 N/15mm or greater, the sealing of the electrode assembly 115 by the outer package 120 can be stably maintained during the use of the electrical storage device 100 over 10 years.

The sealing strength of the opening sealing portion S1 may be less than or equal to 200 N/15mm or may be less than or equal to 150 N/15mm.

The sealing strength of the opening sealing portion S1 may be greater than or equal to 40 N/15mm and lower than or equal to 200 N/15mm, may be greater than or equal to 50 N/15mm and less than or equal to 200 N/15mm, may be greater than or equal to 60 N/15mm and less than or equal to 200 N/15mm, may be greater than or equal to 70 N/15mm and less than or equal to 200 N/15mm, or may be greater than or equal to 85 N/15mm and less than or equal to 200 N/15mm. The sealing strength of the opening sealing portion S1 may be greater than or equal to 40 N/15mm and less than or equal to 150 N/15mm, may be greater than or equal to 50 N/15mm and less than or equal to 150 N/15mm, may be greater than or equal to 60 N/15mm and less than or equal to 150 N/15mm, may be greater than or equal to 70 N/15mm and less than or equal to 150 N/15mm, or may be greater than or equal to 85 N/15mm and less than or equal to 150 N/15mm.

The sealing strength of the opening sealing portion S1 is a sealing strength measured on the longest flat surface of the side end surface G1. The sealing strength is a peel adhesion strength (N/15mm) measured in accordance with the 90-degree peeling test specified in JIS K 6854-1:1999.

The illustrated outer film 130 includes a first part 131A, a second part 131B, a third part 131C, and a fourth part 131D.

The first part 131A includes a part that is joined to the first side end surface G11 of the first lid 140A and the first side end surface G11 of the second lid 140B. In the outer package 120, the first part 131A extends between the first side end surface G11 of the first lid 140A and the first side end surface G11 of the second lid 140B.

The second part 131B includes a part that is joined to the second side end surface G12 of the first lid 140A and the second side end surface G12 of the second lid 140B. In the outer package 120, the second part 131B extends between the second side end surface G12 of the first lid 140A and the second side end surface G12 of the second lid 140B.

The third part 131C includes a part that is joined to the third side end surface G13 of the first lid 140A and the third side end surface G13 of the second lid 140B. In the outer package 120, the third part 131C extends between the third side end surface G13 of the first lid 140A and the third side end surface G13 of the second lid 140B.

The fourth part 131D includes a part that is joined to the fourth side end surface G14 of the first lid 140A and the fourth side end surface G14 of the second lid 140B. In the outer package 120, the fourth part 131D extends between the fourth side end surface G14 of the first lid 140A and the fourth side end surface G14 of the second lid 140B.

The illustrated outer film 130 further includes a first extended part 132A and a second extended part 132B extending from the electrode assembly 115 in a state of being wrapped around the electrode assembly 115. The first extended part 132A is connected to the second part 131B. The second extended part 132B is connected to the fourth part 131D. As shown in Fig. 4B, the first extended part 132A includes the first end B1 of the outer film 130 included in the electrical storage device 100. The second extended part 132B includes the second end B2 of the outer film 130 included in the electrical storage device 100.

In the electrical storage device 100, any gap between the first extended part 132A and the second extended part 132B of the outer film 130 is sealed. The first extended part 132A and the second extended part 132B are joined with each other. The first extended part 132A and the second extended part 132B may be fusion-bonded with each other. In the example (described later), the first extended part 132A and the second extended part 132B are heat-sealed. A joint portion, for example, an extended sealing portion S2, is formed between the first extended part 132A and the second extended part 132B. The extended sealing portion S2 may be a part where the heat-sealable resin layers L3 of the outer film 130 are fused to each other. In the illustrated electrical storage device 100, the outer package 120 is sealed by the opening sealing portion S1 and the extended sealing portion S2.

The extended sealing portion S2 may extend in the longitudinal direction of the electrical storage device 100 and the electrode assembly unit 111. The extended sealing portion S2 may extend in the second direction D2. The extended sealing portion S2 may extend in a direction connecting the pair of openings K1 and K2. The extended sealing portion S2 may extend in the first direction D1. In the example shown in the drawing, two extended sealing portions S2 are provided at locations spaced apart from each other in the first direction D1. In the illustrated example, each of the extended sealing portions S2 has an L-shape. In the illustrated example, each of the extended sealing portions S2 extends in both the first direction D1 and the second direction D2.

The extended sealing portion S2 may have a linear shape, unlike the illustrated example. The extended sealing portion S2 may also have an I-shape. The extended sealing portion S2 may extend in any one of the first direction D1 and the second direction D2.

In the outer package 120, the location where the extended sealing portion S2 is formed may be freely selected. In the illustrated example, the extended sealing portion S2 extends to a connection end connected to the second part 131B of the first extended part 132A. The extended sealing portion S2 is connected to the second sealing portion S12. In the illustrated example, the extended sealing portion S2 extends to a connection end connected to the fourth part 131D of the second extended part 132B. The extended sealing portion S2 is connected to the fourth sealing portion S14.

As shown in Fig. 1, the pair of extended parts 132A and 132B may be located outside the tubular portion formed by the first part 131A to the fourth part 131D. The pair of extended parts 132A and 132B may be disposed on the second part 131B. The pair of extended parts 132A and 132B may be disposed on the fourth part 131D. The pair of extended parts 132A and 132B may be located inside the tubular portion formed by the first part 131A to the fourth part 131D.

In the manufacturing apparatus and manufacturing method (described later), the electrical storage device intermediate 110 is manufactured using the electrode assembly unit 111 and the outer film 130. As shown in Fig. 2, in the electrical storage device intermediate 110, the extended sealing portion S2 at least partially includes an unsealed portion S2X. In the illustrated example, the unsealed portion S2X is located between the pair of extended sealing portions S2 in the first direction D1. In the electrical storage device intermediate 110, the extended sealing portion S2 does not need to be formed at all. The electrical storage device intermediate 110 is not sealed. The electrical storage device intermediate 110 is open between the pair of extended parts 132A and 132B.

Electrolytic solution is injected into the electrical storage device intermediate 110 through the open part. By joining the pair of extended parts 132A and 132B of the electrical storage device intermediate 110, into which electrolytic solution has been injected, over the overall length along the first direction D1, the electrical storage device 100 is obtained.

By sealing the electrical storage device intermediate 110 into which electrolytic solution has been injected, a temporary electrical storage device may be manufactured. Current may be applied to the temporary electrical storage device. Subsequently, the electrical storage device 100 may be manufactured by opening the outer package 120 of the temporary electrical storage device to discharge gas generated by the current applied from the outer package 120 and then sealing the outer package 120 again.

The pair of extended parts 132A and 132B of the electrical storage device intermediate 110 may be partially removed. It is easy to perform working such as joining on the pair of extended parts 132A and 132B of which the extension from the electrode assembly unit 111 is long. As shown in Fig. 2, the extended length of the pair of extended parts 132A and 132B from the electrode assembly unit 111 may be longer than the extended length of the pair of extended parts 132A and 132B included in the electrical storage device 100 in the pair of extended parts 132A and 132B included in the electrical storage device intermediate 110. In an example, the alternate long and two-short dashed line shown in Fig. 4B indicates the contour of the outer film 130 included in the electrical storage device intermediate 110.

The first direction D1, the second direction D2, and the third direction D3 shown in the drawings are directions defined with respect to the electrode assembly unit 111. For example, in the drawings for illustrating the manufacturing apparatus and manufacturing method, the second part 131B, the third part 131C, the fourth part 131D, the first extended part 132A, and the second extended part 132B included in the outer film 130 are changed in location in the first direction D1, the second direction D2, and the third direction D3.

As shown in Figs. 5J to 5M, the lid 140 may include a core 140x and a surrounding member 140y. The surrounding member 140y may constitute the side end surface G1 of the lid 140 that is joined with the outer film 130. The lid 140 can include the core 140x and the surrounding member 140y that are made of different materials. With the lid 140 including the core 140x and the surrounding member 140y, it becomes easier to, for example, achieve improvement in the sealing strength between the lid 140 and the outer film 130, ensure the strength of the lid 140, and ensure the input and output path of electric power to and from the electrode assembly 115.

The core 140x may contain a metal. The core 140x may contain a metal as a main component. The core 140x may be made of a metal. The core 140x may be formed of a metal. The core 140x may have conductive properties. The core 140x may be electrically connected to the terminal 117 and function as a terminal when electric power is input to or output from (for example, charged to or discharged from) the electrode assembly 115.

The core 140x may contain a resin. The core 140x may contain a resin as a main component. The core 140x may also be made of a resin. The core 140x may be formed of a resin. The core 140x may have non-conductive properties.

The surrounding member 140y may contain a resin. The surrounding member 140y may contain a resin as a main component. The surrounding member 140y may also be made of a resin. The surrounding member 140y may be formed of a resin. The surrounding member 140y may have non-conductive properties.

The surrounding member 140y may contain a metal. The surrounding member 140y may contain a metal as a main component. The surrounding member 140y may be made of a metal. The surrounding member 140y may be formed of a metal. The surrounding member 140y may have conductive properties. The surrounding member 140y may be electrically connected to the terminal 117 and function as a terminal when electric power is input to or output from (for example, charged to or discharged from) the electrode assembly 115.

Any candidate of the above-described core 140x and any candidate of the above-described surrounding member 140y may be combined with each other.

In an example, the core 140x may contain a resin, and the surrounding member 140y may contain a metal. The core 140x may contain a resin as a main component, and the surrounding member 140y may contain a metal as a main component. The core 140x may be made of a resin, and the surrounding member 140y may be made of a metal. The core 140x may have non-conductive properties, and the surrounding member 140y may have conductive properties. In these examples, the surrounding member 140y may be electrically connected to the terminal 117 and function as a terminal when electric power is input to or output from (for example, charged to or discharged from) the electrode assembly 115.

The core 140x may contain a metal, and the surrounding member 140y may contain a resin. The core 140x may contain a metal as a main component, and the surrounding member 140y may contain a resin as a main component. The core 140x may be made of a metal, and the surrounding member 140y may be made of a resin. The core 140x may have conductive properties, and the surrounding member 140y may have non-conductive properties. In these examples, the core 140x may be connected to the terminal 117 and function as a terminal when electric power is input to or output from (for example, charged to or discharged from) the electrode assembly 115. In these examples, the surrounding member 140y may contribute to improvement in the sealing strength between the lid 140 and the outer film 130.

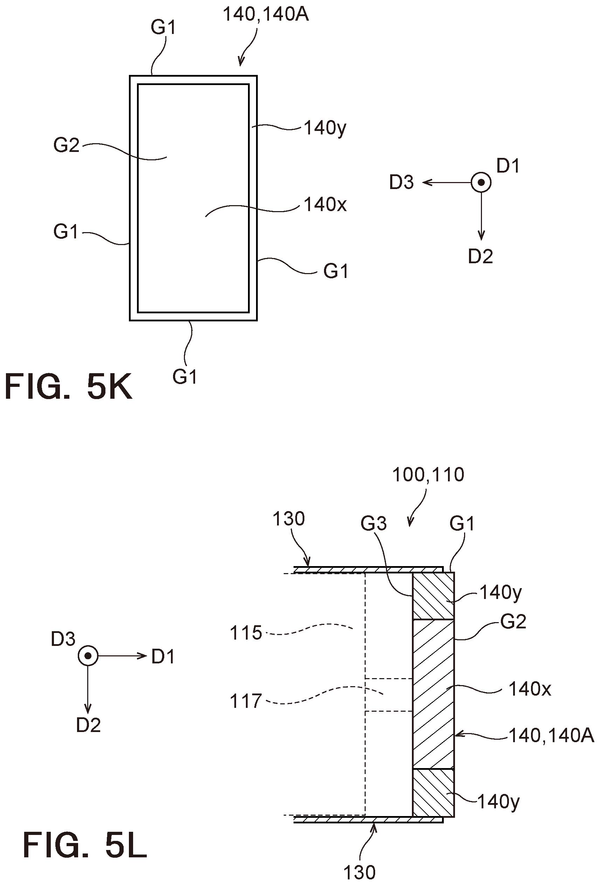

As shown in Figs. 5J and 5K, the surrounding member 140y may have a film shape. As shown in Figs. 5L and 5M, the surrounding member 140y may have a frame shape.

Any gap between the core 140x and the surrounding member 140y is sealed to prevent any leakage. The core 140x and the surrounding member 140y may be joined by fusion bonding, fixation, or brazing. Fusion bonding may be fusion bonding through, for example, heat sealing, ultrasonic bonding, high-frequency bonding, welding, or the like. One of the core 140x and the surrounding member 140y as a resin molded product may be joined to the other one of the core 140x and the surrounding member 140y by in-mold molding. Examples of brazing include joining using adhesive or solder. Examples of fixed attachment include mechanical joining, such as fitting, caulking, and joining using a joint element such as a screw.

From the viewpoint of improving the sealing strength of the lid 140 and the outer film 130, the material for the surrounding member 140y may be set as follows. The surrounding member 140y may function as an adhesive member. The adhesive member is a member having adhesion force. The surrounding member 140y as an adhesive member may function as an adhesive member that improves the sealing strength between the lid 140 (core 140x) and the outer film 130.

As shown in Figs. 5J and 5K, the surrounding member 140y as an adhesive member may have a film shape. The surrounding member 140y as an adhesive member may be a resin film disposed on the core 140x. The resin film may include only a single layer or may include a plurality of layers. As shown in Figs. 5L and 5M, the surrounding member 140y as an adhesive member may have a frame shape. The surrounding member 140y as an adhesive member may be a resin molded product.

The surrounding member 140y as an adhesive member may contain a resin containing a polyolefin skeleton as a main component. The surrounding member 140y as an adhesive member may contain a polyolefin as a main component. The surrounding member 140y as an adhesive member may contain a polypropylene as a main component. The polyolefin may be one or more polyolefins selected from between a linear polyolefin and a cyclic polyolefin.

The polyolefin used for the surrounding member 140y as an adhesive member may be an acid-modified polyolefin. An acid-modified polyolefin is a polymer obtained by modifying polyolefin through block polymerization or graft polymerization with an acidic component. Examples of the acid-modified polyolefin include the polyolefins, copolymers obtained by copolymerizing the polyolefins with polar molecules such as acrylic acid and methacrylic acid, and polymers such as crosslinked polyolefins. Examples of the acidic component used for acid modification include carboxylic acids such as maleic acid, acrylic acid, itaconic acid, crotonic acid, maleic anhydride, and itaconic anhydride, and anhydrides of these carboxylic acids.

The material used for the surrounding member 140y as an adhesive member described here may be used for a part that contacts the core 140x made of metal. The material used for the surrounding member 140y as an adhesive member described here may be used for a part that contacts the outer film 130.

The material used for the surrounding member 140y as an adhesive member described here can also be used for a part that forms the through hole 141 of the lid 140 (for example, the core 140x) or a part that contacts the terminal 117. The material used for the surrounding member 140y as an adhesive member described here can also be used for a part that contacts the lid 140 of the terminal 117.

Next, the manufacturing apparatus 20 and the manufacturing method for manufacturing the electrical storage device intermediate 110 will be described. The electrical storage device 100 can be manufactured using the electrical storage device intermediate 110. Therefore, a manufacturing apparatus 10 for manufacturing the electrical storage device 100 may include the manufacturing apparatus 20 for manufacturing the electrical storage device intermediate 110. A manufacturing method for manufacturing the electrical storage device 100 may include the manufacturing method for manufacturing the electrical storage device intermediate 110.

The manufacturing apparatus 20 manufactures the electrical storage device intermediate 110 using the electrode assembly unit 111 and the outer film 130. The manufacturing apparatus 20 may include a fixing device 40 and a first joining device 70. The manufacturing apparatus 20 may further include a wrapping device 50. The fixing device 40 fixes the first lid 140A and the second lid 140B of the electrode assembly unit 111. The fixing device 40 may fix the lids 140A and 140B located on the outer film 130. The outer film 130 may be supplied in a rolled state. The wrapping device 50 may supply the outer film 130 in a rolled state. The wrapping device 50 may wrap the electrode assembly unit 111 with the outer film 130. The rolled outer film 130 may contact the side end surface G1 of the first lid 140A and the side end surface G1 of the second lid 140B in a circumferential manner. The first joining device (joining device) 70 joins the side end surfaces G1 and the outer film 130. The first joining device 70 may heat-seal the side end surfaces G1 and the outer film 130. In heat sealing, the heat-sealable resin layer L3 of the outer film 130 may be fused to a target to be joined.

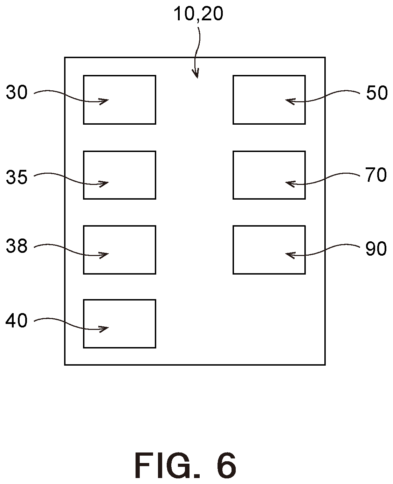

As shown in Fig. 6, the manufacturing apparatus 20 may further include a film supply device 30, an electrode assembly unit supply device 35, a positioning device 38, and a second joining device 90.

The manufacturing method for manufacturing the electrical storage device intermediate 110 manufactures the electrical storage device intermediate 110 by using the electrode assembly unit 111 and the outer film 130. The manufacturing method may include step S3 of fixing the first lid 140A and the second lid 140B of the electrode assembly unit 111, and step S4 of wrapping the electrode assembly unit 111 with the outer film 130. In the wrapping step, the outer film 130 contacts the side end surface G1 of the first lid 140A and the side end surface G1 of the second lid 140B in a circumferential manner or in part. In the wrapping step, the outer film 130 may contact the side end surface G1 of the first lid 140A and the side end surface G1 of the second lid 140B in a circumferential manner. In the wrapping step, the side end surfaces G1 and the outer film 130 are joined with each other.

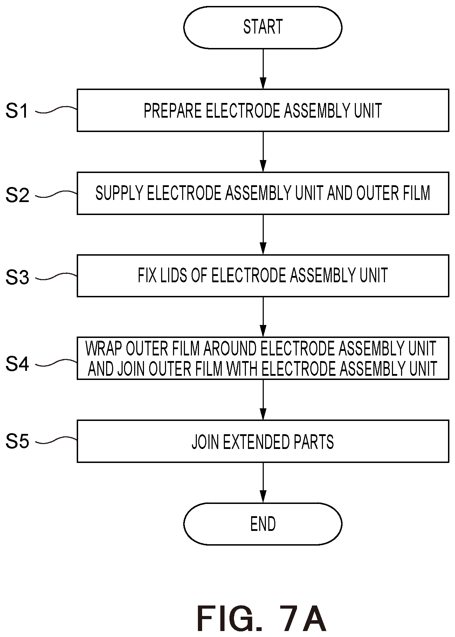

As shown in Fig. 7A, the manufacturing method may further include step S1 of preparing the electrode assembly unit 111, step S2 of supplying the electrode assembly unit 111 and the outer film 130, and step S5 of joining the extended parts.

The steps of the manufacturing method shown in Fig. 7A will be described together with the component elements of the manufacturing apparatus 20 used in the steps.

In step S1 of preparing the electrode assembly unit 111, the electrode assembly unit 111 is prepared. In step S1, the electrode assembly unit 111 may be manufactured. In step S1, the electrode assembly unit 111 that has been manufactured may be obtained.

As described with reference to Figs. 3A and 3B, the electrode assembly unit 111 includes the electrode assembly 115, the first terminal 117A, the second terminal 117B, the first lid 140A, and the second lid 140B. The electrode assembly 115 is located between the first lid 140A and the second lid 140B. The first terminal 117A is electrically connected to the electrode assembly 115. The first lid 140A is connected to the first terminal 117A. The second terminal 117B is electrically connected to the electrode assembly 115. The second lid 140B is connected to the second terminal 117B.

In the illustrated example, the first terminal 117A is separate from the first lid 140A and is held by the first lid 140A. The second terminal 117B is separate from the second lid 140B and is held by the second lid 140B. The first lid 140A, the electrode assembly 115, and the second lid 140B are located in this order from the first side toward the second side in the first direction D1.

As shown in Fig. 7A, step S2 of supplying the electrode assembly unit 111 and the outer film 130 is performed. In step S2, the film supply device 30, the electrode assembly unit supply device 35, and the positioning device 38 of the manufacturing apparatus 20 are used. The film supply device 30 supplies the outer film 130. The electrode assembly unit supply device 35 supplies the electrode assembly unit 111. The positioning device 38 adjusts the relative position between the electrode assembly unit 111 and the outer film 130.

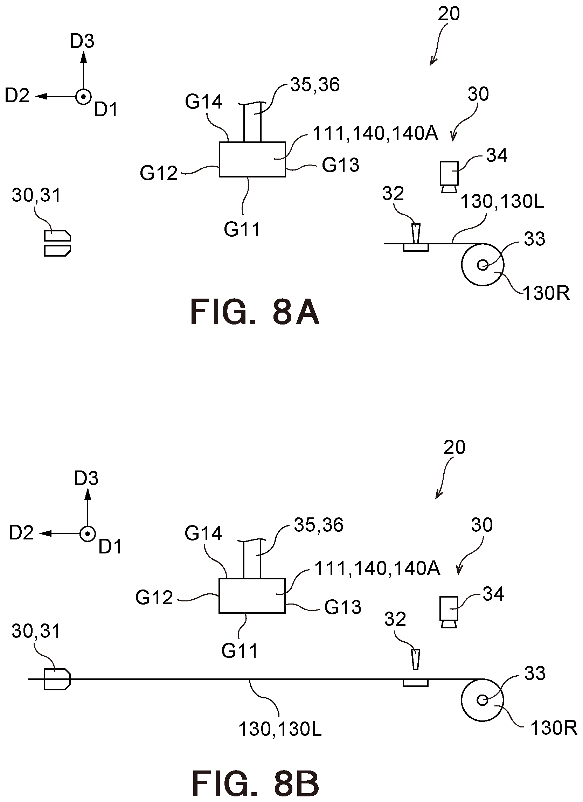

As shown in Figs. 8A and 8B, the film supply device 30 may include a roll 33 that holds a long outer film 130L. The long outer film 130L may be taken up on the roll 33 to form a roll of material 130R.

As shown in Figs 8A and 8B, the film supply device 30 may include a first film holding unit (supply chuck) 31. The first film holding unit 31 grips the long outer film 130L. The first film holding unit 31 grips the long outer film 130L and moves to feed out the long outer film 130L, which is formed as the roll of material (roll body) 130R, from the roll 33.

As shown in Figs. 8A and 8B, the film supply device 30 may include a second film holding unit (cutting and holding unit) 32. The second film holding unit 32 holds a part of the long outer film 130L between the first film holding unit 31 and the roll of material 130R. In the illustrated example, the outer film 130 used to manufacture one electrical storage device intermediate 110 is held between the first film holding unit 31 and the second film holding unit 32. The second film holding unit 32 may be capable of cutting the long outer film 130L. The second film holding unit 32 may hold the cut outer film 130 used to manufacture one electrical storage device intermediate 110 together with the first film holding unit 31.

In the example shown in Figs. 8A and 8B, the first film holding unit 31 moves in the second direction D2. With the movement of the first film holding unit 31, the outer film 130 is fed out in the second direction D2. The outer film 130 held by the first film holding unit 31 expands in the first direction D1 and in the second direction D2. The normal direction or perpendicular direction of the outer film 130 held by the first film holding unit 31 and the second film holding unit 32 is parallel to the third direction D3.

The second film holding unit 32 may be movable in the second direction D2.

As shown in Figs. 8A and 8B, the film supply device 30 may include a position acquisition unit 34. The position acquisition unit 34 acquires information regarding the position of the long outer film 130L that is fed out from the roll 33. With the position acquisition unit 34, it can be confirmed that the long outer film 130L is being supplied along a predetermined path. With the position acquisition unit 34, it can also be confirmed that there are no deformations such as wrinkles and folds in the supplied long outer film 130L. The position acquisition unit 34 may be an imaging device such as a camera.

As shown in Figs. 8A to 8C, the electrode assembly unit supply device 35 may include a holding conveyance unit 36. The holding conveyance unit 36 holds the electrode assembly unit 111 and supplies the held electrode assembly unit 111 to a predetermined position. The holding conveyance unit 36 may hold the electrode assembly unit 111 by vacuum suction.

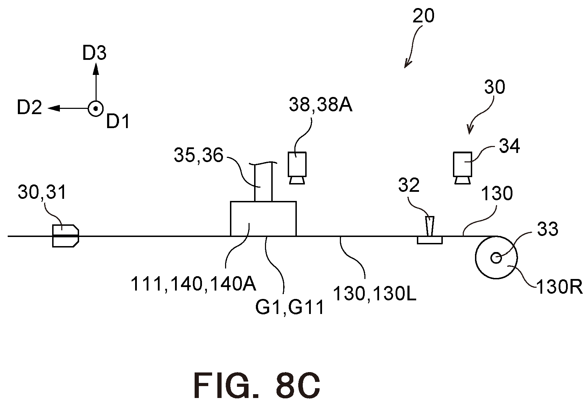

As shown in Figs 8B and 8C, the positioning device 38 includes a positioning camera 38A. The positioning camera 38A acquires information regarding the relative position between the outer film 130 supplied by the film supply device 30 and the electrode assembly unit 111 supplied by the electrode assembly unit supply device 35. When the relative position between the outer film 130 and the electrode assembly unit 111 falls outside an allowable range, the relative position is adjusted to fall within the allowable range by at least one of the film supply device 30 and the electrode assembly unit supply device 35.

In step S2, the outer film 130 may be supplied by the film supply device 30. In the film supply device 30 having the above-described configuration, the first film holding unit 31 grips the long outer film 130L and moves. As a result, the outer film 130 is supplied. The supplied outer film 130 is held between the first film holding unit 31 and the second film holding unit 32, as shown in Fig. 8B. It can be confirmed using the position acquisition unit 34 that the outer film 130 is being supplied along the predetermined path. It can be confirmed using the position acquisition unit 34 that there are no deformations such as wrinkles and folds in the supplied outer film 130.

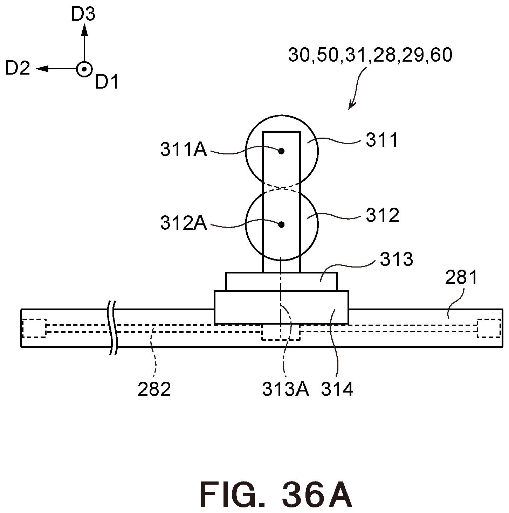

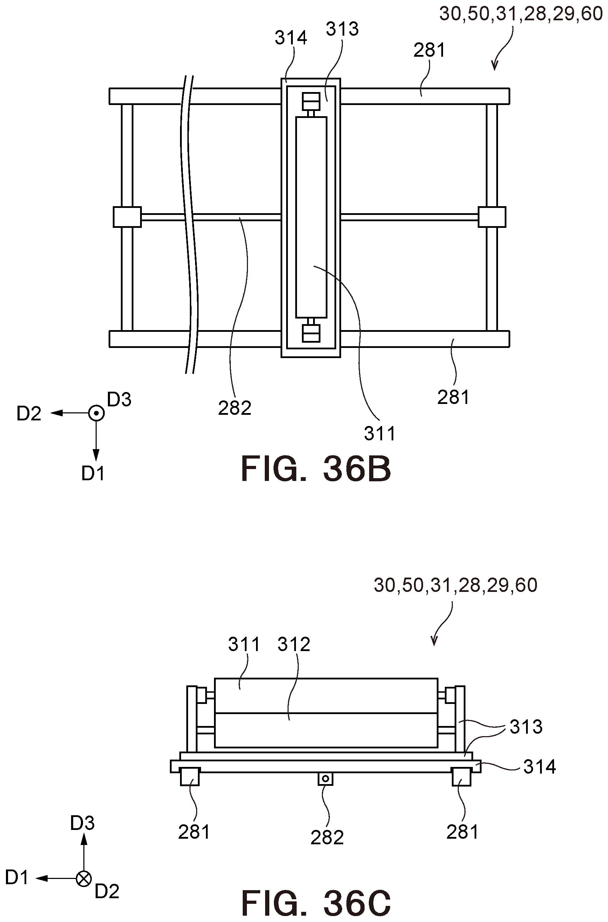

In the example shown in Figs. 8A to 8C, the first film holding unit 31 is configured as a supply chuck. The supply chuck includes a pair of chuck members that can approach and separate from each other. Unlike the example shown in Figs. 8A to 8C, the manufacturing apparatus 20 may include the first film holding unit 31 shown in Figs. 36A to 36E.

As shown in Figs. 36A to 36E, the first film holding unit 31 may include a first roll 311 and a second roll 312. The outer film 130 may be held between the first roll 311 and the second roll 312. In this example, the first roll 311 and the second roll 312 may function as nip rolls. The first roll 311 is rotatable around a first rotation axis 311A. The second roll 312 is rotatable around a second rotation axis 312A. The first rotation axis 311A and the second rotation axis 312A may be parallel to each other.

Figs. 36A to 36E show a specific example of the first film holding unit 31. In the illustrated first film holding unit 31, the first roll 311 and the second roll 312 are rotatable around an adjustment axis 313A. The adjustment axis 313A is not parallel to both the first rotation axis 311A and the second rotation axis 312A. The adjustment axis 313A may be orthogonal to both the first rotation axis 311A and the second rotation axis 312A. The first roll 311 and the second roll 312 are rotatable around the adjustment axis 313A in synchronization with each other. The first roll 311 and the second roll 312 are rotatable around the adjustment axis 313A in a state of holding the outer film 130.

By using the first roll 311 and the second roll 312 that are rotatable around the adjustment axis 313A, it is possible to hold the outer film 130 while effectively suppressing occurrence of wrinkles, sagging, or the like.

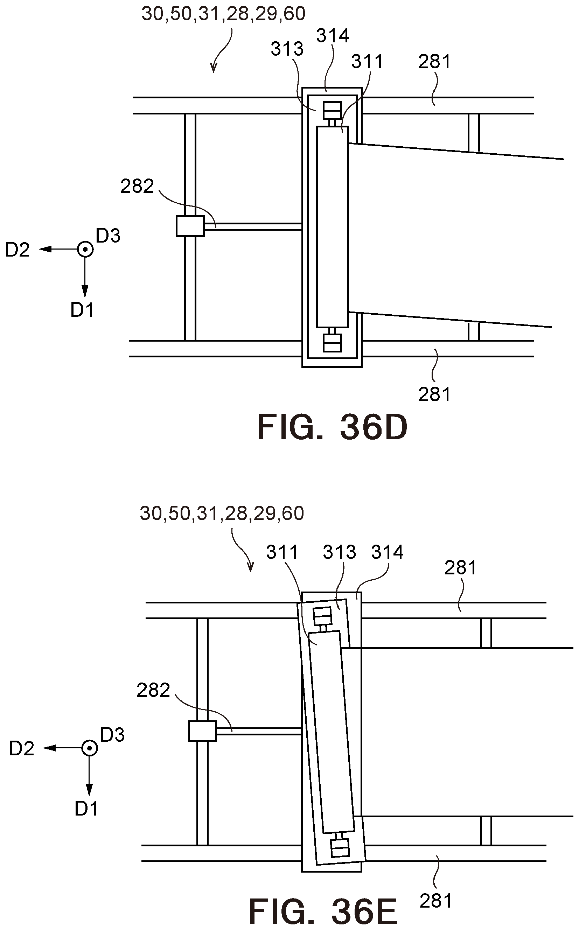

As shown in Fig. 36D, the rotation axes 311A and 312A of the nip rolls 311 and 312 holding the outer film 130 may be slightly inclined relative to the width direction (transverse direction) of the outer film 130. Various reasons can be considered for occurrence of this phenomenon. One example of the reason why this phenomenon occurs is that a deviation can occur in the direction in which the outer film 130 is supplied to the film holding unit 31.

When the nip rolls 311 and 312 move from the state shown in Fig. 36D, tension can be applied to the outer film 130 to place the outer film 130 in a taut state. In the example shown in Fig. 36D, the distance of the outer film 130 between the first film holding unit 31 and the second film holding unit 32 varies and is not constant at each position in the width direction.

At this time, when tension is applied in the second direction D2 using existing nip rolls, the tensile force of the outer film 130 significantly varies at each position of the outer film 130 in the width direction. More specifically, in the example shown in Fig. 36D, the tension of the outer film 130 is greatest at the side edge of the first side (the lower side in the sheet of Fig. 36D) in the first direction D1. In the example shown in Fig. 36D, the tension of the outer film 130 is least at the side edge of the second side (the upper side in the sheet of Fig. 36D) in the first direction D1. It can also be assumed that almost no tension is applied to the outer film 130 at the side edge of the second side in the first direction D1. When a subsequent process is performed on this outer film 130, deformations such as wrinkles and folds can occur in the outer film 130 at the side edge of the second side in the first direction D1. It is difficult to seal any gap between the deformed outer film 130 and the side end surfaces G1 of the lids 140.

To address this inconvenience, in the above-described one specific example, the first roll 311 and the second roll 312 are rotatable around the adjustment axis 313A in a state of holding the outer film 130. Therefore, as shown in Fig. 36E, when tension is applied, the first roll 311 and the second roll 312, holding the outer film 130, rotate so that a variation in tension in the width direction of the outer film 130 is reduced. Therefore, it is possible to keep the outer film 130 in a taut state while suppressing occurrence of wrinkles and sagging in the outer film 130.

In the illustrated example, the adjustment axis 313A is not parallel to the first rotation axis 311A. As illustrated, the adjustment axis 313A may be orthogonal to the first rotation axis 311A. The adjustment axis 313A is not parallel to the second rotation axis 312A. As illustrated, the adjustment axis 313A may be orthogonal to the second rotation axis 312A. In the example shown in Figs. 36A to 36E, the adjustment axis 313A is parallel to the third direction D3. The adjustment axis 313A is parallel to the normal direction of the outer film 130 held by the first film holding unit 31. In other words, the adjustment axis 313A is parallel to the normal direction of a part of the outer film 130, located upstream of the first roll 311 and the second roll 312.

As shown in the specific example in Figs. 36A to 36E, the first film holding unit 31 may include a roll holding portion 313 and a holding base portion 314. In this specific example, the roll holding portion 313 holds the first roll 311 and the second roll 312 such that the first roll 311 and the second roll 312 are rotatable. The holding base portion 314 holds the roll holding portion 313 such that the roll holding portion 313 is rotatable around the adjustment axis 313A. According to this specific example, with a simple configuration, the first roll 311 and the second roll 312 can be respectively made rotatable around the rotation axes 311A and 312A, and the first roll 311 and the second roll 312 holding the outer film 130 can also be made rotatable around the adjustment axis 313A that is not parallel to the rotation axes 311A and 312A.

The first roll 311 and the second roll 312 face each other in the third direction D3. The roll holding portion 313 may be capable of adjusting the spacing between the first roll 311 and the second roll 312. The roll holding portion 313 may be capable of regulating the rotation of the first roll 311 and the second roll 312. When the roll holding portion 313 includes these components, it is possible to switch between holding the outer film 130 using the first roll 311 and the second roll 312 and releasing the outer film 130 from the first roll 311 and the second roll 312.

In the illustrated example, the first film holding unit 31 is movable in a moving direction that is not parallel to both the rotation axes 311A and 312A and the adjustment axis 313A. The first film holding unit 31 is movable in a state of holding the outer film 130. The moving direction of the first film holding unit 31 is the second direction D2. When the first film holding unit 31 is made movable in the moving direction, the outer film 130 can be fed out from the roll 33. When the first film holding unit 31 is made movable in the moving direction, tension can be applied to the outer film 130. When the first film holding unit 31 is made movable in the moving direction, the outer film 130 can be maintained in a taut state.

As shown in Figs. 36A to 36E, the film supply device 30 may include guide rails 281 extending in the moving direction D2 that is not parallel to both the rotation axes 311A and 312A and the adjustment axis 313A. The film holding unit 31 may also be movable along the guide rails 281. The film holding unit 31 may slide along the guide rails 281. With this specific example in which the holding base portion 314 may slide along the guide rails 281, the outer film 130 can be fed out from the roll 33 with a simple configuration. According to this specific example, tension can be applied to the outer film 130 held by the film holding unit 31 with a simple configuration.

As shown in Figs. 36A to 36E, the film supply device 30 may include a holding drive unit 282 that moves the first film holding unit 31 in the moving direction D2 that is not parallel to both the rotation axes 311A and 312A and the adjustment axis 313A. According to this specific example, the outer film 130 can be fed out from the roll 33 with a simple configuration. According to this specific example, tension can be applied to the outer film 130 held by the film holding unit 31 with a simple configuration.

As shown in Figs. 36A to 36E, the holding drive unit 282 may be a ball screw mechanism. In the illustrated example, the screw of the ball screw mechanism is held by the guide rails 281. The screw of the ball screw mechanism extends in the second direction D2 that is the moving direction of the first film holding unit 31. The nut of the ball screw mechanism is mounted to the holding base portion 314 of the first film holding unit 31. Unlike the illustrated example, the holding drive unit 282 may be a hydraulic cylinder, a pneumatic cylinder, or a linear motor. The holding drive unit 282 may be any other linear mechanism.

The first film holding unit 31 constitutes a tensioning device 28. The tensioning device 28 may include the first film holding unit 31, the guide rails 281, and the holding drive unit 282.

In step S2, the electrode assembly unit supply device 35 supplies the electrode assembly unit 111. In the illustrated example, the electrode assembly unit supply device 35 places the electrode assembly unit 111 on the outer film 130. In the illustrated example, the electrode assembly unit 111 is placed on the outer film 130 such that the first side end surface G11 of the first lid 140A and the first side end surface G11 of the second lid 140B contact the outer film 130. In step S2, the positioning device 38 positions the electrode assembly unit 111 on the outer film 130. In the illustrated example, the electrode assembly unit 111 is positioned relative to the outer film 130 such that the electrode assembly 115 of the electrode assembly unit 111 is positioned on the first part 131A (see Fig. 4B) of the outer film 130.

In the above-described step S2, an example in which the electrode assembly unit 111 is placed on the outer film 130 has been described. However, the configuration is not limited to this example. Initially, the electrode assembly unit 111 may be supplied, and then the outer film 130 may be supplied so as to contact the electrode assembly unit 111.

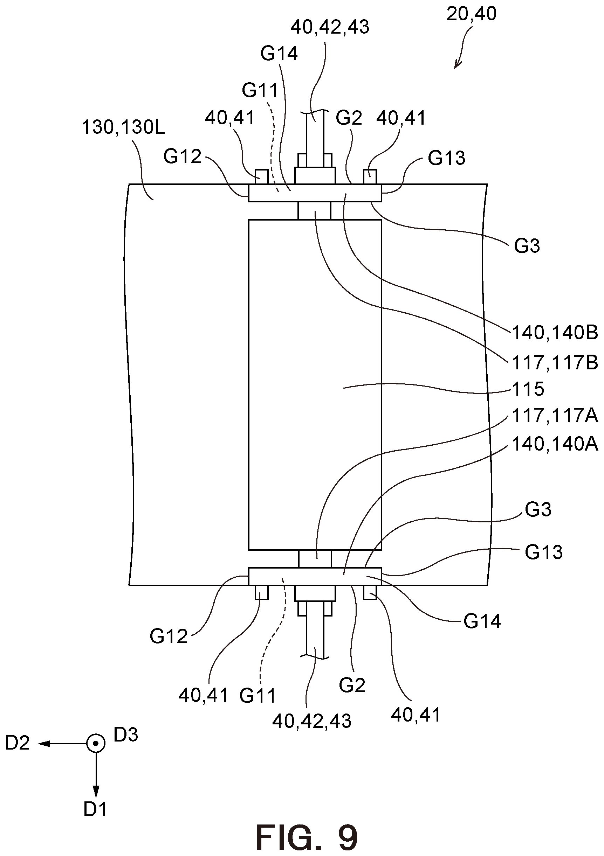

As shown in Fig. 7A, after step S2, a step of fixing the lids 140 of the electrode assembly unit 111 is performed. In step S3, the fixing device 40 of the manufacturing apparatus 20 is used. As shown in Fig. 9, the fixing device 40 fixes the first lid 140A and the second lid 140B of the electrode assembly unit 111. As shown in the illustrated example, the fixing device 40 may fix the first lid 140A and the second lid 140B positioned on the outer film 130 such that the first lid 140A and the second lid 140B do not move relative to the outer film 130.

The manufacturing apparatus 20 may separately include a fixing device 40 used for the first lid 140A and a fixing device 40 used for the second lid 140B, as shown in Fig. 9. In this example, the fixing device 40 used for the first lid 140A and the fixing device 40 used for the second lid 140B may have the same configuration and be disposed symmetrically.

As shown in Fig. 9, each of the fixing devices 40 may include a fixation restricting portion 41 and a fixation drive unit 42. The fixation restricting portions 41 respectively contact the first lid 140A and the second lid 140B from the outer sides in the first direction D1 to restrict movement toward the outer sides. The fixation drive units 42 respectively move the first lid 140A and the second lid 140B toward the outer sides in the first direction D1. The fixation drive units 42 respectively press the first lid 140A and the second lid 140B against the fixation restricting portions 41. Each of the fixation drive units 42 may press the lid 140 against the fixation restricting portion 41 by pulling the lid 140 toward the outer side in the first direction D1.

The first lid 140A, the electrode assembly 115, and the second lid 140B are arranged in this order in the first direction D1. The "outer side" in the first direction D1 refers to a side away from the center of gravity of the electrode assembly 115 in the first direction D1. The "inner side" in the first direction D1 refers to a side close to the center of gravity of the electrode assembly 115 in the first direction D1.

The fixation restricting portion 41 may contact the outer main surface G2, which is the outer side surface, of the lid 140 in the first direction D1. As described later, the outer film 130 is wrapped around the electrode assembly unit 111 and contacts the side end surface G1 of the lid 140 in a circumferential manner. In this case, the outer main surface G2 is not covered by the outer film 130. The fixation restricting portion 41 can continue to be in contact with the outer main surface G2 of the lid 140. The fixation restricting portion 41 can stably fix the lid 140.

The fixing device 40 may include a plurality of the fixation restricting portions 41. The fixation restricting portion 41 may be common to the first lid 140A and the second lid 140B. The fixation restricting portion 41 used for the first lid 140A and the fixation restricting portion 41 used for the second lid 140B may be provided separately.

In the example shown in Fig. 9, the fixing device 40 includes the fixation restricting portions 41 that contact the first lid 140A at two positions and the fixation restricting portions 41 that contact the second lid 140B at two positions. The fixation restricting portions 41 contact the lid 140 at two positions spaced apart in the second direction D2 that is the longitudinal direction of the lid 140. The fixation restricting portions 41 contact the lid 140 near both ends in the second direction D2 that is the longitudinal direction of the lid 140. In the illustrated example, the fixation restricting portions 41 is fixed to the outer film 130 held by the first film holding unit 31 and the second film holding unit 32.

Not limited to the illustrated example, the fixation restricting portion 41 may contact the lid 140 from the outer side in the first direction D1 at only one position. The fixation restricting portions 41 may contact the lid 140 from the outer side in the first direction D1 at three or more positions.

The fixation drive units 42 may include vacuum suction units 43 that respectively hold the first lid 140A and the second lid 140B by vacuum suction. The vacuum suction unit 43 can hold the lid 140 by vacuum suction and move toward the outer side in the first direction D1. When the vacuum suction unit 43 holding the lid 140 by vacuum suction moves toward the outer side in the first direction D1, the lid 140 moves toward the outer side in the first direction D1 together with the vacuum suction unit 43. The lid 140 is fixed at an appropriate position in the first direction D1 by contacting with the fixation restricting portions 41.

The vacuum suction unit 43 may hold the lid 140 by vacuum suction on the outer main surface G2 that is the outer side surface in the first direction D1. As described later, the outer film 130 is wrapped around the electrode assembly unit 111 and contacts the side end surface G1 of the lid 140 in a circumferential manner. In this case, the outer main surface G2 is not covered by the outer film 130. The fixation drive unit 42 can continue to be in contact with the outer main surface G2 of the lid 140. The fixation drive unit 42 can stably fix the lid 140.

In the example shown in Fig. 9, the vacuum suction unit 43 holds the lid 140 by vacuum suction at a position between two positions where the fixation restricting portions 41 contact the lid 140. The vacuum suction unit 43 is located between the two fixation restricting portions 41 in the second direction D2 that is the longitudinal direction of the lid 140. According to this example, the lid 140 can be stably fixed at the appropriate position.

In step S3, the electrode assembly unit 111 is placed on the outer film 130. In the preceding step S2, the electrode assembly unit 111 is positioned at the appropriate position on the outer film 130. In step S2, the electrode assembly 115 of the electrode assembly unit 111 may be positioned at the appropriate position on the outer film 130. In step S3, the fixation restricting portions 41 are disposed at an appropriate position on the outer side of the outer film 130 in the first direction D1. Each of the fixation drive units 42 moves a corresponding one of the lids 140 toward the outer side in the first direction D1. Each of the fixation drive units 42 presses a corresponding one of the lids 140 toward the fixation restricting portions 41 located on the outer side of the lid 140 in the first direction. The lid 140 is restricted from moving toward the outer side in the first direction D1 by contacting the fixation restricting portions 41. In this way, the lid 140 is positioned at a position where the lid 140 contacts the fixation restricting portions 41 in the first direction D1 and is fixed in the first direction D1.

The lid 140 is physically connected to the electrode assembly 115 via the terminal 117. The terminal 117 is formed of a thin metal sheet or the like. The terminal 117 can have flexibility. In other words, in the electrode assembly unit 111, the lid 140 is movable relative to the electrode assembly 115. Even when the electrode assembly 115 is positioned relative to the outer film 130 and fixed to the outer film 130, the lid 140 can move to some extent relative to the outer film 130. As described later, the lid 140 is joined with the outer film 130. By fixing the lid 140 to the outer film 130 using the fixing device 40, the outer film 130 can be appropriately joined to the side end surface G1 of the lid 140 in step S4 (described later). Therefore, any gap between the lid 140 and the outer film 130 can be stably sealed.

In the illustrated example, the fixation drive unit 42 includes the vacuum suction unit 43. The vacuum suction unit 43 can hold by vacuum suction the outer main surface G2 of the lid 140, facing toward the outer side in the first direction D1. As a result, the lid 140 can be stably fixed to the outer film 130 throughout manufacturing of the electrical storage device intermediate 110.

In the illustrated example, the vacuum suction unit 43 can hold the lid 140 by vacuum suction between the two fixation restricting portions 41 that contact the same lid 140. Therefore, the lid 140 can be stably fixed at the appropriate position.

In particular, one fixation restricting portion 41, the vacuum suction unit 43, and the other fixation restricting portion 41 are arranged in the longitudinal direction of the lid 140. Therefore, the lid 140 can be more stably fixed at the appropriate position.

The above-described fixing device 40 is just one example and may be modified as needed.

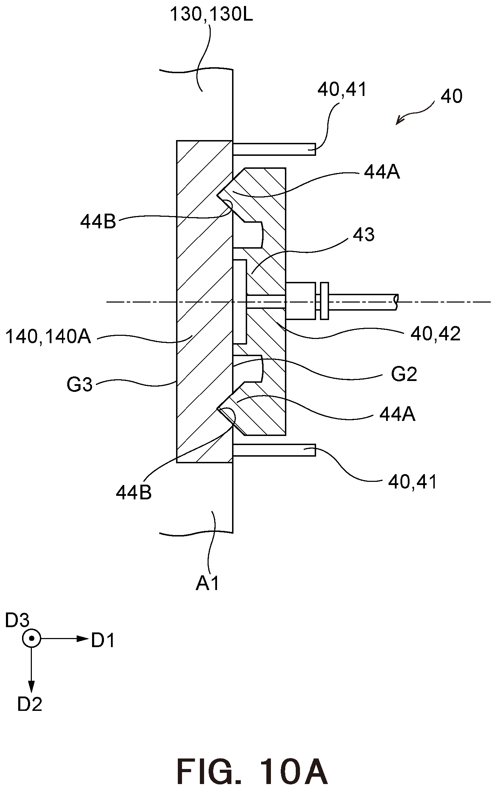

For example, as shown in Fig. 10A, one of a pair of tapered projections 44A and a pair of tapered recesses 44B may be provided on the fixation restricting portions 41 or the fixation drive unit 42. Each of the first lid 104A and the second lid 104B may have the other one of the pair of tapered projections 44A and the pair of tapered recesses 44B. In this example, the first lid 140A and the second lid 140B can be automatically positioned in a direction not parallel to the first direction D1 when the tapered projections 44A are inserted in the tapered recesses 44B.

As shown in Fig. 10A, each of the tapered projections 44A is a projection that tapers to a point. In other words, the tapered projection 44A is thick at the proximal end portion and thin at the distal end portion. The tapered recess 44B receives the tapered projection 44A. The tapered recess 44B narrows toward the bottom. In other words, the tapered recess 44B is wide at the opening and narrow at the deepest part. According to this example, when the tapered projection 44A and the tapered recess 44B approach each other in the first direction D1, the tapered projection 44A and the tapered recess 44B are automatically positioned in a direction orthogonal to the first direction D1.

In the example shown in Fig. 10A, two pairs of the tapered projection 44A and the tapered recess 44B are provided for each of the lids 140. According to this example, the lid 140 can be positioned in a direction orthogonal to the first direction D1, and the lid 140 can be fixed at the positioned appropriate position. Furthermore, according to this example, the lid 140 can be positioned in the rotation direction around an axis parallel to the first direction D1, and the lid 140 can be fixed at the positioned appropriate position.

In the example shown in Fig. 10A, the fixing device 40 corresponding to each of the lids 140 includes the vacuum suction unit 43 and two tapered projections 44A. The lid 140 has two tapered recesses 44B. The two tapered projections 44A and the two tapered recesses 44B are positioned apart from each other in the second direction D2 that is the longitudinal direction of the lid 140. Therefore, the lid 140 can be more stably fixed at the appropriate position. The lid 140 can also be fixed in a direction orthogonal to the first direction D1 and in the rotation direction around an axis parallel to the first direction D1.

Not limited to the example shown in Fig. 10A, the fixation restricting portions 41 may have the tapered projections 44A or the tapered recesses 44B. In this example, the lid 140 may have the tapered recesses 44B or the tapered projections 44A at positions facing the tapered projections 44A or the tapered recesses 44B in the first direction D1.

Not limited to the example shown in Fig. 10A, each lid 140 and the fixing device 40 may have a pair of the tapered projection 44A and the tapered recess 44B. Each lid 140 and the fixing device 40 may have three or more pairs of the tapered projection 44A and the tapered recess 44B.

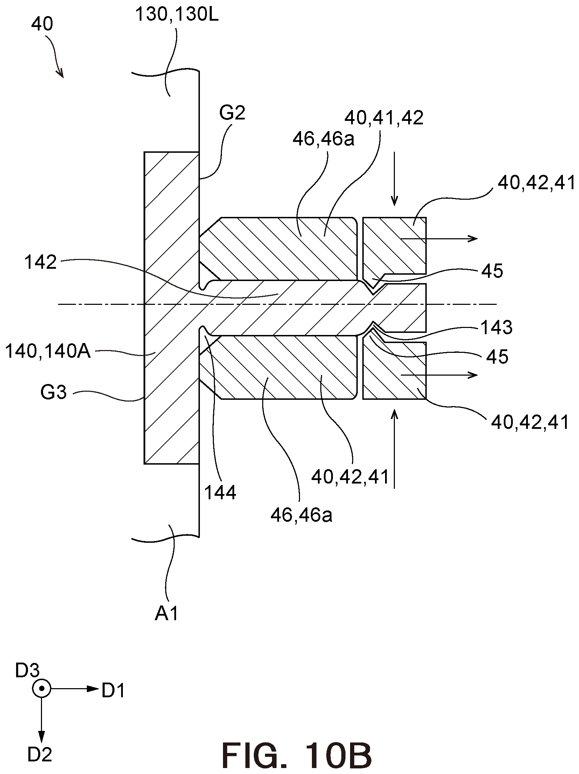

As shown in Fig. 10B, each of the first lid 140A and the second lid 140B may include a shaft-like protruding portion 142 that protrudes toward the outer side in the first direction D1. The shaft-like protruding portion 142 has a notch 143 that opens in a direction that is not parallel to the first direction D1. The fixation restricting portion 41 includes a hook 45 that can be inserted into the notch 143.

In the example shown in Fig. 10B, the notch 143 may open in a direction orthogonal to the first direction D1. The notch 143 may extend linearly in a direction orthogonal to the first direction D1. The notch 143 may have a circumferential shape that extends around the shaft-like protruding portion 142. In the example shown in Fig. 10B, the hook 45 of the fixation restricting portion 41 may protrude in a direction orthogonal to the first direction D1. The hook 45 may extend linearly in a direction orthogonal to the first direction D1. The hook 45 may have a circumferential shape. As shown in Fig. 10B, when the hook 45 is inserted in the notch 143, the relative movement in the first direction D1 between the shaft-like protruding portion 142 and the fixation drive unit 42 is restricted. When the fixation drive unit 42 moves in the first direction D1 in a state where the hook 45 is inserted in the notch 143, the lid 140 also moves in the first direction D1.

In the example shown in Fig. 10B, the fixation drive unit 42 may be movable not only in the first direction D1 but also in a direction that is not parallel to the first direction D1. The fixation drive unit 42 may be movable in a direction orthogonal to the first direction D1. When the fixation drive unit 42 moves in a direction that is not parallel to the first direction D1, the hook 45 can be inserted into the notch 143.

As shown in Fig. 10B, the fixing device 40 may include a clamper 46. The clamper 46 includes a plurality of clamp pieces 46a. Each of the clamp pieces 46a is movable in a direction that is not parallel to the first direction D1. The plurality of clamp pieces 46a can approach each other and can separate from each other. In the example shown in Fig. 10B, the plurality of clamp pieces 46a can approach each other in a direction that is not parallel to the first direction D1, for example, in a direction orthogonal to the first direction D1, to hold the shaft-like protruding portion 142. By holding the shaft-like protruding portion 142 with the clamp pieces 46a that have approached each other, movement of the lid 140 in a direction orthogonal to the first direction D1 can be restricted. In other words, by using the clamper 46, the lid 140 can also be fixed in a direction orthogonal to the first direction D1.

In the example shown in Fig. 10B, each of the lids 140 may have two or more shaft-like protruding portions 142, and one or two or more clampers 46 may clamp the two or more shaft-like protruding portions 142. The lid 140 can also be fixed in a direction orthogonal to the first direction D1 and in the rotation direction around an axis parallel to the first direction D1.

The shaft-like protruding portion 142 is used in the process of manufacturing the electrical storage device intermediate 110. The shaft-like protruding portion 142 need not be provided in the electrical storage device 100. The shaft-like protruding portion 142 may be removed from the electrical storage device intermediate 110. The shaft-like protruding portion 142 may be removable from the lid 140. In the illustrated example, the shaft-like protruding portion 142 has a linear groove 144 at the proximal end portion. The shaft-like protruding portion 142 may be removable from the lid 140 by breaking the shaft-like protruding portion 142 at the linear groove 144.

In Fig. 10B, the fixation restricting portions 41 are not shown. The fixing device 40 shown in Fig. 10B may include the fixation restricting portions 41. In the example shown in Fig. 10B, the clamper 46 may function as a fixation restricting portion 41. Since the clamper 46 functions as the fixation restricting portion 41, the dedicated fixation restricting portions 41 can be omitted. The clamp pieces 46a of the clamper 46 shown in Fig. 10B can contact the outer main surface G2 of the lid 140 and can function as the fixation restricting portion 41.

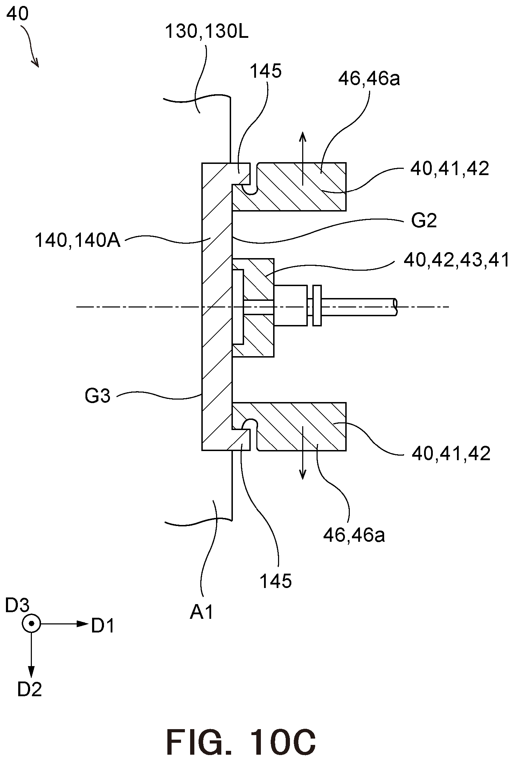

As shown in Fig. 10C, the lid 140 may have contact pieces 145 provided so as to be spaced apart from each other. The contact piece 145 may also be a partition wall that is located around a recess G2a to form the recess G2a, as shown in Figs. 5D, 5H, and the like. In the examples shown in Figs. 5C and 5D, the contact piece 145 has a circumferential shape.

In the example shown in Fig. 10C, the fixing device 40 includes the plurality of clamp pieces 46a. Each of the clamp pieces 46a is movable in a direction that is not parallel to the first direction D1. The plurality of clamp pieces 46a can approach each other and can separate from each other. The plurality of clamp pieces 46a contact the contact pieces 145 by separating from each other in a direction that is not parallel to the first direction D1. When the plurality of clamp pieces 46a respectively contacts the contact pieces 145, movement of the lid 140 in a direction orthogonal to the first direction D1 can be restricted. In other words, by using the clamper 46, the lid 140 can also be fixed in a direction orthogonal to the first direction D1.

In the example shown in Fig. 10C, the clamper 46 may move toward the outer side in the first direction D1 in a state where the clamp pieces 46a are in contact with the contact pieces 145. In this example, the clamper 46 may constitute the fixation drive unit 42, and the vacuum suction unit 43 may constitute the fixation restricting portion 41.

In Fig. 10C, the fixation restricting portions 41 are not shown. The fixing device 40 shown in Fig. 10C may include the fixation restricting portions 41. In the example shown in Fig. 10C, the clamper 46 may function as a fixation restricting portion 41. Since the clamper 46 functions as the fixation restricting portion 41, the dedicated fixation restricting portions 41 can be omitted. The clamp pieces 46a of the clamper 46 shown in Fig. 10C can contact the outer main surface G2 of the lid 140 and can function as the fixation restricting portion 41.

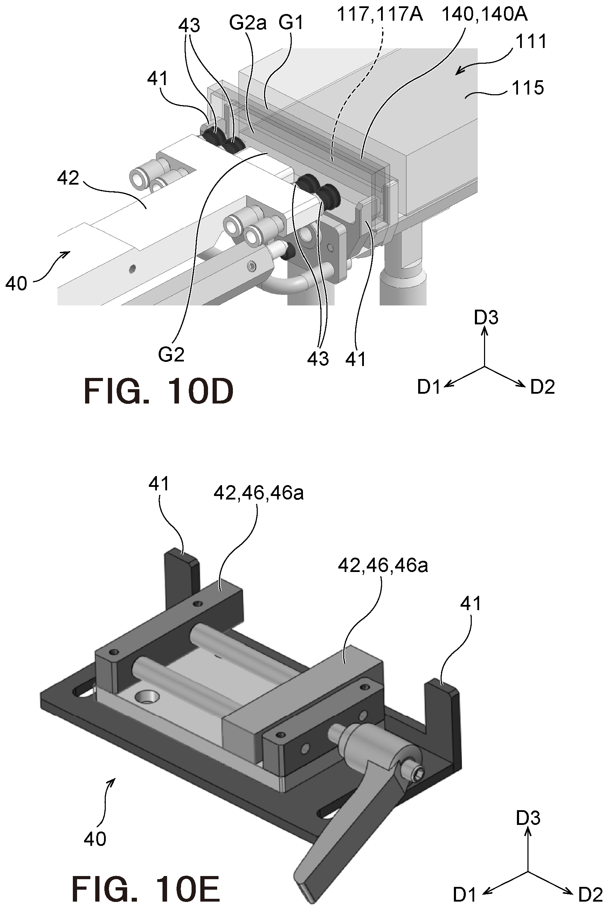

Fig. 10D is a perspective view that shows one specific example of the fixing device 40 including the fixation restricting portions 41 and the fixation drive unit 42. The fixing device 40 shown in Fig. 10D may be applied to the lid 140 that has the recess G2a on the outer main surface G2, as shown in Figs. 5C and 5D.

In the example shown in Fig. 10D, the fixation restricting portions 41 and the fixation drive unit 42 each are movable in the first direction D1. The pair of fixation restricting portions 41 is provided so as to be spaced apart from each other in the second direction D2. The vacuum suction units 43 that constitute the fixation drive unit 42 are provided between the pair of fixation restricting portions 41. In the illustrated example, four vacuum suction units 43 are arranged in the second direction D2.

Each of the fixation restricting portions 41 contacts the lid 140 from the outer side in the first direction D1. The lid 140 is held by the fixation drive unit 42 and is driven toward the outer side in the first direction D1. The lid 140 can be fixed in the first direction D1 by the fixation restricting portions 41 and the fixation drive unit 42.

In the example shown in Fig. 10D, each of the fixation restricting portions 41 is located within the recess G2a of the lid 140. The fixation restricting portions 41 contact the contact pieces 145 forming the recess G2a in the second direction D2. When the fixation restricting portions 41 contact the contact pieces 145, the lid 140 can be fixed in the second direction D2. The fixation restricting portions 41 may contact the contact pieces 145 forming the recess G2a in the third direction D3. When the fixation restricting portions 41 contact the contact pieces 145 in the third direction D3, the lid 140 can be fixed in the third direction D3.

Fig. 10E is a perspective view that shows another specific example of the fixing device 40 including the fixation restricting portions 41 and the fixation drive unit 42. The fixing device 40 shown in Fig. 10E may be applied to the lid 140 that includes the projection G2b on the outer main surface G2, as shown in Figs. 5E and 5F.

In the example shown in Fig. 10E, the fixation restricting portions 41 and the fixation drive unit 42 each are movable in the first direction D1. The pair of fixation restricting portions 41 is provided so as to be spaced apart from each other in the second direction D2. The clamper 46 that constitutes the fixation drive unit 42 is provided between the pair of fixation restricting portions 41. The clamper 46 includes the pair of clamp pieces 46a that are movable in the second direction D2. When the pair of clamp pieces 46a approaches each other in the second direction D2, the pair of clamp pieces 46a can hold the projection G2b by sandwiching the projection G2b from both sides in the second direction D2. The clamper 46 can fix the lid 140 in the second direction D2 by holding the projection G2b.

The lid 140 to which the fixing device 40 shown in Fig. 10E is applied may have the recess G2a on the outer main surface G2, as shown in Figs. 5G and 5H. Each of the fixation restricting portions 41 may be inserted in the recess G2a of the lid 140. The fixation restricting portions 41 may respectively contact the contact pieces 145 forming the recess G2a in the second direction D2. When the fixation restricting portions 41 contact the contact pieces 145 in the second direction D2, the lid 140 can be fixed in the second direction D2. The fixation restricting portions 41 may contact the contact pieces 145 forming the recess G2a in the third direction D3. When the fixation restricting portions 41 contact the contact pieces 145 in the third direction D3, the lid 140 can be fixed in the third direction D3.

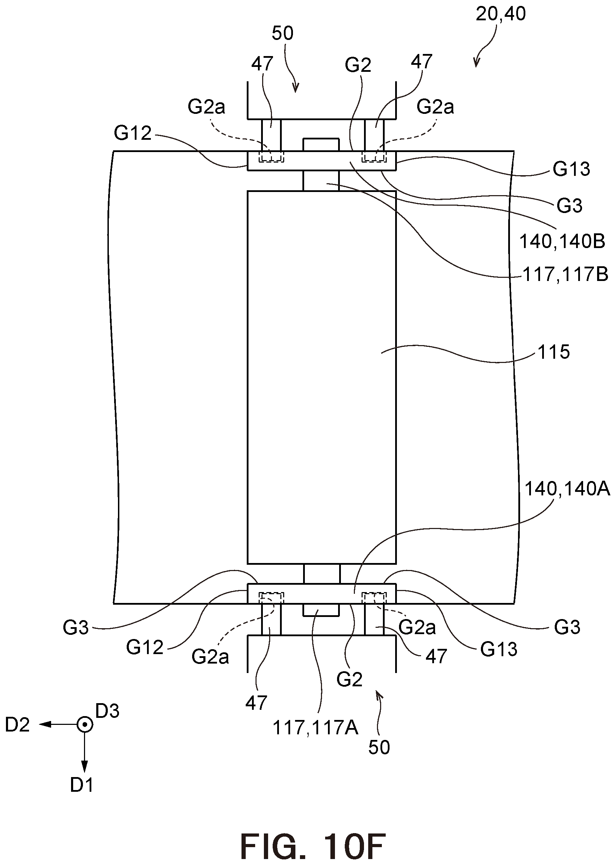

Figs. 10F to 10H show further another specific example of the fixing device 40. As shown in Fig. 5B and the like, the lid 140 may have the recesses G2a on the outer main surface G2 that is on the outer side in the first direction D1. As shown in Figs. 10F to 10H, the fixing device 40 may include chuck members 47 that are inserted into the recesses G2a from the outer side in the first direction D1. In step S3, the chuck members 47 hold a corresponding one of the lids 140 by widening the width of the chuck member 47 in a direction orthogonal to the first direction D1 within the recesses G2a.

By using the fixing device 40, the appropriate relative position between the outer film 130 and both the first lid 140A and the second lid 140B can be maintained. Therefore, using the first joining device 70 (described later), the first lid 140A and the second lid 140B can be stably joined with the outer film 130 in an appropriate relative position.

The chuck members 47 hold a corresponding one of the lids 140 by widening the width of the chuck member 47 in a direction orthogonal to the first direction D1 within the recesses G2a. Therefore, it is possible to fix the first lid 140A and the second lid 140B while automatically positioning the first lid 140A and the second lid 140B in a direction orthogonal to the first direction D1.

Furthermore, the chuck members 47 are inserted into the recesses G2a from the outer side in the first direction D1. Therefore, the fixing devices 40 can be respectively disposed on the outer sides of the first lid 140A and the second lid 140B in the first direction D1. As a result, the size of the fixing devices 40 can be reduced.

The fixing device 40 may include a plurality of the chuck members 47. A single chuck member 47 may be commonly used for the first lid 140A and the second lid 140B. The chuck member 47 used for the first lid 140A and the chuck member 47 used for the second lid 140B may be provided separately.

In the example shown in Fig. 10F, the fixing device 40 includes two chuck members 47 respectively inserted into two recesses G2a of the first lid 140A and two chuck members 47 respectively inserted into two recesses G2a of the second lid 140B. The two chuck members 47 contact the lid 140 at two positions spaced apart from each other in the second direction D2 that is the longitudinal direction of the lid 140. The two chuck members 47 may contact the lid 140 near both ends in the second direction D2 that is the longitudinal direction of the lid 140.

In the illustrated example, the chuck members 47 are fixed to the outer film 130 held by the first film holding unit 31 and the second film holding unit 32. By holding one lid 140 with two or more chuck members 47, it is possible to fix the first lid 140A and the second lid 140B while positioning the first lid 140A and the second lid 140B in the rotation direction around an axis parallel to the first direction D1. In particular, in the illustrated example, the two chuck members 47 are arranged in the second direction D2 that is the longitudinal direction of the lid 140. Therefore, the lid 140 can be more stably fixed at the appropriate position.

Not limited to the illustrated example, the chuck member 47 may be inserted from the outer side in the first direction D1 into the single recess G2a provided in each lid. The chuck members 47 may be respectively inserted from the outer side in the first direction D1 into three or more recesses G2a provided in each lid.

In the example shown in Figs. 10F to 10H, each of the chuck members 47 includes a plurality of widening pieces 472 that are inserted in the recess G2a and a widening piece holding portion 471 that holds the plurality of widening pieces 472 such that the plurality of widening pieces 472 is operable. When the plurality of widening pieces 472 operates relative to the widening piece holding portion 471, the width of the chuck member 47 changes in a direction orthogonal to the first direction D1. With a simple configuration and simple control using the chuck members 47, the first lid 140A and the second lid 140B can be stably fixed.

In the example shown in Figs. 10F to 10H, the plurality of widening pieces 472 is held at the tip of the widening piece holding portion 471. The widening pieces 472 can move relative to the widening piece holding portion 471 along a direction orthogonal to the central axis 47C of the chuck member 47. The plurality of widening pieces 472 can move relative to the widening piece holding portion 471 in a radial direction from the central axis 47C of the chuck member 47. The tip of the chuck member 47 may be made widenable by providing two widening pieces 472. The tip of the chuck member 47 may be made widenable (diameter expandable) by providing three or four widening pieces 472.

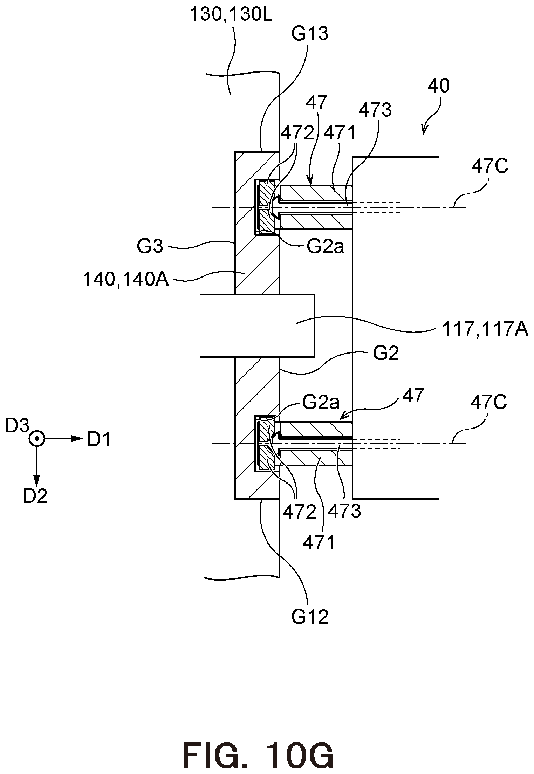

Each of the chuck members 47 may include a push pin 473 held in the widening piece holding portion 471. The push pin 473 is movable within the widening piece holding portion 471. The push pin 473 moves along the central axis 47C of the chuck member 47. As shown in Fig. 10G, when the tip of the chuck member 47 is inserted in the recess G2a, the central axis 47C of the chuck member 47 extends in the first direction D1.

As shown in Fig. 10G, when the tip of the chuck member 47 is inserted in the recess G2a, the push pin 473 is located on the outer side in the first direction D1. At this time, the plurality of widening pieces 472 is positioned close to the central axis 47C of the chuck member 47, and the width of the chuck member 47 is narrowed.

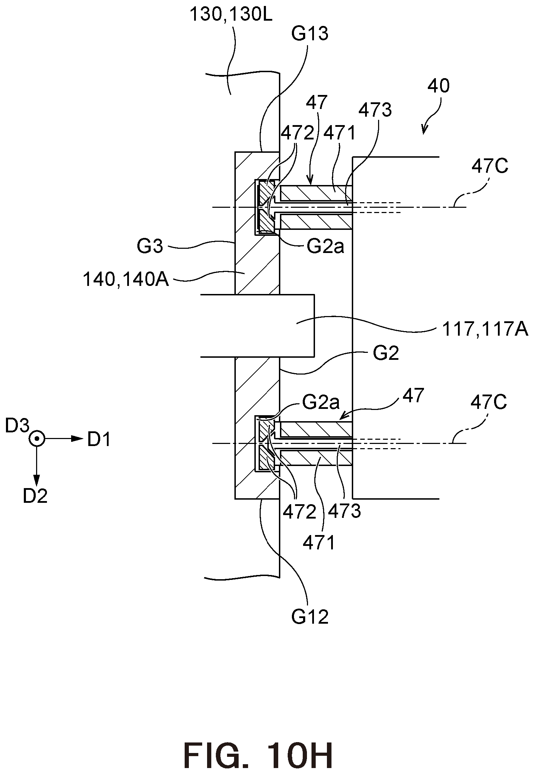

As shown in Fig. 10H, in a state where the tip of the chuck member 47 is inserted in the recess G2a, the push pin 473 moves toward the inner side in the first direction D1. The push pin 473 is inserted between the plurality of widening pieces 472. The push pin 473 contacts the plurality of widening pieces 472 to push the widening pieces 472 away from the central axis 47C. Each of the widening pieces 472 contacts the inner wall of the recess G2a. As a result, the width of the tip of the chuck member 47 expands until the tip of the chuck member 47 contacts the inner wall of the recess G2a of the lid 140, and the chuck member 47 holds the lid 140.

In the illustrated example, the surfaces of the widening pieces 472 and the push pin 473 that are in contact with each other are tapered surfaces inclined relative to the central axis 47C of the chuck member 47, that is, the moving direction of the push pin 473. Therefore, by moving the push pin 473 in the moving direction, the widening pieces 472 can be smoothly moved in a direction orthogonal to the moving direction of the push pin 473.

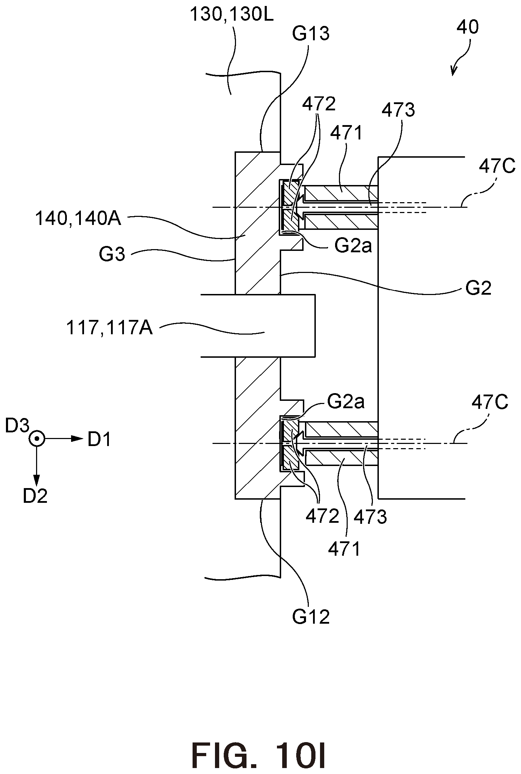

In the example shown in Figs. 10F to 10H, the recesses G2a are formed as parts that are further recessed from the other part of the outer main surface G2. However, the configuration is not limited to this example. As shown in Fig. 10I, cylindrical protruding portions may be formed on the outer main surface G2 of the lid 140, and the recesses G2a may be formed in the cylindrical protruding portions. In other words, the recesses G2a may be formed of hollow parts of the cylindrical protruding portions.

As shown in Fig. 7A, after step S3, step S4 of joining the side end surfaces G1 with the outer film 130 wrapped around the electrode assembly unit 111 is performed. In step S4, the outer film 130 may be wrapped around the electrode assembly unit 111, and the outer film 130 may be joined to the lids 140. In step S4, the wrapping device 50 and the first joining device 70 of the manufacturing apparatus 20 may be used.

In step S4, the outer film 130 may be wrapped around the electrode assembly unit 111 so as to contact the side end surface G1 of the first lid 140A and the side end surface G1 of the second lid 140B in a circumferential manner. The outer film 130 is joined with the side end surfaces G1 that face the outer film 130. The first side edge A1 (see Fig. 4B) of the outer film 130 is joined to the side end surface G1 of the first lid 140A. The second side edge A2 (see Fig. 4B) of the outer film 130 is joined to the side end surface G1 of the second lid 140B.

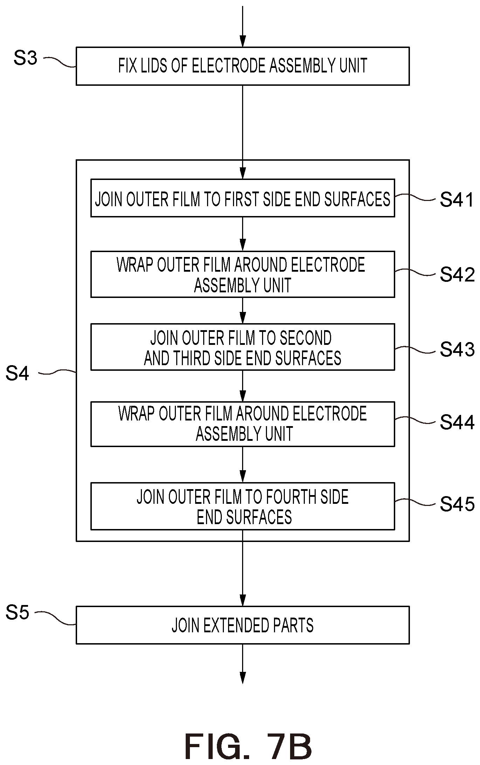

In step S4, after the outer film 130 is wrapped around the electrode assembly unit 111 in a circumferential manner, the outer film 130 and the side end surfaces G1 of the lids 140 may be joined. As shown in Fig. 7B, the step of wrapping the outer film 130 around the electrode assembly unit 111 in a circumferential manner and the step of joining the outer film 130 to the side end surfaces G1 may be performed sequentially.

Hereinafter, an example in which step S4 is performed in the procedure shown in Fig. 7B will be described. As shown in Fig. 7B, a step of wrapping the outer film 130 around the electrode assembly unit 111 and joining it to the lids 140 may include step S41, step S42, step S43, step S44, and step S45. In step S41, the outer film 130 is joined to the first side end surfaces G11 of the lids 140. In step S42, the outer film 130 is wrapped around the electrode assembly unit 111 to bring the outer film 130 into contact with the second side end surfaces G12 and the third side end surfaces G13. In step S43, the outer film 130 is joined to the second side end surfaces G12 and the third side end surfaces G13 of the lids 140. In step S44, the outer film 130 is wrapped around the electrode assembly unit 111 to bring the outer film 130 into contact with the fourth side end surfaces G14. In step S45, the outer film 130 is joined to the fourth side end surfaces G14 of the lids 140.

In step S4, the wrapping device 50 and the first joining device 70 of the manufacturing apparatus 20 are used. The wrapping device 50 wraps the electrode assembly unit 111 with the outer film 130 such that the outer film 130 contacts the side end surface G1 of the first lid 140A and the side end surface G1 of the second lid 140B in a circumferential manner. The first joining device 70 joins the side end surfaces G1 with the outer film 130. As described below, the first joining device 70 may join the side end surfaces G1 and the outer film 130 by heat sealing. The first joining device 70 may form the circumferential opening sealing portions S1 around the side end surfaces G1. Hereinafter, the steps of Fig. 7B included in step S4 will be described together with the configurations of the wrapping device 50 and the first joining device 70 used in the steps. Unlike the description below, the first joining device 70 may join the lids 140 and the outer film 130 using other joining methods such as ultrasonic bonding and high-frequency bonding.

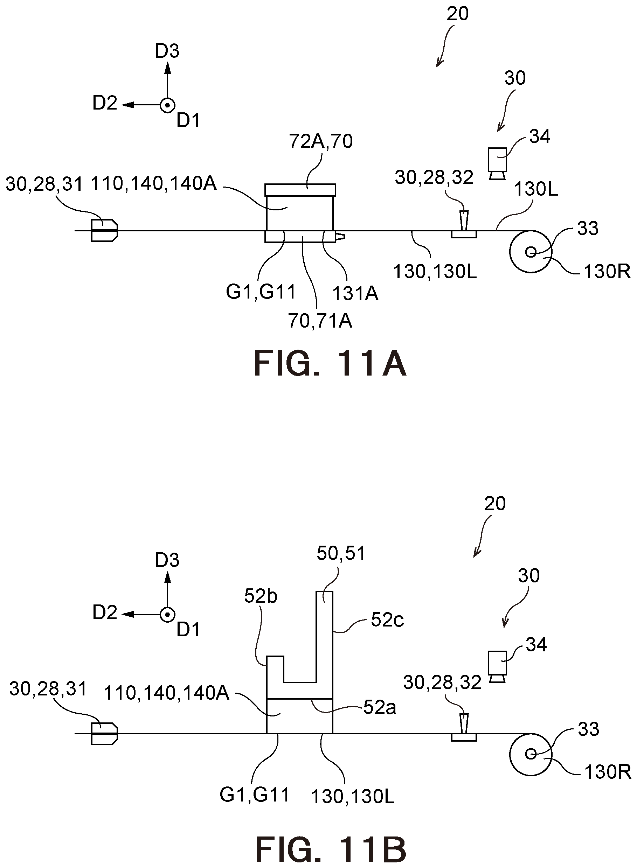

In step S41, as shown in Fig. 11A, the outer film 130 is joined to the first side end surfaces G11. The electrode assembly unit 111 is positioned on the first part 131A (see Fig. 4B) of the outer film 130. In step S3 that is the preceding step, the first lid 140A and the second lid 140B are respectively fixed at appropriate positions relative to the outer film 130 by the fixing devices 40. The first lid 140A is positioned on the first side edge A1 (see Fig. 4B) within the first part 131A of the outer film 130. The second lid 140B is positioned on the second side edge A2 (see Fig. 4B) within the first part 131A of the outer film 130.

The first joining device 70 may include a first seal bar 71A that contacts a part of the outer film 130, located on the first side end surfaces G11, and heats the part while pressing the outer film 130 with the first side end surfaces G11. The illustrated first joining device 70 includes the first seal bar 71A and a receiving bar 72A. As shown in Fig. 11A, the first seal bar 71A and the receiving bar 72A are on opposite sides. The outer film 130 and the electrode assembly unit 111 are positioned between the first seal bar 71A and the receiving bar 72A.

In step S41 mainly shown in Fig. 11A, the outer film 130 is joined to the first side end surfaces G11 using the first joining device 70 described above. In one specific example, in step S41, the outer film 130 may be joined to the first side end surfaces G11 as described below. In step S41, in continuation from the immediately preceding step S3, the lids 140 are fixed by the fixing devices 40.

In step S41 shown in Fig. 11A, the first seal bar 71A and the receiving bar 72A press toward each other. The outer film 130 is positioned between the first seal bar 71A and the electrode assembly unit 111. The first seal bar 71A has a built-in heating mechanism. The first seal bar 71A presses the outer film 130 toward the lids 140 while heating the outer film 130. The outer film 130 fuses to the side end surfaces G1 of the lids 140. For example, the heat-sealable resin layer L3 of the outer film 130 fuses to the side end surfaces G1.

In step S41, the first seal bar 71A heats the first side edge A1 and the second side edge A2 located within the first part 131A of the outer film 130. The first side edge A1 located within the first part 131A faces the first side end surface G11 of the first lid 140A. The first sealing portion S11 of the opening sealing portion S1 is formed between the first side edge A1 located within the first part 131A and the first side end surface G11 of the first lid 140A. The second side edge A2 located within the first part 131A faces the first side end surface G11 of the second lid 140B. The first sealing portion S11 of the opening sealing portion S1 is formed between the second side edge A2 located within the first part 131A and the first side end surface G11 of the second lid 140B.

Thus, step S41 ends.

The first joining device 70 may include a bar drive unit 73 that drives the seal bar included in the first joining device 70. The bar drive unit 73 moves the seal bar included in the first joining device 70. The bar drive unit 73 moves the seal bar included in the first joining device 70 to press the outer film 130 toward the side end surfaces G1 with the seal bar.

The bar drive unit 73 may move the seal bar so as to achieve a preset depression amount. Instead of moving the seal bar until a certain pressure is reached, by moving the seal bar until a preset depression amount, that is, a depression length, excessive depression of the seal bar toward the outer film 130 and the lids 140 can be suppressed. For example, leakage of the thermoplastic resin that constitutes the heat-sealable resin layer L3 from between the outer film 130 and the lids 140 can be suppressed.

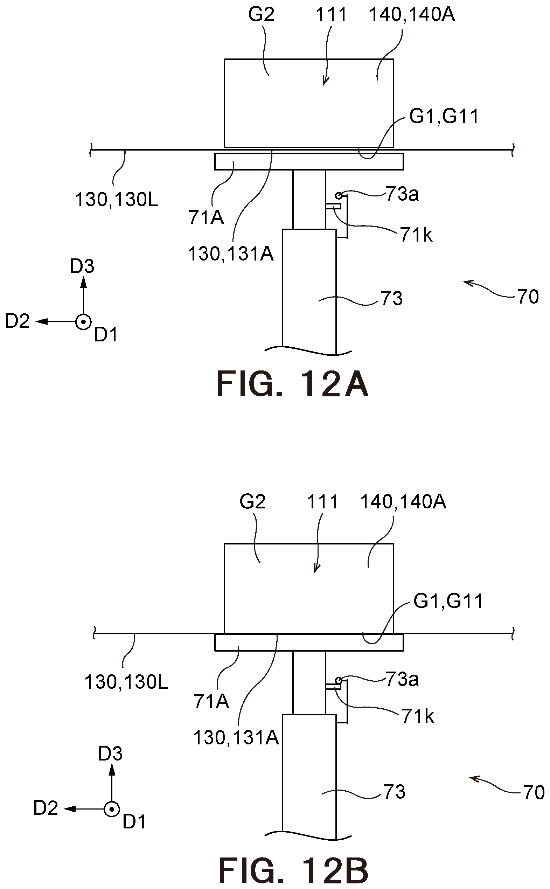

In the example shown in Figs. 12A and 12B, the first seal bar 71A is driven by the bar drive unit 73. The first seal bar 71A includes a protruding contact piece 71k. The protruding contact piece 71k protrudes from the body portion of the first seal bar 71A in a direction that is not parallel to the third direction D3, for example, a direction orthogonal to the third direction D3, which is the operating direction of the first seal bar 71A. The bar drive unit 73 includes a movement restriction piece 73a that faces the protruding contact piece 71k. The movement restriction piece 73a is held at a position facing the protruding contact piece 71k along the moving direction of the first seal bar 71A. The movement restriction piece 73a is positioned in front of the protruding contact piece 71k in the moving direction when the first seal bar 71A presses the outer film 130 toward the lids 140. When the protruding contact piece 71k contacts the movement restriction piece 73a, movement of the first seal bar 71A toward the outer film 130 is controlled to a preset depression amount.

The single first seal bar 71A may extend in the first direction D1 to press both the first side edge A1 and the second side edge A2 within the first part 131A of the outer film 130 toward the lids 140A and 140B while heating. In other words, the first seal bar 71A that presses the first side edge A1 of the outer film 130 toward the first lid 140A while heating and the first seal bar 71A that presses the second side edge A2 toward the second lid 140B while heating may be integrally formed. Alternatively, the first seal bar 71A that presses the first side edge A1 of the outer film 130 toward the first lid 140A while heating and the first seal bar 71A that presses the second side edge A2 toward the second lid 140B while heating may be provided separately.

As will be described later, the first joining device 70 may include a second seal bar 71B, a third seal bar 71C, and a fourth seal bar 71D in addition to the first seal bar 71A. The bar drive unit 73 that moves the seal bar so as to achieve a preset depression amount can also be applied for the second to fourth seal bars 71B to 71D. For the second to fourth seal bars 71B to 71D as well, the seal bar that presses the first side edge A1 toward the first lid 140A while heating and the seal bar that presses the second side edge A2 toward the second lid 140B while heating may be configured integrally or provided separately.

In the illustrated configuration, the first to fourth seal bars 71A to 71D are provided separately; however, the configuration is not limited to this example. Two or more of the first to fourth seal bars 71A to 71D may be a common seal bar. For example, the first seal bar 71A may be the same seal bar as any of the second to fourth seal bars 71B to 71D. The fourth seal bar 71D may be the same seal bar as any of the first to third seal bars 71A to 71C.

As shown in Fig. 7B, after step S41, step S42 of wrapping the outer film 130 around the electrode assembly unit 111 is performed. In step S42, the wrapping device 50 of the manufacturing apparatus 20 is used. In step S42, the outer film 130 is wrapped around the electrode assembly unit 111 so as to contact the second side end surfaces G12. The outer film 130 is wrapped around the electrode assembly unit 111 such that the outer film 130 contacts the third side end surfaces G13.

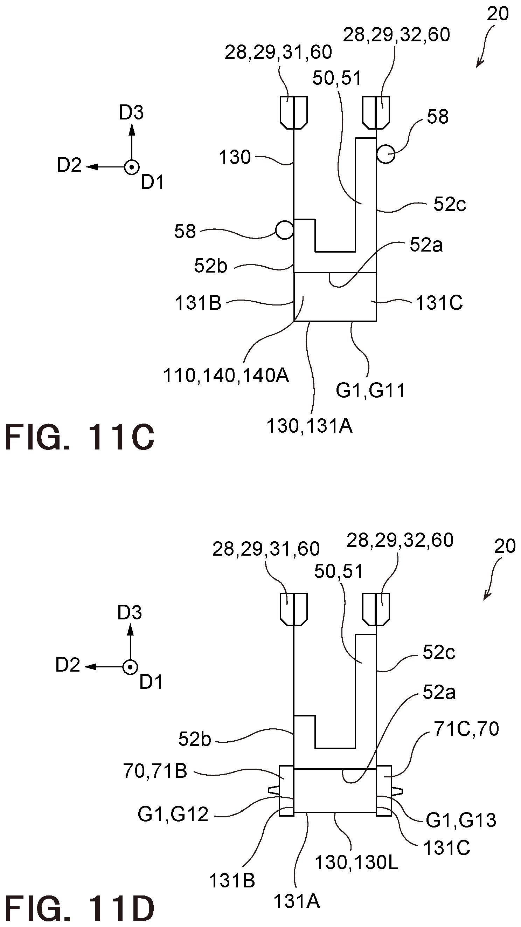

The wrapping device 50 may include a wrapping assisting member 51 that holds the side end surfaces G1 of the lids 140 by vacuum suction, as shown in Figs. 11B and 11C. The wrapping assisting member 51 can restrict movement of the electrode assembly unit 111 when the outer film 130 is wrapped around the electrode assembly unit 111.

The wrapping assisting member 51 may include a base surface 52a, a first assisting surface 52b, and a second assisting surface 52c. The base surface 52a contacts the fourth side end surface G14. The first assisting surface 52b is connected to the base surface 52a. The first assisting surface 52b may extend parallel to the third direction D3 in a state where the base surface 52a is in contact with the fourth side end surfaces G14. The first assisting surface 52b may extend parallel to the third direction D3 along the extensions of the second side end surfaces G12 in a state where the base surface 52a is in contact with the fourth side end surfaces G14. The second assisting surface 52c is connected to the base surface 52a. The second assisting surface 52c may extend parallel to the third direction D3 in a state where the base surface 52a is in contact with the fourth side end surfaces G14. The second assisting surface 52c may extend parallel to the third direction D3 along the extensions of the third side end surfaces G13 in a state where the base surface 52a is in contact with the fourth side end surfaces G14.

The base surface 52a may be capable of holding the fourth side end surfaces G14 by vacuum suction. The wrapping device 50 may hold the fourth side end surfaces G14 on the base surface 52a by vacuum suction. The first assisting surface 52b may be capable of holding the outer film 130 by vacuum suction. The wrapping device 50 may hold the outer film 130 on the first assisting surface 52b by vacuum suction. The second assisting surface 52c may be capable of holding the outer film 130 by vacuum suction. The wrapping device 50 may hold the outer film 130 on the second assisting surface 52c by vacuum suction.

The single wrapping assisting member 51 may extend in the first direction D1 and face both the first side edge A1 and the second side edge A2 of the outer film 130 and both the first lid 140A and the second lid 140B in a direction orthogonal to the first direction D1. In other words, the wrapping assisting member 51 that works on the first side edge A1 and the first lid 140A and the wrapping assisting member 51 that works on the second side edge A2 and the second lid 140B may be integrally formed. Alternatively, the wrapping assisting member 51 that works on the first side edge A1 and the first lid 140A and the wrapping assisting member 51 that works on the second side edge A2 and the second lid 140B may be provided separately.

As shown in Fig. 11C, the wrapping device 50 may include a pressing member 58. The pressing member 58 moves on the outer film 130 while pressing the outer film 130 toward the side end surfaces G1. The pressing member 58 shown in Fig. 11C is a roll. The roll that constitutes the pressing member 58 moves on the outer film 130 while rotating. With the pressing member 58, the outer film 130 can be stably brought into contact with the side end surfaces G1.

The single pressing member 58 may extend in the first direction D1 and face both the first side edge A1 and the second side edge A2 of the outer film 130 and both the first lid 140A and the second lid 140B in a direction orthogonal to the first direction D1. In other words, the pressing member 58 that works on the first side edge A1 and the first lid 140A and the pressing member 58 that works on the second side edge A2 and the second lid 140B may be integrally formed. Alternatively, the pressing member 58 that works on the first side edge A1 and the first lid 140A and the pressing member 58 that works on the second side edge A2 and the second lid 140B may be provided separately.

In the illustrated example, the pressing member 58 is a roll; however, the pressing member 58 is not limited to this example. The pressing member 58 may also have a bar-shape. The bar-shaped pressing member 58 may function as a squeegee.

Before step S41 of forming the above-described first sealing portions S11, the outer film 130 may be further reliably brought into contact with the first side end surfaces G11 by using the pressing member 58.

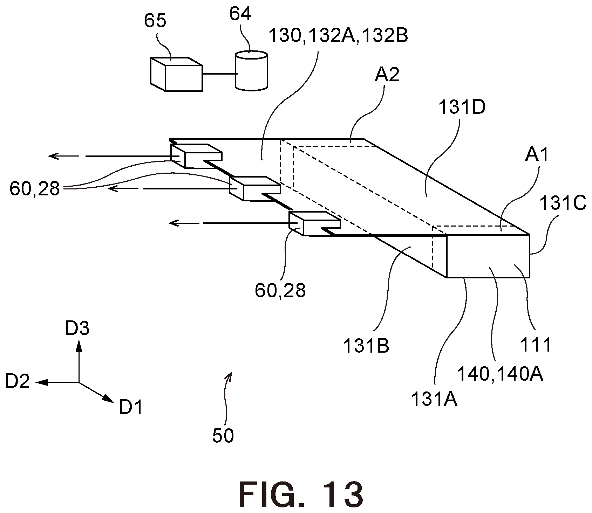

As shown in Figs. 11C and 11D, the wrapping device 50 may include a grip portion 60 that grips the outer film 130. As shown in Fig. 13, the wrapping device 50 may include a plurality of grip portions 60. The plurality of grip portions 60 may be arranged along the central axis when the outer film 130 is wrapped around the electrode assembly unit 111. In the illustrated example, the plurality of grip portions 60 may be arranged in the first direction D1. In the examples shown in Figs. 11C, 11D, 13, and the like, the grip portions 60 are configured as clampers that grip the edge of the outer film 130. However, the configuration of the grip portions 60 is not limited. The grip portion 60 may include a film holding unit 29 that has the same configuration as the first film holding unit 31 described with reference to Figs. 36A to 36E. In this example, the tensioning device 28 may include the guide rails 281 and the holding drive unit 282 in addition to the film holding unit 29 serving as the grip portion 60.

In step S41, and in steps S42 to S45 (described later), and step S5, the outer film 130 may be gripped using the first film holding unit 31 and the second film holding unit 32 of the film supply device 30 instead of the grip portion 60. In other words, the wrapping device 50 may include the first film holding unit 31 and the second film holding unit 32. The same first film holding unit 31 and second film holding unit 32 may be included in both the film supply device 30 and the wrapping device 50. The first film holding unit 31 and the second film holding unit 32 may continue to hold the outer film 130 in step S4 and step S5.

As shown in Fig. 13, the wrapping device 50 may include a surface monitoring unit 64 and a wrapping controller 65. The surface monitoring unit 64 monitors the surface condition of the outer film 130 gripped by the grip portions 60. The wrapping controller 65 controls the operation of the grip portions 60. The wrapping controller 65 may control the operation of the grip portions 60 based on the monitoring result from the surface monitoring unit 64.

In step S42 mainly shown in Figs. 11B and 11C, the outer film 130 is wrapped around the electrode assembly unit 111. In one specific example, as described below, in step S42, the outer film 130 may be wrapped around the electrode assembly unit 111.

In step S42, in continuation from the previous step S3, the lids 140 are fixed by the fixing devices 40. In step S41 performed just before step S42, the first side edge A1 within the first part 131A of the outer film 130 is joined to the first side end surface G11 of the first lid 140A, and the second side edge A2 is joined to the first side end surface G11 of the second lid 140B.

In step S42, initially, the wrapping assisting member 51 moves relative to the electrode assembly unit 111. As shown in Fig. 11B, the base surface 52a of the wrapping assisting member 51 contacts the electrode assembly unit 111. The base surface 52a may contact both the fourth side end surface G14 of the first lid 140A and the fourth side end surface G14 of the second lid 140B. Furthermore, the base surface 52a may contact the electrode assembly 115 located between the first lid 140A and the second lid 140B. When the base surface 52a is configured as a suction-holding surface, the wrapping device 50 may hold the electrode assembly unit 111 on the base surface 52a by vacuum suction.

As a result, the electrical storage device intermediate 110 and the outer film 130 can be stably held using the wrapping assisting member 51.

Subsequently, as shown in Fig. 11C, the pressing member 58 moves while being in contact with the outer film 130. The pressing member 58 presses the outer film 130 toward the electrode assembly unit 111 to bring the outer film 130 into contact with the electrode assembly unit 111. Holding of the outer film 130 with the film supply device 30 may be released at the timing when the pressing member 58 contacts the outer film 130. In other words, the first film holding unit 31 and the second film holding unit 32 may release the outer film 130. Alternatively, the first film holding unit 31 and the second film holding unit 32 may continue to hold the outer film 130 even in step S4 and step S5 without using the grip portions 60.

The pressing member 58 causes the first side edge A1 within the second part 131B of the outer film 130 to contact the second side end surface G12 of the first lid 140A. The second side edge A2 within the second part 131B of the outer film 130 contacts the second side end surface G12 of the second lid 140B. The pressing member 58 causes the first side edge A1 within the third part 131C of the outer film 130 to contact the third side end surface G13 of the first lid 140A. The second side edge A2 within the third part 131C of the outer film 130 contacts the third side end surface G13 of the second lid 140B.

The operation of the pressing member 58 to bring the outer film 130 into contact with the first lid 140A and the operation of the pressing member 58 to bring the outer film 130 into contact with the second lid 140B may be performed simultaneously in parallel. The operation of the pressing member 58 to bring the outer film 130 into contact with the first lid 140A and the operation of the pressing member 58 to bring the outer film 130 into contact with the second lid 140B may be performed at different timings. When these operations are performed at different timings, the single pressing member 58 may move on the first lid 140A and the second lid 140B.

In the example shown in Fig. 11C, the plurality of pressing members 58 operates in parallel to cause the outer film 130 to contact the first lid 140A and the second lid 140B in parallel. According to the example shown in Fig. 11C, the first lid 140A and the second lid 140B are pressed from both sides in the second direction by the plurality of pressing members 58. Therefore, the posture of the first lid 140A and the second lid 140B is stabilized, so the outer film 130 can be stably brought into contact with the first lid 140A and the second lid 140B.

As shown in Fig. 11C, the pressing member 58 may further move on the wrapping assisting member 51. The pressing member 58 causes the outer film 130 to contact the first assisting surface 52b of the wrapping assisting member 51. When the first assisting surface 52b is configured as a suction-holding surface, the wrapping device 50 may hold the outer film 130 on the first assisting surface 52b by vacuum suction as the pressing member 58 moves.

As shown in Fig. 11C, the pressing member 58 causes the outer film 130 to contact the second assisting surface 52c of the wrapping assisting member 51. When the second assisting surface 52c is configured as a suction-holding surface, the wrapping device 50 may hold the outer film 130 on the second assisting surface 52c as the pressing member 58 moves.

The operation of the pressing member 58 to bring the outer film 130 into contact with the first assisting surface 52b and the operation of the pressing member 58 to bring the outer film 130 into contact with the second assisting surface 52c may be performed simultaneously in parallel. The operation of the pressing member 58 to bring the outer film 130 into contact with the first assisting surface 52b and the operation of the pressing member 58 to bring the outer film 130 into contact with the second assisting surface 52c may be performed at different timings. When these operations are performed at different timings, the single pressing member 58 may move on the first assisting surface 52b and the second assisting surface 52c.

In the example shown in Fig. 11C, the plurality of pressing members 58 operates in parallel to cause the outer film 130 to contact the first assisting surface 52b and the second assisting surface 52c in parallel. According to the example shown in Fig. 11C, the wrapping assisting member 51 is pressed from both sides in the second direction by the plurality of pressing members 58. Therefore, the posture of the wrapping assisting member 51 is stabilized, so the outer film 130 can be stably brought into contact with the first assisting surface 52b and the second assisting surface 52c.

As shown in Fig. 11C, the grip portions 60 hold the outer film 130. The grip portions 60 may apply tension to the outer film 130. The grip portions 60 serve as the tensioning device 28 that applies tension to the outer film 130. By using the grip portions 60, the outer film 130 can be maintained in a taut state. For example, it is possible to suppress occurrence of a gap between the side end surfaces G1 and the outer film 130.

As shown in Fig. 13, the operation of the grip portions 60 may be controlled by the surface monitoring unit 64 and the wrapping controller 65. As shown in Fig. 13, the surface monitoring unit 64 monitors the surface condition of the outer film 130 to which tension is applied by the grip portions 60. When deformations such as wrinkles and folds occur in the outer film 130, the wrapping controller 65 is used to control the operation of the grip portions 60. As a result, the outer film 130 can be maintained in a taut state.

The timing at which the grip portions 60 start gripping the film can be set as needed. For example, the grip portions 60 may grip the outer film 130 before the pressing member 58 contacts the outer film 130. In this example, the grip portions 60 may guide the outer film 130 onto the electrode assembly unit 111, or may guide the outer film 130 onto the first assisting surface 52b, or may guide the outer film 130 onto the second assisting surface 52c.

Before suction-holding of the outer film 130 on the first assisting surface 52b and the second assisting surface 52c begins, the grip portions 60 may grip the outer film 130. According to this example, the outer film 130 is held on the first assisting surface 52b and the second assisting surface 52c in a taut state where tension is applied..

The grip portions 60 may grip the outer film 130 in a state where the outer film 130 is held on the first assisting surface 52b and the second assisting surface 52c by vacuum suction. In this example, when the grip portions 60 apply tension to the outer film 130, suction-holding by the first assisting surface 52b and the second assisting surface 52c may be stopped.

Thus, step S42 ends. After the end of step S42, the outer film 130 joined to the first side end surfaces G11 contacts the second side end surfaces G12 and is further spread onto the first assisting surface 52b. After the end of step S42, the outer film 130 joined to the first side end surfaces G11 contacts the third side end surfaces G13 and is further spread onto the second assisting surface 52c.

In the above-described example, step S42 ends. After the end of step S42, the outer film 130 joined to the first side end surfaces G11 contacts the second side end surfaces G12 and is further spread onto the first assisting surface 52b. After the end of step S42, the outer film 130 joined to the first side end surfaces G11 contacts the third side end surfaces G13 and is further spread onto the second assisting surface 52c.

In the illustrated example, in a state where the base surface 52a is in contact with the fourth side end surfaces G14, the first assisting surface 52b is positioned along the extension of the second side end surfaces G12. Therefore, it is possible to spread the outer film 130 onto the second side end surfaces G12 and the first assisting surface 52b while suppressing deformations such as wrinkles and folds in the outer film 130.

Similarly, in the illustrated example, in a state where the base surface 52a is in contact with the fourth side end surfaces G14, the second assisting surface 52c is positioned along the extension of the third side end surfaces G13. Therefore, it is possible to spread the outer film 130 onto the third side end surfaces G13 and the second assisting surface 52c while suppressing deformations such as wrinkles and folds in the outer film 130.

In the above-described example, the grip portions 60 of the manufacturing apparatus 20 function as the tensioning device 28 that applies tension to the outer film 130. The grip portions 60 of the tensioning device 28 included in the manufacturing apparatus 20 are not limited to the example shown in Fig. 13 and the like. The grip portions 60 may have various configurations that can grip the outer film 130.

The grip portion 60 may include the film holding unit 29 that has the same configuration as the first film holding unit 31 described with reference to Figs. 36A to 36E. In this example, the tensioning device 28 may include the guide rails 281 and the holding drive unit 282 in addition to the film holding unit 29 serving as the grip portion 60. With the tensioning device 28 including the film holding unit 29, it is possible to effectively suppress occurrence of deformations such as wrinkles and folds in the outer film 130, as described above. Therefore, it is possible to effectively suppress the formation of a gap between the outer film 130 and the lids 140.

The wrapping device 50 may include the first film holding unit 31 as the grip portion 60. In other words, the first film holding unit 31 may be a component element of the film supply device 30 and may also be a component element of the wrapping device 50. In this example, the film supply device 30 may include the surface monitoring unit 64 and the wrapping controller 65. According to this example, it is not necessary to transfer the outer film 130 from the film supply device 30 to the wrapping device 50. Therefore, it is possible to more efficiently suppress occurrence of wrinkles, folds, and the like, in the outer film 130.

The wrapping device 50 may further include the second film holding unit 32. In other words, the second film holding unit 32 may be a component element of the film supply device 30 and may also be a component element of the wrapping device 50.

In another example of the grip portion 60, the manufacturing apparatus 20 may include a pair of nip rolls as the tensioning device 28. The pair of nip rolls can apply tension to the outer film 130 by rotating in a state of nipping the outer film 130.

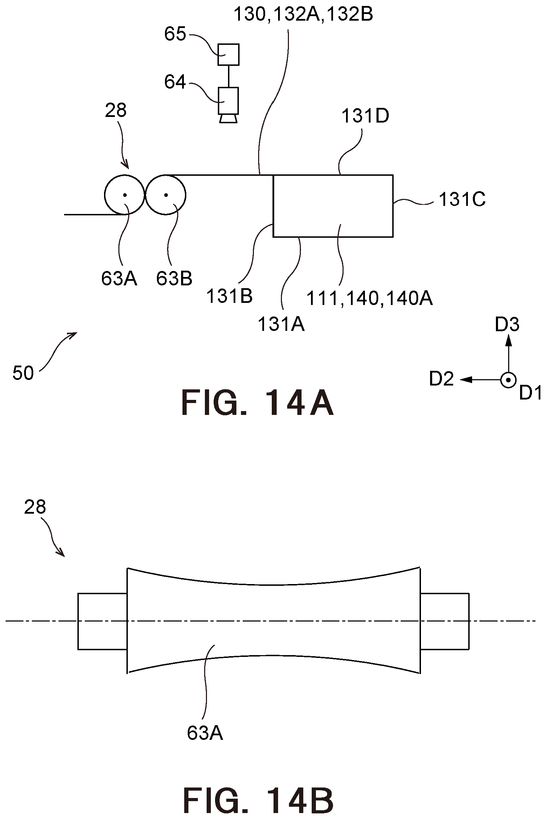

In further another example of the grip portion 60, the manufacturing apparatus 20 may include the tensioning device 28 shown in Figs. 14A and 14B. The tensioning device 28 shown in Figs. 14A and 14B includes a reverse-crown roll 63A and a nip roll 63B. The reverse-crown roll 63A and the nip roll 63B rotate while nipping the outer film 130. When the reverse-crown roll 63A and the nip roll 63B rotate, the outer film 130 is placed in a taut state where tension is applied.

As shown in Fig. 14B, the roll diameter of the reverse-crown roll 63A is not constant at each position along the rotation axis. The roll diameter of the reverse-crown roll 63A is least at the center along the rotation axis. The roll diameter of the reverse-crown roll 63A increases as the position moves away from the center along the rotation axis. The roll diameter of the nip roll 63B may be constant at each position along the rotation axis.

With the tensioning device 28 that includes the reverse-crown roll 63A, it is possible to apply force to the outer film 130 so as to spread the outer film 130 in a direction along the rotation axis of the reverse-crown roll 63A. As a result, it is possible to stretch wrinkles, folds, and the like, in the outer film 130.

Figs. 13 and 14A referred to in the description of step S42 are diagrams for illustrating step S44 (described later). Here, Figs. 13 and 14A are referred to for illustrating the tensioning device 28.

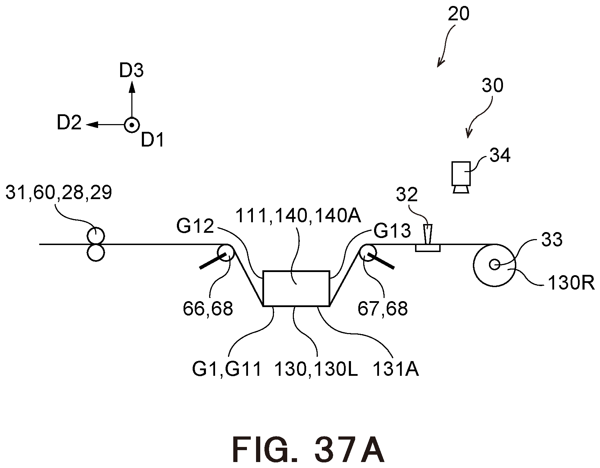

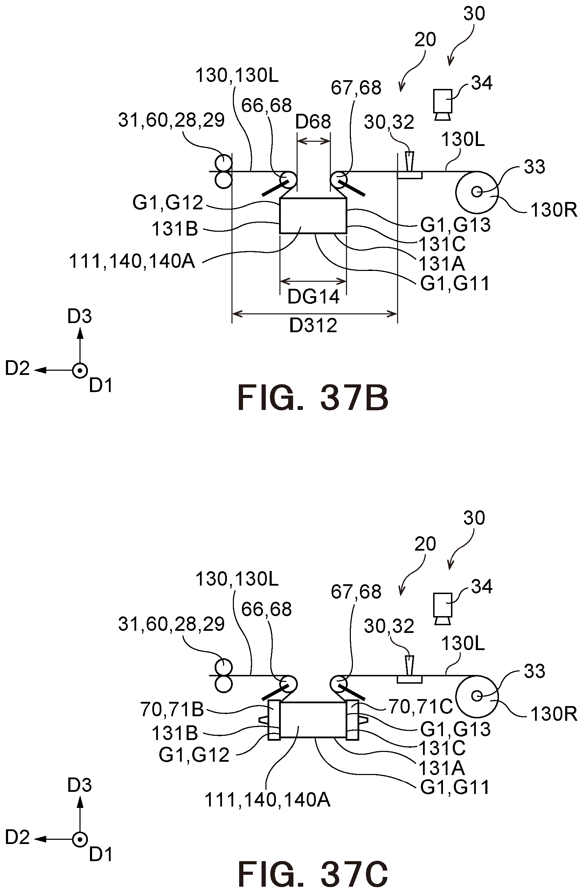

Figs. 37A and 37B show a modification of the wrapping device 50 that can be used in step S42. Next, a modification of the wrapping device 50 will be described with reference mainly to Figs. 37A and 37B.

As shown in Figs. 37A and 37B, the wrapping device 50 may include the first film holding unit 31, the second film holding unit 32, a first pressing portion 66, and a second pressing portion 67. The first film holding unit 31 and the second film holding unit 32 are members that hold the outer film 130, and the configurations are not limited. The first film holding unit 31 and the second film holding unit 32 may have a configuration similar to the film holding unit 29 described with reference to Figs. 36A to 36E.

As shown in Fig. 37B, the first film holding unit 31 can hold a part of the outer film 130 that is in contact with the second side end surfaces G12, the first side end surfaces G11, and the third side end surfaces G13, the part extending from the second side end surfaces G12. The second film holding unit 32 can hold a part of the outer film 130 that is in contact with the second side end surfaces G12, the first side end surfaces G11, and the third side end surfaces G13, the part extending from the third side end surfaces G13.

In the illustrated example, the first film holding unit 31 and the second film holding unit 32 also serve as component elements of the film supply device 30. In other words, the first film holding unit 31 included in the wrapping device 50 may have the same configuration as the first film holding unit 31 described above with reference to Figs. 36A to 36E. With the first film holding unit 31, it is possible to hold the outer film 130 in a taut state while suppressing occurrence of wrinkles, sagging, and the like. The first film holding unit 31 and the second film holding unit 32 may hold the outer film 130 continuously from the preceding step.

In the illustrated example, the first film holding unit 31 and the second film holding unit 32 included in the wrapping device 50 can approach each other in the second direction D2 and can separate from each other in the second direction D2. Therefore, the distance between the first film holding unit 31 and the second film holding unit 32 can be adjusted in conjunction with wrapping of the outer film 130 around the electrode assembly unit 111. At least one or both of the first film holding unit 31 and the second film holding unit 32 may be movable in the second direction D2.

The wrapping device 50 may include the guide rails 281 and the holding drive unit 282 used to move the first film holding unit 31. The guide rails 281 and the holding drive unit 282 also serve as component elements of the film supply device 30. In other words, the guide rails 281 and the holding drive unit 282 included in the wrapping device 50 may respectively have the same configurations as the guide rails 281 and the holding drive unit 282 included in the film supply device 30 described above with reference to Figs. 36A to 36E.

However, the configuration is not limited to the illustrated example. The wrapping device 50 may include a first film holding unit and a second film holding unit, different from the first film holding unit 31 and the second film holding unit 32 included in the film supply device 30. In this example, the first film holding unit of the wrapping device 50, which is provided separately from the first film holding unit 31 of the film supply device 30, may have the same configuration as the first film holding unit 31 of the film supply device 30, or may have a different configuration from the first film holding unit 31 of the film supply device 30. The configurations of the first film holding unit 31 and the second film holding unit 32 are not limited.

The first pressing portion 66 contacts the outer film 130 located between the first film holding unit 31 and the second side end surfaces G12. The second pressing portion 67 contacts the outer film 130 located between the second film holding unit 32 and the third side end surfaces G13. The first pressing portion 66 and the second pressing portion 67 press the outer film 130. The first pressing portion 66 and the second pressing portion 67 may press the outer film 130 so as to approach each other in the second direction D2.

The single first pressing portion 66 may extend in the first direction D1 and face both the first side edge A1 and the second side edge A2 of the outer film 130 in a direction orthogonal to the first direction D1. In other words, the first pressing portion 66 that works on the first side edge A1 and the first pressing portion 66 that works on the second side edge A2 may be integrally formed. In other words, the length of the first pressing portion 66 along the first direction D1 may be longer than the overall width of the outer film 130. Alternatively, the first pressing portion 66 that works on the first side edge A1 of the outer film 130 and the first pressing portion 66 that works on the second side edge A2 of the outer film 130 may be provided separately.

The single second pressing portion 67 may extend in the first direction D1 and face both the first side edge A1 and the second side edge A2 of the outer film 130 in a direction orthogonal to the first direction D1. In other words, the second pressing portion 67 that works on the first side edge A1 and the second pressing portion 67 that works on the second side edge A2 may be integrally formed. In other words, the length of the second pressing portion 67 along the first direction D1 may be longer than the overall width of the outer film 130. Alternatively, the second pressing portion 67 that works on the first side edge A1 of the outer film 130 and the second pressing portion 67 that works on the second side edge A2 of the outer film 130 may be provided separately.

As shown in Figs. 37A and 37B, each of the first pressing portion 66 and the second pressing portion 67 may include a rotatable press roll 68. The press roll 68 can move on the outer film 130 while pressing the outer film 130. The press roll 68 moves while rotating on the outer film 130. With the press roll 68, damage to the outer film 130 can be effectively suppressed.

In the illustrated example, each of the first pressing portion 66 and the second pressing portion 67 includes the press roll 68; however, each of the first pressing portion 66 and the second pressing portion 67 is not limited to this example. Each of the first pressing portion 66 and the second pressing portion 67 may have a bar shape. Each of the bar-shaped first pressing portion 66 and second pressing portion 67 may function as a squeegee.

In step S42 mainly shown in Figs. 37A and 37B, the outer film 130 is wrapped around the electrode assembly unit 111. In one specific example, as described below, in step S42, the outer film 130 may be wrapped around the electrode assembly unit 111.

In step S42, in continuation from the previous step S2, the outer film 130 is held by the first film holding unit 31 and the second film holding unit 32 of the wrapping device 50 that also serves as a component element of the film supply device 30. In step S42, in continuation from the previous step S3, the lids 140 are fixed by the fixing devices 40. In step S41 performed just before step S42, the first side edge A1 within the first part 131A of the outer film 130 is joined to the first side end surface G11 of the first lid 140A, and the second side edge A2 is joined to the first side end surface G11 of the second lid 140B.

In step S42, the lids 140 held by the fixing devices 40 move toward the second side in the third direction D3 relative to the first film holding unit 31 and the second film holding unit 32 of the wrapping device 50. In addition to the drive by the fixing devices 40 or instead of the drive by the fixing devices 40, the lids 140 may be moved using the holding conveyance unit 36 of the electrode assembly unit supply device 35.

As shown in Fig. 37A, in step S42, the first pressing portion 66 and the second pressing portion 67 of the wrapping device 50 contact the outer film 130. The first pressing portion 66 contacts a part of the outer film 130, extending from the first side end surfaces G11, and the second pressing portion 67 contacts a part of the outer film 130, extending from the first side end surfaces G11.

As shown in Fig. 37A, the first pressing portion 66 contacts the outer film 130 located between the first film holding unit 31 and the first side end surfaces G11 from the second side in the third direction D3. The second pressing portion 67 contacts the outer film 130 located between the second film holding unit 32 and the first side end surfaces G11 from the second side in the third direction D3. The first pressing portion 66 and the second pressing portion 67 support the outer film 130 from the second side in the third direction D3, the outer film 130 moving toward the second side in the third direction D3 together with the lids 140.

As shown in Figs. 37A and 37B, the operation of the first pressing portion 66 and the second pressing portion 67 may be performed in parallel with the drive of the lids 140 by the fixing devices 40. In the illustrated example, the first pressing portion 66 may press the outer film 130 such that the outer film 130 spreads on a plane orthogonal to the third direction D3 between the first film holding unit 31 and the first pressing portion 66. Similarly, the second pressing portion 67 may press the outer film 130 such that the outer film 130 spreads on a plane orthogonal to the third direction D3 between the second film holding unit 32 and the second pressing portion 67. Through the operation of the pressing portions 66 and 67, the first film holding unit 31 can stably hold the outer film 130 while applying tension within a certain range to the outer film 130. Therefore, it is possible to suppress occurrence of wrinkles, folds, and the like, in the outer film 130.

In step S42, the outer film 130 bends in accordance with the movement of the lids 140 and the operation of the first pressing portion 66 and the second pressing portion 67. To apply tension in a certain range to the outer film 130, the distance in the second direction D2 between the first film holding unit 31 and the second film holding unit 32 is reduced. In the example shown in Fig. 37B, the first film holding unit 31 moves toward the second side in the second direction D2 and approaches the second film holding unit 32. Through the operation of the film holding units 31 and 32, tension in a certain range can be applied to the outer film 130. Therefore, it is possible to suppress occurrence of wrinkles, folds, and the like, in the outer film 130.

When the lids 140 have sufficiently moved toward the second side in the third direction D3, the pressing portions 66 and 67 move in the second direction D2, as shown in Fig. 37B. As shown in Fig. 37B, the first pressing portion 66 and the second pressing portion 67 press the outer film 130 in the second direction D2 such that the distance D68 along the second direction D2 between the first pressing portion 66 and the second pressing portion 67 is shorter than the length DG14 of the fourth side end surfaces G14 along the second direction D2. In the state shown in Fig. 37B, the press rolls 68 of the pressing portions 66 and 67 overlap the fourth side end surfaces G14 in projection onto a plane that is orthogonal to the third direction D3 that is the normal direction of the fourth side end surfaces G14.

As shown in Figs. 37A and 37B, when the first pressing portion 66 and the second pressing portion 67 press the outer film 130, the distance D312 along the second direction D2 between the first film holding unit 31 and the second film holding unit 32 may be longer than the length DG14 of the fourth side end surfaces G14 along the second direction D2. According to this example, in step S43 (described later), the first joining device 70 easily accesses the outer film 130 positioned on the side end surfaces G1. Therefore, it is possible to effectively suppress occurrence of a gap between the side end surfaces G1 of the first lid 140A and the second lid 140B and the outer film 130 and, therefore, to effectively improve the sealability (sealing performance) between the side end surfaces G1 of the first lid 140A and the second lid 140B and the outer film 130.

As described above, by making the distance D68 between the pressing portions 66 and 67 shorter than the length DG14 of the fourth side end surfaces G14, the second side end surfaces G12, the first side end surfaces G11, and the third side end surfaces G13 of the lids 140 can be brought into close contact with the outer film 130. In other words,, the first side edge A1 within the second part 131B of the outer film 130 can be in close contact with the second side end surface G12 of the first lid 140A. The second side edge A2 within the second part 131B of the outer film 130 can be in close contact with the second side end surface G12 of the second lid 140B. The first side edge A1 within the third part 131C of the outer film 130 can be in close contact with the third side end surface G13 of the first lid 140A. The second side edge A2 within the third part 131C of the outer film 130 can be in close contact with the third side end surface G13 of the second lid 140B.

As shown in Fig. 37B, the outer film 130 extending from the second side end surfaces G12 is inclined toward the inner side in the second direction D2. Therefore, it is possible to effectively suppress formation of a gap between the outer film 130 and the second side end surfaces G12. Similarly, the outer film 130 extending from the third side end surfaces G13 is inclined toward the inner side in the second direction D2. Therefore, it is possible to effectively suppress formation of a gap between the outer film 130 and the third side end surfaces G13.

The inner side in the second direction D2 is a side close to the center of gravity of the electrode assembly 115 in the second direction D2. The outer side in the second direction D2 is a side away from the center of gravity of the electrode assembly 115 in the second direction D2.

The operation of the pressing portions 66 and 67 to bring the outer film 130 into contact with the first lid 140A and the operation of the pressing portions 66 and 67 to bring the outer film 130 into contact with the second lid 140B may be performed simultaneously in parallel. The operation of the pressing portions 66 and 67 to bring the outer film 130 into contact with the first lid 140A and the operation of the pressing portions 66 and 67 to bring the outer film 130 into contact with the second lid 140B may be performed at different timings. When these operations are performed at different timings, the pair of pressing portions 66 and 67 may sequentially move on the first lid 140A and the second lid 140B.

In the example shown in Figs. 37A and 37B, the first lid 140A and the second lid 140B are pressed from both sides in the second direction D2 by the first pressing portion 66 and the second pressing portion 67. Therefore, the posture of the first lid 140A and the second lid 140B is stabilized, so the first lid 140A and the second lid 140B can be brought into stable contact with the outer film 130.

Thus, step S42 ends. After the end of step S42, the outer film 130 joined to the first side end surfaces G11 is in contact with the second side end surfaces G12 and the third side end surfaces G13.

In the above-described example, the first film holding unit 31, the guide rails 281, and the holding drive unit 282 of the wrapping device 50 function as the tensioning device 28 that applies tension to the outer film 130. With the first film holding unit 31, it is possible to effectively suppress occurrence of deformations such as wrinkles and folds in the outer film 130. Therefore, it is possible to effectively suppress the formation of a gap between the outer film 130 and the lids 140.

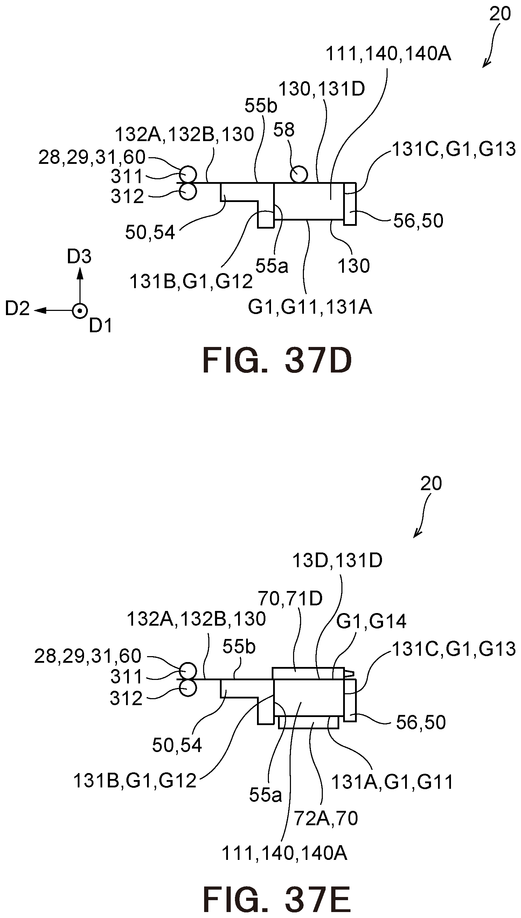

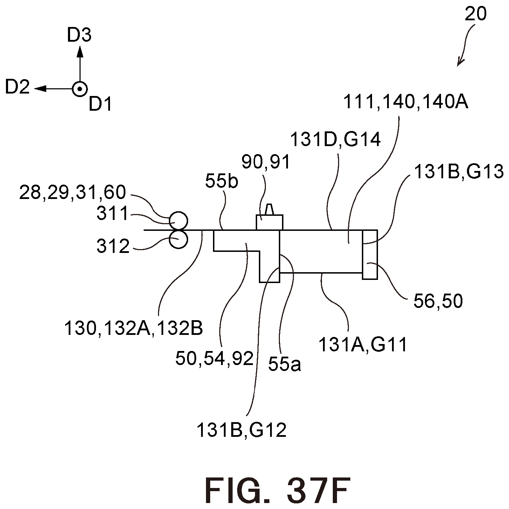

Fig. 37C is a diagram for illustrating step S43 that is performed subsequent to step S42 shown in Figs. 37A and 37B. Fig. 37D is a diagram for illustrating step S44 that is performed subsequent to step S43 shown in Fig. 37C. Fig. 37E is a diagram for illustrating step S45 that is performed subsequent to step S44 shown in Fig. 37D. Fig. 37F is a diagram for illustrating step S5 that is performed subsequent to step S45 shown in Fig. 37E.

As shown in Fig. 7B, after step S42, step S43 of joining the outer film 130 to the second side end surfaces G12 and the third side end surfaces G13 of the lids 140 is performed. In step S43, the first joining device 70 is used.

In step S43, as shown in Figs. 11D and 37C, the outer film 130 is joined to the second side end surfaces G12 and the third side end surfaces G13. In step S42 that is the immediately preceding step, the outer film 130 is in contact with the first lid 140A and the second lid 140B.

The first side edge A1 positioned within the second part 131B of the outer film 130 is in contact with the second side end surface G12 of the first lid 140A. The second side edge A2 positioned within the second part 131B of the outer film 130 is in contact with the second side end surface G12 of the second lid 140B. The first side edge A1 positioned within the third part 131C of the outer film 130 is in contact with the third side end surface G13 of the first lid 140A. The second side edge A2 positioned within the third part 131C of the outer film 130 is in contact with the third side end surface G13 of the second lid 140B.

The first joining device 70 may include the second seal bar 71B that contacts a part of the outer film 130, positioned on the second side end surfaces G12, and heats the outer film 130 while pressing the outer film 130 with the second side end surfaces G12. The first joining device 70 may include the third seal bar 71C that contacts a part of the outer film 130, positioned on the third side end surfaces G13, and heats the outer film 130 while pressing the outer film 130 with the third side end surfaces G13. As shown in Figs. 11D and 37C, the second seal bar 71B and the third seal bar 71C are on opposite sides in the second direction D2. The outer film 130 and the electrode assembly unit 111 are located between the second seal bar 71B and the third seal bar 71C.

In step S43 mainly shown in Figs. 11D and 37C, the outer film 130 is joined to the second side end surfaces G12 and the third side end surfaces G13. In one specific example, in step S43, the outer film 130 may be joined to the second side end surfaces G12 and the third side end surfaces G13 as described below.

In step S43, in continuation from the previous step S3, the lids 140 are fixed by the fixing devices 40. In step S43, in continuation from the immediately preceding step S42, the outer film 130 joined to the first side end surfaces G11 is spread on the second side end surfaces G12 and the first assisting surface 52b, and is also spread on the third side end surfaces G13 and the second assisting surface 52c.

In step S43 shown in Figs. 11D and 37C, the second seal bar 71B and the third seal bar 71C press toward each other. The outer film 130 is positioned between the second seal bar 71B and the electrode assembly unit 111. The outer film 130 is positioned between the third seal bar 71C and the electrode assembly unit 111. Each of the second seal bar 71B and the third seal bar 71C has a bult-in heating mechanism.

The second seal bar 71B presses the outer film 130 toward the lids 140 while heating the outer film 130. The outer film 130 fuses to the second side end surfaces G12 of the lids 140. The third seal bar 71C presses the outer film 130 toward the lids 140 while heating the outer film 130. The outer film 130 fuses to the third side end surfaces G13 of the lids 140. For example, the heat-sealable resin layer L3 of the outer film 130 fuses to the second side end surfaces G12 and the third side end surfaces G13.

In step S43, the second seal bar 71B heats the first side edge A1 and the second side edge A2 positioned within the second part 131B of the outer film 130. The first side edge A1 positioned within the second part 131B faces the second side end surface G12 of the first lid 140A. The second sealing portion S12 of the opening sealing portion S1 is formed between the first side edge A1 positioned within the second part 131B and the second side end surface G12 of the first lid 140A. The second side edge A2 positioned within the second part 131B faces the second side end surface G12 of the second lid 140B. The second sealing portion S12 of the opening sealing portion S1 is formed between the second side edge A2 positioned within the second part 131B and the second side end surface G12 of the second lid 140B.

In step S43, the third seal bar 71C heats the first side edge A1 and the second side edge A2 positioned within the third part 131C of the outer film 130. The first side edge A1 positioned within the third part 131C faces the third side end surface G13 of the first lid 140A. The third sealing portion S13 of the opening sealing portion S1 is formed between the first side edge A1 positioned within the third part 131C and the third side end surface G13 of the first lid 140A. The second side edge A2 positioned within the third part 131C faces the third side end surface G13 of the second lid 140B. The third sealing portion S13 of the opening sealing portion S1 is formed between the second side edge A2 positioned within the third part 131C and the third side end surface G13 of the second lid 140B.

Thus, step S43 ends.

Formation of the second sealing portions S12 by the second seal bar 71B and formation of the third sealing portions S13 by the third seal bar 71C may be performed simultaneously in parallel. Formation of the second sealing portions S12 by the second seal bar 71B and formation of the third sealing portions S13 by the third seal bar 71C may be performed at different timings. When these formations are performed at different timings, the second seal bar 71B and the third seal bar 71C may be made up of the same seal bar.

In the example shown in Figs. 11D and 37C, formation of the second sealing portions S12 by the second seal bar 71B and formation of the third sealing portions S13 by the third seal bar 71C are performed simultaneously in parallel. According to this example, the second seal bar 71B functions as a receiving bar that receives pressing force from the third seal bar 71C. The third seal bar 71C functions as a receiving bar that receives pressing force from the second seal bar 71B. Therefore, the configuration of the first joining device 70 can be simplified.

In the example shown in Figs. 11D and 37C, step S43 is performed using the wrapping device 50. As shown in Figs. 11D and 37C, the wrapping assisting member 51 is in contact with the electrode assembly unit 111 at the base surface 52a. The wrapping assisting member 51 holds the outer film 130 on the first assisting surface 52b and the second assisting surface 52c by vacuum suction. The grip portion 60 of the wrapping device 50 is gripping the outer film 130. However, the configuration is not limited to this example. One or more of the wrapping assisting member 51 and the grip portion 60 do not need to be used in step S43.

As shown in Fig. 7B, after step S43, step S44 of wrapping the outer film 130 around the electrode assembly unit 111 is performed. In step S44, the outer film 130 is wrapped around the electrode assembly unit 111 such that the outer film 130 contacts the fourth side end surfaces G14. In step S44, the wrapping device 50 of the manufacturing apparatus 20 is used.

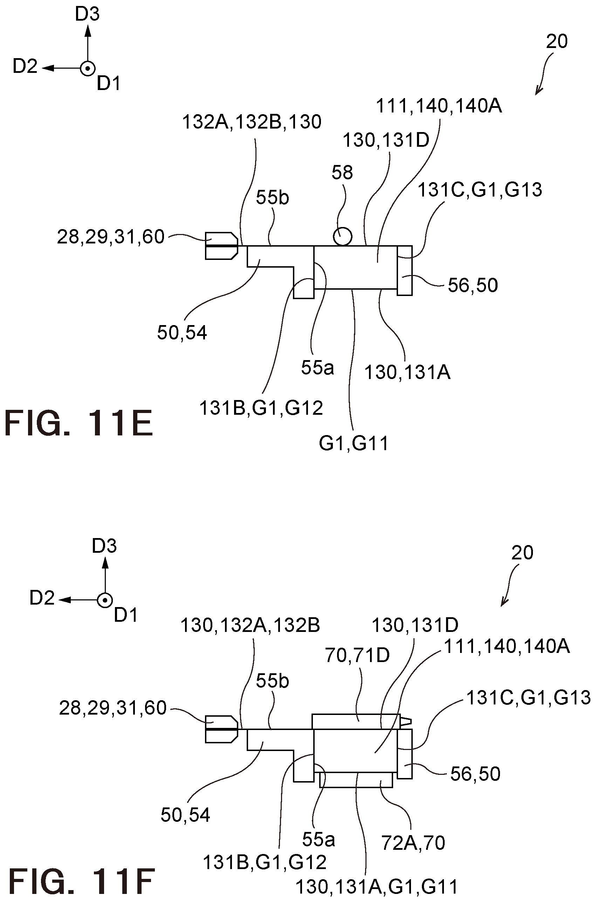

As shown in Fig. 11E, the wrapping assisting member 51 of the wrapping device 50 is separated from the outer film 130 and the electrode assembly unit 111. When the wrapping assisting member 51 separates, the outer film 130 is allowed to be brought into contact with the fourth side end surfaces G14 of the lid 140.

As shown in Figs. 11E and 37D, the wrapping device 50 may include a wrapping support member 54. The wrapping support member 54 contacts the outer film 130 positioned on the side end surfaces G1. The wrapping support member 54 can restrict movement of the electrode assembly unit 111 when the outer film 130 is wrapped around the electrode assembly unit 111.

As shown in Figs. 11E and 37D, the wrapping device 50 may include the wrapping support member 54 that includes a contact surface 55a and a support surface 55b. The contact surface 55a contacts the outer film 130 positioned on the second side end surfaces G12. The support surface 55b is connected to the contact surface 55a. The support surface 55b may extend parallel to the second direction D2 in a state where the contact surface 55a is in contact with the outer film 130 positioned on the second side end surfaces G12. The support surface 55b may extend parallel to the third second D2 along the extension of the fourth side end surfaces G14 in a state where the contact surface 55a is in contact with the outer film 130 positioned on the second side end surfaces G12.

The support surface 55b may be capable of holding the outer film 130 placed on the support surface 55b by vacuum suction. The wrapping device 50 may hold the outer film 130 on the support surface 55b by vacuum suction.

The single wrapping support member 54 may extend in the first direction D1 and face both the first side edge A1 and the second side edge A2 of the outer film 130 and both the first lid 140A and the second lid 140B in a direction orthogonal to the first direction D1. In other words, the wrapping support member 54 that works on the first side edge A1 and the first lid 140A and the wrapping support member 54 that works on the second side edge A2 and the second lid 140B may be integrally formed. Alternatively, the wrapping support member 54 that works on the first side edge A1 and the first lid 140A and the wrapping support member 54 that works on the second side edge A2 and the second lid 140B may be provided separately.

As shown in Figs. 11E and 37D, the wrapping device 50 may include an auxiliary second wrapping support member 56. The auxiliary second wrapping support member 56 contacts the outer film 130 positioned on the side end surfaces G1. The auxiliary second wrapping support member 56 can restrict movement of the electrode assembly unit 111 when the outer film 130 is wrapped around the electrode assembly unit 111.

In the example shown in Figs. 11E and 37D, the auxiliary second wrapping support member 56 contacts the outer film 130 positioned on the third side end surfaces G13. The auxiliary second wrapping support member 56 is on the opposite side from the wrapping support member 54. The wrapping support member 54 and the auxiliary second wrapping support member 56 are on opposite sides in the second direction D2. The electrode assembly unit 111 and the outer film 130 are positioned between the wrapping support member 54 and the auxiliary second wrapping support member 56.

The single auxiliary second wrapping support member 56 may extend in the first direction D1 and face both the first side edge A1 and the second side edge A2 of the outer film 130 and both the first lid 140A and the second lid 140B in a direction orthogonal to the first direction D1. In other words, the auxiliary second wrapping support member 56 that works on the first side edge A1 and the first lid 140A and the auxiliary second wrapping support member 56 that works on the second side edge A2 and the second lid 140B may be integrally formed. Alternatively, the auxiliary second wrapping support member 56 that works on the first side edge A1 and the first lid 140A and the auxiliary second wrapping support member 56 that works on the second side edge A2 and the second lid 140B may be provided separately.

As described in step S42, the wrapping device 50 may include the pressing member 58. The pressing member 58 moves on the outer film 130 while pressing the outer film 130 toward the side end surfaces G1. The pressing member 58 shown in Figs. 11E and 37D is a roll. The roll that constitutes the pressing member 58 moves on the outer film 130 while rotating. With the pressing member 58, the outer film 130 can be stably brought into contact with the side end surfaces G1.

The single pressing member 58 may extend in the first direction D1 and face both the first side edge A1 and the second side edge A2 of the outer film 130 and both the first lid 140A and the second lid 140B in a direction orthogonal to the first direction D1. In other words, the pressing member 58 that works on the first side edge A1 and the first lid 140A and the pressing member 58 that works on the second side edge A2 and the second lid 140B may be integrally formed. Alternatively, the pressing member 58 that works on the first side edge A1 and the first lid 140A and the pressing member 58 that works on the second side edge A2 and the second lid 140B may be provided separately.

In the illustrated example, the pressing member 58 is a roll; however, the pressing member 58 is not limited to this example. The pressing member 58 may also have a bar-shape. The bar-shaped pressing member 58 may function as a squeegee.

In step S44 mainly shown in Figs. 11E and 37D, the outer film 130 is wrapped around the electrode assembly unit 111. In one specific example, as described below, the outer film 130 may be wrapped around the electrode assembly unit 111 in step S44.

In step S44, in continuation from the previous step S3, the lids 140 are fixed by the fixing devices 40. In step S44, in continuation from the immediately preceding step S43, the end of the outer film 130 may be gripped by the grip portion 60. In the meantime, the suction-holding or the like of the outer film 130 by the wrapping assisting member 51 is released. At the start of step S44, the wrapping assisting member 51 is retracted.

In step S44, initially, the wrapping support member 54 and the auxiliary second wrapping support member 56, on opposite sides in the second direction D2, approach each other. The electrode assembly unit 111 and the outer film 130 joined to the electrode assembly unit 111 are positioned between the wrapping support member 54 and the auxiliary second wrapping support member 56. The electrode assembly unit 111 and the outer film 130 are held between the wrapping support member 54 and the auxiliary second wrapping support member 56. At this time, the wrapping support member 54 contacts the outer film 130 at the contact surface 55a.

In the state shown in Figs. 11E and 37D, the contact surface 55a of the wrapping support member 54 may contact both the first side edge A1 and the second side edge A2 within the second part 131B of the outer film 130 positioned on the second side end surfaces G12 of the lids 140A and 140B. Furthermore, the contact surface 55a may contact a part of the outer film 130, positioned on the electrode assembly 115 positioned between the first lid 140A and the second lid 140B.

Similarly, the auxiliary second wrapping support member 56 may contact both the first side edge A1 and the second side edge A2 within the third part 131C of the outer film 130 positioned on the third side end surfaces G13 of the lids 140A and 140B. Furthermore, the auxiliary second wrapping support member 56 may contact a part of the outer film 130, positioned on the electrode assembly 115 positioned between the first lid 140A and the second lid 140B.

As a result, it is possible to stably hold the electrical storage device intermediate 110 and the outer film 130 using the wrapping support member 54 and the auxiliary second wrapping support member 56.

Subsequently, as shown in Figs. 11E and 37D, the pressing member 58 moves while being in contact with the outer film 130. The pressing member 58 presses the outer film 130 toward the electrode assembly unit 111 to bring the outer film 130 into contact with the electrode assembly unit 111. Holding of the outer film 130 with the grip portion 60 may be released at the timing when the pressing member 58 contacts the outer film 130.

The pressing member 58 causes the first side edge A1 within the fourth part 131D of the outer film 130 to contact the fourth side end surface G14 of the first lid 140A. The second side edge A2 within the fourth part 131D of the outer film 130 contacts the fourth side end surface G14 of the second lid 140B.

In this way, the outer film 130 surrounds the electrode assembly unit 111 around the first direction D1. The outer film 130 wrapped around the electrode assembly unit 111 includes the first extended part 132A and the second extended part 132B, extending from the electrode assembly unit 111.

The pressing member 58 may further move on the wrapping support member 54. The pressing member 58 causes the outer film 130 to contact the support surface 55b of the wrapping support member 54. More specifically, the pressing member 58 presses the pair of extended parts 132A and 132B toward the support surface 55b. The first extended part 132A contacts the support surface 55b. The second extended part 132B contacts the first extended part 132A that is in contact with the support surface 55b. When the support surface 55b is configured as a suction-holding surface, the wrapping device 50 may hold the outer film 130 on the support surface 55b by vacuum suction as the pressing member 58 moves.

The operation of the pressing member 58 to bring the first extended part 132A into contact with the support surface 55b and the operation of the pressing member 58 to superpose the second extended part 132B on the first extended part 132A may be performed simultaneously in parallel. In this example, the single pressing member 58 may press both the first extended part 132A and the second extended part 132B toward the support surface 55b simultaneously. The operation of the pressing member 58 to bring the first extended part 132A into contact with the support surface 55b and the operation of the pressing member 58 to superpose the second extended part 132B on the first extended part 132A may be performed at different timings.

In the illustrated example, in a state where the contact surface 55a is in contact with the outer film 130 positioned on the second side end surfaces G12, the support surface 55b is positioned along the extension of the fourth side end surfaces G14. Therefore, it is possible to spread the outer film 130 onto the fourth side end surfaces G14 and the support surface 55b while suppressing deformations such as wrinkles and folds in the outer film 130.

As shown in Figs. 11E and 37D, the grip portion 60 grips the outer film 130 placed on the support surface 55b. The grip portion 60 may apply tension to the outer film 130. The grip portion 60 serves as the tensioning device 28 that applies tension to the outer film 130. The tensioning device 28 may include the surface monitoring unit 64 and the wrapping controller 65. As described above, the grip portion 60 may include the film holding unit 29 or may be formed of the film holding unit 29. By using the tensioning device 28, the outer film 130 can be maintained in a taut state on the electrode assembly unit 111. By using the grip portion 60, the pair of extended parts 132A and 132B can be maintained in a taut state on the support surface 55b. For example, it is possible to suppress occurrence of a gap between the fourth side end surfaces G14 and the outer film 130. It is also possible to suppress occurrence of a gap between the support surface 55b and the outer film 130.

As described above, the operations of the grip portion 60, the film holding unit 29, and the first film holding unit 31 may be controlled by the surface monitoring unit 64 and the wrapping controller 65. In step S44, the tensioning device 28 including the reverse-crown roll 63A and the nip roll 63B may be used. In step S44, the tensioning device 28 including the pair of nip rolls may be used.

The timing at which the grip portion 60 starts gripping the film can be set as needed. Alternatively, in continuation from the immediately preceding step S43, the grip portion 60 may grip the outer film 130. In this example, the grip portion 60 may guide the outer film 130 onto the electrode assembly unit 111 and the support surface 55b.

The outer film 130 wrapped around the electrode assembly unit 111 is held by the wrapping support member 54 and the auxiliary second wrapping support member 56. Therefore, even when the outer film 130 is pulled by the tensioning device 28, such as the grip portion 60, the posture of the electrode assembly unit 111 can be stably maintained.

Thus, step S44 ends. After the end of step S44, the fourth part 131D of the outer film 130 contacts the fourth side end surfaces G14, and the extended parts 132A and 132B of the outer film 130 are spread on the support surface 55b.

In a modification of the above-described step S43, the wrapping support member 54 may be used instead of the second seal bar 71B described with reference to Figs. 11D and 37C. In this example, the wrapping support member 54 may have a built-in heating mechanism. By heating the outer film 130 with the contact surface 55a, the wrapping support member 54 may function as the first joining device 70. According to this example, the second seal bar 71B can be omitted.

The wrapping support member 54 may press the outer film 130 toward the lids 140 while heating the outer film 130. The outer film 130 may be fused to the second side end surfaces G12 of the lids 140. The wrapping support member 54 may press the outer film 130 toward the lids 140 while heating the outer film 130. The outer film 130 may be fused to the second side end surfaces G12 of the lids 140. For example, the heat-sealable resin layer L3 of the outer film 130 fuses to the second side end surfaces G12.

More specifically, the wrapping support member 54 may heat the first side edge A1 and the second side edge A2 positioned within the second part 131B of the outer film 130. The first side edge A1 positioned within the second part 131B faces the second side end surface G12 of the first lid 140A. The second sealing portion S12 of the opening sealing portion S1 is formed between the first side edge A1 positioned within the second part 131B and the second side end surface G12 of the first lid 140A. The second side edge A2 positioned within the second part 131B faces the second side end surface G12 of the second lid 140B. The second sealing portion S12 of the opening sealing portion S1 is formed between the second side edge A2 positioned within the second part 131B and the second side end surface G12 of the second lid 140B.

In a modification of the above-described step S43, the auxiliary second wrapping support member 56 may be used instead of the third seal bar 71C described with reference to Figs. 11D and 37C. In this example, the auxiliary second wrapping support member 56 may have a built-in heating mechanism. By heating the outer film 130 with the auxiliary second wrapping support member 56, the wrapping support member 54 may function as the first joining device 70. According to this example, the third seal bar 71C can be omitted.

The auxiliary second wrapping support member 56 may press the outer film 130 toward the lids 140 while heating the outer film 130. The outer film 130 may be fused to the third side end surfaces G13 of the lids 140. The auxiliary second wrapping support member 56 may press the outer film 130 toward the lids 140 while heating the outer film 130. The outer film 130 may be fused to the third side end surfaces G13 of the lids 140. For example, the heat-sealable resin layer L3 of the outer film 130 fuses to the third side end surfaces G13.

More specifically, the auxiliary second wrapping support member 56 may heat the first side edge A1 and the second side edge A2 positioned within the third part 131C of the outer film 130. The first side edge A1 positioned within the third part 131C faces the third side end surface G13 of the first lid 140A. The third sealing portion S13 of the opening sealing portion S1 is formed between the first side edge A1 positioned within the third part 131C and the third side end surface G13 of the first lid 140A. The third side edge A3 positioned within the third part 131C faces the third side end surface G13 of the second lid 140B. The third sealing portion S13 of the opening sealing portion S1 is formed between the second side edge A2 positioned within the third part 131C and the third side end surface G13 of the second lid 140B.

As shown in Fig. 7B, after step S44, step S45 of joining the outer film 130 to the fourth side end surfaces G14 of the lids 140 is performed. In step S45, the first joining device 70 is used.

In step S45, as shown in Figs. 11F and 37E, the outer film 130 is joined to the fourth side end surfaces G14. In step S44 that is the immediately preceding step, the outer film 130 is in contact with the fourth side end surfaces G14 of the first lid 140A and the second lid 140B. More specifically, the first side edge A1 positioned within the fourth part 131D of the outer film 130 is in contact with the fourth side end surface G14 of the first lid 140A. The second side edge A2 positioned within the fourth part 131D of the outer film 130 is in contact with the fourth side end surface G14 of the second lid 140B.

The first joining device 70 may include the fourth seal bar 71D that contacts a part of the outer film 130, positioned on the fourth side end surface G14, and heats the outer film 130 while pressing the outer film with the fourth side end surfaces G14.

In step S45 mainly shown in Figs. 11F and 37E, the outer film 130 is joined to the fourth side end surfaces G14. In one specific example, in step S45, the outer film 130 may be joined to the fourth side end surfaces G14 as described below.

In step S45, in continuation from the previous step S3, the lids 140 are fixed by the fixing devices 40. In step S45, in continuation from the immediately preceding step S44, the outer film 130 joined to the first side end surfaces G11, the second side end surfaces G12, and the third side end surfaces G13 is spread on the fourth side end surfaces G14 and the support surface 55b. In step S44, the first extended part 132A of the outer film 130, positioned on the support surface 55b, may be held on the support surface 55b by vacuum suction. In step S44, the outer film 130 may be maintained in a taut state where tension is applied by the grip portion 60 (tensioning device 28).

In step S45 shown in Figs. 11F and 37E, the fourth seal bar 71D and the receiving bar 72A press toward each other. The outer film 130 is positioned between the fourth seal bar 71D and the electrode assembly unit 111. The fourth seal bar 71D has a built-in heating mechanism. The fourth seal bar 71D presses the outer film 130 toward the lids 140 while heating the outer film 130. The outer film 130 fuses to the fourth side end surfaces G14 of the lids 140. For example, the heat-sealable resin layer L3 of the outer film 130 fuses to the fourth side end surfaces G14.

In step S45, the fourth seal bar 71D heats the first side edge A1 and the second side edge A2 positioned within the fourth part 131D of the outer film 130. The first side edge A1 positioned within the fourth part 131D faces the fourth side end surface G14 of the first lid 140A. The fourth sealing portion S14 of the opening sealing portion S1 is formed between the first side edge A1 positioned within the fourth part 131D and the fourth side end surface G14 of the first lid 140A. The second side edge A2 positioned within the fourth part 131D faces the fourth side end surface G14 of the second lid 140B. The fourth sealing portion S14 of the opening sealing portion S1 is formed between the second side edge A2 positioned within the fourth part 131D and the fourth side end surface G14 of the second lid 140B.

Thus, step S45 ends. At the end of step S45, the opening sealing portion S1 that seals any gap between the side end surfaces G1 of the lids 140 and the outer film 130 is formed. The opening sealing portions S1 includes the first sealing portions S11, the second sealing portions S12, the third sealing portions S13, and the fourth sealing portions S14. The opening sealing portions S1 surround the lids 140. Each of the opening sealing portions S1 has a circumferential shape.

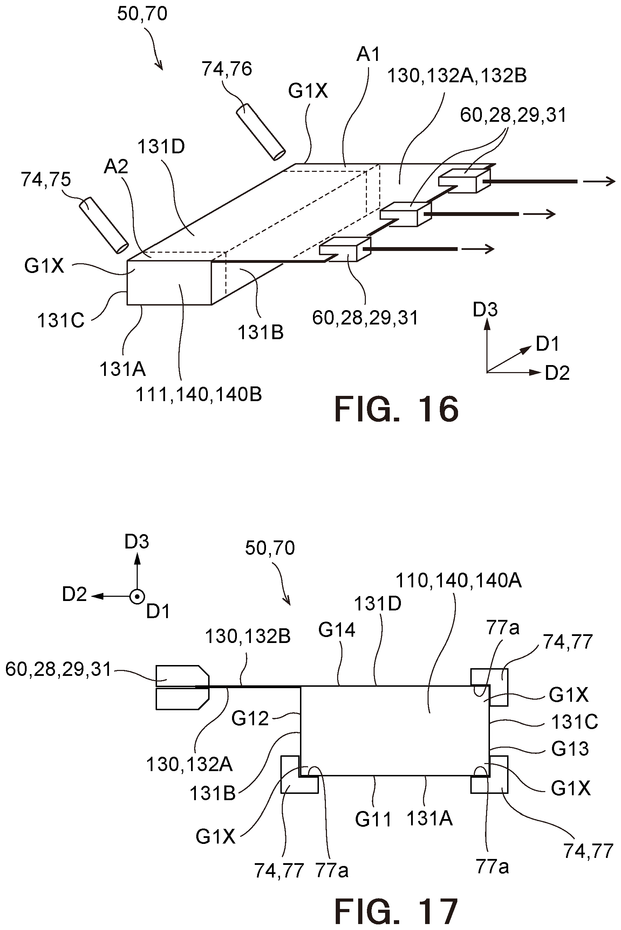

The side end surface G1 of each of the first lid 140A and the second lid 140B includes the plurality of side end surfaces. The corner G1X is formed between adjacent two side end surfaces of the plurality of side end surfaces. As shown in Figs. 16 to 19, each of the first joining device 70 and the second joining device 90 (described later) may include a spot heater 74 that heats a part of the outer film 130 on the corner G1X.

Joining failure easily occurs between the outer film 130 and each of the first lid 140A and the second lid 140B at the corners G1X of the side end surfaces G1. According to a modification using the spot heater 74, by locally heating the parts on the corners G1X of the outer film 130, the first lid 140A and the second lid 140B can be stably joined to the outer film 130 at the corners G1X. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130. It is possible to suppress excessive heating of the outer film 130 as a whole to suppress damage to the outer film 130.

As shown in Fig. 16, the spot heater 74 may include a blower 75 that discharges heated gas. As shown in Fig. 16, the spot heater 74 may include an infrared heater 76 that emits infrared light. As shown in Fig. 17, the spot heater 74 may include a corner heater 77 that has a heating surface 77a bent in conformity with the corners G1X. The heating surface 77a of the corner heater 77 is bent so that the outer film 130 can be simultaneously pressed against both of the two side end surfaces that make up the corner.

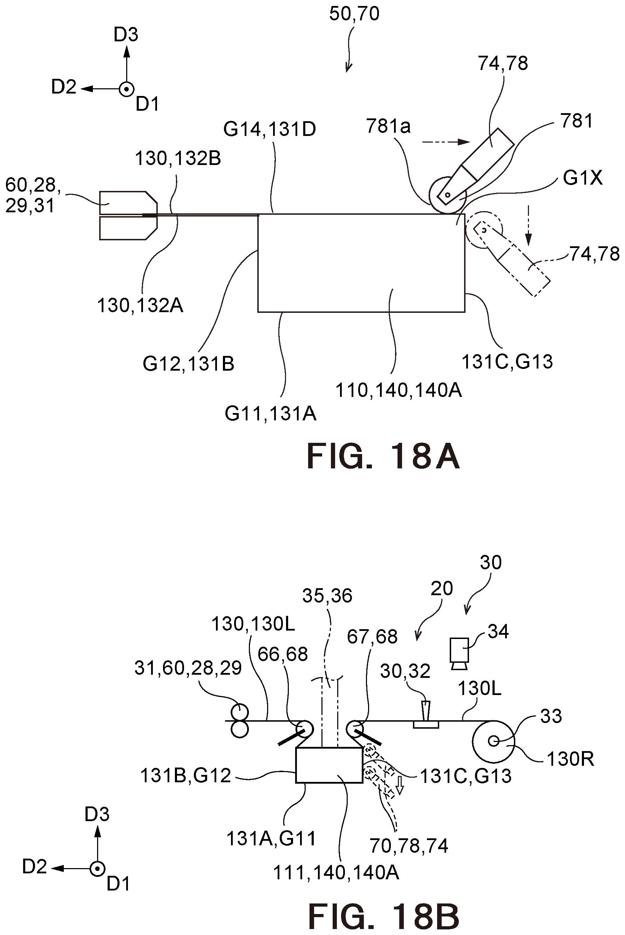

As shown in Figs. 18A and 18B, the spot heater 74 may include a roller heater 78. As shown in Fig. 18A, the roller heater 78 includes a rotatable roller 781. The roller 781 has a heated outer peripheral surface 781a. The roller heater 78 may include a heating mechanism for heating the outer peripheral surface 781a.

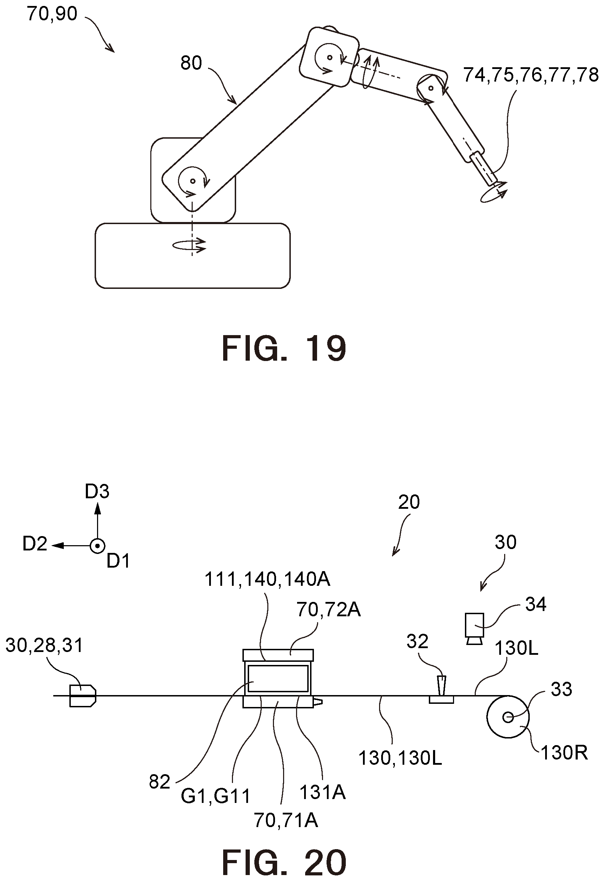

As shown in Fig. 19, each of the first joining device 70 and the second joining device 90 (described later) may include a robot arm 80 holding the spot heater 74. By using the robot arm 80, the spot heater 74 can approach a part of the outer film 130 on the corners G1X in an appropriate direction. As a result, the outer film 130 and the side end surfaces G1 can be more stably joined at the corners G1X of the side end surfaces G1.

The roller heater 78 shown in Figs. 18A and 18B can stably heat not only the corners G1X of the side end surfaces G1 but also a desired region. As shown in Figs. 18A and 18B, the roller 781 moves on the outer film 130 placed on the side end surfaces G1 of the lids 140 while rotating. The roller 781 heats the outer film 130 while moving and presses the outer film 130 toward the side end surfaces G1 of the lids 140. The roller heater 78, as well as the seal bar, can also join the outer film 130 to the side end surfaces G1 of the lids 140.

One or both of the first joining device 70 and the second joining device 90 (described later) may include the roller heater 78 including the rotatable roller 781 having the heated outer peripheral surface 781a, and the robot arm 80 holding the roller heater 78. By using the robot arm 80, the heating temperature and the force with which the roller 781 presses the outer film 130 can be adjusted as needed at each position where the roller 781 passes on the outer film 130. For example, the heating temperature and the force with which the roller 781 presses the outer film 130 can be made uniform. As a result, the outer film 130 and the side end surfaces G1 can be more stably joined. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

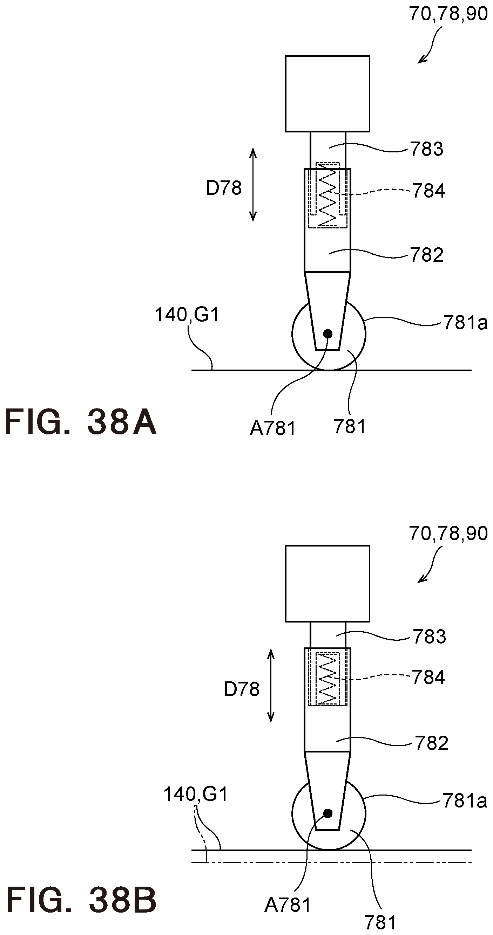

As shown in Figs. 38A to 38C, the roller heater 78 may include the roller 781, a distal end part 782, a proximal end part 783, and a pressure-applying part 784. The roller 781 has the heated outer peripheral surface 781a, as described above. The distal end part 782 holds the roller 781 such that the roller 781 is rotatable. The proximal end part 783 holds the distal end part 782. The distal end part 782 is relatively movable relative to the proximal end part 783 in an expansion and contraction direction D78 that is orthogonal to the rotation axis A781 of the roller 781. In the illustrated example, the expansion and contraction direction D78 is orthogonal to the rotation axis A781 of the roller 781.

The pressure-applying part 784 is located between the distal end part 782 and the proximal end part 783. The pressure-applying part 784 is supported by the proximal end part 783 and presses the distal end part 782 in a direction in which the distal end part 782 moves away from the proximal end part 783. The pressure-applying part 784 presses the distal end part 782 in the expansion and contraction direction D78. The pressure-applying part 784 presses the distal end part 782 and the proximal end part 783 such that the distal end part 782 and the proximal end part 783 move away from each other in the expansion and contraction direction D78.

In a state where no external force is applied to the roller heater 78, the overall length of the roller heater 78 is extended by the force from the pressure-applying part 784. The distal end part 782 can approach the proximal end part 783 along the expansion and contraction direction D78 by receiving a force that counteracts the pressing force of the pressure-applying part 784. In other words, when the roller heater 78 receives an external force pressing the roller 781 and the distal end part 782 toward the proximal end part 783, the overall length of the roller heater 78 shortens.

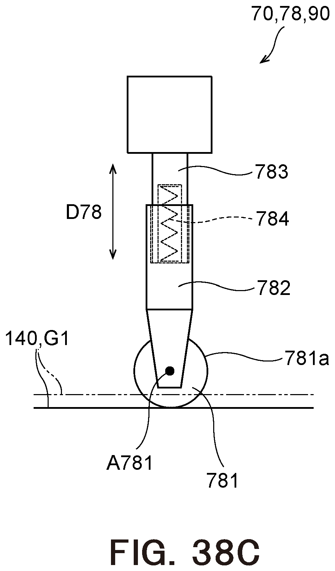

In an example, as shown in Figs. 38B and 38C, the actual dimensions of the lid 140 may deviate from the intended dimensions, in other words, the dimensions as designed. In Figs. 38B and 38C, the position of the side end surface G1 with the intended dimension is indicated by the alternate long and two-short dashed line.

The dimensions of the lid 140 shown in Fig. 38B are larger than the design dimensions shown in Fig. 38A. In the example shown in Fig. 38B, the force from the lid 140 toward the roller heater 78, pressing the roller 781 and the distal end part 782 toward the proximal end part 783, increases, and the overall length of the roller heater 78 shortens.

The dimensions of the lid 140 shown in Fig. 38C are smaller than the design dimensions shown in Fig. 38A. In the example shown in Fig. 38C, the force from the pressure-applying part 784 causes the overall length of the roller heater 78 to extend, with the result that the roller 781 contacts the lid 140.

Therefore, even when the dimensions of the lids 140 fluctuate to some extent, the roller 781 can heat the outer film 130 while continuing to press the outer film 130 with a sufficiently large force toward the side end surfaces of the first lid 140A and the second lid 140B. As a result, the outer film 130 and the side end surfaces G1 can be more stably joined. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

The pressure-applying part 784 is a member that is supported by the proximal end part 783 and presses the distal end part 782 in the expansion and contraction direction D78. The specific configuration of the pressure-applying part 784 is not limited. The pressure-applying part 784 may be a member that elastically deforms. Examples of the pressure-applying part 784 include a fluid-pressure cylinder such as an air cylinder, a damper mechanism, a spring such as a compression spring, and rubber.

An upper limit and a lower limit may be set on the deformation resistance (N/mm) of the pressure-applying part 784. A deformation resistance is the magnitude of force (N) needed to shorten the pressure-applying part by 1 mm in the expansion and contraction direction D78. A deformation resistance is a resistance in elastic deformation and is also referred to as elastic deformation resistance. In an example, the deformation resistance of a spring is a spring constant. When the deformation resistance is high, the expansion and contraction length of the roller heater 78 in a case where a certain force is applied is small. When the deformation resistance is low, the expansion and contraction length of the roller heater 78 in a case where a certain force is applied is large.

The force with which the roller heater 78 presses the outer film 130 toward the side end surface G1 changes in accordance with a change in the length of the pressure-applying part 784 following a change in the dimensions of the lid 140 and the like. By setting an upper limit on the deformation resistance (N/mm) of the pressure-applying part 784, the amount of force with which the roller heater 78 presses the outer film 130 toward the side end surface G1 can be reduced. In other words, by reducing the variation in force with which the roller heater 78 presses the outer film 130 toward the side end surfaces G1, the sealability (sealing performance) between the outer film and the side end surfaces of the first lid and the second lid can be improved.

The deformation resistance (N/mm) of the pressure-applying part 784 may be lower than or equal to 1.0 N/mm, may be lower than or equal to 0.90 N/mm, or may be lower than or equal to 0.80 N/mm.

The deformation resistance (N/mm) is measured using a force gauge and a displacement sensor. In a state where movement of the distal end part 782 in the expansion and contraction direction D78 is restricted, the proximal end part 783 is pressed toward the distal end part 782 in the expansion and contraction direction D78. At this time, the load (N) applied to the proximal end part 783 is measured using the force gauge, and the displacement (mm) of the proximal end part 783 in the expansion and contraction direction D78 is measured using the displacement sensor. Based on Hooke's Law "F (load) = k (deformation resistance) × t (displacement)", the deformation resistance is calculated. More specifically, the deformation resistance is calculated by dividing F (load) by t (displacement).

The roller 781 of the roller heater 78 is pressed against the outer film 130 so that the roller heater 78 can press the outer film 130 toward the side end surfaces G1 with a preset force. Therefore, the pressure-applying part 784 is used in a state of being shortened to the length according to the preset force. By setting a lower limit on deformation resistance, the relative movement amount between the distal end part 782 and the proximal end part 783, that is, the amount of change in the overall length of the pressure-applying part 784, for applying a predetermined force can be reduced. Therefore, the roller heater 78 can be reduced in size and weight.

The deformation resistance (N/mm) of the pressure-applying part 784 may be higher than or equal to 0.10 N/mm, may be higher than or equal to 0.20 N/mm, or may be higher than or equal to 0.30 N/mm.

The deformation resistance (N/mm) of the pressure-applying part 784 may be higher than or equal to 0.10 N/mm and lower than or equal to 1.0 N/mm, may be higher than or equal to 0.20 N/mm and lower than or equal to 1.0 N/mm, or may be higher than or equal to 0.30 N/mm and lower than or equal to 1.0 N/mm. The deformation resistance (N/mm) of the pressure-applying part 784 may be higher than or equal to 0.10 N/mm and lower than or equal to 0.90 N/mm, may be higher than or equal to 0.20 N/mm and lower than or equal to 0.90 N/mm, or may be higher than or equal to 0.30 N/mm and lower than or equal to 0.90 N/mm. The deformation resistance (N/mm) of the pressure-applying part 784 may be higher than or equal to 0.10 N/mm and lower than or equal to 0.80 N/mm, may be higher than or equal to 0.20 N/mm and lower than or equal to 0.80 N/mm, or may be higher than or equal to 0.30 N/mm and lower than or equal to 0.80 N/mm.

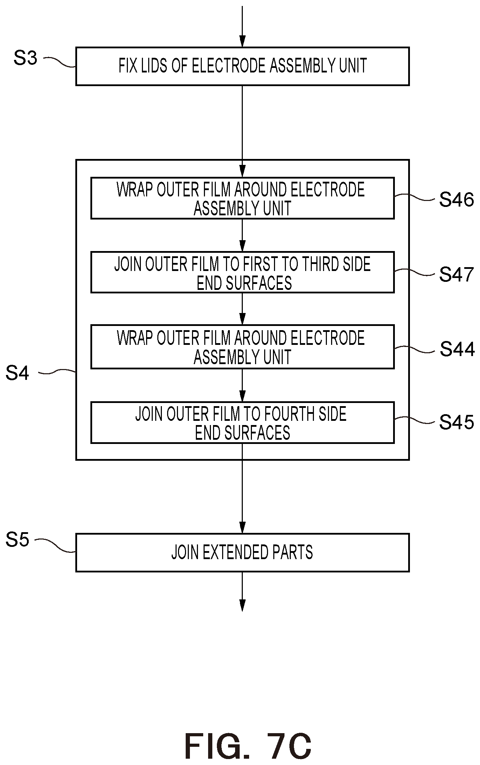

In the above-described specific example, step S4 of wrapping and joining the outer film 130 to the electrode assembly unit 111 separately includes step S41 of joining the outer film 130 to the first side end surfaces G11 and step S43 of joining the outer film 130 to the second and third side end surfaces G12 and G13. Not limited to this example, as shown in Fig. 7C, joining of the outer film 130 to the first to third side end surfaces G11 to G13 may be continuously performed in a single step. For example, the outer film 130 in a state shown in Fig. 18B may be sequentially joined to the third side end surfaces G13, the first side end surfaces G11, and the second side end surfaces G12. Alternatively, the outer film 130 in a state shown in Fig. 18A may be sequentially bonded to the second side end surfaces G12, the first side end surfaces G11, and the third side end surfaces G13. The second side end surfaces G12, the first side end surfaces G11, and the third side end surfaces G13 do not need to be continuously joined with the single roller heater 78. The outer film 130 may be sequentially joined to the first side end surfaces G11, the second side end surfaces G12, and the third side end surfaces G13, or may be sequentially joined to the first side end surfaces G11, the third side end surfaces G13, and the second side end surfaces G12.

Furthermore, unlike the step shown in Fig. 7A, in step S2 of supplying the electrode assembly unit and the outer film, the outer film 130 may be wrapped around the electrode assembly unit 111 supplied.

In an example, as indicated by the alternate long and two-short dashed line in Fig. 18B, the holding conveyance unit 36 of the electrode assembly unit supply device 35 may supply the electrode assembly unit 111 by pressing the electrode assembly unit 111 into the outer film 130 from the first side in the third direction D3 (for example, the upper side in the vertical direction).

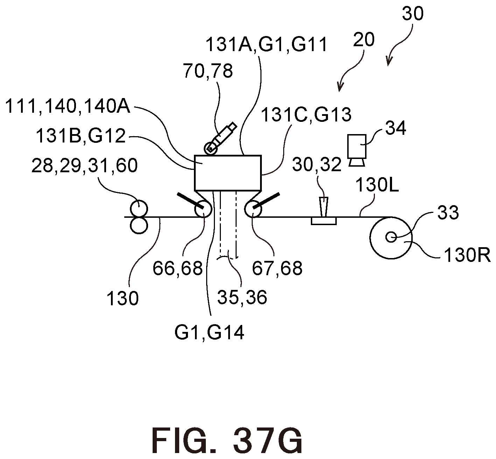

In another example, as shown in Fig. 37G, the holding conveyance unit 36 may supply the electrode assembly unit 111 by pressing the electrode assembly unit 111 into the outer film 130 from the second side in the third direction D3 (for example, the lower side in the vertical direction). In these examples, the first and second pressing portions 66 and 67 and the first and second film holding units 31 and 32 may bring the outer film 130 into contact with the first to third side end surfaces G11 to G13 of the lids 140 by performing the operations described with reference to Figs. 37A and 37B. Subsequently, by using the seal bars 71B to 71D and the roller heater 78 of the first joining device 70, the outer film 130 can be joined to the first to third side end surfaces G11 to G13 of the lids 140.

As shown in Fig. 7B, step S4 ends in step S45. As shown in Fig. 7A, after step S4, step S5 of joining the extended parts 132A and 132B is performed. In step S5, the pair of extended parts 132A and 132B is joined with each other. In step S5, the second joining device of the manufacturing apparatus 20 is used.

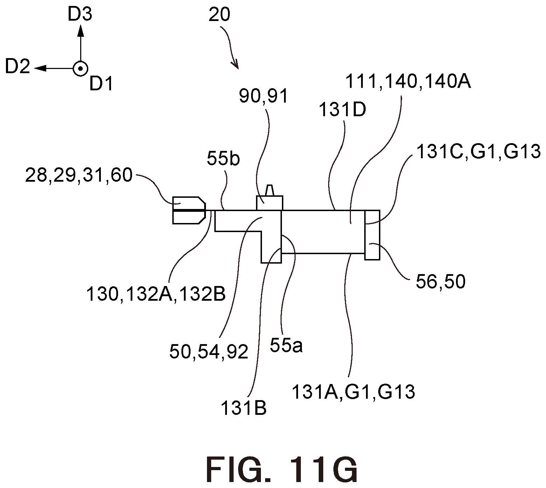

As shown in Figs. 11G and 37F, the manufacturing apparatus 20 may further include the second joining device 90. The second joining device 90 joins the pair of extended parts 132A and 132B of the outer film 130 wrapped around the electrode assembly unit 111, the pair of extended parts 132A and 132B extending from the electrode assembly unit 111 and facing each other. The second joining device 90 may include a film seal bar 91. The film seal bar 91 presses the pair of extended parts 132A and 132B toward a receiving member 92 supporting the pair of extended parts 132A and 132B while heating the pair of extended parts 132A and 132B. As shown in Figs. 11G and 37F, the wrapping support member 54 may constitute the receiving member 92 that supports the pair of extended parts 132A and 132B.

In step S5 mainly shown in Figs. 11G and 37F, the pair of extended parts 132A and 132B is joined with each other. In one specific example, as described below, the pair of extended parts 132A and 132B may be joined with each other in step S45.

In step S5, in continuation from the previous step S3, the lids 140 are fixed by the fixing devices 40. In step S5, in continuation from the previous step S4, the pair of extended parts 132A and 132B of the outer film 130 joined to the side end surfaces G1 of the lids 140 is spread onto the support surface 55b of the wrapping support member 54. In step S5, in continuation from step S4, the pair of extended parts 132A and 132B may be held on the support surface 55b by vacuum suction. In step S5, in continuation from step S4, the outer film 130 may be maintained in a taut state where tension is applied by the grip portion 60 (tensioning device 28).

In step S5 shown in Figs. 11G and 37F, the film seal bar 91 presses the pair of extended parts 132A and 132B toward the wrapping support member 54 as the receiving member 92. The pair of extended parts 132A and 132B is pressed toward each other between the film seal bar 91 and the receiving member 92. The film seal bar 91 has a built-in heating mechanism. The film seal bar 91 presses the extended parts 132A and 132B toward the receiving member 92 while heating the extended parts 132A and 132B. The pair of extended parts 132A and 132B fuses to each other. For example, the heat-sealable resin layer L3 of one side of the outer film 130 fuses to the other side of the outer film 130.

Thus, step S5 ends.

Similarly to the seal bar included in the first joining device 70, the bar drive unit 73 described with reference to Figs. 12A and 12B can also be applied to the film seal bar 91. The bar drive unit 73 moves the film seal bar 91 so as to achieve a preset depression amount.

The second joining device 90 may include the above-described roller heater 78 in addition to the film seal bar 91 or instead of the film seal bar 91. The roller heater 78 shown in Figs. 18A and 18B can stably heat not only the corners G1X of the side end surfaces G1 but also a desired region. Therefore, similarly to the first joining device 70, the second joining device 90 may include the roller heater 78 including the rotatable roller 781 having the heated outer peripheral surface 781a and the robot arm 80 holding the roller heater 78. By using the robot arm 80, the heating temperature and the force with which the roller 781 presses the outer film 130 can be adjusted as needed at each position where the roller 781 passes on the outer film 130. For example, the heating temperature and the force with which the roller 781 presses the outer film 130 can be made uniform. As a result, the pair of extended parts 132A and 132B can be more stably joined.

The roller heater 78 described with reference to Figs. 38A to 38C can be applied to the second joining device 90. With this roller heater 78, the force from the pressure-applying part 784 extends the overall length of the roller heater 78 to cause the roller 781 to contact the lid 140. In other words, even when the dimensions of the lids 140 fluctuate to some extent, the roller 781 can heat the outer film 130 while continuing to press the outer film 130 with a sufficiently large force toward the side end surfaces of the first lid 140A and the second lid 140B. Therefore, the outer film 130 and the side end surfaces G1 can be more stably joined with each other.

By setting an upper limit on the deformation resistance (N/mm) of the pressure-applying part 784, the amount of change in force with which the roller heater 78 presses the outer film 130 toward the side end surfaces G1 can be reduced. In other words, by reducing the variation in force with which the roller heater 78 presses the outer film 130 toward the side end surfaces G1, the sealability (sealing performance) between the outer film and the side end surfaces of the first lid and the second lid can be improved.

By setting a lower limit on the deformation resistance (N/mm) of the pressure-applying part 784, the relative movement amount between the distal end part 782 and the proximal end part 783, that is, the amount of change in the overall length of the pressure-applying part 784, for applying a predetermined force can be reduced. Therefore, the roller heater 78 can be reduced in size and weight.

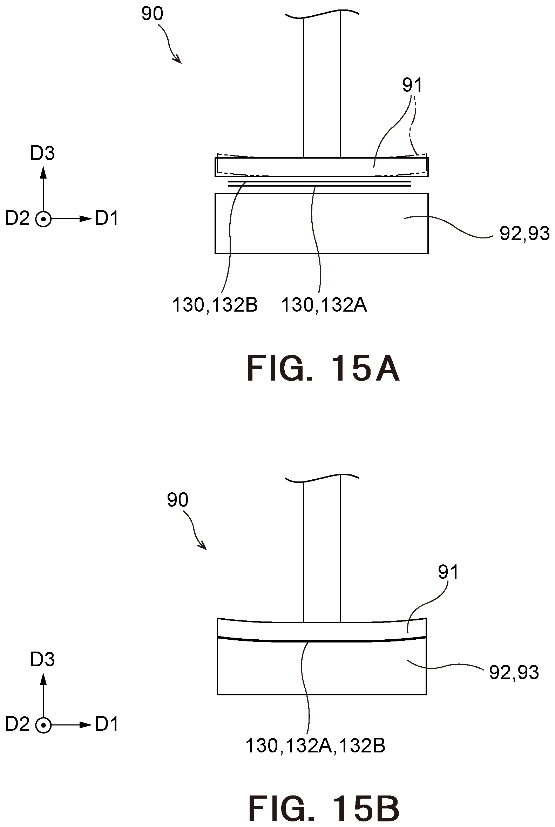

As shown in Fig. 15A, the heated seal bar can deform. Therefore, as shown in Fig. 15B, the receiving member 92 included in the second joining device 90 may include an elastic member 93 that is deformable in conformity with deformation of the film seal bar 91. The elastic member 93 may also be rubber. The elastic member 93 may also be a resin. According to this example, the receiving member 92 can deform so as to follow deformation of the film seal bar 91. Therefore, the pair of extended parts 132A and 132B can be stably joined between the film seal bar 91 and the receiving member 92.

The wrapping support member 54 may have a built-in heating mechanism. By heating with the support surface 55b, the wrapping support member 54 may function as the second joining device 90.

The wrapping support member 54 may press the pair of extended parts 132A and 132B of the outer film 130 toward each other while heating the pair of extended parts 132A and 132B. The pair of extended parts 132A and 132B of the outer film 130 may be fused to each other. For example, the heat-sealable resin layer L3 of one side of the outer film 130 fuses to the other side of the outer film 130. At this time, the receiving member 92 may be disposed at the position of the film seal bar 91 in Fig. 11G. The pair of extended parts 132A and 132B can be pressed toward each other while being heated between the receiving member 92 and the wrapping support member 54.

With the above manufacturing method, the electrical storage device intermediate 110 is obtained. The electrical storage device 100 is obtained using the electrical storage device intermediate 110. In an example, as shown in Fig. 21, the manufacturing apparatus 10 for the electrical storage device 100 may include the manufacturing apparatus 20 for the electrical storage device intermediate 110 and an injection device 15 that injects electrolytic solution into the electrical storage device intermediate 110. The manufacturing method for manufacturing the electrical storage device 100 may include a step of manufacturing the electrical storage device intermediate 110 using the above-described manufacturing method, and a step of injecting electrolytic solution into the electrical storage device intermediate 110.

In the embodiment described above, the manufacturing apparatus 20 and manufacturing method for the electrical storage device intermediate 110 manufacture the electrical storage device intermediate 110 using the electrode assembly unit 111 and the outer film 130. The electrode assembly unit 111 includes the first lid 140A, the second lid 140B, the electrode assembly 115, the first terminal 117A, and the second terminal 117B. The electrode assembly 115 is located between the first lid 140A and the second lid 140B. The first terminal 117A is electrically connected to the electrode assembly 115. The first terminal 117A is connected to the first lid 140A. The second terminal 117B is electrically connected to the electrode assembly 115. The second terminal 117B is connected to the second lid 140B. The manufactured electrical storage device 100 includes the outer package 120 and the electrode assembly 115 housed in the outer package 120. The outer package 120 includes the first lid 140A, the second lid 140B, and the outer film 130.

The manufacturing apparatus 20 includes the fixing device 40 that fixes the first lid 140A and the second lid 140B of the electrode assembly unit 111, and the first joining device 70 that joins the side end surfaces G1 and the outer film 130 wrapped around the electrode assembly unit 111 such that the outer film 130 contacts the side end surface G1 of the first lid 140A and the side end surface G1 of the second lid 140B in a circumferential manner. The manufacturing apparatus 20 may further include the wrapping device 50 that wraps the electrode assembly unit 111 with the outer film 130 such that the outer film 130 contacts the side end surface G1 of the first lid 140A and the side end surface G1 of the second lid 140B in a circumferential manner.

The manufacturing method includes a step of fixing the first lid 140A and the second lid 140B of the electrode assembly unit 111, and a step of joining the side end surfaces G1 and the outer film 130 wrapped around the electrode assembly unit 111 such that the outer film 130 contacts the side end surface G1 of the first lid 140A and the side end surface G1 of the second lid 140B. The manufacturing method may include a step of wrapping the outer film 130 around the electrode assembly unit 111 such that the outer film 130 contacts the side end surface G1 of the first lid 140A and the side end surface G1 of the second lid 140B in a circumferential manner.

With the manufacturing apparatus and manufacturing method according to the present embodiment, an appropriate relative position between the outer film 130 and both the first lid 140A and the second lid 140B can be maintained using the fixing devices 40. Therefore, the outer film 130 and both the first lid 140A and the second lid 140B can be stably joined with each other in an appropriate relative position by using the first joining device 70.

As shown in Figs. 8A to 8C, and the like, in one specific example of the embodiment described above, the manufacturing apparatus 20 further includes the film supply device 30 that supplies the outer film 130 and the electrode assembly unit supply device 35 that places the electrode assembly unit 111 on the outer film 130. According to this specific example, by using the film supply device 30 and the electrode assembly unit supply device 35, a large number of electrical storage device intermediates 110 can be manufactured in a short time.

As shown in Fig. 8C and the like, in one specific example of the embodiment described above, the manufacturing apparatus 20 further includes the positioning device 38 that positions the electrode assembly unit 111 on the outer film 130. By using the positioning device 38, both the first lid 140A and the second lid 140B and the outer film 130 can be positioned in an appropriate relative position. As a result, both the first lid 140A and the second lid 140B and the outer film 130 can be stably joined with each other in an appropriate relative position. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 9 to 10I, and the like, in one specific example of the embodiment described above, the first lid 140A, the electrode assembly 115, and the second lid 140B are located in this order in the first direction D1. Each of the fixing devices 40 includes the fixation restricting portion 41 that contacts a corresponding one of the first lid 140A and the second lid 140B from the outer side in the first direction D1 to restrict movement toward the outer side, and the fixation drive unit 42 that presses a corresponding one of the first lid 140A and the second lid 140B against the fixation restricting portions 41. According to this specific example, with a simple configuration and simple control using the fixation restricting portions 41 and the fixation drive units 42, the first lid 140A and the second lid 140B can be stably fixed.

As shown in Fig. 10A, in one specific example of the embodiment described above, one of the pair of tapered projections 44A and the pair of tapered recesses 44B is provided on the fixation restricting portions 41 or the fixation drive unit 42. The other one of the pair of tapered projections 44A and the pair of tapered recesses 44B is provided on each of the first lid 140A and the second lid 140B. When the tapered projections 44A are inserted in the tapered recesses 44B, the first lid 140A and the second lid 140B are positioned in a direction that is not parallel to the first direction D1. According to this specific example, with the tapered projections 44A and the tapered recesses 44B, the first lid 140A and the second lid 140B can be automatically positioned and fixed at an appropriate position.

As shown in Figs. 10A, 10C, 10D, and the like, in one specific example of the embodiment described above, one of the fixation drive units 42 includes the vacuum suction unit 43 that holds the first lid 140A by vacuum suction, and the other one of the fixation drive units 42 includes the vacuum suction unit 43 that holds the second lid 140B by vacuum suction. According to this specific example, the fixation drive units 42 can be disposed on the outer sides of the first lid 140A and the second lid 140B in the first direction D1. It is possible to reduce the space needed to dispose the fixation restricting portions 41 and the fixation drive units 42. In other words, it is possible to reduce the size of the fixing devices 40 that function effectively.

As shown in Fig. 10B and the like, in one specific example of the embodiment described above, each of the first lid 140A and the second lid 140B includes the shaft-like protruding portion 142 that protrudes toward the outer side in the first direction D1. The shaft-like protruding portion 142 has a notch 143 that opens in a direction that is not parallel to the first direction D1. The fixation drive unit 42 includes the hook 45 that can be inserted into the notch 143. According to this specific example, the fixation drive units 42 can be disposed on the outer sides of the first lid 140A and the second lid 140B in the first direction D1. It is possible to reduce the space needed to dispose the fixation restricting portions 41 and the fixation drive units 42. In other words, it is possible to reduce the size of the fixing devices 40 that function effectively.

As shown in Fig. 10B and the like, in one specific example of the embodiment described above, the shaft-like protruding portion 142 has the groove 144 at the proximal end. The shaft-like protruding portion 142 is removable by breaking the shaft-like protruding portion 142 at the groove 144. According to this specific example, the fixation drive units 42 can be disposed on the outer sides of the first lid 140A and the second lid 140B in the first direction D1. The size of the fixing device 40 can be reduced. It is possible to reduce the space needed to dispose the fixation restricting portions 41 and the fixation drive units 42. In other words, it is possible to reduce the size of the fixing devices 40 that function effectively.

As shown in Figs. 10B, 10E, and the like, in one specific example of the embodiment described above, the fixing device 40 includes the clamper 46 that includes the plurality of clamp pieces 46a. The plurality of clamp pieces 46a can approach each other and can separate from each other. According to this specific example, by using the clamper 46, each of the first lid 140A and the second lid 140B can be more stably fixed.

As shown in Figs. 14A, 14B, and the like, in one specific example of the embodiment described above, the wrapping device 50 includes the tensioning device 28 that applies tension to the outer film 130. The tensioning device 28 includes the reverse-crown roll 63A and the nip roll 63B that sandwiches the outer film 130 with the reverse-crown roll 63A. According to this specific example, the tension of the outer film 130 increases on the outer side in the first direction (width direction) D1. The tension of the outer film 130 decreases on the inner side in the first direction (width direction) D1. As a result, it is possible to wrap the outer film 130 around the electrode assembly unit 111 while suppressing occurrence of deformations such as wrinkles and folds in the outer film 130. As a result, it is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 13, 14A, and the like, in one specific example of the embodiment described above, the wrapping device 50 includes the grip portion 60 (the film holding unit 29, the first film holding unit 31) that grips the outer film 130, the surface monitoring unit 64 that monitors the surface condition of the outer film 130 gripped by the grip portion 60, and the wrapping controller 65 that controls the operation of the grip portion 60. The wrapping controller 65 controls the operation of the grip portion 60 based on a monitoring result of the surface monitoring unit 64. According to this specific example, it is possible to wrap the outer film 130 around the electrode assembly unit 111 while suppressing occurrence of deformations such as wrinkles and folds in the outer film 130. As a result, it is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 11C, 11E, 37D, and the like, in one specific example of the embodiment described above, the wrapping device 50 includes the pressing member 58 that moves on the outer film 130 while pressing the outer film 130 toward the side end surfaces G1. According to this specific example, it is possible to wrap the outer film 130 around the electrode assembly unit 111 while suppressing occurrence of deformations such as wrinkles and folds in the outer film 130. As a result, it is possible to suppress occurrence of a gap between the side end surfaces G1 of the first lid 140A and the second lid 140B and the outer film and, therefore, to improve the sealability (sealing performance) between the side end surfaces G1 of the first lid 140A and the second lid 140B and the outer film 130.

As shown in Figs. 16 to 19, 37G to 38C, and the like, in one specific example of the embodiment described above, the side end surface G1 of each of the first lid 140A and the second lid 140B includes the plurality of side end surfaces. The corner G1X is formed between adjacent two side end surfaces of the plurality of side end surfaces. The first joining device 70 includes the spot heater 74 that heats a part of the outer film 130 on the corner G1X. Joining failure can occur between the outer film 130 and each of the first lid 140A and the second lid 140B at the corners G1X of a corresponding one of the side end surfaces G1. According to this specific example, the part of the outer film 130 on the corner G1X can be locally heated by the spot heater 74. Therefore, it is possible to stably join the outer film 130 and each of the first lid 140A and the second lid 140B at the corners G1X. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130. It is possible to suppress excessive heating of the outer film 130 as a whole to suppress damage to the outer film 130.

As shown in Figs. 16 to 19, 37G to 38C, and the like, in one specific example of the embodiment described above, the spot heater 74 includes one or more of the blower 75 that discharges heated gas, the infrared heater 76 that emits infrared light, the rotatable roller 781 that has the heated outer peripheral surface 781a, and the corner heater 77 that has the heating surface 77a bent in conformity with the corner G1X. With the thus configured spot heater 74, compared to the seal bar, the outer film 130 on the corner G1X of each side end surface G1 can be more reliably heated.

As shown in Fig. 19 and the like, in one specific example of the embodiment described above, the first joining device 70 includes the robot arm 80 holding the spot heater 74. According to this specific example, by using the robot arm 80, the spot heater 74 can approach a part of the outer film 130 on the corner G1X in an appropriate direction. As a result, the outer film 130 and the side end surfaces G1 can be more stably joined at the corner G1X of the side end surfaces G1.

As shown in Figs. 18A to 19, 37G to 38C, and the like, in one specific example of the embodiment described above, the second joining device 90 that joins the pair of extended parts 132A and 132B of the outer film 130 wrapped around the electrode assembly unit 111, the pair of extended parts 132A and 132B extending from the electrode assembly unit 111, is further provided. One or both of the first joining device 70 and the second joining device 90 include the heater 78 including the rotatable roller 781 having the heated outer peripheral surface 781a, and the robot arm 80 holding the heater 78. According to this specific example, by using the robot arm 80, the heating temperature and the force with which the roller 781 presses the outer film 130 can be adjusted as needed at each position where the roller 781 passes on the outer film 130. For example, the heating temperature and the force with which the roller 781 presses the outer film 130 can be made uniform. As a result, the outer film 130 and the side end surfaces G1 can be more stably joined. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 12A, 12B, and the like, in one specific example of the embodiment described above, the manufacturing apparatus 20 further includes the second joining device 90 that joins the pair of extended parts 132A and 132B of the outer film 130 wrapped around the electrode assembly unit 111, the pair of extended parts 132A and 132B extending from the electrode assembly unit 111. One or both of the first joining device 70 and the second joining device 90 include the seal bar that heats the outer film 130 and the bar drive unit 73 that moves the seal bar toward the outer film 130. The bar drive unit 73 moves the seal bar so as to achieve a preset depression amount. According to this specific example, leakage of thermoplastic resin from between the outer film 130 and both the first lid 140A and the second lid 140B due to excessive pressing against the seal bar can be suppressed. The sealability (sealing performance) between the outer film 130 and both the first lid 140A and the second lid 140B can be improved.

As shown in Figs. 11G, 37F, and the like, in a specific example of the embodiment described above, the manufacturing apparatus 20 further includes the second joining device 90 that joins the pair of extended parts 132A and 132B of the outer film 130 wrapped around the electrode assembly unit 111, the pair of extended parts 132A and 132B extending from the electrode assembly unit 111 and facing each other. According to this specific example, the pair of extended parts 132A and 132B of the outer film 130 can be stably joined by the second joining device 90.

As shown in Figs. 15A, 15B, and the like, in one specific example of the embodiment described above, the second joining device 90 includes the receiving member 92 that supports the pair of extended parts 132A and 132B, and the film seal bar 91 that presses the pair of extended parts 132A and 132B toward the receiving member 92 while heating the pair of extended parts 132A and 132B. The receiving member 92 includes the elastic member 93 that is deformable in conformity with deformation of the film seal bar 91. According to this specific example, the receiving member 92 can deform so as to follow deformation of the film seal bar 91. Therefore, for example, even when deformation occurs in the film seal bar 91, the pair of extended parts 132A and 132B can be stably joined between the film seal bar 91 and the receiving member 92.

As shown in Figs. 11A, 12A, 12B, and the like, in one specific example of the embodiment described above, the first lid 140A, the electrode assembly 115, and the second lid 140B are located in this order in the first direction D1. The side end surface G1 of each of the first lid 140A and the second lid 140B includes the first side end surface G11 and the fourth side end surface G14 extending in the second direction D2 that is not parallel to the first direction D1, and the second side end surface G12 and the third side end surface G13 extending in the third direction D3 that is not parallel to both the first direction D1 and the second direction D2. The first joining device 70 includes the first seal bar 71A that contacts a part of the outer film 130 on the first side end surfaces G11 and heats the outer film 130 while pressing the outer film with the first side end surfaces G11. According to this specific example, the outer film 130 can be reliably and quickly joined to the first side end surfaces G11 by heat sealing with the first seal bar 71A.

As shown in Figs. 11B to 11D, and the like, in one specific example of the embodiment described above, the wrapping device 50 includes the wrapping assisting member 51 that holds the side end surfaces G1 by vacuum suction to restrict movement of the electrode assembly unit 111 when the outer film 130 is wrapped around the electrode assembly unit 111. According to this specific example, by using the wrapping assisting member 51, the outer film 130 can be stably and quickly wrapped around the electrode assembly unit 111. As a result, the outer film 130 and the side end surfaces G1 can be more quickly and more stably joined with each other. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 11C, 11D, and the like, in one specific example of the embodiment described above, the first lid 140A, the electrode assembly 115, and the second lid 140B are located in this order in the first direction D1. The side end surface G1 of each of the first lid 140A and the second lid 140B includes the first side end surface G11 and the fourth side end surface G14 extending in the second direction D2 that is not parallel to the first direction D1, and the second side end surface G12 and the third side end surface G13 extending in the third direction D3 that is not parallel to both the first direction D1 and the second direction D2. The wrapping device 50 includes the wrapping assisting member 51. The wrapping assisting member 51 includes the base surface 52a that contacts the fourth side end surfaces G14, the first assisting surface 52b that is connected to the base surface 52a and located along the extension of the second side end surfaces G12, and the second assisting surface 52c that is connected to the base surface 52a and located along the extension of the third side end surfaces G13. According to this specific example, the wrapping assisting member 51 contacts the electrode assembly unit 111 to restrict movement of the electrode assembly unit 111. By using the wrapping assisting member 51, the outer film 130 joined to the first side end surfaces G11 can be stably folded onto the second side end surfaces G12 and the first assisting surface 52b, and can be stably maintained in the folded state. Similarly, the outer film 130 joined to the first side end surfaces G11 can be stably folded onto the third side end surfaces G13 and the second assisting surface 52c, and can be stably maintained in the folded state. Folding of the outer film 130 on both sides of the first side end surfaces G11 can be performed in parallel. Thus, the outer film 130 can be stably and quickly wrapped around the electrode assembly unit 111. As a result, the outer film 130 and the side end surfaces G1 can be more quickly and more stably joined with each other. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 11C, 11D, and the like, in one specific example of the embodiment described above, the wrapping assisting member 51 holds the fourth side end surfaces G14 on the base surface 52a by vacuum suction. According to this specific example, the relative position between the wrapping assisting member 51 and the electrode assembly unit 111 can be stably maintained. Therefore, the second side end surfaces G12 and the first assisting surface 52b can be stably maintained on the same plane. The third side end surfaces G13 and the second assisting surface 52c can be stably maintained on the same plane. As a result, it is possible to wrap the outer film 130 around the electrode assembly unit 111 while suppressing occurrence of deformations such as wrinkles and folds in the outer film 130.

As shown in Figs. 11C, 11D, and the like, in one specific example of the embodiment described above, the wrapping assisting member 51 holds the outer film 130 on each of the first assisting surface 52b and the second assisting surface 52c by vacuum suction. According to this specific example, it is possible to wrap the outer film 130 around the electrode assembly unit 111 while more effectively suppressing occurrence of deformations such as wrinkles and folds in the outer film 130.

As shown in Figs. 11D, 37C, and the like, in one specific example of the embodiment described above, the first lid 140A, the electrode assembly 115, and the second lid 140B are located in this order in the first direction D1. The side end surface G1 of each of the first lid 140A and the second lid 140B includes the first side end surface G11 and the fourth side end surface G14 extending in the second direction D2 that is not parallel to the first direction D1, and the second side end surface G12 and the third side end surface G13 extending in the third direction D3 that is not parallel to both the first direction D1 and the second direction D2. The first joining device 70 includes the second seal bar 71B and the third seal bar 71C. The second seal bar 71B contacts a part of the outer film 130 on the second side end surfaces G12. The second seal bar 71B heats the outer film 130 while pressing the outer film 130 with the second side end surfaces G12. The third seal bar 71C contacts a part of the outer film 130 on the third side end surfaces G13. The third seal bar 71C heats the outer film 130 while pressing the outer film 130 with the third side end surfaces G13. According to this specific example, by pressing the second seal bar 71B and the third seal bar 71C toward each other in a direction orthogonal to the third direction D3, the outer film 130 can be simultaneously joined to the second side end surfaces G12 and the third side end surfaces G13. By pressing the second seal bar 71B and the third seal bar 71C toward each other in a direction orthogonal to the third direction D3, the electrode assembly unit 111 can be automatically held, and the posture of the first lid 140A and the second lid 140B can be maintained. As a result, the outer film 130 can be more quickly and more stably joined to the second side end surfaces G12 and the third side end surfaces G13.

As shown in Figs. 11E to 11G, 37D to 37F, and the like, in one specific example of the embodiment described above, the wrapping device 50 includes the wrapping support member 54 that contacts the outer film 130 located on the side end surfaces G1 to restrict movement of the electrode assembly unit 111 when the outer film 130 is wrapped around the electrode assembly unit 111. According to this specific example, by using the wrapping support member 54, the outer film 130 can be stably and quickly wrapped around the electrode assembly unit 111. As a result, the outer film 130 and the side end surfaces G1 can be more quickly and more stably joined with each other. It is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 11E to 11G, 37D to 37F, and the like, in one specific example of the embodiment described above, the first lid 140A, the electrode assembly 115, and the second lid 140B are located in this order in the first direction D1. The side end surface G1 of each of the first lid 140A and the second lid 140B includes the first side end surface G11 and the fourth side end surface G14 extending in the second direction D2 that is not parallel to the first direction D1, and the second side end surface G12 and the third side end surface G13 extending in the third direction D3 that is not parallel to both the first direction D1 and the second direction D2. The wrapping device 50 includes the wrapping support member 54. The wrapping support member 54 includes the contact surface 55a that contacts the outer film 130 located on the second side end surfaces G12 and the support surface 55b that is connected to the contact surface 55a and located along the extension of the fourth side end surfaces G14. According to this specific example, the wrapping support member 54 contacts the electrode assembly unit 111 to restrict movement of the electrode assembly unit 111. By using the wrapping support member 54, the outer film 130 joined to the third side end surfaces G13 can be stably folded onto the fourth side end surfaces G14 and stably maintained in the folded state. The pair of extended parts 132A and 132B of the outer film 130 wrapped around the electrode assembly unit 111, the pair of extended parts 132A and 132B extending from the electrode assembly unit 111, can be spread onto the support surface 55b. Thus, the outer film 130 can be stably and quickly wrapped around the electrode assembly unit 111. As a result, the outer film 130 and the side end surfaces G1 can be more quickly and more stably joined with each other. By suppressing occurrence of a gap between the side end surfaces of the first lid 140A and the second lid 140B and the outer film 130, the sealability (sealing performance) between the side end surfaces of the first lid 140A and the second lid 140B and the outer film 130 can be improved.

As shown in Figs. 11F, 37E, and the like, in one specific example of the embodiment described above, the first joining device 70 includes the fourth seal bar 71D that, in a state where the pair of extended parts 132A and 132B is placed on the support surface 55b, contacts a part of the outer film 130 on the fourth side end surfaces G14 and heats the outer film 130 while pressing the outer film with the fourth side end surfaces G14. According to this specific example, the wrapping support member 54 contacts the electrode assembly unit 111 to restrict movement of the electrode assembly unit 111. The pair of extended parts 132A and 132B is positioned on the support surface 55b of the wrapping support member 54. As a result, the outer film 130 can be stably joined to the fourth side end surfaces G14 using the fourth seal bar 71D. Since it is possible to suppress placement of the extended parts 132A and 132B between the fourth seal bar 71D and the fourth side end surfaces G14, it is possible to suppress occurrence of deformations such as wrinkles and folds in the outer film 130 when the outer film 130 is joined to the fourth side end surfaces G14. As a result, it is possible to suppress occurrence of a gap between the side end surfaces G1 of the first lid 140A and the second lid 140B and the outer film 130 and, therefore, to improve the sealability (sealing performance) between the side end surfaces of the first lid 140A and the second lid 140B and the outer film 130.

As shown in Figs. 11G, 37F, and the like, in a specific example of the embodiment described above, the manufacturing apparatus 20 further includes the second joining device 90 that joins the pair of extended parts 132A and 132B of the outer film 130 wrapped around the electrode assembly unit 111, the pair of extended parts 132A and 132B extending from the electrode assembly unit 111 and facing each other. The second joining device 90 includes the film seal bar 91 that heats the pair of extended parts 132A and 132B placed on the support surface 55b while pressing the pair of extended parts 132A and 132B with the support surface 55b. According to this specific example, the wrapping support member 54 contacts the electrode assembly unit 111 to restrict movement of the electrode assembly unit 111 wrapped with the outer film 130 relative to the wrapping support member 54. When the pair of extended parts 132A and 132B is located on the support surface 55b, the wrapping support member 54 can be used as the receiving member 92 for the film seal bar 91. As a result, the pair of extended parts 132A and 132B of the outer film 130 can be stably joined with each other. By suppressing occurrence of a gap between the pair of extended parts 132A and 132B, the sealability (sealing performance) between the pair of extended parts 132A and 132B can be improved.

As shown in Figs. 11E to 11G, 37D to 37F, and the like, in one specific example of the embodiment described above, the wrapping support member 54 holds the outer film 130 on the support surface 55b by vacuum suction. According to this specific example, it is possible to wrap the outer film 130 around the electrode assembly unit 111 while suppressing occurrence of deformations such as wrinkles and folds in the outer film 130.

As shown in Figs. 11E to 11G, 37D to 37F, and the like, in one specific example of the embodiment described above, the wrapping device 50 includes the auxiliary second wrapping support member 56 that contacts the outer film 130 located on the third side end surfaces G13. According to this specific example, by pressing the wrapping support member 54 and the auxiliary second wrapping support member 56 toward each other in a direction orthogonal to the third direction D3, the electrode assembly unit 111 can be automatically held, and the posture of the first lid 140A and the second lid 140B can be maintained. As a result, the outer film 130 can be stably joined to the fourth side end surfaces G14. The pair of extended parts 132A and 132B can be more quickly and more stably placed on the support surface 55b. The pair of extended parts 132A and 132B can be more quickly and more stably joined with each other.

In the embodiment described above, the manufacturing apparatus 20 and manufacturing method for the electrical storage device intermediate 110 manufacture the electrical storage device intermediate 110 using the electrode assembly unit 111 and the outer film 130. The electrical storage device intermediate 110 includes the first lid 140A, the second lid 140B, the electrode assembly 115, the first terminal 117A, and the second terminal 117B. The electrode assembly 115 is located between the first lid 140A and the second lid 140B. The first terminal 117A is electrically connected to the electrode assembly 115. The first terminal 117A is connected to the first lid 140A. The second terminal 117B is electrically connected to the electrode assembly 115. The second terminal 117B is connected to the second lid 140B. The manufactured electrical storage device 100 includes the outer package 120 and the electrode assembly 115 housed in the outer package 120. The outer package 120 includes the first lid 140A, the second lid 140B, and the outer film 130.

The manufacturing apparatus 20 includes the first joining device 70 that joins the outer film 130, wrapped around the electrode assembly unit 111 so as to contact the side end surface G1 of the first lid 140A and the side end surface G1 of the second lid 140B, with the side end surfaces G1. The manufacturing apparatus 20 may further include the wrapping device 50 that wraps the outer film 130 around the electrode assembly unit 111 such that the outer film 130 contacts the side end surface G1 of the first lid 140A and the side end surface G1 of the second lid 140B in a circumferential manner.

The manufacturing method includes a step of joining the outer film 130, wrapped around the electrode assembly unit 111 so as to contact the side end surface G1 of the first lid 140A and the side end surface G1 of the second lid 140B, with the side end surfaces G1. The manufacturing method may include a step of wrapping the outer film 130 around the electrode assembly unit 111 such that the outer film 130 contacts the side end surface G1 of the first lid 140A and the side end surface G1 of the second lid 140B in a circumferential manner.

As shown in Figs. 38A to 38C, and the like, in the first specific example of the embodiment described above, the joining device (first joining device) 70 includes the roller heater 78. The roller heater 78 includes the roller 781 having the heated outer peripheral surface 781a, the distal end part 782 holding the roller 781 such that the roller 781 is rotatable, the proximal end part 783 holding the distal end part 782, and the pressure-applying part 784 located between the proximal end part 783 and the distal end part 782. The distal end part 782 is relatively movable relative to the proximal end part 783 along the expansion and contraction direction D78 that is not parallel to the rotation axis A781 of the roller 781. The expansion and contraction direction D78 may be orthogonal to the rotation axis A781. The pressure-applying part 784 is supported by the proximal end part 783 and presses the distal end part 782 in a direction in which the roller 781 moves away from the proximal end part 783.

In the first specific example of the embodiment described above, the manufacturing method is a manufacturing method for manufacturing the electrical storage device intermediate 110 using the manufacturing apparatus 20 according to the first specific example. The manufacturing method includes a step of joining the outer film 130, wrapped around the electrode assembly unit 111 so as to contact the side end surface G1 of the first lid 140A and the side end surface G1 of the second lid 140B, with the side end surfaces G1 using the roller heater 78.

According to the first specific example of the embodiment described above, by using the roller heater 78 that includes the pressure-applying part 784, the roller 781 can contact the outer film 130 even in the part where the dimensions of the lid 140 have reduced (see Fig. 14C), to press the outer film 130 toward the side end surface G1 of the lid 140. When the dimensions of the lid 140 are larger to some extent (see Fig. 38B), the distal end part 782 approaches the proximal end part 783 against the force of the pressure-applying part 784. Therefore, in the part where the dimensions of the lid 140 have increased, the roller 781 can contact the outer film 130 to press the outer film 130 toward the side end surface G1 of the lid 140. In other words, even when the dimensions of the lid 140 change to some extent, the roller 781 can heat the outer film 130 while continuing to press the outer film 130 with a sufficiently large force toward the side end surfaces of the first lid 140A and the second lid 140B. As a result, the outer film 130 and the side end surfaces G1 can be more stably joined. By suppressing occurrence of a gap between the side end surfaces G1 of the first lid 140A and the second lid 140B and the outer film 130, the sealability (sealing performance) between the side end surfaces G1 of the first lid 140A and the second lid 140B and the outer film 130 can be improved.

As shown in Figs. 38A to 38C, and the like, in the second specific example of the embodiment described above, the manufacturing apparatus 20 further includes the second joining device 90. The second joining device 90 joins the pair of extended parts 132A and 132B of the outer film 130 wrapped around the electrode assembly unit 111, the pair of extended parts 132A and 132B extending from the electrode assembly unit 111 and facing each other. At least one of the joining device (first joining device) 70 and the second joining device 90 includes the roller heater 78. The roller heater 78 includes the roller 781 having the heated outer peripheral surface 781a, the distal end part 782 holding the roller 781 such that the roller 781 is rotatable, the proximal end part 783 holding the distal end part 782, and the pressure-applying part 784 located between the proximal end part 783 and the distal end part 782. The distal end part 782 is relatively movable relative to the proximal end part 783 along the expansion and contraction direction D78 that is not parallel to the rotation axis A781 of the roller 781. The expansion and contraction direction D78 may be orthogonal to the rotation axis A781. The pressure-applying part 784 is supported by the proximal end part 783 and presses the distal end part 782 in a direction in which the roller 781 moves away from the proximal end part 783.

In the second specific example of the embodiment described above, the manufacturing method is a manufacturing method for manufacturing the electrical storage device intermediate 110 using the manufacturing apparatus 20 according to the second specific example. The manufacturing method includes a step of joining the side end surfaces G1 and the outer film 130 wrapped around the electrode assembly unit 111, and a step of joining the pair of extended parts 132A and 132B of the outer film 130 wrapped around the electrode assembly unit 111, the pair of extended parts 132A and 132B extending from the electrode assembly unit 111 and facing each other. The roller heater 78 is used to join the side end surfaces G1 with the outer film 130 and/or to join the pair of extended parts 132A and 132B.

According to the second specific example of the embodiment described above, by using the roller heater 78 that includes the pressure-applying part 784, the roller 781 can contact the outer film 130 even in the part where the dimensions of the lid 140 have reduced, to press the outer film 130. When the dimensions of the lid 140 are larger to some extent, the distal end part 782 approaches the proximal end part 783 against the force of the pressure-applying part 784. Therefore, in the part where the dimensions of the lid 140 have increased, the roller 781 can contact the outer film 130 to press the outer film 130. In other words, the roller 781 can heat the outer film 130 while continuously applying a sufficiently large force to the outer film 130. As a result, by suppressing occurrence of a gap between the two parts to be joined (for example, the outer film 130 and the side end surfaces G1, or the first extended part 132A and the second extended part 132B), the sealability (sealing performance) between the two parts to be joined can be improved.

In the first and second specific examples of the embodiment described above, the deformation resistance of the pressure-applying part 784 is higher than or equal to 0.10 N/mm and lower than or equal to 1.0 N/mm. By setting an upper limit on the deformation resistance, the variation in force with which the roller heater presses the outer film 130 with a change in dimensions can be reduced. Therefore, by suppressing occurrence of a gap between the two parts to be joined (for example, the outer film 130 and the side end surfaces G1, or the first extended part 132A and the second extended part 132B), the sealability (sealing performance) between the two parts to be joined can be improved. By setting a lower limit on the deformation resistance, the relative movement amount between the distal end part 782 and the proximal end part 783 for applying a predetermined pressing force can be reduced. Therefore, the roller heater 78 can be reduced in size and weight.

As shown in Figs. 38A to 38C, and the like, in the first and second specific examples of the embodiment described above, the pressure-applying part 784 includes a spring. According to this specific example, the two parts to be joined (for example, the outer film 130 and the side end surfaces G1, or the first extended part 132A and the second extended part 132B) can be more stably joined with a simple configuration and simple control. By suppressing occurrence of a gap between the two parts to be joined, the sealability (sealing performance) between the two parts can be improved.

As shown in Figs. 37A to 37C, 37G, and the like, in the third specific example of the embodiment described above, the first lid 140A, the electrode assembly 115, and the second lid 140B are located in this order in the first direction D1. The side end surface G1 of each of the first lid 140A and the second lid 140B includes the first side end surface G11 and the fourth side end surface G14 extending in the second direction D2 that is not parallel to the first direction D1, and the second side end surface G12 and the third side end surface G13 extending in the third direction D3 that is not parallel to both the first direction D1 and the second direction D2. The wrapping device 50 includes the first film holding unit 31, the second film holding unit 32, the first pressing portion 66, and the second pressing portion 67. The first film holding unit 31 holds a part of the outer film 130 that is in contact with the second side end surfaces G12, the first side end surfaces G11, and the third side end surfaces G13, the part extending from the second side end surfaces G12. The second film holding unit 32 holds a part of the outer film 130 that is in contact with the second side end surfaces G12, the first side end surfaces G11, and the third side end surfaces G13, the part extending from the third side end surfaces G13. The first pressing portion 66 contacts the outer film 130 located between the first film holding unit 31 and the second side end surfaces G12. The second pressing portion 67 contacts the outer film 130 located between the second film holding unit 32 and the third side end surfaces G13. The first pressing portion 66 and the second pressing portion 67 press the outer film 130 such that the distance D68 between the first pressing portion 66 and the second pressing portion 67 along the second direction D2 is shorter than the length DG14 of the fourth side end surfaces G14 along the second direction D2.

In the third specific example of the embodiment described above, the manufacturing method is a manufacturing method for manufacturing the electrical storage device intermediate 110 using the manufacturing apparatus 20 according to the third specific example. The manufacturing method includes a step of supplying the outer film 130, and a step of wrapping the outer film 130 around the electrode assembly unit 111 using the wrapping device 50 such that the outer film 130 contacts the side end surface G1 of the first lid 140A and the side end surface G1 of the second lid 140B and joining the side end surfaces G1 and the outer film 130 using the joining device 70.

According to the third specific example of the embodiment described above, by using the first pressing portion 66 and the second pressing portion 67, the outer film 130 held by the first film holding unit 31 and the second film holding unit 32 can be brought into rapid and stable contact with the second side end surfaces G12, the first side end surfaces G11, and the third side end surfaces G13. As a result, the outer film 130 and the side end surfaces G1 can be more quickly and more stably joined with each other. By suppressing occurrence of a gap between the side end surfaces G1 of the first lid 140A and the second lid 140B and the outer film 130, the sealability (sealing performance) between the side end surfaces G1 of the first lid 140A and the second lid 140B and the outer film 130 can be improved.

As shown in Fig. 37B and the like, in the third specific example of the embodiment described above, when the first pressing portion 66 and the second pressing portion 67 press the outer film 130, the distance D312 along the second direction D2 between the first film holding unit 31 and the second film holding unit 32 is longer than the length DG14 of the fourth side end surfaces G14 along the second direction D2. According to this specific example, the joining device 70 is easily accessible to the outer film 130 positioned on the side end surfaces G1. Therefore, it is possible to effectively suppress occurrence of a gap between the side end surfaces G1 of the first lid 140A and the second lid 140B and the outer film 130 and, therefore, to effectively improve the sealability (sealing performance) between the side end surfaces G1 of the first lid 140A and the second lid 140B and the outer film 130. In the first place, the distance D312 along the second direction D2 between the first film holding unit 31 and the second film holding unit 32 is longer than the distance D68 along the second direction D2 between the first pressing portion 66 and the second pressing portion 67. Therefore, the second side end surfaces G12 and the outer film 130 can be more stably brought into contact with each other, and the third side end surfaces G13 and the outer film 130 can also be more stably brought into contact with each other. It is possible to effectively suppress occurrence of a gap between the side end surfaces G1 of the first lid 140A and the second lid 140B and the outer film 130 and, therefore, to effectively improve the sealability (sealing performance) between the side end surfaces G1 of the first lid 140A and the second lid 140B and the outer film 130.

As shown in Figs. 37B, 37C, 37G, and the like, in the third specific example of the embodiment described above, in a state where the first pressing portion 66 and the second pressing portion 67 are pressing the outer film 130, the outer film 130 expands parallel to the first direction D1 and the second direction D2 in a region from the first film holding unit 31 to the first pressing portion 66, and in a region from the second film holding unit 32 to the second pressing portion 67. According to this specific example, the first film holding unit 31 and the second film holding unit 32 can stably hold the outer film 130. Therefore, the second side end surfaces G12 and the outer film 130 can be more stably brought into contact with each other, and the third side end surfaces G13 and the outer film 130 can also be more stably brought into contact with each other. It is possible to effectively suppress occurrence of a gap between the side end surfaces G1 of the first lid 140A and the second lid 140B and the outer film 130 and, therefore, to effectively improve the sealability (sealing performance) between the side end surfaces G1 of the first lid 140A and the second lid 140B and the outer film 130.

As shown in Figs. 5B, 10F to 10I, and the like, in the fourth specific example of the embodiment described above, the manufacturing apparatus 20 includes the fixing devices 40 that fix the first lid 140A and the second lid 140B of the electrode assembly unit 111. The first lid 140A, the electrode assembly 115, and the second lid 140B are located in this order in the first direction D1. Each of the first lid 140A and the second lid 140B has the recesses G2a on the surface (outer main surface) G2 that is on the outer side in the first direction D1. The fixing device 40 includes the chuck members 47 that are inserted into the recesses G2a from the outer side in the first direction D1. The chuck members 47 hold a corresponding one of the lids 140 by widening the width of the chuck member 47 in a direction orthogonal to the first direction D1 within the recesses G2a.

In the fourth specific example of the embodiment described above, the manufacturing method is a manufacturing method for manufacturing the electrical storage device intermediate 110 using the manufacturing apparatus 20 according to the fourth specific example. The manufacturing method includes a step of fixing the first lid 140A and the second lid 140B of the electrode assembly unit 111, and a step of joining the side end surfaces G1 and the outer film 130 that is wrapped around the electrode assembly unit 111 such that the outer film 130 contacts the side end surface G1 of the first lid 140A and the side end surface G1 of the second lid 140B.

According to the fourth specific example of the embodiment described above, by using the fixing devices 40, the appropriate relative position between the outer film 130 and both the first lid 140A and the second lid 140B can be maintained. Therefore, the outer film 130 and both the first lid 140A and the second lid 140B can be stably joined with each other in an appropriate relative position by using the joining device (first joining device) 70. The chuck members 47 holds a corresponding one of the lids 140 by widening the width of the chuck member 47 in a direction orthogonal to the first direction D1 within the recesses G2a. Therefore, it is possible to fix the first lid 140A and the second lid 140B while positioning the first lid 140A and the second lid 140B in a direction orthogonal to the first direction D1. Furthermore, the chuck members 47 are inserted into the recesses G2a from the outer side in the first direction D1. Therefore, the fixing devices 40 can be respectively disposed on the outer sides of the first lid 140A and the second lid 140B in the first direction D1. As a result, the size of the fixing devices 40 can be reduced.

As shown in Figs. 5B, 10F to 10I, and the like, in the fourth specific example of the embodiment described above, the recesses G2a include the plurality of recesses G2a on the surface (outer main surface) G2 of each of the first lid 140A and the second lid 140B. Each of the fixing devices 40 includes the plurality of chuck members 47 that are respectively inserted into the plurality of recesses G2a of a corresponding one of the lids 140. The plurality of chuck members 47 holds a corresponding one of the lids 140 by widening the width of the chuck member 47 in a direction orthogonal to the first direction D1. According to this specific example, since one lid 140 is held by two or more chuck members 47, the first lid 140A and the second lid 140B can be fixed while the first lid 140A and the second lid 140B are positioned in the rotation direction around the axis parallel to the first direction D1.

As shown in Figs. 10G to 10I, and the like, in the fourth specific example of the embodiment described above, each of the chuck members 47 includes the plurality of widening pieces 472 that are inserted into the recess G2a and the widening piece holding portion 471 that holds the plurality of widening pieces 472 such that the plurality of widening pieces 472 is operable. When the plurality of widening pieces 472 operates relative to the widening piece holding portion 471, the width of the chuck member 47 changes in a direction orthogonal to the first direction D1. According to this specific example, with a simple configuration and simple control using the chuck members 47, the first lid 140A and the second lid 140B can be stably fixed.

As shown in Figs. 8A to 8C, 11A to 11G, 17 to 18B, 36A to 37G, and the like, in the fifth specific example of the embodiment described above, the manufacturing apparatus 20 includes the film supply device 30 that supplies the outer film 130. At least one of the film supply device 30 and the wrapping device 50 includes the film holding unit (first film holding unit) 31, 29 that holds the outer film 130. The film holding unit 31, 29 includes the first roll 311, and the second roll 312 that holds the outer film 130 with the first roll 311. The first roll 311 and the second roll 312 are rotatable around the adjustment axis 313A that is not parallel to the first rotation axis 311A of the first roll 311 in a state of holding the outer film 130.

In the fifth specific example of the embodiment described above, the manufacturing method is a manufacturing method for manufacturing the electrical storage device intermediate 110 using the manufacturing apparatus 20 according to the fifth specific example. The manufacturing method includes a step of supplying the outer film 130 using the film supply device 30, and a step of wrapping the outer film 130 around the electrode assembly unit 111 using the wrapping device 50 such that the outer film 130 contacts the side end surface G1 of the first lid 140A and the side end surface G1 of the second lid 140B and joining the side end surfaces G1 and the outer film 130 using the joining device 70.

Due to reasons such as a deviation in the supply direction of the outer film to the film holding unit, the rotation axis of the nip rolls holding the outer film may be slightly inclined relative to the width direction (transverse direction) of the outer film. From this state, when tension is applied to the outer film held by the nip rolls, the tension applied to the outer film varies at each position in the width direction of the outer film. Then, the tension at the long-side edge is smallest, so wrinkles and sagging can occur at the long-side edge. In this case, deformations such as wrinkles and folds may occur in the outer film on one of the lids.

According to the fifth specific example of the embodiment described above, the first roll 311 and the second roll 312 are rotatable around the adjustment axis 313A in a state of holding the outer film 130. Therefore, when tension is applied, the first roll 311 and the second roll 312 that are holding the outer film 130 rotate such that the variation in tension in the width direction of the outer film 130 is reduced. It is possible to maintain the outer film 130 in a taut state while suppressing occurrence of wrinkles and sagging in the outer film 130. As a result, it is possible to wrap the outer film 130 around the electrode assembly unit 111 while suppressing occurrence of deformations such as wrinkles and folds in the outer film 130. As a result, it is possible to suppress occurrence of a gap between the side end surfaces G1 of the first lid 140A and the second lid 140B and the outer film 130 and, therefore, to improve the sealability (sealing performance) between the side end surfaces G1 of the first lid 140A and the second lid 140B and the outer film 130.

As shown in Figs. 18B, 36A to 37G, and the like, in the fifth specific example of the embodiment described above, the film holding unit 31, 29 includes the roll holding portion 313 that holds the first roll 311 and the second roll 312 such that the first roll 311 and the second roll 312 are rotatable, and the holding base portion 314 that holds the roll holding portion 313 such that the roll holding portion 313 is rotatable around the adjustment axis 313A. According to this specific example, with a simple configuration, the first roll 311 and the second roll 312 can be respectively made rotatable around the rotation axes 311A and 312A, and the first roll 311 and the second roll 312 holding the outer film 130 can also be made rotatable around the adjustment axis 313A that is not parallel to the rotation axes 311A and 312A.

As shown in Figs. 36A to 36E, and the like, in the fifth specific example of the embodiment described above, the film holding unit (first film holding unit) 31, 29 is movable in a moving direction that is not parallel to both the rotation axis 311A and the adjustment axis 313A. According to this specific example, tension can be applied to the outer film 130 held by the film holding unit 31, 29 with a simple configuration.

As shown in Figs. 36A to 36E, and the like, in the fifth specific example of the embodiment described above, at least one of the film supply device 30 and the wrapping device 50 includes the guide rails 281 extending in a moving direction that is not parallel to both the rotation axis 311A and the adjustment axis 313A. The film holding unit (first film holding unit) 31, 29 is movable along the guide rails 281. According to this specific example, tension can be applied to the outer film 130 held by the film holding unit 31, 29 with a simple configuration.

As shown in Figs. 36A to 36E, and the like, in the fifth specific example of the embodiment described above, at least one of the film supply device 30 and the wrapping device 50 includes the holding drive unit 282 that moves the film holding unit (first film holding unit) 31, 29 in a moving direction that is not parallel to both the rotation axis 311A and the adjustment axis 313A. According to this specific example, tension can be applied to the outer film 130 held by the film holding unit 31, 29 with a simple configuration.

While the embodiment has been described with reference to specific examples, the above-described specific examples do not limit the embodiment. The above-described embodiment can be implemented in various other specific examples, and various omissions, replacements, modifications, additions, and the like, can be made without departing from the scope of the embodiment.

Hereinafter, an example of a modification will be described with reference to the drawings. In the following description and the drawings used in the following description, like reference signs to the reference signs used for corresponding portions in the above-described specific examples are used for portions that can be similarly configured to those of the above-described specific examples, and the description thereof will not be repeated.

As shown in Fig. 20, the first joining device 70 may include a lid heater 82 that heats the first lid 140A and the second lid 140B. The lid heaters 82 may contact the outer main surface G2 of the lid 140 to heat the lid 140. By heating the first lid 140A and the second lid 140B with the lid heater 82, the outer film 130 and both the first lid 140A and the second lid 140B can be more quickly and more stably joined with each other. In particular, when the first lid 140A and the second lid 140B are made of metal, the lid heater 82 are more effective.

In another modification, the film supply device 30 may include the surface monitoring unit 64 and the wrapping controller 65. In the example described above, the wrapping device 50 includes the surface monitoring unit 64 and the wrapping controller 65. The surface monitoring unit 64 and the wrapping controller 65 that are included in the wrapping device 50 can be applied to the film supply device 30. According to this example, it is possible to suppress occurrence of deformations such as wrinkles and folds in the outer film 130 supplied to the first film holding unit 31.

In another modification, the film supply device 30 may include the tensioning device 28. In the above-described example, the wrapping device 50 includes the grip portion 60 that functions as the tensioning device 28, and the reverse-crown roll 63A and the nip roll 63B that function as the tensioning device 28. The tensioning device 28 that can be included in the wrapping device 50 can also be applied to the film supply device 30. According to this example, it is possible to suppress occurrence of deformations such as wrinkles and folds in the outer film 130 supplied to the first film holding unit 31.

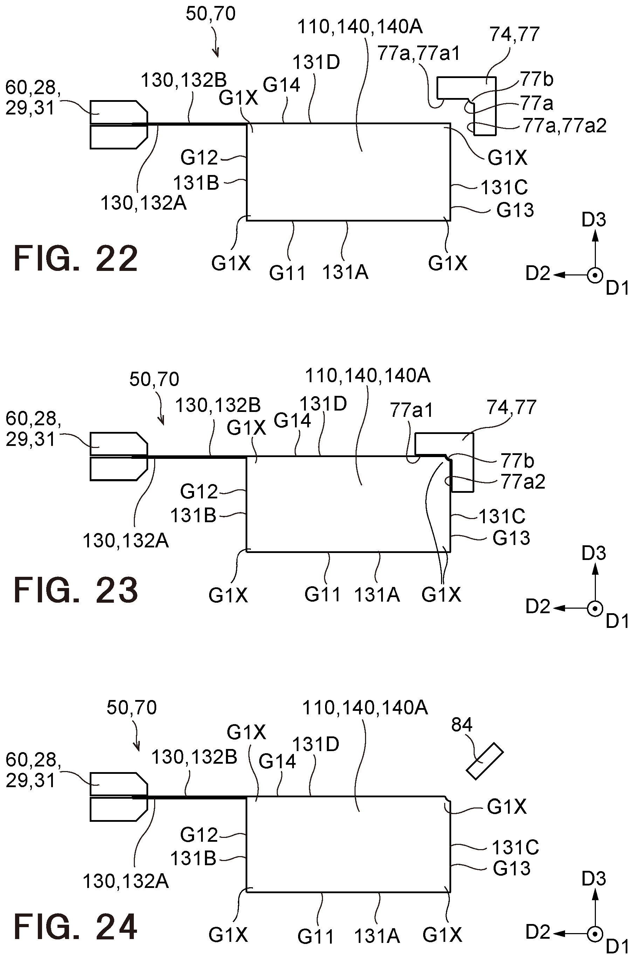

In another modification, as shown in Fig. 22, the corner heater 77 including a heating protruding portion 77b may be used.

As described with reference to Fig. 17, each lid 140 may include the plurality of side end surfaces G1. The corner G1X may be formed between adjacent two side end surfaces of the plurality of side end surfaces. The corner heater 77 serving as the spot heater 74 may heat parts of the outer film 130 on the corner G1X and on the two side end surfaces G1 forming the corner G1X.

As shown in Fig. 22, the corner heater 77 may have the first heating surface 77a1, the second heating surface 77a2, and the heating protruding portion 77b. The first heating surface 77a1 may heat at least a part of the outer film 130 on one of the two side end surfaces. The second heating surface 77a2 may heat at least a part of the outer film 130 on the other one of the two side end surfaces. In the example shown in Figs. 22 and 23, the first heating surface 77a1 is heating a part of the outer film 130 on the fourth side end surfaces G14. The second heating surface 77a2 is heating a part of the outer film 130 on the third side end surfaces G13.

The heating protruding portion 77b is located between the first heating surface 77a1 and the second heating surface 77a2. The heating protruding portion 77b is connected to both the first heating surface 77a1 and the second heating surface 77a2. The heating protruding portion 77b protrudes toward the corner G1X.

As shown in Fig. 23, the corner heater 77 heats the outer film 130 while pressing the outer film 130 toward the lids 140. The first heating surface 77a1 and the second heating surface 77a2 heat the outer film 130 on the side end surfaces G1 forming the corner G1X. Since the heating protruding portion 77b protrudes from the first heating surface 77a1 and the second heating surface 77a2, the outer film 130 and the lids 140 are locally pressed to be deformed. As shown in Figs. 23 and 24, a depression having a shape that conforms with the heating protruding portion 77b is formed at the corner G1X of each lid 140. The shape of the depression is complementary to the shape of the heating protruding portion 77b. The outer film 130 lies along the depression at the corner G1X of each lid 140. In other words, the outer film 130 on the corner G1X of each lid 140 forms a depression G1b.

At the corner G1X, joining of each lid 140 with the outer film 130 is likely to be insufficient. When the corner heater 77 that includes the heating protruding portion 77b is used, it can be confirmed that, after the step of joining the outer film 130 to each lid 140 is performed, the depression G1b is formed at the part of the outer film 130 on the corner G1X. By confirming the depression G1b of the outer film 130, it can be confirmed that the outer film 130 has been sufficiently heated and pressurized onto the lids 140. By confirming the depression G1b, each of the first lid 140A and the second lid 140B can be stably joined with the outer film 130 at the corner G1X. By suppressing occurrence of a gap between the side end surfaces G1 of the first lid 140A and the second lid 140B and the outer film 130, the sealability (sealing performance) between the side end surfaces G1 of the first lid 140A and the second lid 140B and the outer film 130 can be improved. It is possible to suppress excessive heating of the outer film 130 as a whole to suppress damage to the outer film 130.

As shown in Fig. 24, the manufacturing apparatus 10 or the first joining device 70 may include a corner sensor 84. The corner sensor 84 detects the depression G1b of the outer film 130 formed by being pressed by the heating protruding portion 77b. Examples of the corner sensor 84 include a distance sensor and a displacement sensor. By using the corner sensor 84, the depression G1b of the outer film 130 can be confirmed with high precision.

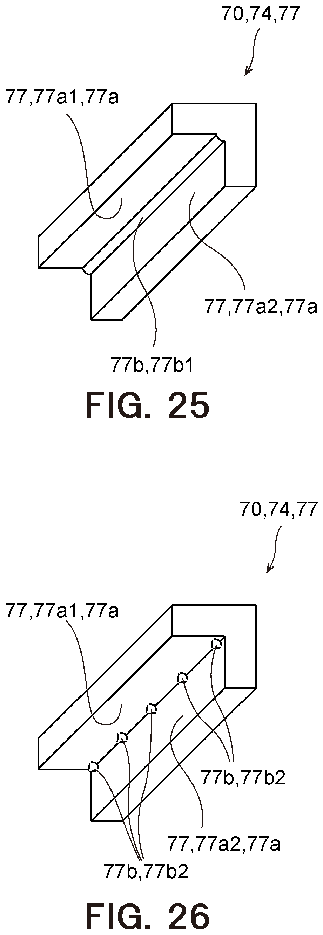

The configuration of the heating protruding portion 77b is not limited. As shown in Fig. 25, the heating protruding portion 77b may include a linear protrusion 77b1 that extends in a direction parallel to both the first heating surface 77a1 and the second heating surface 77a2. The linear protrusion 77b1 extends along the opposing corner G1X. According to the example shown in Fig. 25, it can be confirmed with high precision that the outer film 130 is joined to each lid 140 over the overall length in the longitudinal direction of the corner G1X.

As shown in Fig. 26, the heating protruding portion 77b may include a plurality of heating protruding portions arranged in an array direction parallel to both the first heating surface 77a1 and the second heating surface 77a2. The plurality of heating protruding portions 77b is arranged at intervals in the array direction. Each of the heating protruding portions 77b may also be a dot-like protrusion 77b2. With the heating protruding portion 77b shown in Fig. 26, it is possible to form the depressions G1b while suppressing an excessive increase in heating temperature. With the heating protruding portions 77b shown in Fig. 26, it is possible to form the depressions G1b while suppressing an excessive increase in applied pressure.

Therefore, with the corner heater 77 shown in Fig. 26, the outer film 130 can be heated and pressurized toward the lids 140 while suppressing an excessive increase in heating temperature. With the corner heater 77 shown in Fig. 26, it is possible to heat the outer film 130 and press the outer film 130 toward the lids 140 while suppressing an excessive increase in applied pressure. As a result, the outer film 130 can be stably joined to the lids 140 while suppressing damage to the outer film 130.

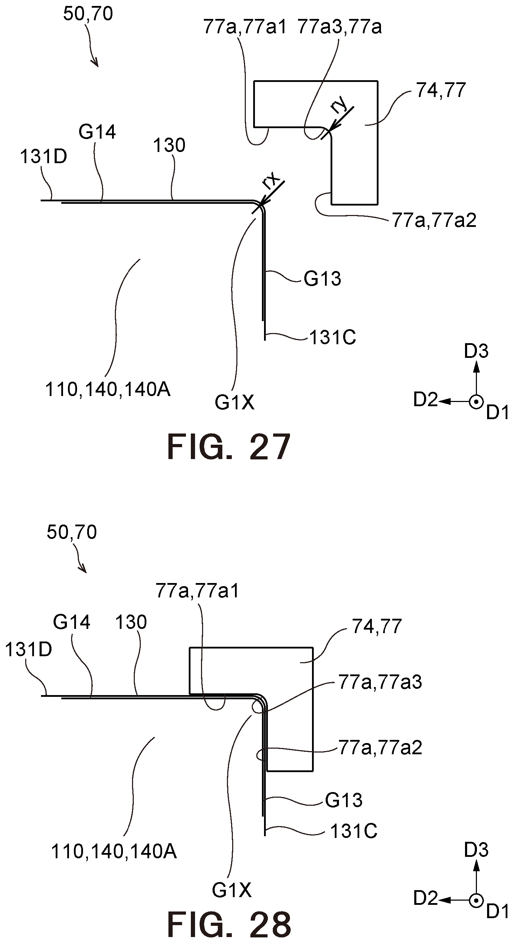

In another modification, as shown in Figs. 27 and 28, a chamfered corner G1X may be provided between two adjacent flat side end surfaces included in each lid 140. In the example shown in Figs. 27 and 28, each of the lids 140 includes the flat fourth side end surface G14, the flat third side end surface G13, and the chamfered corner G1X located between the fourth side end surface G14 and the third side end surface G13. The chamfered corner G1X includes not only an intentionally chamfered corner but also an unintentionally rounded corner. For example, in the lids 140 manufactured by injection molding with the intention that two adjacent flat surfaces are orthogonal, a corner obtained due to insufficient flow of molten resin into the part where the two flat surfaces connect also corresponds to the chamfered corner.

In the example using the lids 140 shown in Figs. 27 and 28, the corner heater 77 may have a corner heating surface 77a3 that heats a part of the outer film 130 on the corner G1X. The corner heating surface 77a3 has a radius of curvature ry. The corner G1X has a radius of curvature rx. By adjusting the radius of curvature ry and the radius of curvature rx, it is possible to suppress formation of a gap between the corner G1X of each lid 140 and the outer film 130.

The corner heater 77 may have the first heating surface 77a1 and the second heating surface 77a2 in addition to the corner heating surface 77a3. The corner heating surface 77a3 is located between the first heating surface 77a1 and the second heating surface 77a2. The corner heating surface 77a3 is adjacent to each of the first heating surface 77a1 and the second heating surface 77a2.

In the example shown in Figs. 27 and 28, the first heating surface 77a1 contacts the outer film 130 on a flat part of the fourth side end surface G14 adjacent to the corner G1X. The first heating surface 77a1 heats the outer film 130 and pressurizes the outer film 130 with each lid 140, the outer film 130 being located on a flat part of the fourth side end surface G14 adjacent to the corner G1X.

In the example shown in Figs. 27 and 28, the second heating surface 77a2 contacts the outer film 130 on a flat part of the third side end surface G13 adjacent to the corner G1X. The second heating surface 77a2 heats the outer film 130 and pressurizes the outer film 130 with each lid 140, the outer film 130 being located on a flat part of the third side end surface G13 adjacent to the corner G1X.

The first heating surface 77a1, the second heating surface 77a2, and the corner heating surface 77a3 may be formed of an elastic member. Examples of the elastic member include rubber and resin. The rubber used for the first heating surface 77a1, the second heating surface 77a2, and the corner heating surface 77a3 may be natural rubber, may be fluorine rubber, or may be silicone rubber.

The inventors of the present application investigated the influence of the radius of curvature ry and radius of curvature rx on the joining of the chamfered corner G1X with the outer film 130. In this experiment, the stability of joining of the corner G1X with the outer film 130 was investigated in a plurality of examples where the radius of curvature ry and the radius of curvature rx were changed. In this experiment, the stability of joining of the corner G1X with the outer film 130 was investigated in a plurality of examples where the pressure applied to each lid 140 at the corner G1X was changed. In this experiment, pressure sensitive paper was placed between the outer film 130 and the lids 140. The distribution of pressure applied to each position was investigated based on the discoloration of the pressure sensitive paper.

In the experiment, as shown in Figs. 27 and 28, the outer film 130 was placed on the flat fourth side end surface G14, on the flat third side end surface G13, and on the chamfered corner G1X located between the fourth side end surface G14 and the third side end surface G13. Using the corner heater 77 having the first heating surface 77a1, the second heating surface 77a2, and the corner heating surface 77a3, the outer film 130 was heated and pressurized toward the lids 140.

The pressure sensitive paper had a rectangular shape having a longitudinal direction and a transverse direction. The length of the pressure sensitive paper in the longitudinal direction was 50 mm. The width of the pressure sensitive paper in the transverse direction was 10 mm. The pressure sensitive paper was placed such that the center of the pressure sensitive paper in the longitudinal direction was located at the center of the corner G1X. The pressure sensitive paper was placed such that the transverse direction of the pressure sensitive paper was parallel to the first direction D1.

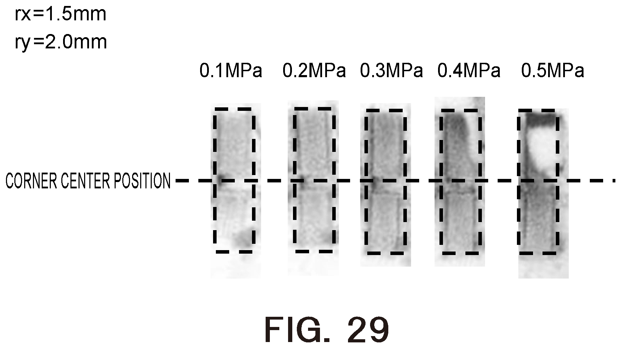

Fig. 29 shows an example of experimental results. Fig. 29 shows the pressure sensitive paper after the experiment. The colored regions are regions that have received pressure. A part where the color of the pressure sensitive paper is dark is a part where high pressure is applied. In the experiment shown in Fig. 29, pressure was applied at a substantially uniform pressure across the entire region on the corner G1X. Furthermore, pressure was applied at a substantially uniform pressure across the entire region of the pressure sensitive paper.

In the experiment of which the results are shown in Fig. 29, the radius of curvature rx of the corner G1X was set to 1.5 mm, and the radius of curvature ry of the corner heating surface 77a3 was set to 2.0 mm. In the experiment shown in Fig. 29, the pressure applied at the center of the corner G1X was sequentially set to 0.1 MPa, 0.2 MPa, 0.3 MPa, 0.4 MPa, and 0.5 MPa.

According to the experimental results, by setting a lower limit on the ratio (ry/rx) of the radius of curvature ry of the corner heating surface 77a3 to the radius of curvature rx of the corner G1X, the outer film 130 was able to be stably joined to each lid 140 while suppressing formation of a gap between the outer film 130 and each lid 140 on the corner G1X. From the viewpoint of stably joining the outer film 130 to each lid 140, the ratio (ry/rx) of the radius of curvature ry of the corner heating surface 77a3 to the radius of curvature rx of the corner G1X may be higher than or equal to 0.50, may be higher than or equal to 0.60, may be higher than or equal to 0.70, may be higher than or equal to 0.80, may be higher than or equal to 0.90, or may be higher than 1.0.

According to the experimental results, by setting an upper limit on the ratio (ry/rx) of the radius of curvature ry of the corner heating surface 77a3 to the radius of curvature rx of the corner G1X, the outer film 130 was able to be stably joined to each lid 140. From the viewpoint of stably joining the outer film 130 to each lid 140, the ratio (ry/rx) of the radius of curvature ry of the corner heating surface 77a3 to the radius of curvature rx of the corner G1X may be lower than or equal to 1.50, may be lower than or equal to 1.45, may be lower than or equal to 1.40, or may be lower than or equal to 1.35.

According to the experimental results, an upper limit and a lower limit may be set on a value (rx - ry) obtained by subtracting the radius of curvature ry of the corner heating surface 77a3 from the radius of curvature rx of the corner G1X. By providing an upper limit and a lower limit on rx - ry (mm), the outer film 130 was able to be stably joined to each lid 140 while suppressing formation of a gap between the outer film 130 and the lids 140 on the corner G1X. rx - ry may be greater than or equal to - 0.5 and less than or equal to 0.5.

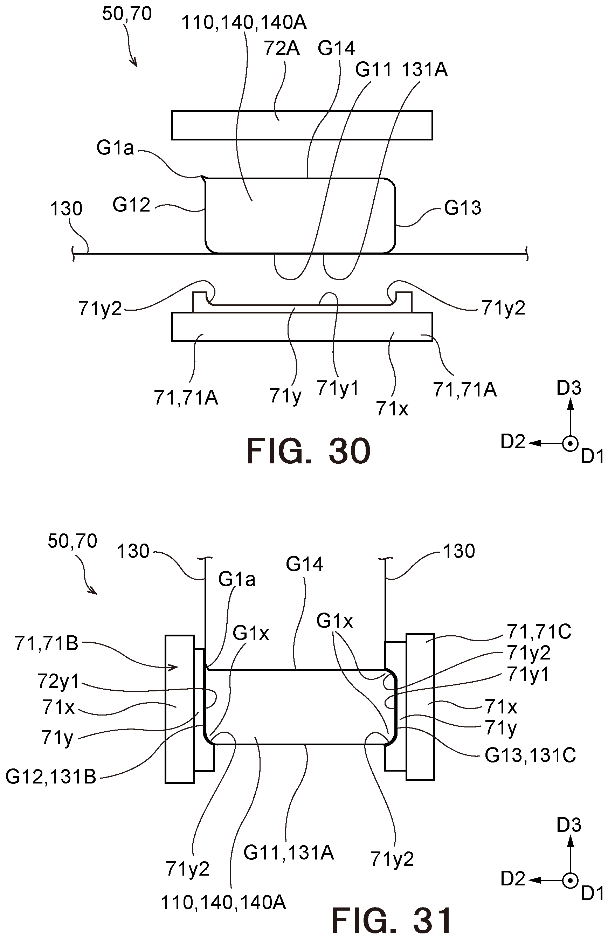

In another modification, as shown in Figs. 30 and 31, the seal bar 71 included in the first joining device 70 may include a seal bar body 71x and a contact portion 71y. The seal bar body 71x may also be a member having a built-in heating mechanism. The contact portion 71y contacts the outer film 130. The contact portion 71y has a lower elastic modulus than the seal bar body 71x and is easily deformable. The Young's modulus of the material constituting the contact portion 71y may be lower than the Young's modulus of the material constituting the surface of the seal bar body 71x. The material constituting the contact portion 71y may be more easily deformable than the material constituting the surface of the seal bar body 71x.

The material constituting the contact portion 71y may be an elastic member. The material constituting the contact portion 71y may be rubber. The material constituting the contact portion 71y may be natural rubber, fluorine rubber, or silicone rubber.

The thickness of the rubber that constitutes the contact portion 71y along a direction in which the contact portion 71y presses the outer film 130 toward each lid 140 may be greater than or equal to 0.1 mm and less than or equal to 3.0 mm, may be greater than or equal to 0.1 mm and less than or equal to 2.5 mm, may be greater than or equal to 0.1 mm and less than or equal to 2.0 mm, may be greater than or equal to 0.1 mm and less than or equal to 1.5 mm, or may be greater than or equal to 0.1 mm and less than or equal to 1.0 mm. By setting a lower limit on the thickness of the rubber, the outer film 130 can be heated and pressurized at more uniform pressure. As a result, the outer film 130 can be stably joined to the lids 140. By setting an upper limit on the thickness of the rubber, the outer film 130 can be sufficiently and efficiently heated by heat from the seal bar body 71x.

In another modification, as shown in Figs. 30 and 31, the seal bar 71 may include a flat heating surface 71y1 and curved corner heating surfaces 71y2. Each of the lids 140 has the chamfered corner G1X between two side end surfaces. Each of the corner heating surfaces 71y2 heats the outer film 130 on the corner G1X and pressurizes the outer film 130 toward the chamfered corner G1X. The flat heating surface 71y1 heats the outer film 130 on the flat side end surface G1 adjacent to the corner G1X and pressurizes the outer film 130 toward the side end surface G1.

In the example shown in Fig. 30, the first seal bar 71A includes the single flat heating surface 71y1 and the two curved corner heating surfaces 71y2. The two curved corner heating surfaces 71y2 may be a first corner heating surface 71y2 and a second corner heating surface 71y2. The flat heating surface 71y1 is located between the two curved corner heating surfaces 71y2. The flat heating surface 71y1 is adjacent to each of the two curved corner heating surfaces 71y2. The two curved corner heating surfaces 71y2 protrude beyond the flat heating surface 71y1 toward the outer film 130 to be joined to the lids 140. The first seal bar 71A heats the outer film 130 on the first side end surfaces G11 and pressurizes the outer film 130 toward the first side end surfaces G11. The outer film 130 pressurized by the first seal bar 71A is bent toward the second side end surfaces G12 and the third side end surfaces G13 adjacent to the first side end surfaces G11 at both ends of the first side end surface G11.

In the example shown in Fig. 30, the chamfered corner G1X is formed between the first side end surface G11 and the second side end surface G12 of each lid 140. The chamfered corner G1X is formed between the first side end surface G11 and the third side end surface G13 of each lid 140. Each of the curved corner heating surfaces 71y2 heats the outer film 130 on the chamfered corner G1X and pressurizes the outer film 130 toward the corner G1X.

In the example shown in Fig. 31, the third seal bar 71C includes the single flat heating surface 71y1 and the two curved corner heating surfaces 71y2. The two curved corner heating surfaces 71y2 may be the first corner heating surface 71y2 and the second corner heating surface 71y2. The flat heating surface 71y1 is located between the two curved corner heating surfaces 71y2. The flat heating surface 71y1 is adjacent to each of the two curved corner heating surfaces 71y2. The two curved corner heating surfaces 71y2 protrude beyond the flat heating surface 71y1 toward the outer film 130 to be joined to the lids 140. The third seal bar 71C heats the outer film 130 on the third side end surfaces G13 and pressurizes the outer film 130 toward the third side end surfaces G13. The outer film 130 pressurized by the third seal bar 71C is bent toward the fourth side end surfaces G14 adjacent to the third side end surfaces G13 at one end of each of the third side end surfaces G13.

In the example shown in Fig. 31, the chamfered corner G1X is formed between the third side end surface G13 and the first side end surface G11 of each lid 140. The chamfered corner G1X is also formed between the third side end surface G13 and the fourth side end surface G14 of each lid 140. Each of the curved corner heating surfaces 71y2 heats the outer film 130 on the chamfered corner G1X and pressurizes the outer film 130 toward the corner G1X.

In the example shown in Fig. 31, the second seal bar 71B includes the single flat heating surface 71y1 and the single curved corner heating surface 71y2. The flat heating surface 71y1 is adjacent to the curved corner heating surface 71y2. The curved corner heating surface 71y2 protrudes beyond the flat heating surface 71y1 toward the outer film 130 to be joined to each lid 140. The second seal bar 71B heats the outer film 130 on the second side end surface G12 and pressurizes the outer film 130 toward the second side end surface G12.

In the example shown in Fig. 31, the chamfered corner G1X is formed between the second side end surface G12 and the first side end surface G11 of each lid 140. The curved corner heating surface 71y2 heats the outer film 130 on the chamfered corner G1X and pressurizes the outer film 130 toward the corner G1X.

In the example shown in Figs. 30 and 31, no chamfered corner G1X is formed between the second side end surface G12 and the fourth side end surface G14 of each lid 140. A protruding portion G1a is formed between the second side end surface G12 and the fourth side end surface G14. As described with reference to Figs. 11E, 11G, and the like, the pair of extended parts 132A and 132B of the outer film 130 wrapped around the electrode assembly unit 111 is joined with each other, the pair of extended parts 132A and 132B extending from the electrode assembly unit 111 and facing each other. The protruding portion G1a suppresses formation of a gap between each lid 140 and the pair of extended parts 132A and 132B.

The outer film 130 on the corner G1X between the second side end surface G12 and the fourth side end surface G14, where the protruding portion G1a is formed, is not pressed by the curved corner heating surface 71y2. As shown in Fig. 31, the flat heating surface 71y1 of the second seal bar 71B extends from a region facing the second side end surface G12 to the first side in the third direction D3 beyond the corner G1X between the second side end surface G12 and the fourth side end surface G14 in a state of pressing the outer film 130 toward the second side end surface G12. In a state where the outer film 130 is pressed by the second seal bar 71B, the heated protruding portion G1a can move onto the fourth side end surface G14. In other words, it is possible to suppress damage to the outer film 130 as a result of pressing the outer film 130 on the protruding portion G1a with the curved corner heating surface 71y2.

The seal bar 71 shown in Figs. 30 and 31 may include the above-described seal bar body 71x and the contact portion 71y. The contact portion 71y may include the flat heating surface 71y1 and the corner heating surfaces 71y2. The flat heating surface 71y1 and the corner heating surfaces 71y2 may be made up of the contact portion 71y.

In the example shown in Figs. 30 and 31, the seal bar body 71x and the contact portion 71yx may be configured as described above.

For example, the material constituting the contact portion 71y may be an elastic member. The material constituting the contact portion 71y may be rubber. The material constituting the contact portion 71y may be natural rubber, fluorine rubber, or silicone rubber.

In the example shown in Figs. 30 and 31, the thickness of the rubber that constitutes the contact portion 71y along a direction in which the contact portion 71y presses the outer film 130 toward each lid 140 may be greater than or equal to 0.1 mm and less than or equal to 3.0 mm, greater than or equal to 0.1 mm and less than or equal to 2.5 mm, greater than or equal to 0.1 mm and less than or equal to 2.0 mm, greater than or equal to 0.1 mm and less than or equal to 1.5 mm, or greater than or equal to 0.1 mm and less than or equal to 1.0 mm. By setting a lower limit on the thickness of the rubber, the outer film 130 can be heated and pressurized at more uniform pressure. By setting an upper limit on the thickness of the rubber, the outer film 130 can be sufficiently and efficiently heated by heat from the seal bar body 71x.

In the specific example described above, an example in which, while the outer film 130 is being wrapped around the electrode assembly unit 111, the side end surfaces G1 and the outer film 130 are joined with each other has been described. However, the present embodiment is not limited to this example. The outer film 130 may be supplied in a rolled state. The first joining device 70 may join the side end surfaces G1 and the outer film 130 that is wrapped around the electrode assembly unit 111 so as to contact the side end surface G1 of the first lid 140A and the side end surface G1 of the second lid 140B.

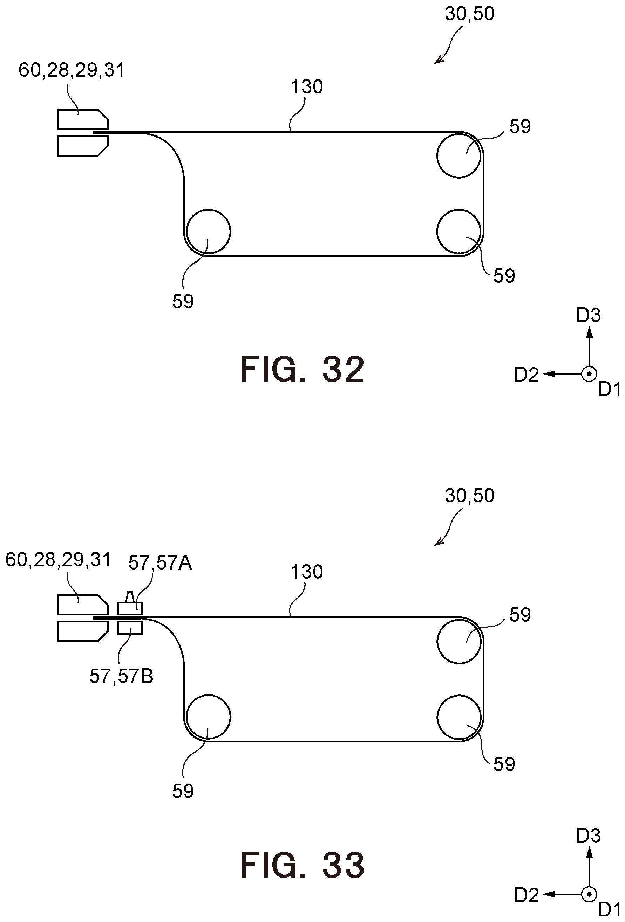

In the example shown in Figs. 32 to 35, the wrapping device 50 also functions as the film supply device 30. The wrapping device 50 constitutes the film supply device 30. The film supply device 30 also functions as the wrapping device 50. The film supply device 30 constitutes the wrapping device 50. In the example shown in Figs. 32 to 35, the film supply device 30 and the wrapping device 50 supply the outer film 130 in a rolled state.

The wrapping device 50 (film supply device 30) includes the grip portion 60 that grips the outer film 130 and guide portions 59 that guide the outer film 130. In the example shown in Fig. 32, the wrapping device 50 (film supply device 30) wraps the outer film 130 such that both ends of the sheet of the outer film 130 overlap. In the example shown in Fig. 32, the wrapping device 50 (film supply device 30) does not wrap the outer film 130 around the electrode assembly unit 111, and wraps the outer film 130 around the guide portions 59. In the example shown in Fig. 32, the outer film 130 is wrapped around the guide portions 59. The guide portions 59 are not limited. The guide portions 59 may be rolls. The rolls may be rotatable.

As shown in Fig. 33, the wrapping device 50 (film supply device 30) may further include an auxiliary sealing portion 57. The auxiliary sealing portion 57 temporarily joins the overlapping parts at both ends of the outer film 130. Through temporary joining, the outer film 130 can be maintained in a rolled state. The auxiliary sealing portion 57 includes a seal bar 57A and a seal seat 57B. The seal seat 57B supports the overlapping parts at both ends of the outer film 130. The seal bar 57A heats the outer film 130 on the side end surfaces G1 and pressurizes the outer film 130 toward that side end surfaces G1.

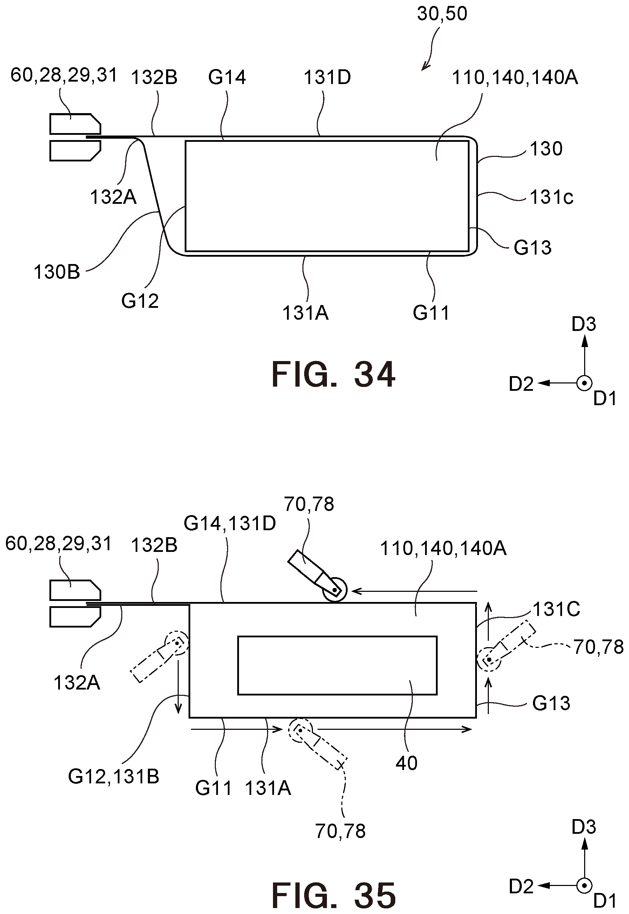

As shown in Fig. 34, the guide portions 59 are removed from the inside of the outer film 130 of which both ends are overlapped. At this time, the outer film 130 may move relative to the stopped guide portions 59. The guide portions 59 may move relative to the stopped outer film 130. Both the guide portions 59 and the outer film 130 may move.

Subsequently, as shown in Fig. 34, the electrode assembly unit 111 is placed inside the outer film 130 of which both ends are overlapped. At this time, the outer film 130 may move relative to the stopped electrode assembly unit 111. The electrode assembly unit 111 may move relative to the stopped outer film 130. Both the electrode assembly unit 111 and the outer film 130 may move.

Subsequently, as shown in Fig. 35, the side end surface G1 of each lid 140 and the outer film 130 are joined with each other by the first joining device 70. The first side end surface G11 of each lid 140 is joined with the first part 131A of the outer film 130. The second side end surface G12 of each lid 140 is joined with the second part 131B of the outer film 130. The third side end surface G13 of each lid 140 is joined with the third part 131C of the outer film 130. The fourth side end surface G14 of each lid 140 is joined with the fourth part 131D of the outer film 130.

In the illustrated example, the first joining device 70 includes the roller heater 78. However, the first joining device 70 in this modification is not limited to the roller heater 78. Any of the various first joining devices 70 described above may be used in this modification.

In this modification, as shown in Fig. 35, the fixing devices 40 may fix the lids 140A and 140B. Not only in a step of joining the outer film 130 to the side end surfaces G1 but also in another step of this modification, the fixing devices 40 may also fix the lids 140A and 140B. In a step of placing the electrode assembly unit 111 inside the rolled outer film 130, shown in Fig. 34, the lids 140A and 140B of the electrode assembly unit 111 may be fixed by the fixing devices 40.

Subsequently, a step of joining the pair of extended parts of the outer film 130 wrapped around the electrode assembly unit 111, the pair of extended parts extending from the electrode assembly unit 111 and facing each other, is performed. Any of the above-described second joining devices 90 may be used in this step. During this step, the lids 140A and 140B of the electrode assembly unit 111 may be fixed by the fixing devices 40.

In the modification shown in Figs. 32 to 35, and the like, the pair of extended parts 132A and 132B of the outer film 130 wrapped around the electrode assembly unit 111, the pair of extended parts 132A and 132B extending from the electrode assembly unit 111 and facing each other, is temporarily joined. However, a step of temporary joining may be omitted. In the illustrated example, the grip portion 60 can maintain a state where the pair of extended parts 132A and 132B is overlapped.

In the specific example described above, the lids 140 and the outer film 130 are joined by heat sealing. Joining of the lids 140 and the outer film 130 is not limited to heat sealing. The lids 140 and the outer film 130 may be joined by methods other than heat sealing. Joining of the lids 140 and the outer film 130 may be fusion bonding other than heat sealing. Examples of fusion bonding other than heat sealing include ultrasonic bonding and high-frequency bonding. In this example, the first joining device 70 may be a vibration device that applies vibration, or pressure and vibration. Joining of the lids 140 and the outer film 130 may be brazing. Examples of brazing include joining using adhesive or solder. Joining of the lids 140 and the outer film 130 may be fixed attachment. Examples of fixed attachment include mechanical joining, such as caulking.

In the specific example described above, the pair of extended parts 132A and 132B is joined with each other by heat sealing. Joining of the pair of extended parts 132A and 132B is not limited to heat sealing. The pair of extended parts 132A and 132B may be joined by methods other than heat sealing. Joining of the pair of extended parts 132A and 132B may be fusion bonding other than heat sealing. Examples of fusion bonding other than heat sealing include ultrasonic bonding and high-frequency bonding. In this example, the second joining device 90 may be a vibration device that applies vibration or pressure and vibration. Joining of the extended parts 132A and 132B may be brazing. Examples of brazing include joining using adhesive or solder. Joining of the extended parts 132A and 132B may be fixed attachment. Examples of fixed attachment include mechanical joining, such as caulking.

In the specific example described above, an example in which each of the lids 140 has a rectangular shape when viewed in the first direction D1 has been described; however, the configuration is not limited to this example. As already described, each of the lids 140 may have a circular shape, an elliptical shape, a square shape, a diamond shape, or a polygonal shape other than a square when viewed in the first direction D1.

In the specific example described above, the side end surface G1 of each rectangular lid 140 includes the first side end surface G11, the second side end surface G12, the third side end surface G13, and the fourth side end surface G14. The first side end surface G11 and the fourth side end surface G14 are on opposite sides and are the long sides of the rectangular shape. The second side end surface G12 and the third side end surface G13 are on opposite sides and are the short sides of the rectangular shape. Not limited to this example, the first side end surface G11 and the fourth side end surface G14 may be on opposites sides and are the short sides of the rectangular shape. The second side end surface G12 and the third side end surface G13 are on opposites sides and are the long sides of the rectangular shape.

The first side end surface G11 in the claims is not limited to the first side end surface G11 in the present embodiment, and may also be the second side end surface G12, the third side end surface G13, or the fourth side end surface G14. Similarly, the second side end surface G12 in the claims is not limited to the second side end surface G12 in the present embodiment, and may also be the first side end surface G11, the third side end surface G13, or the fourth side end surface G14. Similarly, the third side end surface G13 in the claims is not limited to the third side end surface G13 in the present embodiment, and may also be the first side end surface G11, the second side end surface G12, or the fourth side end surface G14. Similarly, the fourth side end surface G14 in the claims is not limited to the fourth side end surface G14 in the present embodiment, and may also be the first side end surface G11, the second side end surface G12, or the third side end surface G13.

The manufacturing apparatus 20 may automatically process the electrode assembly unit 111 and the outer film 130 to produce the electrical storage device intermediate 110. The process of manufacturing the electrical storage device intermediate 110 from the electrode assembly unit 111 and the outer film 130 may include steps that are performed manually. The steps performed manually may be performed using the manufacturing apparatus 20. The steps performed manually may be performed using an apparatus different from the manufacturing apparatus 20.

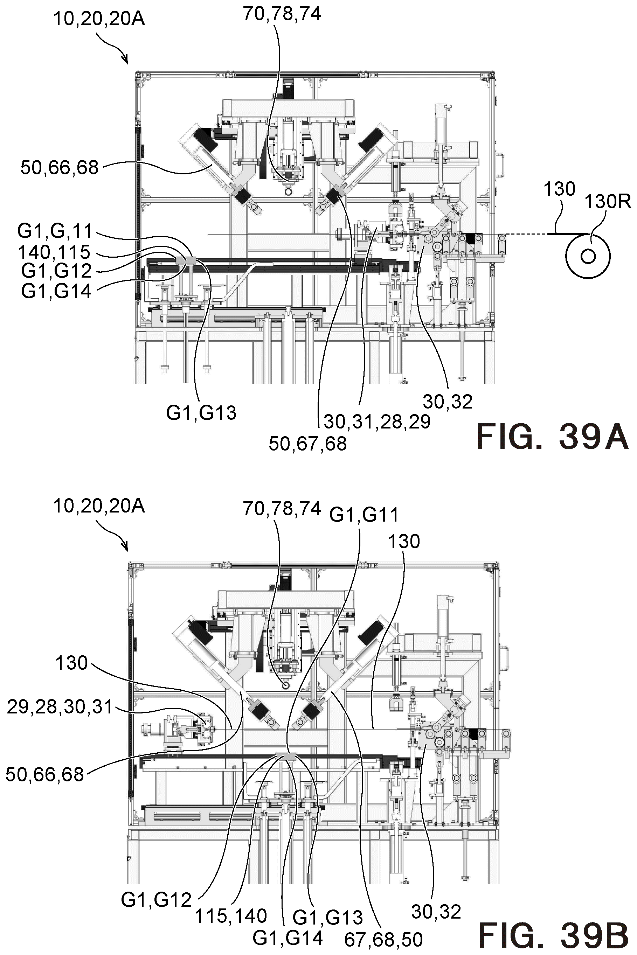

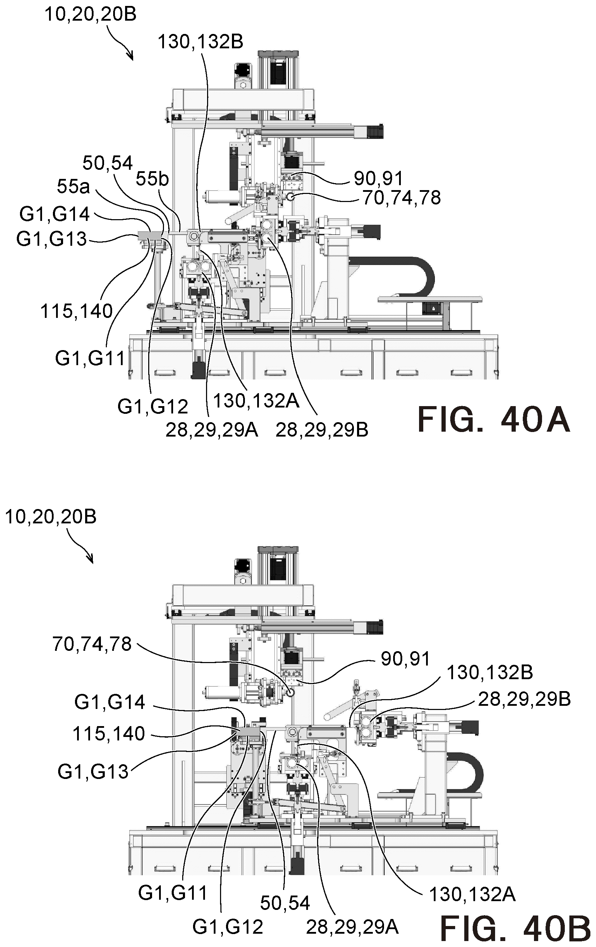

Figs. 39A to 40H are side views that show one specific example of the manufacturing apparatus 20. The manufacturing apparatuses 20 shown in Figs. 39A to 40H include a first processing apparatus 20A and a second processing apparatus 20B. Figs. 39A to 39K show the first processing apparatus 20A. Figs. 40A to 40H show the second processing apparatus 20B.

The first processing apparatus 20A includes the fixing devices 40. However, in Figs. 39A to 39K, the fixing devices 40 are omitted. The second processing apparatus 20B includes the fixing devices 40. However, in Figs. 40A to 40H, the fixing devices 40 are omitted. As shown in Fig. 39A, the first processing apparatus 20A includes the film supply device 30. The film supply device 30 includes the roll 33 that holds the roll of material 130R of the long outer film 130L. In Figs. 39A to 40K, part of the film supply device 30 is omitted.

In the example shown in Figs. 39A to 40H, a combination of the first processing apparatus 20A and the second processing apparatus 20b corresponds to the manufacturing apparatus 20. In the example shown in Figs. 39A to 40H, the first processing apparatus 20A alone also corresponds to the manufacturing apparatus 20, and also corresponds to the manufacturing apparatus 20 even in combination with the second processing apparatus 20B. In the example shown in Figs. 39A to 40H, the second processing apparatus 20B alone also corresponds to the manufacturing apparatus 20, and also corresponds to the manufacturing apparatus 20 even in combination with the first processing apparatus 20A.

Initially, the operation of the first processing apparatus 20A will be described with reference to Figs. 39A to 39K.

In Fig. 39A, the electrode assembly unit 111 to be processed is supplied to the first processing apparatus 20A. The electrode assembly unit 111 is manually brought into the first processing apparatus 20A. After that, the lids 140 of the electrode assembly unit 111 are fixed using the fixing devices 40 (not shown).

As shown in Fig. 39B, the first film holding unit 31 of the film supply device 30 grips the outer film 130 and feeds out the long outer film 130L from the roll of material 130R by an appropriate length. The first film holding unit 31 may include the film holding unit 29 described with reference to Figs. 36A to 36E. The first film holding unit 31 may include the tensioning device 28 described with reference to Figs. 36A to 36E. The outer film 130 with an appropriate length, used to manufacture one electrical storage device intermediate 110, is held in a taut state by the first film holding unit 31 and the second film holding unit 32.

As shown in Fig. 39B, the electrode assembly unit 111, to which the lids 140 are fixed by the fixing devices 40, moves to an appropriate position within the apparatus. In other words, the electrode assembly unit 111 is positioned relative to the outer film 130. In the illustrated example, the electrode assembly unit 111 faces the horizontally spread outer film 130 from the lower side in the vertical direction.

Furthermore, as shown in Fig. 39B, the first pressing portion 66 and the second pressing portion 67 of the wrapping device 50 approach the outer film 130.

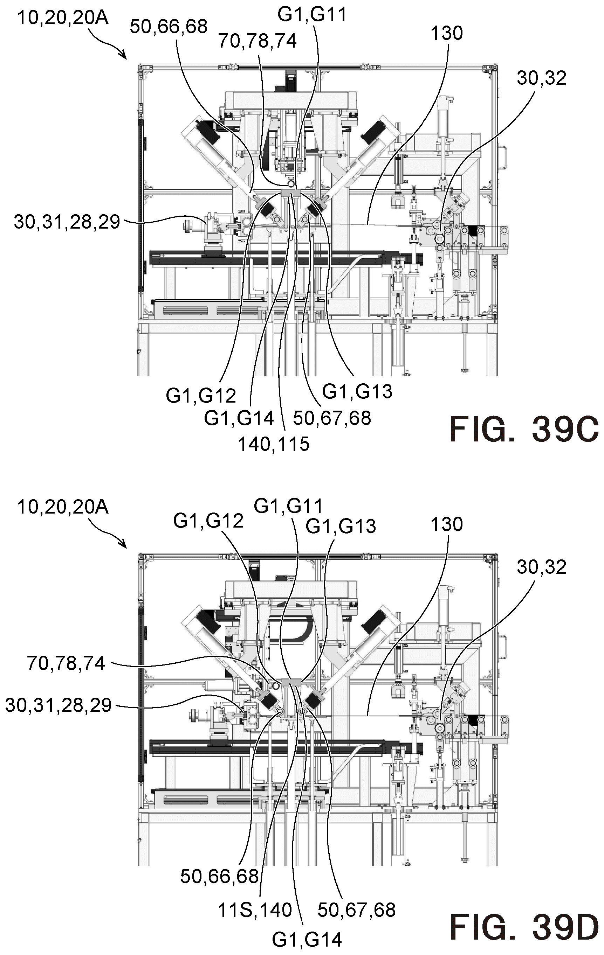

Subsequently, as shown in Fig. 39C, the electrode assembly unit 111 to which the lids 140 are fixed by the fixing devices 40 moves upward in the vertical direction (third direction D3). The electrode assembly unit 111 approaches the outer film 130, contacts the outer film 130, and then moves upward in the vertical direction (third direction D3). In the illustrated example, the first side end surfaces G11 of the lids 140 contact the outer film 130.

The outer film 130 contacts the press roll 68 of the first pressing portion 66 to bend between the first film holding unit 31 and the lids 140. The outer film 130 contacts the press roll 68 of the second pressing portion 67 to bend between the second film holding unit 32 and the lids 140.

Subsequently, as shown in Fig. 39D, the press roll 68 of the first pressing portion 66 and the press roll 68 of the second pressing portion 67 approach each other in the horizontal direction (second direction D2). The first pressing portion 66 and the second pressing portion 67 press the outer film 130 such that the distance along the horizontal direction (second direction D2) between the first pressing portion 66 and the second pressing portion 67 is shorter than the length of the fourth side end surfaces G14 along the horizontal direction (second direction D2). With the operation of the first pressing portion 66, the outer film 130 contacts the second side end surfaces G12. With the operation of the second pressing portion 67, the outer film 130 contacts the third side end surfaces G13. In other words, as shown in Fig. 39D, the lids 140 are wrapped with the outer film 130 from three sides, that is, the second side end surfaces G12, the first side end surfaces G11, and the third side end surfaces G13.

As shown in Fig. 39D, the first pressing portion 66 and the second pressing portion 67 also move in the vertical direction (third direction D3). Finally, the first pressing portion 66 presses the outer film 130 such that the outer film 130 maintained in a taut state by the first pressing portion 66 and the first film holding unit 31 spreads on the horizontal plane. The second pressing portion 67 presses the outer film 130 such that the outer film 130 maintained in a taut state by the second pressing portion 67 and the first film holding unit 31 spreads on the horizontal plane.

As a result, step S46 of wrapping the outer film 130 around the electrode assembly unit 111, as shown in Fig. 7C, is performed.

The wrapping device 50 of the first processing apparatus 20A differs from the wrapping device 50 described with reference to Figs. 37A to 37F in the direction of relative movement of the electrode assembly unit 111 relative to the outer film 130 in the third direction D3. The wrapping device 50 of the first processing apparatus 20A can be configured similarly to the wrapping device 50 described with reference to Figs. 37A to 37F in other respects. The wrapping device 50 of the first processing apparatus 20A can be configured similarly to the wrapping device 50 described with reference to Figs. 37A to 37F.

Subsequently, using the first joining device 70, the outer film 130 is joined to the side end surfaces G1 of the electrode assembly unit 111. The first joining device 70 of the first processing apparatus 20A joins the outer film 130 to the side end surfaces G1 of the electrode assembly unit 111 by heat sealing. The first joining device 70 of the first processing apparatus 20A includes the roller heater 78. The roller heater 78 of the first processing apparatus 20A can be configured similarly to the roller heater 78 described with reference to Figs. 38A to 38C.

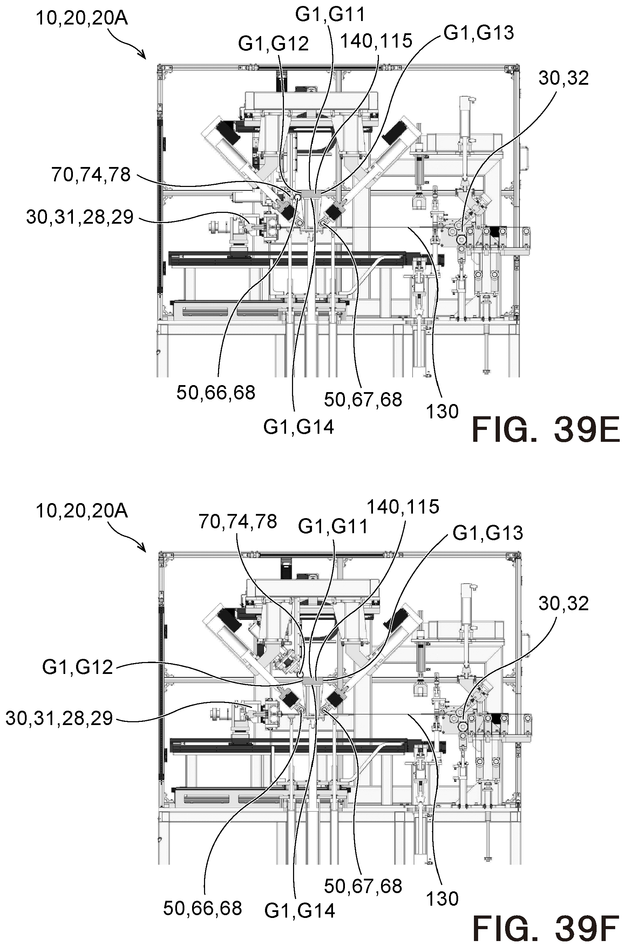

As shown in Fig. 39E, the roller heater 78 pressurizes the outer film 130 toward the second side end surfaces G12 of the side end surfaces G1 of the electrode assembly unit 111 and heats the outer film 130. When the heated roller 781 of the roller heater 78 moves on the second side end surfaces G12, the outer film 130 is heat-sealed to the second side end surfaces G12 of the side end surfaces G1 of the lids 140.

Subsequently, as shown in Fig. 39F, the heated roller 781 of the roller heater 78 passes on the corners G1X between the second side end surfaces G12 and the first side end surfaces G11. The roller heater 78 functions as the spot heater 74, and the roller heater 78 joins the outer film 130 to the corners G1X of the side end surfaces G1 of the lids 140.

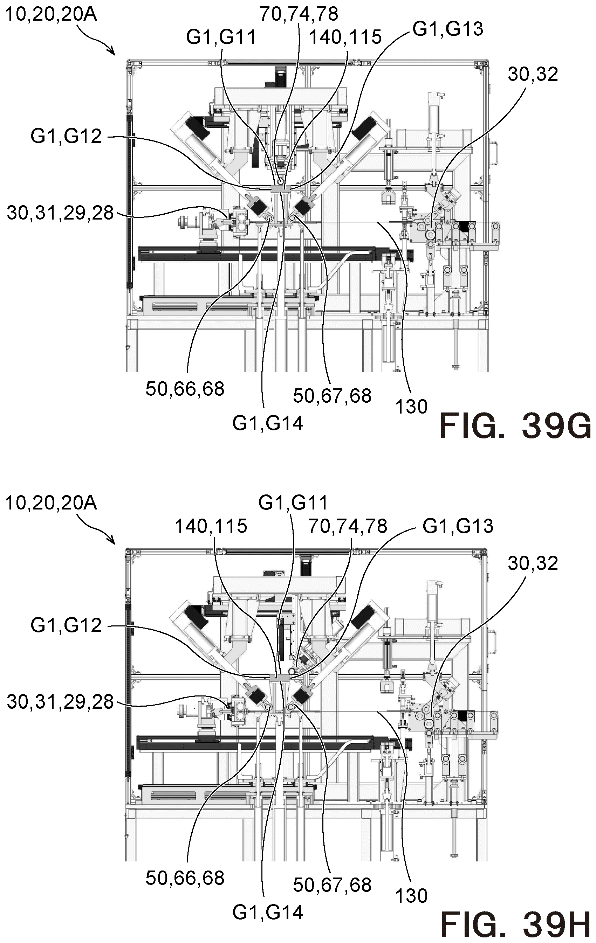

Subsequently, as shown in Fig. 39G, the roller heater 78 pressurizes the outer film 130 toward the first side end surfaces G11 of the side end surfaces G1 of the lids 140 and heats the outer film 130. The heated roller 781 of the roller heater 78 moves on the first side end surfaces G11 to cause the outer film 130 to be heat-sealed to the first side end surfaces G11 of the side end surfaces G1 of the lids 140.

Subsequently, as shown in Fig. 39H, the heated roller 781 of the roller heater 78 passes on the corners G1X between the first side end surfaces G11 and the third side end surfaces G13. The roller heater 78 functions as the spot heater 74, and the roller heater 78 joins the outer film 130 to the corners G1X of the side end surfaces G1 of the lids 140.

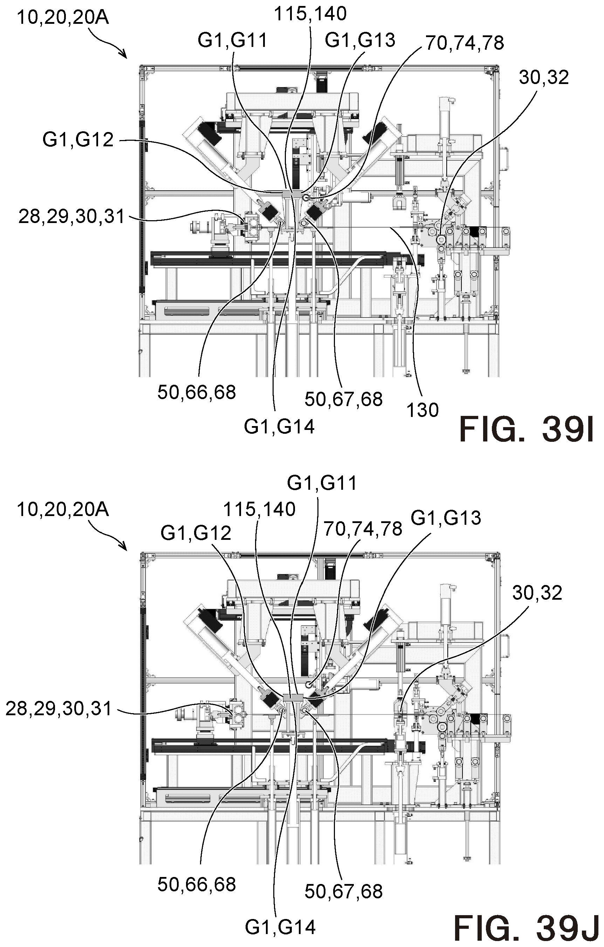

Subsequently, as shown in Fig. 39I, the roller heater 78 pressurizes the outer film 130 toward the third side end surfaces G13 of the side end surfaces G1 of the lids 140 and heats the outer film 130. The heated roller 781 of the roller heater 78 moves on the third side end surfaces G13 to cause the outer film 130 to be heat-sealed to the third side end surfaces G13 of the side end surfaces G1 of the lids 140.

As a result, step S47 of joining the outer film 130 to the first to third side end surfaces G11 to G13, shown in Fig. 7C, is performed.

Subsequently, as shown in Fig. 39J, the second film holding unit 32 cuts the outer film 130.

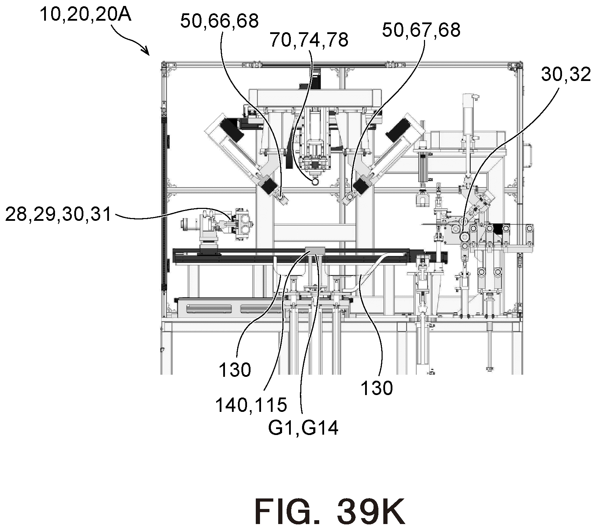

Subsequently, as shown in Fig. 39K, the first pressing portion 66 and the second pressing portion 67 move in the horizontal direction away from each other. In the illustrated example, the first pressing portion 66 and the second pressing portion 67 move upward in the vertical direction in parallel with the movement in the horizontal direction. The electrode assembly unit 111, to which the lids 140 are fixed by the fixing devices 40, moves downward in the vertical direction. Movement of the electrode assembly unit 111 may be performed in parallel with cutting of the outer film 130, shown in Fig. 39J.

Thus, the process using the first processing apparatus 20A ends. The electrode assembly unit 111 in which the outer film 130 is partially fixed to the side end surfaces included in the side end surfaces G1 of the lids 140, is taken out from the first processing apparatus 20A. Taking the electrode assembly unit 111 out from the first processing apparatus 20A may be manually performed.

The electrode assembly unit 111 taken out from the first processing apparatus 20A is brought into the second processing apparatus 20B. Bringing the electrode assembly unit 111 into the second processing apparatus 20B is manually performed. After that, the lids 140 of the electrode assembly unit 111 are fixed using the fixing devices 40 (not shown).

However, taking the electrode assembly unit 111 out from the first processing apparatus 20A may be automatically performed using a device or the like. Bringing the electrode assembly unit 111 into the second processing apparatus 20B may be automatically performed using a device or the like.

As shown in Fig. 40A, the second processing apparatus 20B includes the wrapping device 50. The wrapping device 50 includes the wrapping support member 54. The wrapping support member 54 includes the contact surface 55a and the support surface 55b. The second processing apparatus 20B includes a first film holding unit 29A and a second film holding unit 29B. Each of the first film holding unit 29A and the second film holding unit 29B may include the film holding unit 29 described with reference to Figs. 36A to 36E. Each of the first film holding unit 29A and the second film holding unit 29B may include the tensioning device 28 described with reference to Figs. 36A to 36E.

As shown in Fig. 40A, the electrode assembly unit 111 is mounted to the second processing apparatus 20B such that the second side end surfaces G12 of the lids 140 contact the contact surface 55a of the wrapping support member 54. The electrode assembly unit 111 is mounted to the second processing apparatus 20B such that the fourth side end surfaces G14 of the lids 140 are positioned on the same plane as the support surface 55b of the wrapping support member 54.

The outer film 130 is sequentially joined to the second side end surfaces G12, the first side end surfaces G11, and the third side end surfaces G13 of the lids 140. The first extended part 132A of the outer film 130, extending from the second side end surfaces G12, passes on the support surface 55b and is guided to the first film holding unit 29A. The outer film 130 extending from the third side end surfaces G13 passes on the fourth side end surfaces G14 and the support surface 55b, and is guided to the second film holding unit 29B.

Subsequently, as shown in Fig. 40B, the first film holding unit 29A holds the outer film 130. The outer film 130 is maintained in a taut state between the first film holding unit 29A and the electrode assembly unit 111. The second film holding unit 29B holds the outer film 130. The outer film 130 is maintained in a taut state between the second film holding unit 29B and the electrode assembly unit 111.

As shown in Fig. 40B, the electrode assembly unit 111, the outer film 130, the first film holding unit 29A, and the second film holding unit 29B move to appropriate positions within the second processing apparatus 20B.

As a result, step S44 of wrapping the outer film 130 around the electrode assembly unit 111 in the manufacturing method shown in Fig. 7C ends.

Subsequently, using the first joining device 70, the outer film 130 is joined to the side end surfaces G1 of the lids 140. The first joining device 70 of the second processing apparatus 20B joins the outer film 130 to the side end surfaces G1 of the lids 140 by heat sealing. The first joining device 70 of the second processing apparatus 20B includes the roller heater 78. The roller heater 78 of the second processing apparatus 20B can be configured similarly to the roller heater 78 described with reference to Figs. 38A to 38C.

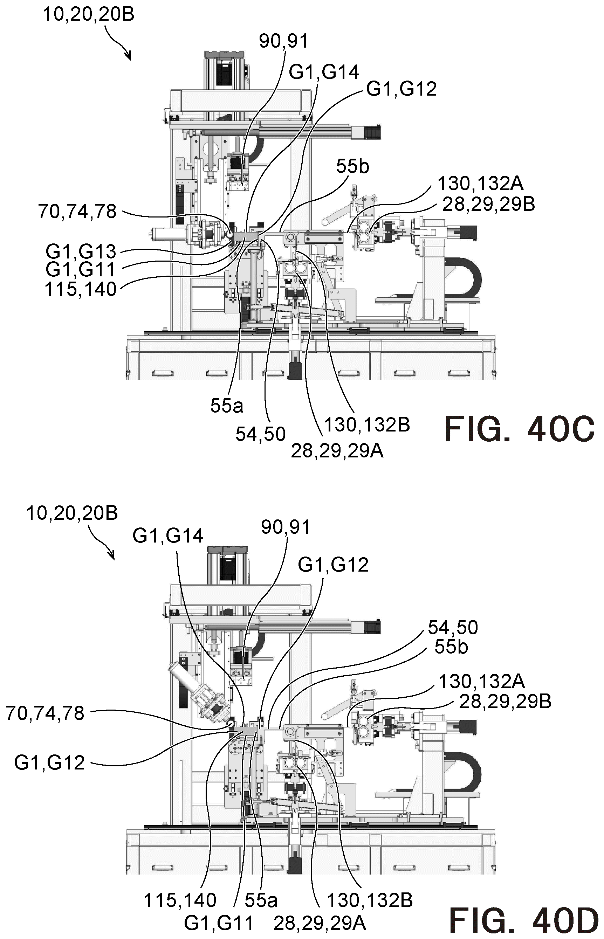

As shown in Fig. 40C, the roller heater 78 pressurizes the outer film 130 toward the third side end surfaces G13 of the side end surfaces G1 of the lids 140 and heats the outer film 130. The heated roller 781 of the roller heater 78 moves on the third side end surfaces G13 to cause the outer film 130 to be heat-sealed to the third side end surfaces G13 of the side end surfaces G1 of the lids 140.

Subsequently, as shown in Fig. 40D, the heated roller 781 of the roller heater 78 passes on the corners G1X between the third side end surfaces G13 and the fourth side end surfaces G14. The roller heater 78 functions as the spot heater 74, and the roller heater 78 joins the outer film 130 to the corners G1X of the side end surfaces G1 of the lids 140.

As a result of processing with the first processing apparatus 20A, the outer film 130 is already joined to the third side end surfaces G13 of the lids 140. In the joining step shown in Fig. 40C, the roller 781 does not need to pass on the entire region of the third side end surfaces G13. However, when the roller 781 passes on the third side end surfaces G13 and heads toward the fourth side end surfaces G14, the outer film 130 can be more stably joined at the corners G1X between the third side end surfaces G13 and the fourth side end surfaces G14.

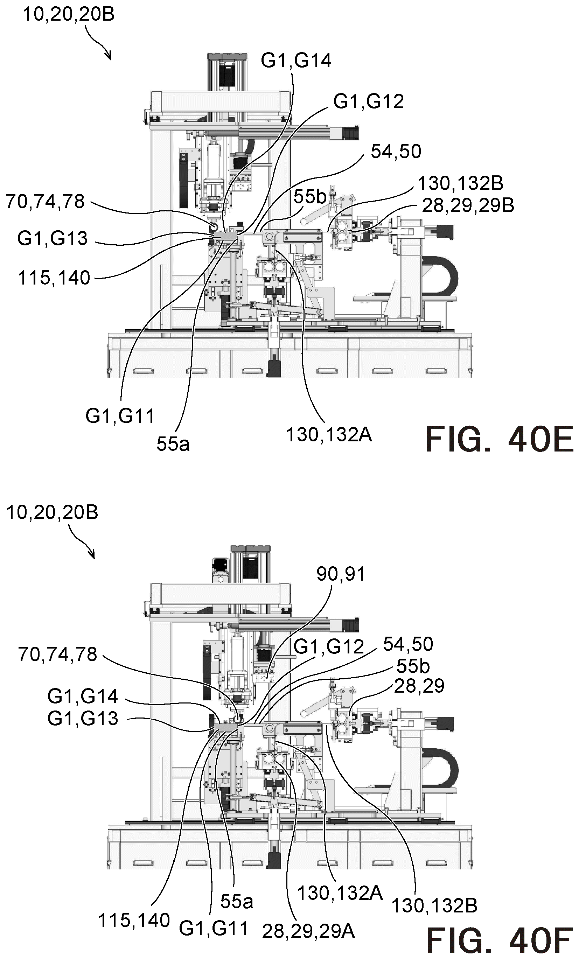

Subsequently, as shown in Figs. 40E and 40F, the roller heater 78 pressurizes the outer film 130 toward the fourth side end surfaces G14 of the side end surfaces G1 of the lids 140 and heats the outer film 130. The heated roller 781 of the roller heater 78 moves on the fourth side end surfaces G14 to cause the outer film 130 to be heat-sealed to the fourth side end surfaces G14 of the side end surfaces G1 of the lids 140.

As a result, step S45 of joining the outer film 130 to the fourth side end surfaces G14, as shown in Fig. 7C, is performed.

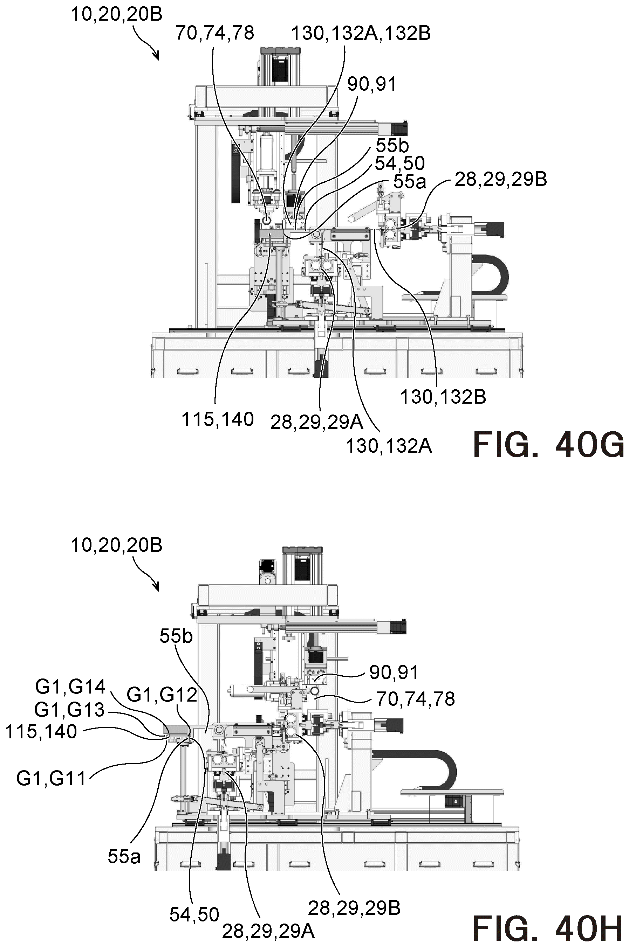

Subsequently, the second joining device 90 is used to join the pair of extended parts 132A and 132B of the outer film 130 wrapped around the electrode assembly unit 111, the pair of extended parts 132A and 132B extending from the electrode assembly unit 111 and facing each other. The second joining device 90 of the second processing apparatus 20B joins the pair of extended parts 132A and 132B to each other by heat sealing. The second joining device 90 of the second processing apparatus 20B includes the film seal bar 91. As shown in Fig. 40G, the film seal bar 91 pressurizes the pair of extended parts 132A and 132B toward the support surface 55b of the wrapping support member 54 and heats the pair of extended parts 132A and 132B, and heat-seals the pair of extended parts 132A and 132B.

As a result, step S5 of joining the extended parts 132A and 132B, shown in Fig. 7C, is performed, and the electrical storage device intermediate 110 is obtained.

Subsequently, as shown in Fig. 40H, the fixing devices 40 (not shown), the wrapping support member 54, the first film holding unit 29A, and second film holding unit 29B return to their predetermined positions. Then, the first film holding unit 29A releases the outer film 130. The second film holding unit 29B releases the outer film 130. The electrical storage device intermediate 110 can be taken out from the second processing apparatus 20B.

### Reference Signs List

10 manufacturing apparatus
15 injection device
20 manufacturing apparatus
28 tensioning device
281 guide rail
282 holding drive unit
29 film holding unit
30 film supply device
31 first film holding unit (supply chuck)
311 first roll
312 second roll
313 roll holding portion
314 holding base portion
311A first rotation axis
312A second rotation axis
313A adjustment axis
32 second film holding unit (cutting and holding unit)
33 roll
34 position acquisition unit
35 electrode assembly unit supply device
36 holding conveyance unit
38 positioning device
38A positioning camera
40 fixing device
41 fixation restricting portion
42 fixation drive unit
43 vacuum suction unit
44A tapered projection
44B tapered recess
45 hook
46 clamper
46a clamp piece
47 chuck member
47C central axis
471 widening piece holding portion
472 widening piece
473 push pin
50 wrapping device
51 wrapping assisting member
52a base surface
52b first assisting surface
52c second assisting surface
54 wrapping support member
55a contact surface
55b support surface
56 auxiliary second wrapping support member
57 auxiliary sealing portion
57A seal bar
57B seal seat
58 pressing member
59 guide portion
60 grip portion (film holding unit)
28 tensioning device
63A reverse-crown roll
63B nip roll
64 surface monitoring unit
65 wrapping controller
66 first pressing portion
67 second pressing portion
68 press roll
70 first joining device
71 seal bar
71A first seal bar
71B second seal bar
71C third seal bar
71D fourth seal bar
71k protruding contact piece
71x seal bar body
71y contact portion
71y1 heating surface
71y2 corner heating surface
72A receiving bar
73 bar drive unit
73a movement restriction piece
74 spot heater
75 blower
76 infrared heater
77 corner heater
77a heating surface
77a1 first heating surface
77a2 second heating surface
77a3 corner heating surface
77b heating protruding portion
77b1 linear protrusion
77b2 dot-like protrusion
78 roller heater
781 roller
781a outer peripheral surface
782 distal end part
783 proximal end part
784 pressure-applying part
80 robot arm
82 lid heater
90 second joining device
91 film seal bar
92 receiving member
93 elastic member
100 electrical storage device
110 electrical storage device intermediate
111 electrode assembly unit
113 lid unit
113A first lid unit
113B second lid unit
115 electrode assembly
117 terminal
117A first terminal
117B second terminal
120 outer package
130 outer film
130R roll of material
130L0 long outer film
131A first part
131B second part
131C third part
131D fourth part
132A first extended part
132B second extended part
140 lid
140A first lid
140B second lid
141 through hole
142 shaft-like protruding portion
143 notch
144 linear groove
145 contact piece
A1 first side edge
A2 second side edge
B1 first end
B2 second end
D1 first direction
D2 second direction
D3 third direction
G1 side end surface
G11 first side end surface
G12 second side end surface
G13 third side end surface
G14 fourth side end surface
G1X corner
G1a protruding portion
G1b depression
G2 outer main surface
G3 inner main surface
K1 first opening
K2 second opening
L1 base layer
L2 barrier layer
L3 heat-sealable resin layer
L4 bonding layer
L5 bonding layer
S1 opening sealing portion
S11 first sealing portion
S12 second sealing portion
S13 third sealing portion
S14 fourth sealing portion
S2 extended sealing portion
S2X unsealed portion

## Claims

1. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising:
a fixing device that fixes the first lid and the second lid of the electrode assembly unit; and
a joining device that joins the outer film, wrapped around the electrode assembly unit so as to contact a side end surface of the first lid and a side end surface of the second lid, and the side end surfaces.

2. The manufacturing apparatus according to claim 1, further comprising: a film supply device that supplies the outer film; and an electrode assembly unit supply device that places the electrode assembly unit on the outer film.

3. The manufacturing apparatus according to claim 1, further comprising a positioning device that positions the electrode assembly unit on the outer film.

4. The manufacturing apparatus according to claim 1, wherein
the first lid, the electrode assembly, and the second lid are located in this order in a first direction, and
the fixing device includes a fixation restricting portion that contacts each of the first lid and the second lid from an outer side in the first direction to restrict movement toward the outer side, and a fixation drive unit that presses each of the first lid and the second lid against the fixation restricting portion.

5. The manufacturing apparatus according to claim 4, wherein
one of a tapered projection and a tapered recess is provided on the fixation restricting portion or the fixation drive unit,
the other one of the tapered projection and the tapered recess is provided on each of the first lid and the second lid, and
when the tapered projection is inserted into the tapered recess, the first lid and the second lid are positioned in a direction that is not parallel to the first direction.

6. The manufacturing apparatus according to claim 4, wherein the fixation drive unit includes a vacuum suction unit that holds the first lid and the second lid by vacuum suction.

7. The manufacturing apparatus according to claim 1, further comprising a wrapping device that wraps the electrode assembly unit with the outer film such that the outer film contacts the side end surface of the first lid and the side end surface of the second lid, wherein
the wrapping device includes a tensioning device that applies tension to the outer film, and
the tensioning device includes a reverse-crown roll and a nip roll that sandwiches the outer film with the reverse-crown roll.

8. The manufacturing apparatus according to claim 1, further comprising a wrapping device that wraps the electrode assembly unit with the outer film such that the outer film contacts the side end surface of the first lid and the side end surface of the second lid, wherein
the wrapping device includes a grip portion that grips the outer film, a surface monitoring unit that monitors a surface condition of the outer film gripped by the grip portion, and a wrapping controller that controls an operation of the grip portion, and
the wrapping controller controls the operation of the grip portion based on a monitoring result of the surface monitoring unit.

9. The manufacturing apparatus according to claim 1, further comprising a wrapping device that wraps the electrode assembly unit with the outer film such that the outer film contacts the side end surface of the first lid and the side end surface of the second lid, wherein
the wrapping device includes a pressing member that moves on the outer film while pressing the outer film toward the side end surfaces.

10. The manufacturing apparatus according to claim 1, wherein
the side end surface of each of the first lid and the second lid includes a plurality of side end surfaces,
a corner is formed between adjacent two end surfaces of the plurality of side end surfaces, and
the joining device includes a spot heater that heats a part of the outer film on the corner.

11. The manufacturing apparatus according to claim 10, wherein the spot heater includes one or more of a blower that discharges heated gas, an infrared heater that emits infrared light, a rotatable roller that has a heated outer peripheral surface, and a corner heater that has a heating surface bent in conformity with the corner.

12. The manufacturing apparatus according to claim 1, further comprising a second joining device that joins a pair of extended parts of the outer film wrapped around the electrode assembly unit, the pair of extended parts extending from the electrode assembly unit and facing each other, wherein
one or both of the joining device and the second joining device include a heater that includes a rotatable roller with a heated outer peripheral surface and a robot arm holding the heater.

13. The manufacturing apparatus according to claim 1, further comprising a second joining device that joins a pair of extended parts of the outer film wrapped around the electrode assembly unit, the pair of extended parts extending from the electrode assembly unit and facing each other, wherein
one or both of the joining device and the second joining device include a seal bar that heats the outer film and a bar drive unit that moves the seal bar toward the outer film, and
the bar drive unit moves the seal bar so as to achieve a preset depression amount.

14. The manufacturing apparatus according to claim 1, wherein the joining device includes a lid heater that heats the first lid and the second lid.

15. The manufacturing apparatus according to claim 1, further comprising a second joining device that joins a pair of extended parts of the outer film wrapped around the electrode assembly unit, the pair of extended parts extending from the electrode assembly unit and facing each other.

16. The manufacturing apparatus according to claim 15, wherein
the second joining device includes a receiving member that supports the pair of extended parts and a seal bar that presses the pair of extended parts toward the receiving member while heating the pair of extended parts, and
the receiving member includes an elastic member that is deformable in conformity with deformation of the seal bar.

17. The manufacturing apparatus according to claim 1, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
the joining device includes a first seal bar that contacts a part, located on the first side end surface, of the outer film and heats the outer film while pressing the outer film with the first side end surface.

18. The manufacturing apparatus according to claim 1, further comprising a wrapping device that wraps the electrode assembly unit with the outer film such that the outer film contacts the side end surface of the first lid and the side end surface of the second lid, wherein
the wrapping device includes a wrapping assisting member that holds the side end surfaces by vacuum suction to restrict movement of the electrode assembly unit when wrapping the outer film around the electrode assembly unit.

19. The manufacturing apparatus according to claim 1, further comprising a wrapping device that wraps the electrode assembly unit with the outer film such that the outer film contacts the side end surface of the first lid and the side end surface of the second lid, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
the wrapping device includes a wrapping assisting member that includes a base surface that contacts the fourth side end surface, a first assisting surface that is connected to the base surface and located along an extension of the second side end surface, and a second assisting surface that is connected to the base surface and located along an extension of the third side end surface.

20. The manufacturing apparatus according to claim 19, wherein the wrapping assisting member holds the fourth side end surface on the base surface by vacuum suction.

21. The manufacturing apparatus according to claim 19, wherein the wrapping assisting member holds the outer film on each of the first assisting surface and the second assisting surface by vacuum suction.

22. The manufacturing apparatus according to claim 1, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
the joining device includes a second seal bar that contacts a part of the outer film on the second side end surface and heats the outer film while pressing the outer film with the second side end surface, and a third seal bar that contacts a part of the outer film on the third side end surface and heats the outer film while pressing the outer film with the third side end surface.

23. The manufacturing apparatus according to claim 1, further comprising a wrapping device that wraps the electrode assembly unit with the outer film such that the outer film contacts the side end surface of the first lid and the side end surface of the second lid, wherein
the wrapping device includes a wrapping support member that contacts the outer film on the side end surfaces by vacuum suction to restrict movement of the electrode assembly unit when wrapping the outer film around the electrode assembly unit.

24. The manufacturing apparatus according to claim 1, further comprising a wrapping device that wraps the electrode assembly unit with the outer film such that the outer film contacts the side end surface of the first lid and the side end surface of the second lid, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction, and
the wrapping device includes a wrapping support member that includes a contact surface that contacts the outer film on the second side end surface and a support surface that is connected to the contact surface and located along an extension of the fourth side end surface.

25. The manufacturing apparatus according to claim 24, wherein
the wrapping device places a pair of extended parts of the outer film, wrapped around the electrode assembly unit, on the support surface, the pair of extended parts extending from the electrode assembly unit and facing each other, and
the joining device includes a fourth seal bar that, in a state where the pair of extended parts is placed on the support surface, contacts a part of the outer film on the fourth side end surface and heats the outer film while pressing the outer film with the fourth side end surface.

26. The manufacturing apparatus according to claim 24, further comprising a second joining device that joins a pair of extended parts of the outer film wrapped around the electrode assembly unit, the pair of extended parts extending from the electrode assembly unit and facing each other, wherein
the second joining device includes a seal bar that heats the pair of extended parts placed on the support surface while pressing the pair of extended parts with the support surface.

27. The manufacturing apparatus according to claim 24, wherein the wrapping support member holds the outer film on the support surface by vacuum suction.

28. The manufacturing apparatus according to claim 24, wherein the wrapping device includes an auxiliary wrapping support member that contacts the outer film located on the third side end surface.

29. A manufacturing apparatus for an electrical storage device, the manufacturing apparatus comprising:
the manufacturing apparatus for an electrical storage device intermediate according to any one of claims 1 to 28; and
an injection device that injects an electrolytic solution into the electrical storage device intermediate.

30. A manufacturing method for manufacturing an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing method comprising:
a step of fixing the first lid and the second lid of the electrode assembly unit; and
a step of joining the outer film, wrapped around the electrode assembly unit so as to contact a side end surface of the first lid and a side end surface of the second lid, and the side end surfaces.

31. The manufacturing method according to claim 30, further comprising a step of joining a pair of extended parts of the outer film wrapped around the electrode assembly unit, the pair of extended parts extending from the electrode assembly unit and facing each other.

32. A manufacturing method for an electrical storage device, the manufacturing method comprising:
a step of manufacturing an electrical storage device intermediate by using the manufacturing method according to claim 30 or 31; and
a step of injecting an electrolytic solution into the electrical storage device intermediate.

33. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising
a joining device that joins the outer film, wrapped around the electrode assembly unit so as to contact a side end surface of the first lid and a side end surface of the second lid, and the side end surfaces, wherein
the joining device includes a roller heater,
the roller heater includes a roller having a heated outer peripheral surface, a distal end part holding the roller such that the roller is rotatable, a proximal end part holding the distal end part, and a pressure-applying part located between the proximal end part and the distal end part,
the distal end part is relatively movable relative to the proximal end part in a direction that is not parallel to a rotation axis of the roller, and
the pressure-applying part is supported by the proximal end part and presses the distal end part in a direction in which the roller moves away from the proximal end part.

34. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising:
a joining device that joins the outer film, wrapped around the electrode assembly unit so as to contact a side end surface of the first lid and a side end surface of the second lid, and the side end surfaces; and
a second joining device that joins a pair of extended parts of the outer film wrapped around the electrode assembly unit, the pair of extended parts extending from the electrode assembly unit and facing each other, wherein
at least one of the joining device and the second joining device includes a roller heater,
the roller heater includes a roller having a heated outer peripheral surface, a distal end part holding the roller such that the roller is rotatable, a proximal end part holding the distal end part, and a pressure-applying part located between the proximal end part and the distal end part,
the distal end part is relatively movable relative to the proximal end part in a direction that is not parallel to a rotation axis of the roller, and
the pressure-applying part is supported by the proximal end part and presses the distal end part in a direction in which the roller moves away from the proximal end part.

35. The manufacturing apparatus according to claim 33 or 34, wherein a deformation resistance of the pressure-applying part is greater than or equal to 0.10 N/mm and less than or equal to 1.0 N/mm.

36. The manufacturing apparatus according to claim 33 or 34, wherein the pressure-applying part includes a spring.

37. The manufacturing apparatus according to claim 33 or 34 further comprising a wrapping device that wraps the electrode assembly unit with the outer film such that the outer film contacts the side end surface of the first lid and the side end surface of the second lid, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction,
the wrapping device includes
a first film holding unit that holds a part of the outer film that is in contact with the second side end surface, the first side end surface, and the third side end surface, the part extending from the second side end surface,
a second film holding unit that holds a part of the outer film that is in contact with the second side end surface, the first side end surface, and the third side end surface, the part extending from the third side end surface,
a first pressing portion that contacts the outer film located between the first film holding unit and the second side end surface, and
a second pressing portion that contacts the outer film located between the second film holding unit and the third side end surface, and
the first pressing portion and the second pressing portion press the outer film such that a distance between the first pressing portion and the second pressing portion along the second direction is shorter than a length of the fourth side end surface along the second direction.

38. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising:
a wrapping device that wraps the electrode assembly unit with the outer film such that the outer film contacts a side end surface of the first lid and a side end surface of the second lid; and
a joining device that joins the side end surfaces and the outer film, wherein
the first lid, the electrode assembly, and the second lid are located in this order in a first direction,
the side end surface of each of the first lid and the second lid includes a first side end surface and a fourth side end surface extending in a second direction that is not parallel to the first direction, and a second side end surface and a third side end surface extending in a third direction that is not parallel to both the first direction and the second direction,
the wrapping device includes
a first film holding unit that holds a part of the outer film that is in contact with the second side end surface, the first side end surface, and the third side end surface, the part extending from the second side end surface,
a second film holding unit that holds a part of the outer film that is in contact with the second side end surface, the first side end surface, and the third side end surface, the part extending from the third side end surface,
a first pressing portion that contacts the outer film located between the first film holding unit and the second side end surface, and
a second pressing portion that contacts the outer film located between the second film holding unit and the third side end surface, and
the first pressing portion and the second pressing portion press the outer film such that a distance along the second direction between the first pressing portion and the second pressing portion is shorter than a length of the fourth side end surface along the second direction.

39. The manufacturing apparatus according to claim 38, wherein, when the first pressing portion and the second pressing portion press the outer film, a distance along the second direction between the first film holding unit and the second film holding unit is longer than the length of the fourth side end surface along the second direction.

40. The manufacturing apparatus according to claim 38 or 39, wherein, in a state where the first pressing portion and the second pressing portion are pressing the outer film, the outer film expands parallel to the first direction and the second direction in a region from the first film holding unit to the first pressing portion, and in a region from the second film holding unit to the second pressing portion.

41. The manufacturing apparatus according to claim 33, 34, or 38, further comprising a fixing device that fixes the first lid and the second lid of the electrode assembly unit, wherein
the first lid, the electrode assembly, and the second lid are located in this order in a first direction,
each of the first lid and the second lid has a recess on a surface on an outer side in the first direction,
the fixing device includes a chuck member that is inserted into the recess from the outer side in the first direction, and
the chuck member holds each lid by widening a width of the chuck member in a direction orthogonal to the first direction within the recess.

42. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising:
a fixing device that fixes the first lid and the second lid of the electrode assembly unit; and
a joining device that joins the outer film, wrapped around the electrode assembly unit so as to contact a side end surface of the first lid and a side end surface of the second lid, and the side end surfaces, wherein
the first lid, the electrode assembly, and the second lid are located in this order in a first direction,
each of the first lid and the second lid has a recess on a surface on an outer side in the first direction,
the fixing device includes a chuck member that is inserted into the recess from the outer side in the first direction, and
the chuck member holds each lid by widening a width of the chuck member in a direction orthogonal to the first direction within the recess.

43. The manufacturing apparatus according to claim 42, wherein
the recess includes a plurality of recesses on the surface of each of the first lid and the second lid,
the fixing device includes a plurality of chuck members that are respectively inserted into the plurality of recesses of each lid, and
each of the plurality of chuck members holds a corresponding one of the lids by widening a width of the chuck member in a direction orthogonal to the first direction.

44. The manufacturing apparatus according to claim 42 or 43, wherein
the chuck member includes a plurality of widening pieces that are respectively inserted into the recesses and a widening piece holding portion that holds the plurality of widening pieces such that the plurality of widening pieces is operable, and
the width of the chuck member changes in a direction orthogonal to the first direction when the plurality of widening pieces operates relative to the widening piece holding portion.

45. The manufacturing apparatus according to claim 33, 34, 38, or 42, further comprising:
a film supply device that supplies the outer film; and
a wrapping device that wraps the electrode assembly unit with the outer film such that the outer film contacts the side end surface of the first lid and the side end surface of the second lid, wherein
at least one of the film supply device and the wrapping device includes a film holding unit that holds the outer film,
the film holding unit includes a first roll and a second roll that holds the outer film with the first roll, and
the first roll and the second roll are rotatable around an adjustment axis that is not parallel to a rotation axis of the first roll in a state of holding the outer film.

46. A manufacturing apparatus that manufactures an electrical storage device intermediate using
an electrode assembly unit that includes a first lid and a second lid, an electrode assembly located between the first lid and the second lid, a first terminal electrically connected to the electrode assembly and connected to the first lid, and a second terminal electrically connected to the electrode assembly and connected to the second lid, and
an outer film to be wrapped around the electrode assembly unit,
the electrical storage device intermediate including an outer package that includes the first lid, the second lid, and the outer film, and the electrode assembly housed in the outer package, the manufacturing apparatus comprising:
a film supply device that supplies the outer film;
a wrapping device that wraps the electrode assembly unit with the outer film such that the outer film contacts a side end surface of the first lid and a side end surface of the second lid; and
a joining device that joins the side end surfaces and the outer film, wherein
at least one of the film supply device and the wrapping device includes a film holding unit that holds the outer film,
the film holding unit includes a first roll and a second roll that holds the outer film with the first roll, and
the first roll and the second roll are rotatable around an adjustment axis that is not parallel to a rotation axis of the first roll in a state of holding the outer film.

47. The manufacturing apparatus according to claim 46, wherein the film holding unit includes a roll holding portion that holds the first roll and the second roll such that the first roll and the second roll are rotatable, and a holding base portion that holds the roll holding portion such that the roll holding portion is rotatable around the adjustment axis.

48. The manufacturing apparatus according to claim 46, wherein the film holding unit is movable in a moving direction that is not parallel to both the rotation axis and the adjustment axis.

49. The manufacturing apparatus according to claim 46, wherein
at least one of the film supply device and the wrapping device includes a guide rail extending in a moving direction that is not parallel to both the rotation axis and the adjustment axis, and
the film holding unit is movable along the guide rail.

50. The manufacturing apparatus according to any one of claims 46 to 49, wherein at least one of the film supply device and the wrapping device includes a holding drive unit that moves the film holding unit in a moving direction that is not parallel to both the rotation axis and the adjustment axis.

51. A manufacturing apparatus for an electrical storage device, the manufacturing apparatus comprising:
the manufacturing apparatus for an electrical storage device intermediate according to claim 33, 34, 38, 42, or 46; and
an injection device that injects an electrolytic solution into the electrical storage device intermediate.

52. A manufacturing method for manufacturing the electrical storage device intermediate using the manufacturing apparatus according to claim 33, the manufacturing method comprising:
a step of supplying the outer film; and
a step of joining the outer film, wrapped around the electrode assembly unit so as to contact a side end surface of the first lid and a side end surface of the second lid, and the side end surfaces using the roller heater.

53. A manufacturing method for manufacturing the electrical storage device intermediate using the manufacturing apparatus according to claim 34, the manufacturing method comprising:
a step of joining the side end surfaces and the outer film wrapped around the electrode assembly unit; and
a step of joining a pair of extended parts of the outer film wrapped around the electrode assembly unit, the pair of extended parts extending from the electrode assembly unit and facing each other, wherein
the roller heater is used to join the side end surfaces and the outer film and/or to join the pair of extended parts.

54. A manufacturing method for manufacturing the electrical storage device intermediate using the manufacturing apparatus according to claim 38, the manufacturing method comprising:
a step of supplying the outer film; and
a step of wrapping the electrode assembly unit with the outer film using the wrapping device such that the outer film contacts a side end surface of the first lid and a side end surface of the second lid, and joining the side end surfaces and the outer film using the joining device.

55. A manufacturing method for manufacturing the electrical storage device intermediate using the manufacturing apparatus according to claim 42, the manufacturing method comprising:
a step of fixing the first lid and the second lid of the electrode assembly unit; and
a step of joining the outer film, wrapped around the electrode assembly unit so as to contact a side end surface of the first lid and a side end surface of the second lid, and the side end surfaces.

56. A manufacturing method for manufacturing the electrical storage device intermediate using the manufacturing apparatus according to claim 46, the manufacturing method comprising:
a step of supplying the outer film using the film supply device; and
a step of wrapping the electrode assembly unit with the outer film using the wrapping device such that the outer film contacts a side end surface of the first lid and a side end surface of the second lid, and joining the side end surfaces and the outer film using the joining device.

57. A manufacturing method for an electrical storage device, the manufacturing method comprising:
a step of manufacturing the electrical storage device intermediate by using the manufacturing method according to any one of claims 52 to 56; and
a step of injecting an electrolytic solution into the electrical storage device intermediate.

58. A lid that closes an opening of a tubular outer film and constitutes an outer package of an electrical storage device together with the outer film, the lid comprising:
a core; and a surrounding member located around the core, wherein
the surrounding member constitutes a side end surface of the lid that is joined with the outer film.

59. The lid according to claim 58, wherein the surrounding member contains a resin having a polyolefin skeleton, as a main component.

60. The lid according to claim 58, wherein the surrounding member includes one or more of a molded product formed around the core, a frame fitted around the core, and a film wrapped around the core.

61. A lid that closes an opening of a tubular outer film and constitutes an outer package of an electrical storage device together with the outer film, the lid comprising:
an inner main surface facing an internal space of the tubular outer film, an outer main surface on an opposite side from the inner main surface, and a side end surface connecting the inner main surface and the outer main surface, wherein
the outer main surface has a tapered projection and/or a tapered recess.

62. An outer package kit comprising:
the lid according to any one of claims 58 to 61; and
the outer film to be wrapped around the lid.

63. An electrical storage device intermediate comprising:
an outer package including the lid according to any one of claims 58 to 61, and an outer film wrapped around the lid; and
an electrode assembly housed in the outer package.

64. An electrical storage device comprising:
an outer package including the lid according to any one of claims 58 to 61, and an outer film wrapped around the lid; and
an electrode assembly housed in the outer package.
